(19) Europäisches Patentamt
European Patent Office
Office européen des brevets

(11) Veröffentlichungsnummer: **0 221 013**
**B1**

(12) # EUROPÄISCHE PATENTSCHRIFT

(45) Veröffentlichungstag der Patentschrift: **17.01.90**

(51) Int. Cl.⁴: **C09B 62/02**, C09B 62/503, D06P 1/38

(21) Anmeldenummer: **86810427.4**

(22) Anmeldetag: **29.09.86**

(54) **Reaktivfarbstoffe, deren Herstellung und Verwendung.**

(30) Priorität: **03.10.85 CH 4289/85**

(43) Veröffentlichungstag der Anmeldung:
**06.05.87 Patentblatt 87/19**

(45) Bekanntmachung des Hinweises auf die Patenterteilung:
**17.01.90 Patentblatt 90/3**

(84) Benannte Vertragsstaaten:
**BE CH DE FR GB IT LI**

(56) Entgegenhaltungen:
**EP-A- 0 144 766**
**DE-A- 2 242 507**
**FR-A- 2 015 523**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel(CH)**

(72) Erfinder: **Tzikas, Athanassios, Dr., Muttenzerstrasse 78, CH-4133 Pratteln(CH)**

**EP 0 221 013 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mir Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollten ferner eine hohe Reaktivität besitzen, so dass nur kurze Verweilzeiten erforderlich sind, und sie sollen insbesondere Färbungen mit hohen Fixiergraden liefern. Es sind bereits z.B. aus der DE-A 2 040 620 bireaktive Monoazofarbstoffe enthaltend einen Chlortriazinylrest und einen vinylsulfonylalkylaminosulfonylrest bekannt.

Die oben genannten Anforderungen werden von den bekannten Farbstoffen jedoch nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen.

Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe gelöst wird.

Gegenstand der Erfindung sind Reaktivfarbstoffe der Formel

$$(R-U)_n - D - (X)_r \qquad (1),$$

worin D der Rest eines Monoazo-, Polyazo- oder Metallkomplexazo-Farbstoffes; U –CO–; R ein Rest der Formel

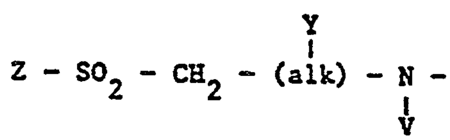
(1a)

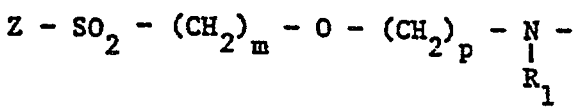
(1b)

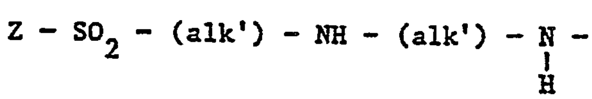
(1c)

oder

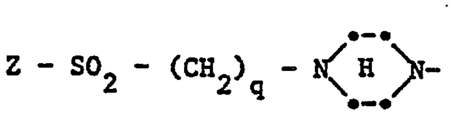
(1d);

Z Sulfatoäthyl-, β-Thiosulfatoäthyl, β-Phosphatoäthyl, β-Acetoxyäthyl, β-Halogenäthyl oder Vinyl; alk ein Polymethylenrest mit 1 bis 6 C-Atomen oder dessen verzweigte Isomere; Y Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z$, worin Z die oben angegebene Bedeutung hat; V Wasserstoff oder ein Alkylrest mit 1 bis 4 C-Atomen, der durch Carboxy, Sulfo, Carbamoyl, N-Methyl-, N-Aethyl-, N,N-Dimethyl- oder N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl, N, N-Dimethyl- oder N, N-Diäthylsulfamoyl, Methylsulfonyl, Aethylsulfonyl, Propylsulfonyl, Alkoxygruppen mit 1 oder 2 C-Atomen, Halogen oder Hydroxy substituiert sein kann; oder ein Rest

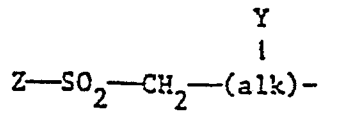 ,

worin Z, alk und Y die angegebenen Bedeutungen haben; R1 Wasserstoff oder $C_{1-6}$-Alkyl; alk', unabhängig voneinander Polymethylenreste mit 2 bis 6 C-Atomen oder deren verzweigte Isomere; n = 1 oder 2, r = 1 oder 2, m = 1 bis 6, p = 1 bis 6, q = 1 bis 6; und X eine faserreaktive Gruppe enthaltend einen Halogentriazin-, Halogenpyrimidin-, Halogenpropionyl-, Halogenacryloyl-, β-Halogenäthylsulfonyl-, β-Sulfatoäthylsulfonyl oder Vinylsulfonylrest ist, mit der Massgabe, dass X einen Halogentriazin- oder Halogenpyrimidinrest aufweist, wenn D für den Rest eines Monoazofarbstoffes steht.

Der Rest D in Formel (1) kann an seinem Grundgerüst die bei organischen Farbstoffen üblichen Substituenten gebunden enthalten.

Als Beispiele für weitere Substituenten im Rest D seien genannt Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N,N-Di-β-hydroxyläthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbarmoyl mit: 1 bis 4 Kohlenstoffatomen im Alkylrest, wie N-Methylcarbomoyl oder N-Aethylcarbomoyl, Sulfamoyl, N-Aethylsulfamoyl mit 1 bis 4 Kohlenstoffatomen, wie N-Methylsulfamoyl, N-Aethylsulfamoyl, W-Propylsulfamoyl, N-Isopropylsulfamoyl oder N-Butylsulfamoyl, N-(β-hydroxyäthyl)-sulfamoyl, N,N-Di-(β-hydroxy-äthyl)-sulfamoyl, N-Phenylsulfamoyl, Ureido, Hydroxy, Carboxy, Sulfomethyl oder Sulfo. Vorzugsweise enthält der Rest D eine oder mehrere Sulfonsäuregruppen. Weitere Substituenten am Rest D sind insbesondere Methyl, Aethyl, Methoxy, Aethoxy, Acetylamino, Benzoylamino, Amino, Chlor, Brom, Ureido, Hadroxy, Carboxy, Sulfomethyl oder Sulfo.

Als β-Halogenäthyl kommt für Z insbesondere der β-Chloräthylrest in Betracht. Der Polymethylenrest alk ist vorzugsweise Methylen, Aethylen, Methylmethylen, Propylen oder Butylen. Der Substituent Y ist als Acyloxyrest insbesondere Aetyloxy, Propionyloxy oder Butyryloxy, und als Alkoxycarbonylrest insbesondere Methoxycarbonyl, Aethoxycarbonyl oder Propyloxycarbonyl. Falls V ein Alkylrest ist, kann dieser Methyl, Aethyl, Propyl, Isopropyl, Butyl, Isobutyl, sec-Butyl oder tert.-Butyl sein. Derivate der Carboxy- oder Sulfogruppe sind z.B. Carbamoyl, N-Methyl-, N-Aethyl-, N,N-Dimethyl- und N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl-, N,N-Dimethyl- und N,N-Diäthylsulfamoyl, Methylsulfonyl, Aethylsulfonyl und Propylsulfonyl. Der Rest $R_1$ ist beispielsweise Methyl, Aethyl, Propyl, Isopropyl, Butyl, Isobutyl, sec.-Butyl, tert.-Butyl, Pentyl oder Hexyl, oder vorzugsweise Wasserstoff. Die Polymethylenreste alk' sind vorzugsweise Aethylen, Propylen oder Butylen. Die Indizes m, p und q sind unabhängig voneinander und vorzugsweise 2, 3 oder 4.

Der Reaktivrest X ist eine faserreaktive Gruppe enthaltend einen Halogentriazin, Halogenpyrimidin -, Halogenpropionyl-, Halogenacryloyl-, β-Halogenäthyl-sulfonyl-, β-Sulfatoäthylsulfonyl- oder Vinylsulfonylrest.

Bevorzugt sind Reaktivfarbstoffe der Formel (1), worin D der Rest eines Mono- oder Disazofarbstoffes oder eines Metallkomplexazofarbstoffes ist.

Bevorzugt sind insbesondere Reaktivfarbstoffe der Formel

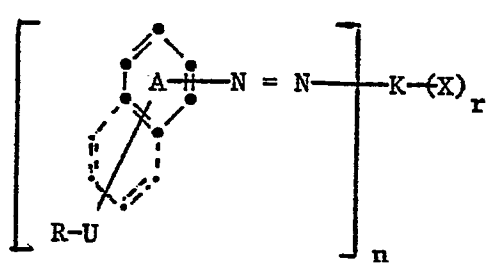 (2) ,

worin K der Rest einer Kupplungskomponente der Benzol- oder Naphthalinreihe oder der heterocyclischen Reihe ist; U, R, X, n und r die unter Formel (1) angegebenen Bedeutungen haben; und der Benzol- bzw. Naphthalinrest A weitere Substituenten enthalten kann.

Der Rest K kann selbst wiederum Azogruppen enthalten, er kann also der Rest einer Azoverbindung, insbesondere einer Monoazoverbindung, sein. Sofern K der Rest einer Kupplungskomponente der Benzol- oder Naphthalinreihe ist, stellt K somit vorzugsweise einen Benzol-, Naphthalin-, Azobenzol-, Naphthylazobenzol-, Azonaphthalin- oder Phenylazonaphthalin-Rest dar, der, wie unten angegeben, weitersubstituiert sein kann; dabei ist vorzugsweise n = 1. Falls n = 2 ist, muss K der Rest einer zweifach ankuppelbaren Komponente sein, oder eine solche enthalten. Als zweifach ankuppelbare Komponenten kommen insbesondere diejenigen der Aminonaphtholsulfonsäurereihe in Betracht, die weiter unten genannt sind. Sofern K der Rest einer Kupplungskomponente der heterocyclischen Reihe ist, kommt ein Pyrazolon- oder Pyridonrest oder der Rest einer der weiter unten genannten heterocyclischen Kupplungskomponenten in Betracht. Auch in diesem Falle kann der Rest K weitere Azogruppen enthalten, z.B. wenn K als Phenylazopyrazolonrest vorliegt.

Als weitere Substituenten am Benzol- bzw. Naphthalinrest A kommen die gleichen in Betracht, die weiter oben bei der Erläuterung des Restes D genannt sind.

Bevorzugt sind weiterhin Reaktivfarbstoffe der Formel

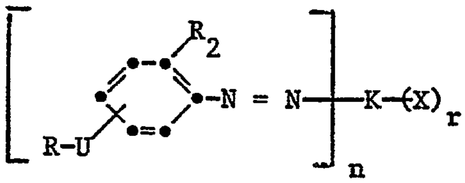

(3) ,

worin $R_2$ Wasserstoff, $C_{1-4}$-Alkyl, $C_{1-4}$-Alkoxy, Halogen, Hydroxy, Carboxy oder Sulfo ist; und K, U, R, X, n und r die unter Formel (2) angegebenen Bedeutungen haben;
Reaktivfarbstoffe der Formel

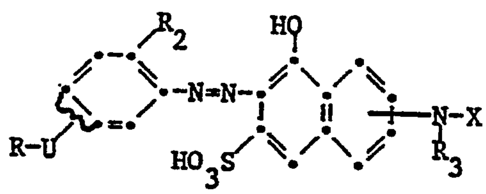

(4),

worin $R_3$ Wasserstoff oder ein gegebenenfalls substituierter $C_{1-4}$-Alkylrest ist; und $R_2$, U, R und X die unter Formel (3) angegebenen Bedeutungen haben;
Reaktivfarbstoffe der Formel

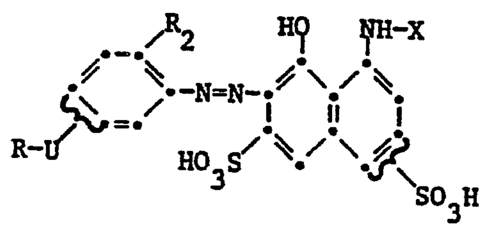

(5),

worin $R_2$, U, R und X die unter Formel (3) angegebenen Bedeutungen haben;
Reaktivfarbstoffe der Formel

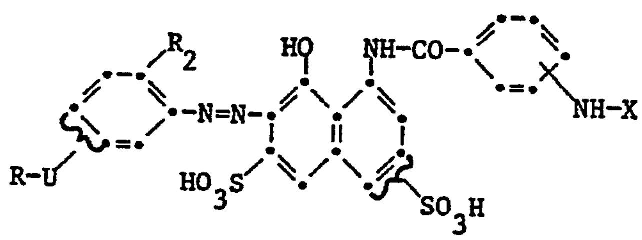

(6),

worin $R_2$, U, R und X die unter Formel (3) angegebenen Bedeutungen haben;
Reaktivfarbstoffe der Formel

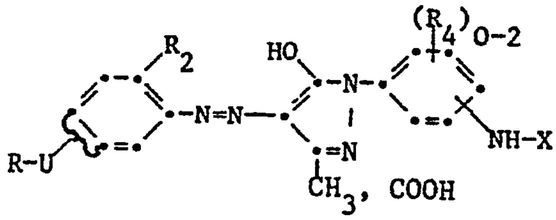

(7),

worin $R_4$ für 0 bis 2 Substituenten aus der Gruppe $C_{1-4}$-Alkyl, $C_{1-4}$-Alkoxy, Halogen, Carboxy oder Sulfo steht; und $R_2$, U, R und X die unter Formel (3) angegebenen Bedeutungen haben;
Reaktivfarbstoffe der Formel

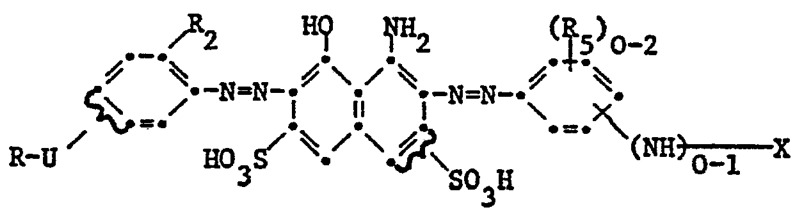

(8),

worin $R_5$ für 0 bis 2 Substituenten aus der Gruppe $C_{1-4}$-Alkyl, $C_{1-4}$-Alkoxy, Halogen, Carboxy oder Sulfo steht; und $R_2$, U, R und X die unter Formel (3) angegebenen Bedeutungen haben;
Reaktivfarbstoffe der Formel

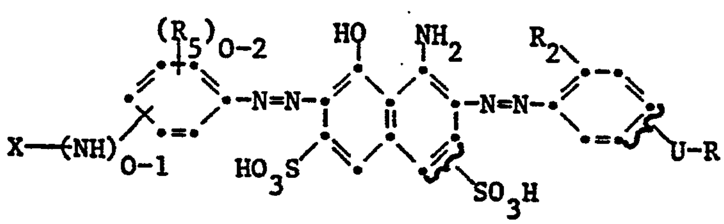

(9),

worin $R_5$ für 0 bis 2 Substituenten aus der Gruppe $C_{1-4}$-Alkyl, $C_{1-4}$-Alkoxy, Halogen, Carboxy oder Sulfo steht; und $R_2$, U, R und X die unter Formel (3) angegebenen Bedeutungen haben;
Schwermetallkomplexe von Reaktivfarbstoffen der Formeln (1) bis (9); als komplexbildende Schwermetalle kommen vor allem Kupfer, Nickel, Kobalt oder Chrom in Betracht.

Bevorzugt sind insbesondere Verbindungen der Formeln (1) bis (9), worin Z die β-Sulfatoäthyl-, β-Chloräthyl- oder Vinylgruppe ist.

Die erfindungsgemässen Reaktivfarbstoffe der Formel (1), insbesondere die bevorzugten Azofarbstoffe der Formeln (2) bis (9), können erhalten werden, indem man von einer Diazokomponente ausgeht, welche den Rest–U–R bereits enthält, z.B. einer Verbindung der Formel

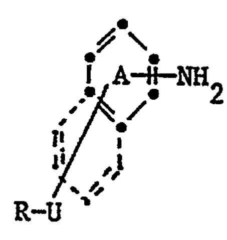

(11)

oder

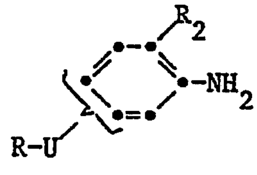

(12) ,

diese diazotiert und auf eine Kupplungskomponente kuppelt, welche den Rest X ebenfalls bereits enthält, z.B. eine b-Sulfatoäthylsulfonyl- oder Vinylsulfonyl-Gruppe, oder einen Halogenpyrimidyl- oder -triazinylamino-Rest; oder welche eine Aminogruppe enthält, die nachträglich mit einer Reaktivkomponen-

te, z.B. α,β-Dibrompropionylchlorid, 2,4,6-Trichlor-s-triazin, 2,4-Difluor-6-amino-s-triazin oder 2,4,6-Trifluor-5-chlorpyrimidin, acyliert werden kann.

Im Falle der Disazofarbstoffe der Formeln (8) und (9) ist der Reaktivrest X nicht an eine Kupplungskomponente sondern ebenfalls an eine Diazokomponente gebunden. Auch in diesem Fall geht man von einer Diazokomponente aus, welche den Rest X bereits enthält, z.B. 1-Amino-3-vinylsulfonylbenzol; oder man verwendet eine Diazokomponente, in die der Rest X nach vollzogener Kupplung eingeführt werden kann, z.B. 1,3-Phenylendiamin-4-sulfonsäure nachträglich acyliert mit 2,4-Dichlor- 6-3'-sulfophenylamino-s-triazin.

Enthält der Reaktivrest X zwei oder mehr als zwei abspaltbare Substituenten, z.B. Halogenatome, so können die Verbindungen der Formeln (11) oder (12) an den Rest X kondensiert werden, so dass ein Halogenatom durch den betreffenden reaktiven Aminorest ersetzt wird. Man erhält so z.B. Reaktivfarbstoffe der Formel (3), die ausser dem Rest R-U- in der Diazokomponente, einen Rest

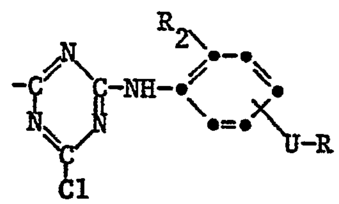

(13)

an die Kupplungskomponente gebunden enthalten. Statt der -NH-Gruppe kann hier auch eine -N(Alkyl)-Gruppe als Bindeglied vorhanden sein.

Als Ausgangsverbindungen, die, je nach der Konstitution des gewünschten Endfarbstoffes, verwendet werden können, seien die folgenden genannt.

<u>Verbindungen der Formel (11) und deren N-Alkylderivate</u>

3-Aminobenzoesäure-N'-β-(β'-chloräthylsulfonyl)-äthylamid,
4-Chlor-3-aminobenzoesäure-N'-β-(β'-chloräthylsulfonyl)-äthylamid,
4-Methyl-3-aminobenzoesäure-N'-β-(β'-chloräthylsulfonyl)-äthylamid,
4-Methoxy-3-aminobenzoesäure-N'-β-(β'-chloräthylsulfonyl)-äthylamid,
3-Aminobenzoesäure-N'-β-[β'-(β"-chloräthylsulfonyl)-äthyloxy]-äthylamid,
3-Aminobenzoesäure-N'-γ-(β'-chloräthylsulfonyl)-propylamid,
3-Aminobenzoesäure-N'-bis-[β-(β'-chloräthylsulfonyl)-äthyl]-amid,
3-Aminobenzoesäure-N'-bis-[γ-(β'-chloräthylsulfonyl)-propyl]-amid,
3-N-Aethylaminobenzoesäure-N'-β-(β'-chloräthylsulfonyl)-äthylamid,
3-N-Isopropylaminobenzoesäure-N'-β-(β'-chloräthylsulfonyl)-äthylamid,
3-N-Isopropylaminobenzoesäure-N'-γ-(β'-chloräthylsulfonyl)-propylamid,
4-Aminobenzoesäure-N'-β-(β'-chloräthylsulfonyl)-äthylamid,
4-Aminobenzoesäure-N'-β-[β'-(β"-chloräthylsulfonyl)-äthyloxy]-äthylamid,
4-Aminobenzoesäure-N'-γ-(β'-chloräthylsulfonyl)-propylamid,
4-Aminobenzoesäure-N'-bis-[β-(β'-chloräthylsulfonyl)-äthyl]-amid,
4-Aminobenzoesäure-N'-bis-[γ-(β'-chloräthylsulfonyl)-propyl]-amid,
4-N-Aethylaminobenzoesäure-N'-β-(β'-chloräthylsulfonyl)-äthylamid,
4-N-Isopropylaminobenzoesäure-N'-γ-(β'-chloräthylsulfonyl)-propylamid,
4-Aminobenzoesäure-N'-β-(vinylsulfonyl)-äthylamid,
4-Aminobenzoesäure-N'-bis-[β-(vinylsulfonyl)-äthyl]-amid,
4-Aminobenzoesäure-N'-δ-(β'-chloräthylsulfonyl)-butylamid,
4-Chlor-3-aminobenzoesäure-N'-bis-[β-(β'-chloräthylsulfonyl)-äthyl]-amid,
4-Methyl-3-aminobenzoesäure-N'-bis-[β-(β'-chloräthylsulfonyl)-äthyl]-amid,
4-Methoxy-3-aminobenzoesäure-N'-bis-[γ-(β'-chloräthylsulfonyl)-propyl]-amid,
3-Aminobenzoesäure-N'-δ-(β'-Chloräthylsulfonyl)-butylamid,
3-Aminobenzoesäure-N'-β-[β'-(β"-chloräthylsulfonyl)-äthyloxy]-äthylamid,
4-Hydroxy-3-aminobenzoesäure-N'-β-(β'-chloräthylsulfonyl)-äthylamid,
4-Hydroxy-3-aminobenzoesäure-N'-bis-[β-(β'-chloräthylsulfonyl)-äthyl]-amid,
4-Methoxy-3-aminobenzoesäure-N'-bis-[β-(β'-chloräthylsulfonyl)-äthyl]-amid,
sowie entsprechende Verbindungen, worin die β-Chloräthylsulfonyl-Gruppe durch β-Sulfatoäthylsulfonyl oder Vinylsulfonyl ersetzt ist; weiterhin kommen in Betracht:
4-Amino-3-sulfobenzoesäure-N'-β-(β'-chloräthylsulfonyl)-äthylamid,
4-Amino-3-sulfobenzoesäure-N'-β-(β'-sulfatoäthylsulfonyl)-äthylamid,
4-Amino-3-sulfobenzoesäure-N'-β-vinylsulfonyl-äthylamid,
3-Amino-2-sulfobenzoesäure-N'-β-vinylsulfonyl-äthylamid,
3-Amino-4-methoxybenzoesäure-N'-β-(β'-sulfatoäthylsulfonyl)-äthylamid,

4-Amino-3-sulfobenzoesäure-N'-bis-(β-vinylsulfonyl-äthyl)-amid,
3-Amino-4-methoxybenzoesäure-N -bis-[β-(β'-sulfatoäthylsulfonyl)-äthyl]-amid,
3-Amino-2-sulfobenzoesäure-N'-bis-(β-vinylsulfonyl-äthyl)-amid,
3-Amino-4-methoxybenzoesäure-N'-(γ-vinylsulfonyl-propyl)piperazid,
4-Amino-3-methoxybenzoesäure-N'-bis(β-vinylsulfonyl-äthyl)-amid,
3-Aminobenzoesäure-N'-β-(β'-vinylsulfonyl-äthylamino)-äthylamid,
3-Amino-4-methylbenzoesäure-N'-(β-vinylsulfonyl-äthyl)-piperazid,
4-Amino-3-sulfobenzoesäure-N'-bis-[β-(β'-sulfatoäthylsulfonyl)-äthyl]-amid,
3-Amino-4-methoxybenzoesäure-N'-bis-(β-vinylsulfonyl-äthyl)amid,
3-Amino-4-methoxybenzoesäure-N'-(β-vinylsulfonyl-äthyl)-amid,
4-Amino-3-sulfobenzoesäure-N'-(γ-vinylsulfonyl-propyl)-piperazid,
4-Amino-3-sulfobenzoesäure-N'-β-(β'-vinylsulfonyl-äthylamino)-äthylamid,
3-Amino-4-methylbenzoesäure-N'-β-(β'-sulfatoäthylsulfonyl)-äthylamid,
4-Amino-3-sulfobenzoesäure-N'-bis-[β-(β'-chloräthylsulfonyl)-äthyl]-amid,
4-Amino-3-sulfobenzoesäure-N'-(β-vinylsulfonyl-äthyl)-piperazid,
4-Amino-3-sulfobenzoesäure-N'-β-(β'-vinylsulfonyl-äthylamino)-äthylamid,
5-Amino-1,3-benzoldicarbonsäure-N',N"-(β-vinylsulfonyl-äthyl)-diamid,
4-Amino-3-sulfobenzoesäure-N'-β-(β'-vinylsulfonyl-äthyloxy)-äthylamid,
ferner analoge Aminobenzoesäureamide oder Aminobenzolsulfonsäureamide der folgenden Aminoverbindungen:
β-[β'-(β"-Chloräthylsulfonyl)-äthylamino]-äthylamin,
β-(β'-Vinylsulfonyl-äthylamino)-äthylamin,
β-[β'-(β"-Sulfatoäthylsulfonyl)-α'-methyl-äthylamino]-äthylamin,
β-[β'-(β"-Sulfatoäthylsulfonyl)-α'-methyl-äthylamino]-β-methyl-äthylamin,
γ-[β'-(β"-Sulfatoäthylsulfonyl)-α'-methyl-äthylamino]-propylamin,
δ-[β'-(β"-Sulfatoäthylsulfonyl)-α'-methyl-äthylamino]-n-butylamin.

Als Diazokomponenten kommen ferner geeignete Verbindungen aus der Aminobenzol- und Aminonaphthalinreihe in Betracht, beispielsweise solche, die in den Azofarbstoffen der unten angegebenen Formeln enthalten sind, wie 1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diaminonaphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenziden, 3,3'-Dicarboxybenziden, 3,3'-Dicarboxymethoxybenziden, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3,-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-di sulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4'-Diaminodiphenyloxid, 4,4'-Diaminodiphenylharnstoff-2,2'-disulfonsäure, 4,4'-Diaminodiphenyloxyäthan-2,2'-disulfonsäure, 4,4'-Diaminostilben-2,2'-disulfonsäure, 4,4'-Diaminodiphenyläthan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure, 1,3,5-Triaminobenzol.

Aromatische Amine, die als Diazokomponenten zur Herstellung der Mono- oder Disazofarbstoffe dienen können, und die eine Gruppe der Formel Z-$SO_2$- ein- oder zweimal gebunden enthalten, sind z.B.:

1-Amino-4-β-sulfatoäthylsulfonylbenzol, 1-Amino-4-β-thiosulfatoäthylsulfonylbenzol, 1-Amino-4-vinylsulfonylbenzol, 1-Amino-4-β-chloräthylsulfonylbenzol, 1-Amino-3-β-sulfatoäthylsulfonylbenzol, 1-Amino-3-vinylsulfonylbenzol, 1-Amino-2-methoxy-5-β-sulfatoäthylsulfonylbenzol, 1-Amino-2-methoxy-5-β-thiosulfatoäthylsulfonylbenzol, 1-Amino-2-methoxy-5-vinylsulfonylbenzol, 1-Amino-4-methoxy-3-β-sulfatoäthylsulfonylbenzol, 1-Amino-4-methoxy-3-β-vinylsulfonylbenzol, 1-Amino-2,5-dimethoxy-4-β-sulfatoäthylsulfonylbenzol, 1-Amino-2,5-dimethoxy-4-vinylsulfonylbenzol, 1-Amino-2-methoxy-4-β-sulfatoäthylsulfonyl-5-methylbenzol, 1-Amino-2-methoxy-4-vinylsulfonyl-5-methylbenzol, 1,-Amino-3-β-sulfatoäthylsulfonyl-6-carboxybenzol, 1-Amino-3-vinylsulfonyl-6-carboxybenzol, 1-Amino-4-β-sulfatoäthylsulfonylbenzol-2-sulfonsäure, 1-Amino-4-vinylsulfonylbenzol-2-sulfonsäure, 1-Amino-5-vinylsulfonylbenzol-2,4-disulfonsäure, 1-Amino-2-hydroxy-5-β-sulfatoäthylsulfonylbenzol, 1-Amino-2-hydroxy-4-β-sulfatoäthylsulfonylbenzol, 1-Amino-2-hydroxy-5-β-sulfatoäthylsulfonylbenzol-3-sulfonsäure, 1-Amino-2-brom-4-β-sulfatoäthylsulfonylbenzol, 1-Amino-2,6-dichlor-4-β-sulfatoäthylsulfonylbenzol, 1-Amino-2,4-di-(β-sulfatoäthylsulfonyl)-benzol, 1-Amino-2,4-di-(β-sulfatoäthylsulfonyl)-5-chlorbenzol, 1-Amino-2,4-di-(β-thiosulfatoäthylsulfonyl)-5-chlorbenzol, 1-Amino-2,4-di-(vinylsulfonyl)-benzol, 1-Amino-2,4-di-(vinylsulfonyl)-5-chlorbenzol, 1-Amino-2,4-di-(β-acetoxyäthylsulfonyl)-benzol,

1-Amino-2,4-di-(β-acetoxy äthylsulfonyl)-5-chlorbenzol, 2-Amino-8-β-sulfatoäthylsulfonylnaphthalin, 2-Amino-6-β-sulfatoäthylsulfonylnaphthalin, 2-Amino-6β-sulfatoäthylsulfonylnaphthalin-1-sulfonsäure, 2-Amino-8-β-sulfatoäthylsulfonylnaphthalin-6-sulfonsäure, 2-Amino-6,8-di-(β-sulfatoäthylsulfonyl)-naphthalin.

Ferner sind zu erwähnen die entsprechenden β-Hydroxy-verbindungen, welche als Vorprodukte verwendet werden können, z.B.: 1-Amino-4-β-hydroxyäthylsulfonylbenzol, 1-Amino-3-β-hydroxyäthylsulfonylbenzol, 1-Amino-2,4-di-(β-hydroxyäthylsulfonyl)-benzol und 1-Amino-2,4-di-(β-hydroxyäthylsulfonyl)-5-chlorbenzol.

Wenn als Diazokomponente statt eines Diamins eine Amino-acetylamino-verbindung eingesetzt werden soll, aus welcher nachträglich die Acetylgruppe durch Verseifen wieder abgespalten wird, wie dies oben bei der Erläuterung des Verfahrens erwähnt ist, kommen die Monoacetylverbindungen der oben genannten Diazokomponenten in Frage, z.B. 1-Acetylamino-3-aminobenzol-4-sulfonsäure oder 1-Acetylamino-4-aminobenzol-3-sulfonsäure.

Die Kupplungskomponenten sind vor allem geeignete Verbindungen der Aminobenzol- und Naphthalinreihe, z.B. Aniline, N-mono-substituierte Aniline, m-Phenylendiaminderivate, Aminonaphthaline, Naphthole, Aminonaphthalinsulfonsäure, Naphtholsulfonsäuren oder Aminonaphtholsulfonsäuren, ferner Pyrazolone, Aminopyrazole, Aminopyridine, Hydroxypyridine/pyridone, Aminopyrimidine, Hydroxypyrimidine, Indole, Barbitursäurederivate oder Acetoacetarylide. Als Beispiele seien genannt:

1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 2-Amino-5-hydroxynaphthalin-7-sulfonsäure, 2-Methyl- bzw. 2-Aethylamino-5-hydroxynaphthalin-7-sulfonsäure, 2-Amino-5-hydroxynaphthalin-1,7-disulfonsäure, 2-Amino-8-hydroxynaphthalin-6- sulfonsäure, 2-Methyl- bzw. 2-Aethylamino-8-hydroxynaphthalin-6-sulfonsäure, 2-Amino-8-hydroxynaphthalin-3,6-disulfonsäure, 1-Amino-5-hydroxynaphthalin-7-sulfonsäure, 1-Amino-8-hydroxynapthalin-3,6- bzw. -4,6-disulfonsäure, 1-(4'-Aminobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 1-Amino-8-hydroxynaphthalin-4-sulfonsäure, 2,4,6-Triamino-3-cyanpyridin, 1-β-Aminoäthyl-3-cyan-4-methyl-6-hydroxypyridon-(2), 1-γ-Aminopropyl-3-sulfomethyl-4-methyl-6-hydroxypyridon-(2), 1,3-Diaminobenzol, 1-Amino-3-(N,N-di-β-hydroxyäthylamino)-benzol, 1-Amino-3-(N,N-di-β-sulfatoäthylamino)-benzol, 1-Amino-3-(N,N-di-β-hydroxyäthylamino)-4-methoxy-benzol, 1-Amino-3-(N,N-di-β-sulfatoäthylamino)-4-methoxybenzol, 1-Amino-3-sulfobenzylaminobenzol, 1-Amino-3-sulfo-benzylamino-4-chlorbenzol, 1-Amino-3-(N,N-di-sulfo-benzylamino)-benzol, 1-(3'-Aminophenyl)-3-methyl-5-pyrazolon sowie 1-(Aminophenyl)-3-carboxy-5-pyrazolone, die im Phenylkern durch Chlor, Methyl, Methoxy, Nitro oder Sulfo substituiert sein können, wie 1-(2'-Sulfo-4'-aminophenyl)-3-carboxy-pyrazolon-(5).

Falls eine der beiden Komponenten beide Reaktivgruppen zugleich enthält, oder diese in die betreffende Komponente eingeführt werden können, z.B. wenn man eine Verbindung der Formel (11) als Kupplungskomponente verwendet, kann die andere Komponente, in diesem Falle die Diazokomponente, auch nichtreaktiv sein, Beispiele sind:

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 2-Aminodiphenyläther, 1-Aminobenzol-2-, -3- oder -4-sulfonsäureamid, 1-Aminobenzol-2-, -3- oder -4-carbonsäure, Dehydrothio-p-toluidin-sulfonsäure, 1-Amino-3-trifluormethylbenzol-6-sulfonsäure, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino- 2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybe-zol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder -8-sulfonsäure, 2-Aminonaphthalin-3,6- oder -5,7-disulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminoaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-6-sulfonsäure, 2-Amino-1-hydroxynaphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Falls X ein über eine Aminogruppe gebundener Reaktivrest ist, erfolgt die Kondensation der entsprechenden Reaktivkomponenten mit den Diazokomponenten oder den Kupplungskomponenten bzw. mit acylierbaren Monoazo- oder Disazo-Zwischenprodukten bzw. mit den aminogruppenhaltigen Farbstoffen oder deren Vorprodukten vorzugsweise in wässriger Lösung oder Suspension, bei niedriger Temperatur und bei schwach saurem, neutralem bis schwachalkalischem pH-Wert. Vorteilhaft wird der bei der Kondensation freiwerdende Halogenwasserstoff laufend durch Zugabe wässriger Alkalihydroxyde, -carbonate oder -bicarbonate neutralisiert.

Eine abgewandelte Ausführungsform des Verfahrens besteht darin, zunächst einen Farbstoff herzustellen, der eine Vorstufe des Reaktivrestes enthält und diese nachträglich in die Endstufe umzuwandeln, z.B. durch Veresterung oder eine Additionsreaktion. Beispielsweise kann man einen Farbstoff, worin Z ein Rest $HO-CH_2CH_2-SO_2-$ ist, herstellen und das Zwischenprodukt vor oder nach der Acylierung mit Schwefelsäure umsetzen, so dass die Hydroxygruppe in die Sulfatogruppe überführt wird; oder man verwendet einen analogen Farbstoff, worin Z die Gruppe $H_2C{=}CH-SO_2-$ ist, und lagert an das Zwischenprodukt Thioschwefelsäure an, wobei ein Rest $HO_3SS-CH_2CH_2-SO_2-$ entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen Restes für Z in eine Verbindung der Formel (1) oder ein Zwischenprodukt anstelle eines Halogenatoms oder der Sulfatogruppe, beispielsweise einer Thiosulfon- oder Phosphatogruppe erfolgt in an sich bekannter Weise.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffspaltenden Mitteln, wie Natriumhydroxid, behandeln, wobei die Sulfatoäthylsulfonylreste in Vinylsulfonylreste übergehen.

Gegebenenfalls ist eine Verfahrensvariante anwendbar, bei welcher man von Farbstoffvorprodukten ausgeht. Diese Variante ist geeignet zur Herstellung von Reaktivfarbstoffen der Formel (1), worin D der Rest eines aus zwei oder mehr als zwei Komponenten zusammengesetzten Farbstoffes ist, beispielsweise eines Anthrachinonfarbstoffes der Bromaminsäure-Reihe, eines Kupfer- oder Nickel-phthalocyanins, oder eines Kupferformazans. Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss Formel (1) enthalten, ausgeht, oder diese faserreaktiven Reste in hierfür geeignete Zwischenprodukte mit Farbstoffcharakter einführt.

Liegen in den hergestellten Reaktivfarbstoffen zur Metallkomplexbildung befähigte Gruppen vor, können die Reaktivfarbstoffe auch nachträglich metallisiert werden.

Die wichtigsten Verfahrensvarianten sind in den Ausführungsbeispielen dargestellt.

Von besonderer Bedeutung sind ferner die Verbindungen der Formel

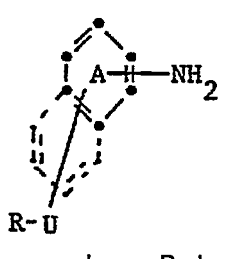

(11)

worin R und U die unter Formel (1) angegebenen Bedeutungen haben.

Die Verbindungen der Formel (11) können hergestellt werden, indem man die entsprechenden Aminobenzoesäure- oder Aminonaphthoesäurechloride bzw. die entsprechenden Sulfonsäurechloride mit Aminen, welche den Resten der Formel (1a) oder (1b) entsprechen, kondensiert; oder man geht von einem Nitrobenzoyl- oder Nitronaphthoylchlorid bzw. -sulfochlorid aus, kondensiert mit dem Amin, und reduziert die Nitrogruppe zur Aminogruppe. Nach einer anderen, in der DE-OS 20 40 620 beschriebenen Methode kann man das Säurechlorid mit einem ungesättigten aliphatischen Amin umsetzen, und an die Doppelbindung des Säureamids 2-Mercaptoäthanol bei Temperaturen zwischen 50° und 180°C mit Hilfe katalytischer Mengen eines Radikalbildners oder von Schwefel anlagern. Die dadurch erhaltenen hydroxyäthylthioäther-Verbindungen können auch hergestellt werden, indem man das Säurechlorid mit einem Halogenalkylamin kondensiert, und das Kondensationsprodukt mit 2-Mercaptoäthanol und Natriumalkoholat in Alkohol erwärmt. Die Thioätherverbindungen werden dann noch zu den entsprechenden Sulfonen oxydiert.

Die Oxydation der Thioätherverbindungen zu den Sulfonen kann nach verschiedenen Methoden erfolgen, beispielsweise mit Wasserstoffperoxid mit oder ohne Zusatz von Wolfram- oder Vanadinverbindungen als Katalysatoren, ferner mit Peressigsäure, Kaliumpermanganat oder Chromsäure, oder mit Chlor/Salzsäure je in wässrigem, wässrig-organischem oder organischem Medium.

Die so erhältlichen Carbonsäureamide bzw. Sulfonsäureamide, in denen die Gruppierung $-SO_2-Z$ eine β-Hydroxyäthylsulfonylgruppe darstellt, können durch Behandeln mit Sulfatierungsmitteln, Phosphorylierungsmitteln, Halogenierungsmitteln, Alkyl- oder Arylsulfonsäurehalogeniden, Alkyl-oder Aryl carbonsäurehalogeniden oder Alkyl- oder Arylcarbonsäureanhydriden in die entsprechenden Farbstoffvorprodukte überführt werden, in denen die Gruppierung $-SO_2-Z$ die Gruppierung $-SO_2-CH_2-CH_2-O-SO_3H$, $-SO_2-CH_2-CH_2-O-PO_3H_2$, $-SO_2-CH_2-CH_2$-Halogen oder $-SO_2-CH_2-CH_2-O$-Acyl bedeutet. Die so erhaltenen Produkte können ihrerseits durch Behandeln mit alkalisch wirkenden Mitteln, wie beispielsweise Alkalihydroxid oder Alkalicarbonat, wie Natriumhydroxid oder Natriumcarbonat, in entsprechende Verbindungen überführt werden, in denen die Gruppierung $-SO_2-Z$ die Gruppierung $-SO_2-CH_2=CH_2$ bedeutet. Die so erhaltenen Produkte können wiederum durch Umsetzung (Addition) mit Salzen der Thioschwefelsäure, wie Natriumthiosulfat, mit Dialkylaminen, wie Dimethyl- oder Diäthylamin, oder mit Phenol in Verbindungen überführt werden, in denen die Gruppierung $-SO_2-Z$ die Gruppierung $-SO_2-CH_2-CH_2-S-SO_3H$, $-SO_2-CH_2-CH_2-N(alkyl)_2$ oder

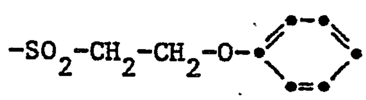

bedeutet.

Geeignete Sulfatierungsmittel sind hierbei beispielsweise konzentrierte Schwefelsäure sowie Chlorsulfonsäure und Amidosulfonsäure oder andere Schwefeltrioxid abgebende Verbindungen. Geeignete Phosphorylierungsmittel sind hierbei beispielsweise konzentrierte Phosphorsäure, Pyro-, Meta- oder Polyphosphorsäure, Polyphosphorsäurealkylester, Phosphoroxichlorid oder Gemische aus Phosphorsäure und Phosphor-(V)-oxid. Als Halogenierungsmittel können beispielsweise Thionylchlorid oder Thionylbromid verwendet werden.

Bevorzugt sind Verbindungen der Formel

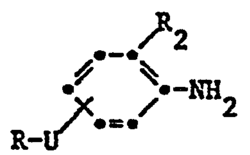 (14),

worin R ein Rest der Formel

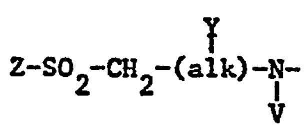 (14a)

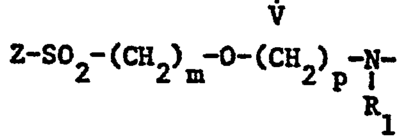 (14b)

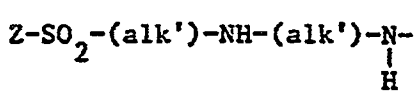 (14c)

oder

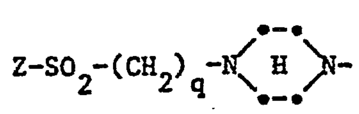 (14d)

ist; U, Z, alk, A, V, $R_1$, alk', m, p und q die unter Formel (1) angegebenen Bedeutungen haben; und $R_2$ Wasserstoff, $C_{1-4}$-Alkyl, $C_{1-4}$-Alkoxy, Halogen, Hydroxy, Carboxy oder Sulfo ist.

Das bevorzugte Verfahren zur Herstellung der Verbindungen der Formel (14) ist dadurch gekennzeichnet, dass man ein Nitrobenzoylchlorid der Formel

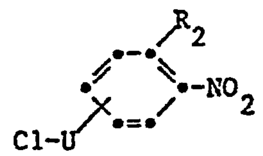 (15)

mit einem Amin der Formel

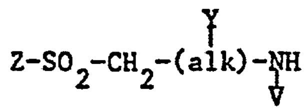 (16)

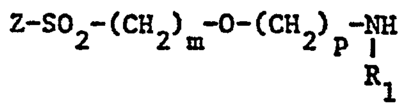 (17)

$Z{-}SO_2{-}(alk'){-}NH{-}(alk'){-}NH_2$ (18)

oder

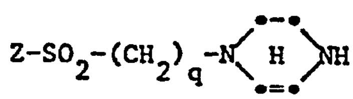 (19)

kondensiert, und die Nitrogruppe zur Aminogruppe reduziert.

Die Umsetzung wird vorzugsweise in einem hochsiedenden organischen Lösungsmittel, z.B. Nitrobenzol, durchgeführt. Die Reduktion der Nitrogruppe zur Aminogruppe erfolgt in an sich bekannter Weise durch katalytische Hydrierung mit Pd/Kohlenstoff in Aethanol, Essigester oder Tetrahydrofuran bei Raumtemperatur bis etwa 40°C. Die Reduktion kann auch mit Fe/Salzsäure oder Fe/Essigsäure in wässriger Lösung durchgeführt werden.

Nach einer Abänderung des oben beschriebenen Verfahrens können Verbindungen der Formel (14) auch in der Weise hergestellt werden, dass man ein Nitrobenzoylchlorid der Formel (15) mit einem Amin der Formel

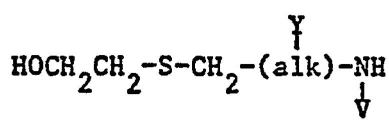 (20)

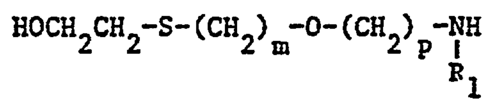 (21)

$HOCH_2CH_2{-}S{-}(alk'){-}NH{-}(alk'){-}NH_2$ (22)

oder

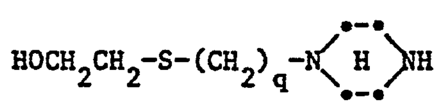 (23)

kondensiert, das Kondensationsprodukt mit elementarem Chlor zu der entsprechenden β-Chloräthylsulfonyl-Verbindung oxydiert und die Nitrogruppe zur Aminogruppe reduziert.

Die Kondensation des Nitrobenzoylchlorids mit den Aminen der Formeln (20) bis (23) wird z.B. in Chloroform bei Raumtemperatur und in Gegenwart von alkalischen, säurebindenden Mitteln, z.B. Alkalihydroxiden, -carbonaten oder -bicarbonaten, durchgeführt. Anschliessend wird das Kondensationsprodukt in an sich bekannter Weise mit einer Chlor/Salzsäure-Mischung oxydiert. Die Reduktion der Nitrogruppe zur Aminogruppe erfolgt wie oben beschrieben.

Die als Ausgangsverbindungen verwendeten Amine der Formeln (16) bis (23) können analog dem Verfahren des Beispiels 1 der DE-OS 26 14 550 hergestellt werden.

Die in runde Klammern eingeschlossenen Teile von Formel (1) sind Reaktivreste, welche je ein- oder zweimal im Molekül vorhanden sein können; beide Möglichkeiten sind wichtig. Falls n = 2 bzw. r = 2 ist, können die betreffenden Reaktivreste gleich oder verschieden sein; vorzugsweise sind beide Reste gleich. Der Reaktivrest enthält einen Substituenten, der eine faserreaktive Abgangsgruppe ist, bzw. enthält, z.B. wenn Z β-Chloräthyl ist, oder die nach Art von faserreaktiven Abgangsgruppen wirksam werden können, z.B. falls Z Vinyl ist. Unter faserreaktiven Verbindungen sind solche zu verstehen, die mit den Hydroxygruppen der Cellulose, den Amino-, Carboxy-, Hydroxy- und Thiolgruppen bei Wolle und Seide, oder mit den Amino- und evtl. Carboxygruppen von synthetischen Polyamiden unter Bildung kovalenter chemischer Bindungen zu reagieren vermögen.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen und Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität, gutes Fixiervermögen und ein gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten.

Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindung ist in den nachfolgenden Ausführungsbeispielen nicht in allen Fällen beschrieben, sie ergibt sich jedoch ohne weiteres aus der allgemeinen Beschreibung.

Beispiel 1: Die salzsauer diazotierte Lösung von 32,7 Teilen 4-Aminobenzoesäure-N'-β(β'—chlorethylsulfonyl)ethylamid-hydrochlorid wird bei 0-5°C und pH =5-6 zu einer Lösung von 29,9 Teilen 1-(2'-sulfo-5'-aminophenyl)-3-carboxy-5-pyrazolon gegeben und gekuppelt. Der gelbe Monoazofarbstoff wird anschliessend mit einer Suspension von 18,8 Teilen Cyanurchlorid versetzt und bei pH = 6 acyliert.

Der gebildete Chlortriazinfarbstoff wird isoliert; er entspricht der Formel

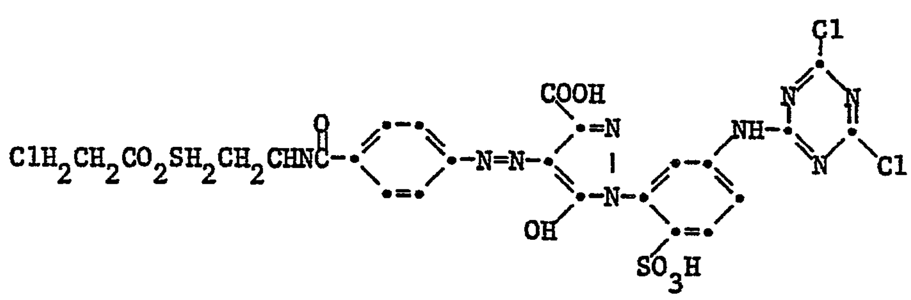

Beispiel 2: Die salzsauer diazotierte Lösung von 35,7 Teilen 4-Methoxy-3-aminobenzoesäure-N'-β(β'-chlorethylsulfonyl)ethylamid-hydrochlorid wird bei 0-5°C und pH =5-6 zu einer Lösung von 29,9 Teilen 1-(2'-Sulfo-5'-aminophenyl)-3-carboxy-5-pyrazolon gegeben und gekuppelt. Der gelbe Monoazofarbstoff wird anschliessend mit einer Suspension von 18,8 Teilen Cyanurchlorid versetzt und bei pH = 6 acyliert. Anschliessend werden 10,7 Teile N-Methylanilin zugegeben und bei 20-30°C und pH = 6,5 die zweite Kondensation durchgeführt. Der gebildete Monochlortriazinfarbstoff wird isoliert; er entspricht der Formel

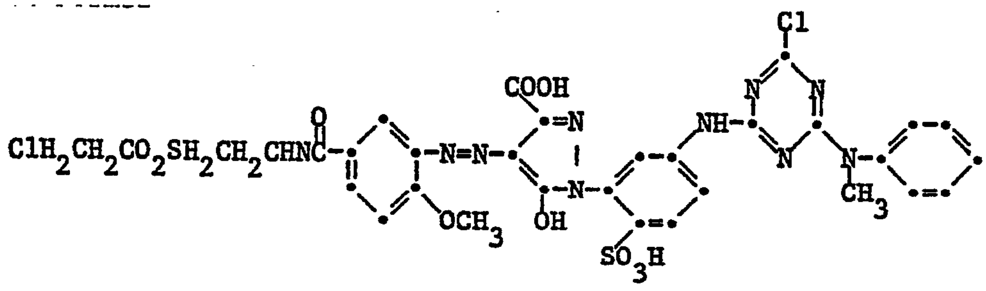

Beispiel 3: Die salzsauer diazotierte Lösung von 35,7 Teilen 4-Methoxy-3-aminobenzoesäure-N'-β(β'-chlorethylsulfonyl)ethylamid-hydro chlorid wird bei 0-5°C und pH =5-6 zu einer Lösung von 29,9 Teilen 1-(2'-Sulfo-5'-aminophenyl)-3-carboxy-5-pyrazolon gegeben und gekuppelt. Der gelbe Monoazofarbstoff wird anschliessend mit einer Suspension von 21 Teilen 2,4-Dichlor-6-isopropoxy-triazin versetzt und bei 20-35°C und pH = 6 acyliert.

Der gebildete Monochlortriazinfarbstoff wird isoliert; er entspricht der Formel

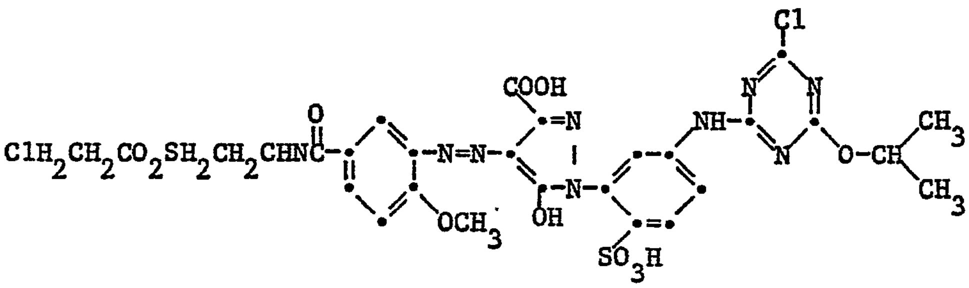

Beispiel 4: Die salzsauer diazotierte Lösung von 32,7 Teilen 4-Aminobenzoesäure-N'-β(β'-chlorethylsulfonyl)ethylamid-hydrochlorid wird bei 0-5°C und pH =5-6 zu einer Lösung von 29,9 Teilen 1-(2'-Sulfo-5'-aminophenyl)-3-carboxy-5-pyrazolon gegeben und gekuppelt. Der gelbe Monoazofarbstoff wird anschliessend mit einer Suspension von 21 Teilen 2,4-Dichlor-6-isopropoxy-triazin versetzt und bei 20-35°C und pH = 6 acyliert.

Der gebildete Chlortriazinfarbstoff wird isoliert; er entspricht der Formel

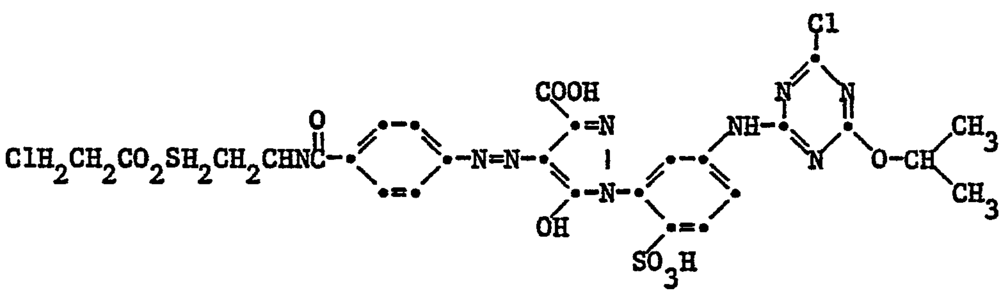

Beispiel 5: Die salzsauer diazotierte Lösung von 32,7 4-Aminobenzoesäure-N'-β(β''-chlorethylsulfonyl)ethylamid-hydrochlorid wird bei 0-5°C und pH =5-6 zu einer Lösung von 29,9 Teilen 1-(2'-Sulfo-5'-amino phenyl)-3-carboxy-5-pyrazolon gegeben und gekuppelt. Der gelbe Monoazofarbstoff wird anschliessend mit einer Suspension von 17 Teilen 2,4,6-Trifluor-5-chlor-pyrimidin versetzt und bei Raumtemperatur und pH = 6 acyliert.

Der gebildete Difluorchlorpyrimidinfarbstoff wird isoliert; er entspricht der Formel

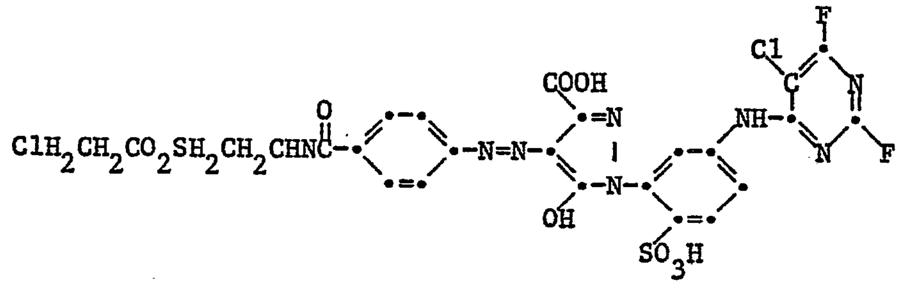

Beispiel 6: Die salzsauer diazotierte Lösung von 32,7 Teilen 4-Aminobenzoesäure-N'-β(β'-chlorethylsulfonyl)ethylamid-hydrochlorid wird bei 0-5°C und pH =5-6 zu einer Lösung von 29,9 Teilen 1-(2'-Sulfo-5'-aminophenyl)-3-carboxy-5-pyrazolon gegeben und gekuppelt. Der gelbe Monoazofarbstoff wird anschliessend mit einer Suspension von 22 Teilen 2,4,5,6-Tetrachlorpyrimidin versetzt und bei 20-35°C und pH = 6 acyliert.

Der gebildete Trichlorpyrimidinfarbstoff wird isoliert; er entspricht der Formel

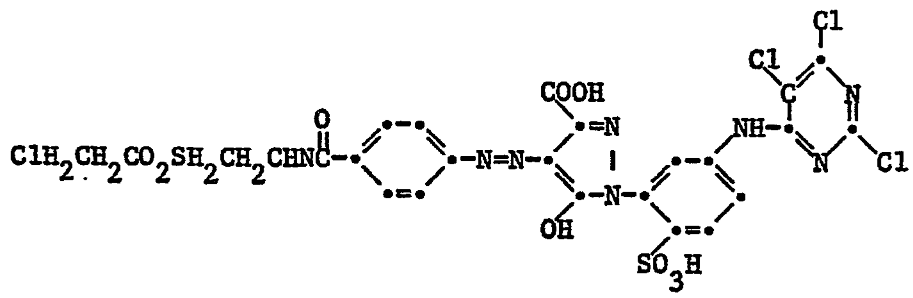

Beispiel 7: Die salzsauer diazotierte Lösung von 32,7 Teilen 4-Aminobenzoesäure-N'-β(β'chlorethylsulfonyl)ethylamid-hydrochlorid wird bei 0-5°C und pH =5-6 zu einer Lösung von 29,9 Teilen 1-(2'-Sulfo-5'-aminophenyl)-3-carboxy-5-pyrazolon gegeben und gekuppelt. Der gelbe Monoazofarbstoff wird anschliessend mit einer Suspension von 18,8 Teilen Cyanurchlorid versetzt und bei pH = 6 acyliert. Anschliessend werden 10,7 Teile N-Methylanilin zugegeben und bei 20-30°C und pH = 6,5 die zweite Kondensation durchgeführt. Der gebildete Monochlortriazinfarbstoff wird isoliert; er entspricht der Formel

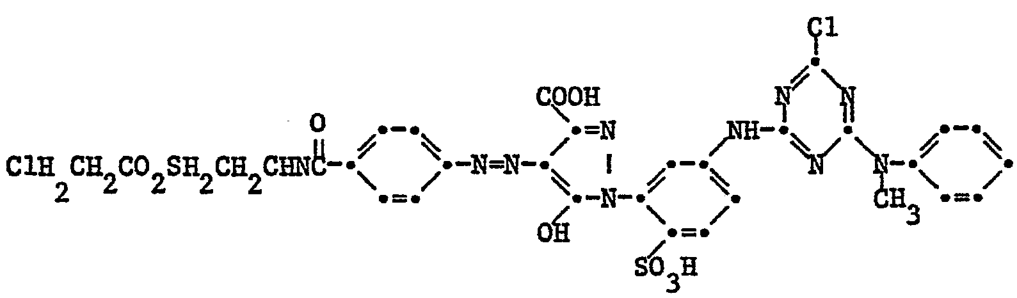

Beispiel 8: Die salzsauer diazotierte Lösung von 32,7 Teilen 4-Aminobenzoesäure-N'-β(β'-chlorethylsulfonyl)ethylamid-hydrochlorid wird bei 0-5°C und pH =5-6 zu einer Lösung von 29,9 Teilen 1-(2'-Sulfo-5'-aminophenyl)-3-carboxy-5-pyrazolon gegeben und gekuppelt. Der gelbe Monoazofarbstoff wird anschliessend mit 14 Teilen Cyanurfluorid versetzt und bei pH = 6 acyliert. Anschliessend werden 10,7 Teile N-Methylanilin zugegeben und bei 0-20°C und pH = 6,5 die zweite Kondensation durchgeführt. Der gebildete Monofluortriazinfarbstoff wird isoliert; er entspricht der Formel

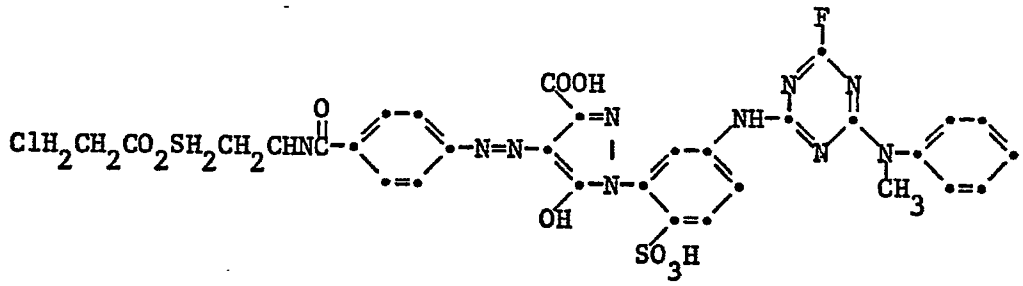

Nach dem Verfahren von Beispiel 1 können weitere wertvolle Reaktivfarbstoffe der allgemeinen Formel (1) hergestellt werden, wobei die in der folgenden Tabelle aufgeführten Symbole $D_1$, K und Z die unter Formel (1) angegebenen Bedeutungen haben und $W_1$ bis $W_7$ die unten angegebenen Bedeutungen haben. In der letzten Spalte der Tabelle ist der mit dem betreffenden Farbstoff auf Baumwolle erzielte Farbton angegeben.

| Beispiel | $D_1$ | K | Z | Farbton |
|---|---|---|---|---|
| 9 | 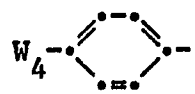 | 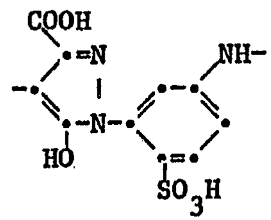 | 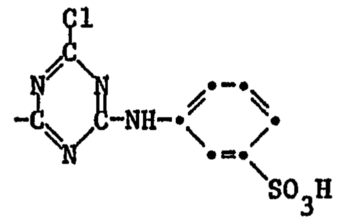 | gelb |
| 10 | 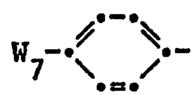 | 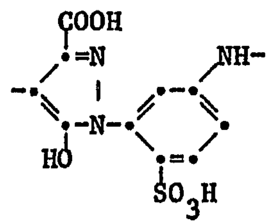 | 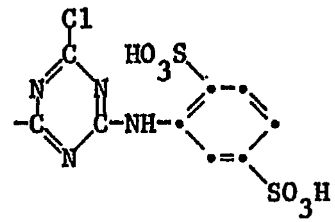 | gelb |
| 11 | 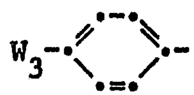 | 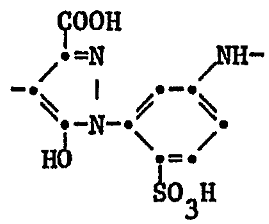 | 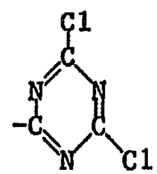 | gelb |
| 12 | 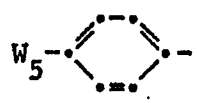 | 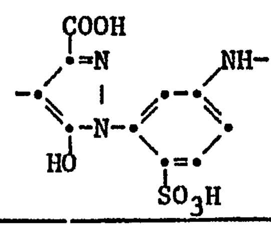 | 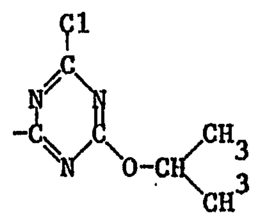 | gelb |

| Beispiel | $D_1$ | K | Z | Farbton |
|---|---|---|---|---|
| 13 | 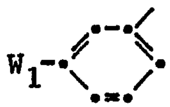 | 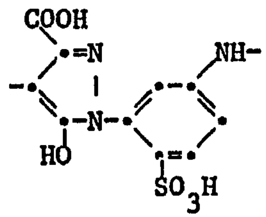 | 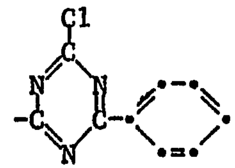 | gelb |
| 14 | 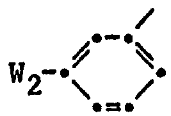 | 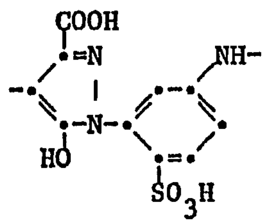 | 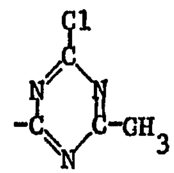 | gelb |
| 15 | 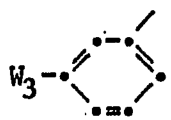 | 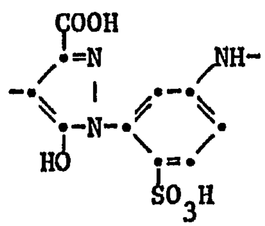 | 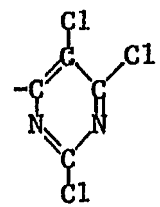 | gelb |
| 16 | 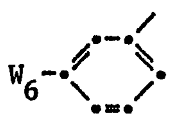 | 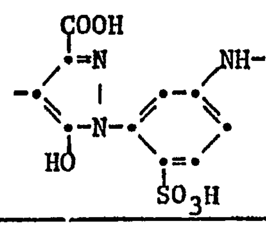 | 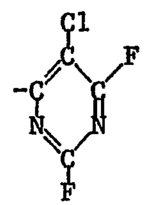 | gelb |

| Beispiel | $D_1$ | K | Z | Farbton |
|---|---|---|---|---|
| 17 | 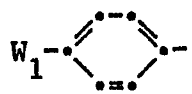 | 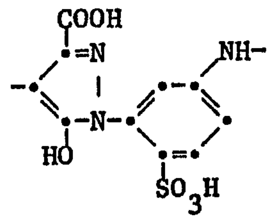 | 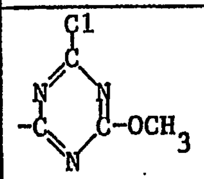 | gelb |
| 18 | 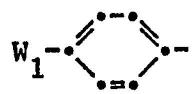 | 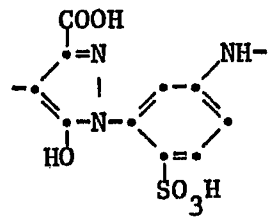 | 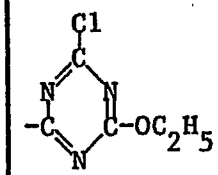 | gelb |
| 19 | 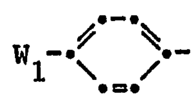 | 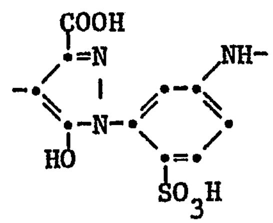 | 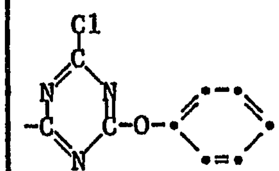 | gelb |
| 20 | 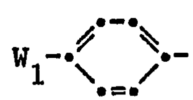 | 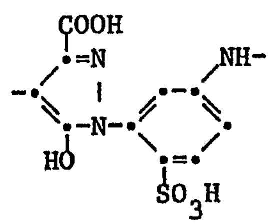 | 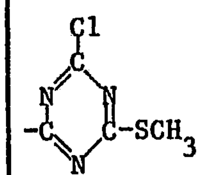 | gelb |

| Beispiel | $D_1$ | K | Z | Farbton |
|---|---|---|---|---|
| 21 | 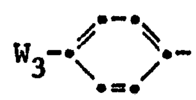 | 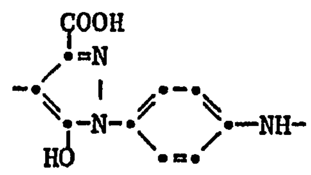 | 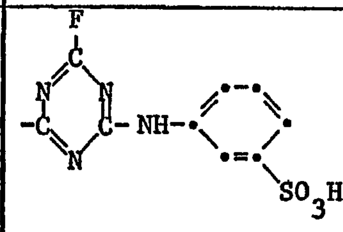 | gelb |
| 22 | 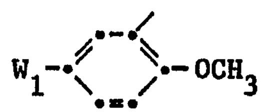 | 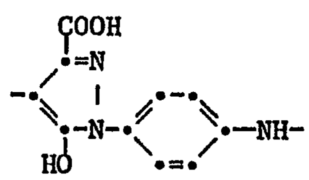 | 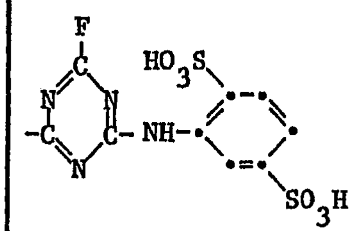 | gelb |
| 23 | 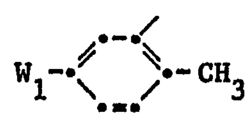 | 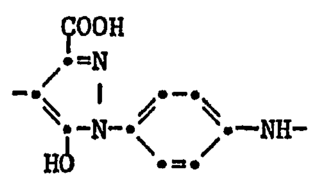 | 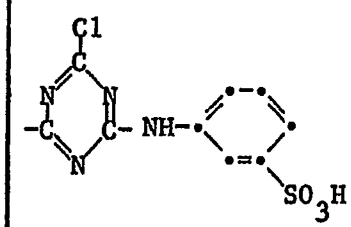 | gelb |
| 24 | 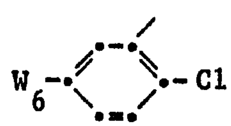 | 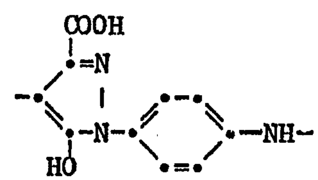 | 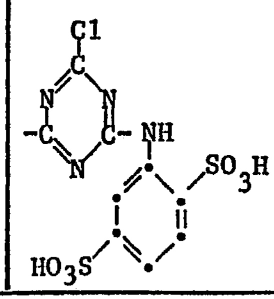 | gelb |

| Beispiel | $D_1$ | K | Z | Farbton |
|---|---|---|---|---|
| 25 | 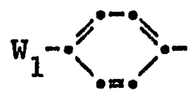 | 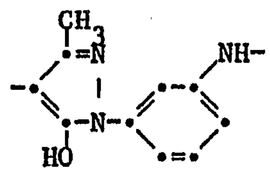 | 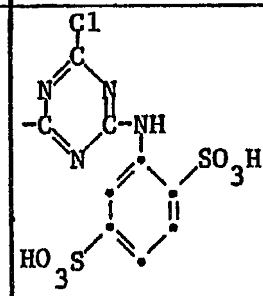 | gelb |
| 26 | 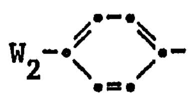 | 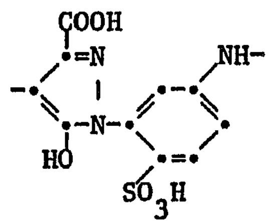 | 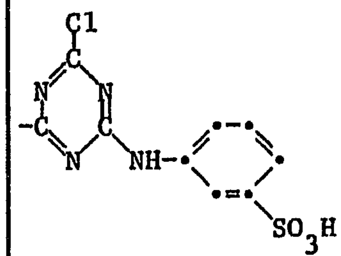 | gelb |
| 27 | 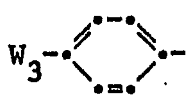 | 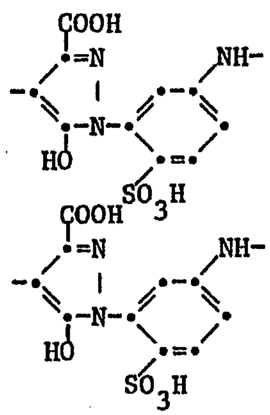 | 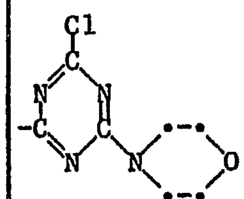 | gelb |
| 28 | 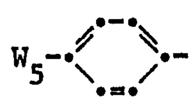 | | 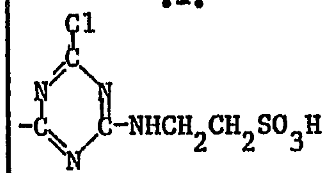 | gelb |

| Beispiel | $D_1$ | K | Z | Farbton |
|---|---|---|---|---|
| 29 | 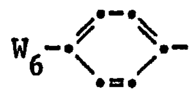 | 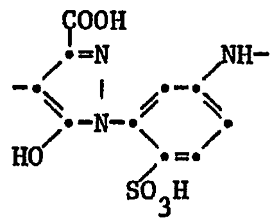 | 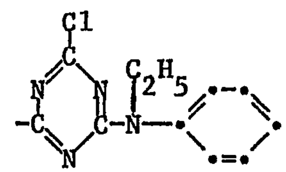 | gelb |
| 30 | 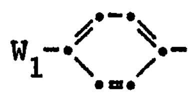 | 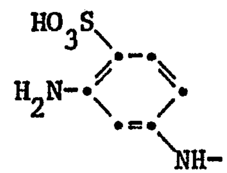 | 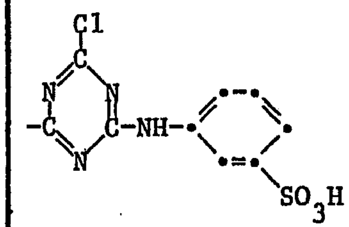 | gelb |
| 31 | 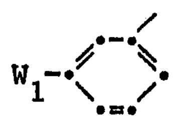 | 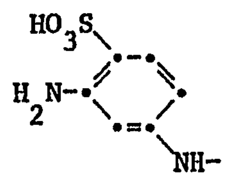 | 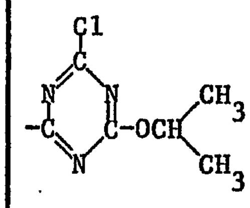 | gelb |
| 32 | 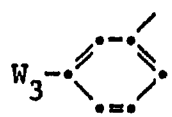 | 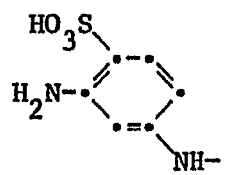 | 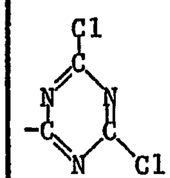 | gelb |

| Beispiel | $D_1$ | K | Z | Farbton |
|---|---|---|---|---|
| 33 | 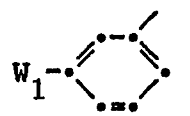 | 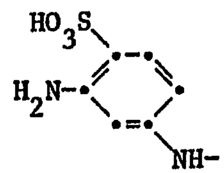 | 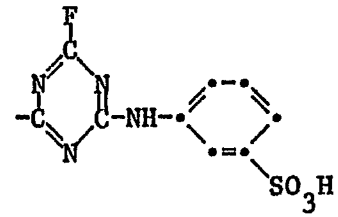 | gelb |
| 34 | 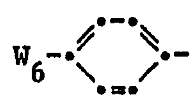 | 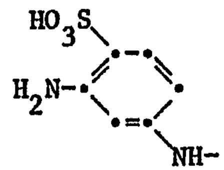 | 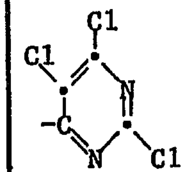 | gelb |
| 35 | 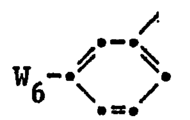 | 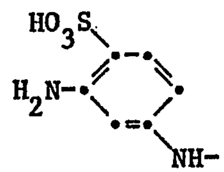 | 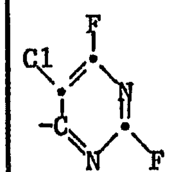 | gelb |

$W_1$ 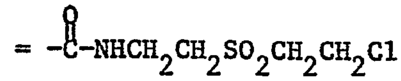

$W_2$ 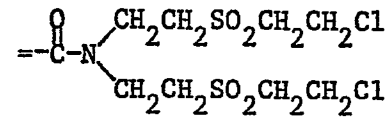

$W_3$ 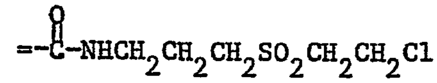

$W_4$ 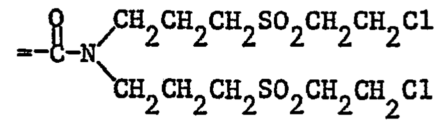

$W_5$ 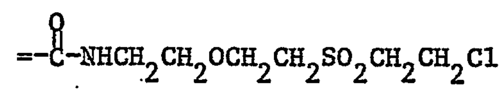

$W_6$ 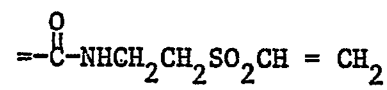

$W_7$ 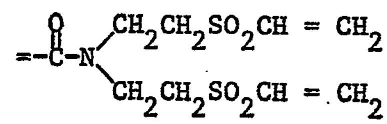

Beispiel 36

48 Teile 2-Amino-5-naphthol-7-sulfonsäure werden in 800 Teilen Wasser unter Zusatz von 30 %iger Natriumhydroxidlösung bei pH 4,0 bis 4,5 gelöst. Man erwärmt dann auf 60°C und lässt 45 Teile 2,4,5,6-Tetrachlorpyrimidin zutropfen, wobei der pH-Wert durch Eintropfen von 5n-Natriumhydroxidlösung bei pH 3,0 bis 4,0 gehalten wird. Es wird 20 Stunden bei pH 3,0 bis 3,5 und 60°C kondensiert.

Die Lösung wird als Kupplungskomponente zur Farbstoffherstellung eingesetzt.

Zur Herstellung der Diazoniumverbindung werden 66 Teile 4-Aminobenzoe säure-N'-β(β'-chlorethylsulfonyl)-ethylamid-hydrochlorid in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel

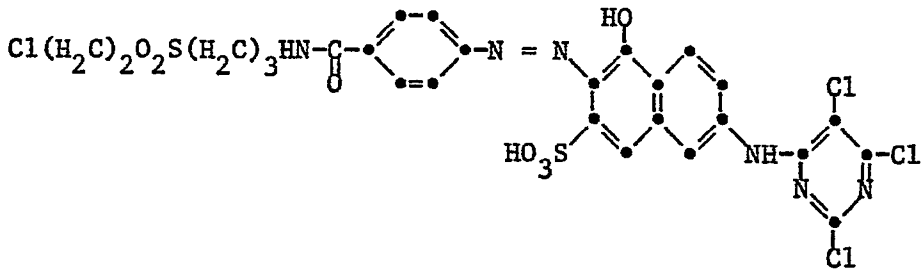

enthält.

Diese Verbindung besitzt sehr gute Farbstoffeigenschaften und färbt Cellulosematerialien nach den üblichen Färbe- und Druckverfahren für Reaktivfarbstoffe in orangen Tönen mit sehr guten Nassechtheitseigenschaften.

Beispiel 37

48 Teile 2-Amino-5-naphthol-7-sulfonsäure werden in 800 Teilen Wasser unter Zusatz von 30 %iger Natriumhydroxidlösung bei pH 6,0 bis 6,5 gelöst. Man kühlt dann auf 10°C ab und lässt 34 Teile 2,4,6-Trifluor-5-chlorpyrimidin zutropfen, wobei der pH-Wert durch Eintropfen von 5n-Natriumhydroxidlösung bei pH 6,0 bis 6,5 gehalten wird. Es wird 20 Minuten bei pH 6,0 bis 6,5 und 15°C nachgerüht.

Die Lösung wird als Kupplungskomponente zur Farbstoffherstellung eingesetzt.

Zur Herstellung der Diazoniumverbindung werden 66 Teile 3-Aminobenzoesäure-N'-β(β'-chlorethylsulfonyl)-ethylamid-hydrochlorid in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel

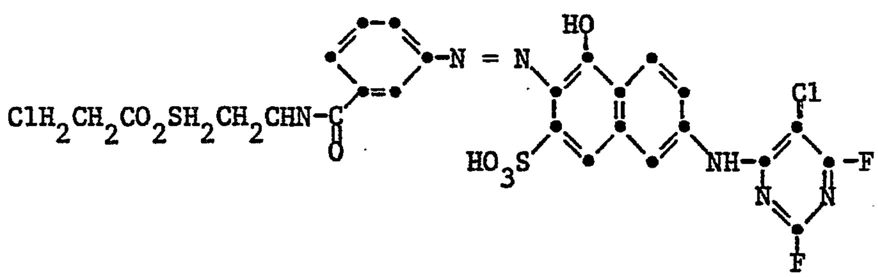

enthält.

Diese Verbindung besitzt sehr gute Farbstoffeigenschaften und färbt Cellulosematerialien nach den üblichen Färbe- und Druckverfahren für Reaktivfarbstoffe in orangen Tönen mit sehr guten Nassechtheitseigenschaften.

Beispiel 38

195 Teile Cyanurchlorid werden in 800 Volumenteilen Aceton gelöst; unter gutem Rühren gibt man diese Lösung in eine Mischung von 1300 Teilen Wasser und 1300 Teilen zerstossenem Eis sowie 20 Volumenteilen einer 2n-Salzsäure. Zu dieser so erhaltenen Suspension lässt man innerhalb von 50 bis 60 Minuten unter Rühren eine Lösung mit einem pH-Wert von 6,9 bis 7,2 aus 239 Teilen 2-Amino-5-naphthol-7-sulfonsäure, 65 Teilen Natriumcarbonat und 2000 Teilen Wasser einlaufen. Die Umsetzung des Cyanchlorids mit dem Aminonaphthol wird bei einer Temperatur zwischen 0 und 5°C und einem pH-Wert von 3 bis 5 durchgeführt. Es wird so lange gerührt, bis kein freies Amin mehr durch eine Diazotierungsprobe nachweisbar ist.

Die so hergestellte Lösung der Kupplungskomponente wird mit 330 Teilen diazotiertem 4-Aminobenzoesäure-N'-β(β'-chlorethylsulfonyl)ethylamidhydrochlorid versetzt. Man rührt 2 Stunden lang und erhöht in dieser Zeit durch portionsweises Einstreuen von Natriumcarbonat den pH-Wert auf 6,5 bis 7,0. Es wird noch eine Stunde bei diesem pH-Wert und bei Raumtemperatur weitergerührt. Anschliessend gibt man 173 Teile Anilin-m-sulfonsäure und portionsweise etwa 110 Teile Natriumcarbonat hinzu, um den

pH-Wert auf 5,0 bis 6,0 zu halten. Diese Reaktionslösung wird auf 50°C erwärmt und unter Rühren bei dieser Temperatur eine Stunde gehalten. Nach dem Abkühlen der Reaktionslösung wird die gebildete Azoverbindung mittels Natriumchlorid ausgefällt, abgesaugt und bei 60°C unter reduziertem Druck getrocknet. Es wird ein rotes, elektrolythaltiges Pulver erhalten, das das Natriumsalz der Verbindung der Formel

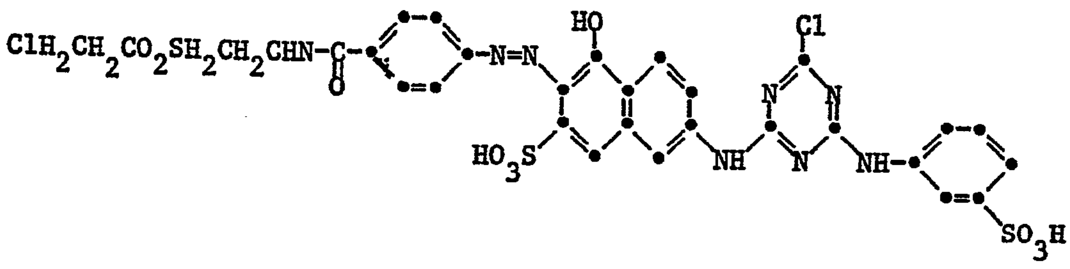

enthält.

Diese Azoverbindung eignet sich hervorragend als Farbstoff. In Folge seiner faserreaktiven Eigenschaften liefert er beispielsweise aus wässrig-alkalischer Flotte nach einem üblichen Auszieh- oder Klotzverfahren farbtiefe, orange Färbungen auf Baumwollfasern. Die Färbungen besitzen sehr gute Wasch- und Lichtechtheiten.

Beispiel 39

195 Teile Cyanurchlorid werden in 800 Volumenteilen Aceton gelöst; unter gutem Rühren gibt man diese Lösung in eine Mischung von 1300 Teilen Wasser und 1300 Teilen zerstossenem Eis sowie 20 Volumenteilen einer 2n-Salzsäure. Zu dieser so erhaltenen Suspension lässt man innerhalb von 50 bis 60 Minuten unter Rühren eine Lösung mit einem pH-Wert von 6,9 bis 7,2 aus 239 Teilen 2-Amino-8-naphthol-6-sulfonsäure, 65 Teilen Natriumcarbonat und 2000 Teilen Wasser einlaufen. Die Umsetzung des Cyanchlorids mit dem Aminonaphthol wird bei einer Temperatur zwischen 0 und 5°C und einem pH-Wert von 3 bis 5 durchgeführt. Es wird so lange gerührt, bis kein freies Amin mehr durch eine Diazotierungsprobe nachweisbar ist.

Die so hergestellte Lösung der Kupplungskomponente wird mit 330 Teilen diazotiertem 3-Aminobenzoesäure-N'-β(β'-chlorethylsulfonyl)ethylamidhydrochlorid versetzt. Man rührt 2 Stunden lang und erhöht in dieser Zeit durch portionsweises Einstreuen von Natriumcarbonat den pH-Wert auf 6,5 bis 7,0. Es wird noch eine Stunde bei diesem pH-Wert und bei Raumtemperatur weitergerührt. Anschliessend gibt man 173 Teile Anilin-m-sulfonsäure und portionsweise etwa 110 Teile Natriumcarbonat hinzu, um den pH-Wert auf 5,0 bis 6,0 zu halten. Diese Reaktionslösung wird auf 50°C erwärmt und unter Rühren bei dieser Temperatur eine Stunde gehalten. Nach dem Abkühlen der Reaktionslösung wird die gebildete Azoverbindung mittels Natriumchlorid ausgefällt, abgesaugt und bei 60°C unter reduziertem Druck getrocknet. Es wird ein rotes, elektrolythaltiges Pulver erhalten, das das Natriumsalz der Verbindung der Formel

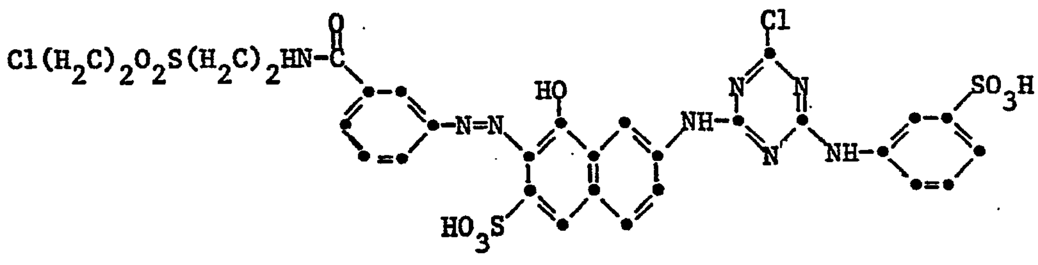

enthält.

Diese Azoverbindung eignet sich hervorragend als Farbstoff. In Folge seiner faserreaktiven Eigenschaften liefert er beispielsweise aus wässrig-alkalischer Flotte nach einem üblichen Auszieh- oder Klotzverfahren farbtiefe, orange Färbungen auf Baumwollfasern. Die Färbungen besitzen sehr gute Wasch- und Lichtechtheiten.

Nach den in den Beispielen 38 und 39 beschriebenen Verfahren können weitere wertvolle Reaktivfarbstoffe der allgemeinen Formel (2) hergestellt werden, wobei die in der folgenden Tabelle aufgeführten Symbole $D_1$, K und Z die unter Formel (2) angegebenen Bedeutungen haben, und $W_1$ bis $W_7$ die gleiche Bedeutung wie auf Seite 35 angegeben, haben. In der letzten Spalte der Tabelle ist der mit dem betreffenden Farbstoff auf Baumwolle erzielte Farbton angegeben.

| Beispiel | $D_1$ | K | Z | Farbton |
|---|---|---|---|---|
| 40 | 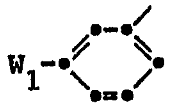 | 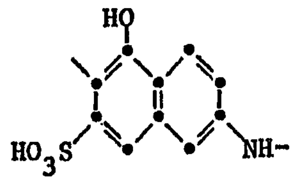 | 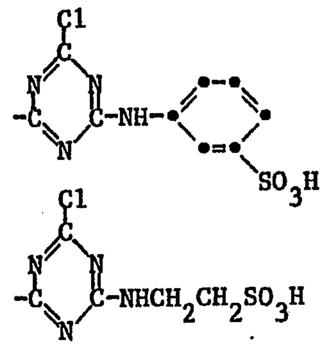 | orange |
| 41 | 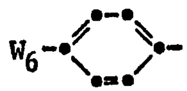 | 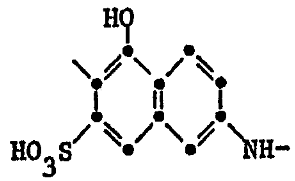 | | orange |
| 42 | 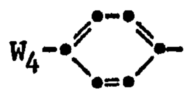 | 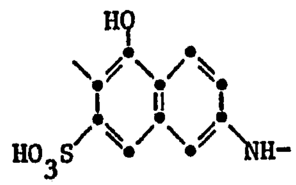 | 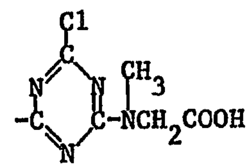 | orange |
| 43 | 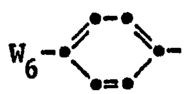 | 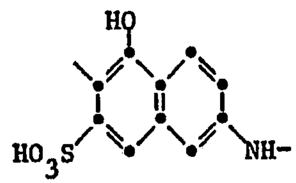 | 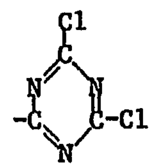 | orange |

| Beispiel | $D_1$ | K | Z | Farbton |
|---|---|---|---|---|
| 44 | 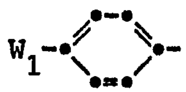 | 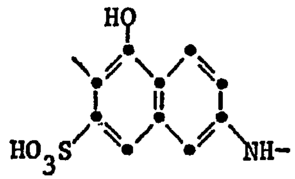 | 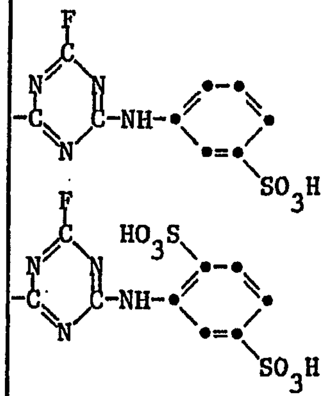 | orange |
| 45 | 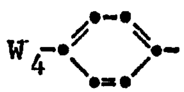 | 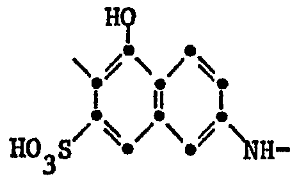 | | orange |
| 46 | 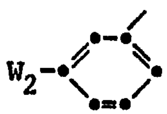 | 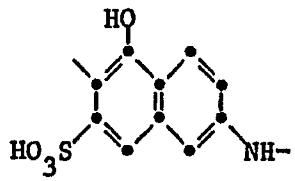 | dito | orange |
| 47 | 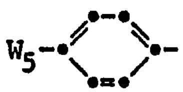 | 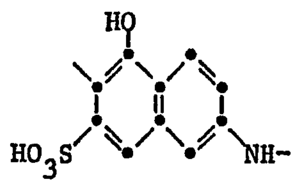 | dito | orange |
| 48 | 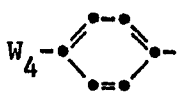 | dito | dito | orange |

| Beispiel | $D_1$ | K | Z | Farbton |
| --- | --- | --- | --- | --- |
| 49 | 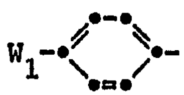 | 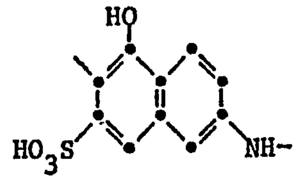 | 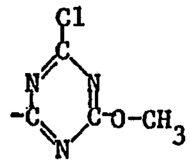 | orange |
| 50 | 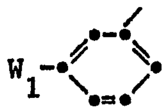 | 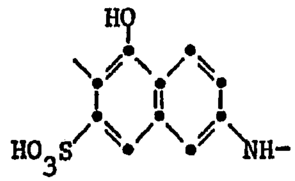 | 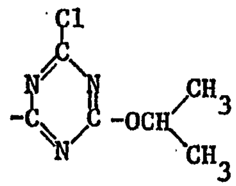 | orange |
| 51 | 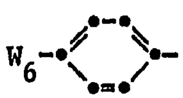 | 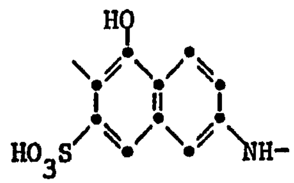 | 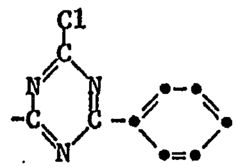 | orange |
| 52 | 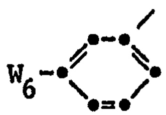 | 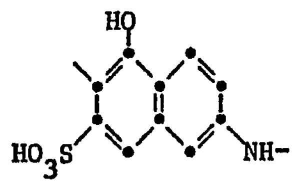 | 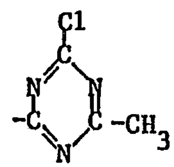 | orange |

| Beispiel | $D_1$ | K | Z | Farbton |
|---|---|---|---|---|
| 53 | 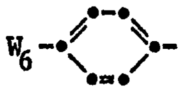 | 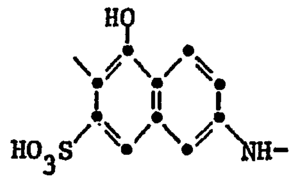 | 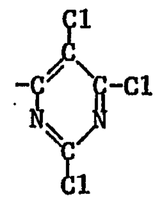 | orange |
| 54 | 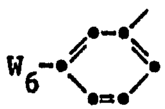 | 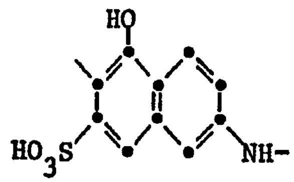 | 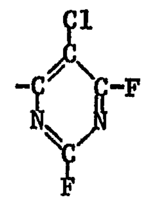 | orange |
| 55 | 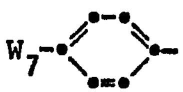 | 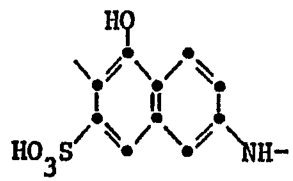 | 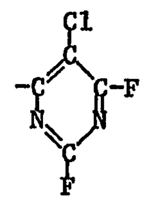 | orange |
| 56 | 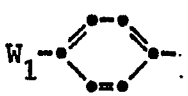 | 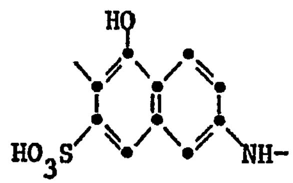 | dito | orange |

| Beispiel | $D_1$ | K | Z | Farbton |
|---|---|---|---|---|
| 57 | 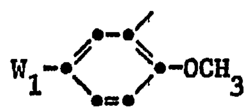 | 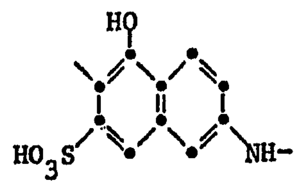 | 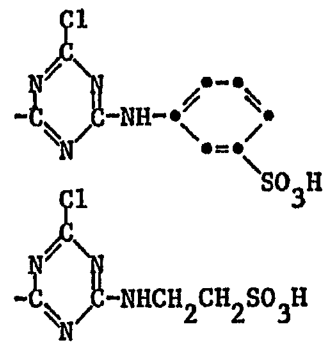 | scharlach |
| 58 | 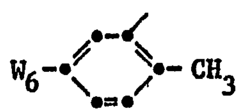 | 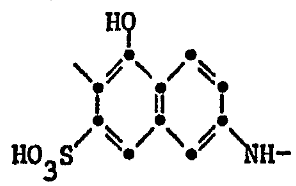 | | orange |
| 59 | 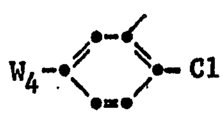 | 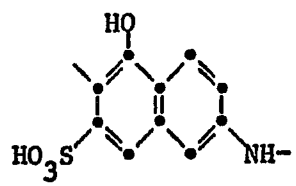 | 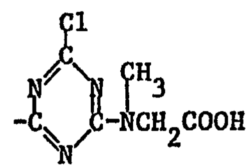 | orange |
| 60 | 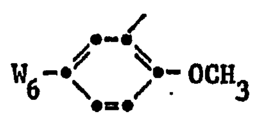 | 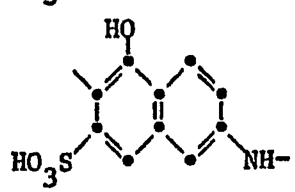 | 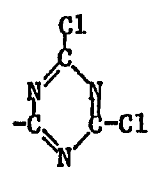 | scharlach |

| Beispiel | $D_1$ | K | Z | Farbton |
| --- | --- | --- | --- | --- |
| 61 | 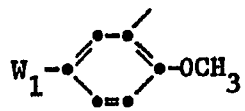 | 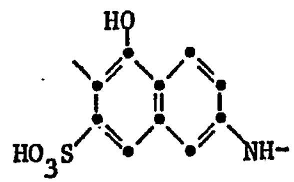 | 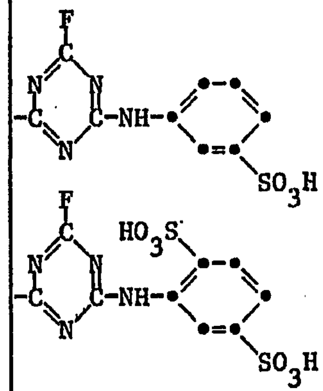 | scharlach |
| 62 | 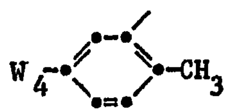 | 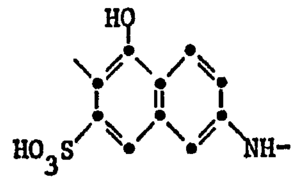 | | orange |
| 63 | 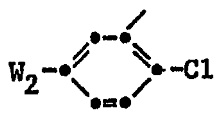 | 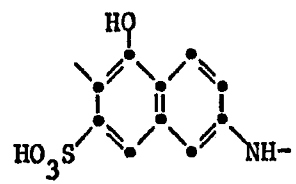 | dito | orange |

| Beispiel | $D_1$ | K | Z | Farbton |
|---|---|---|---|---|
| 64 | 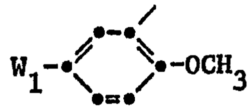 | 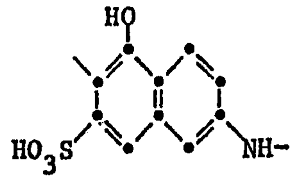 | 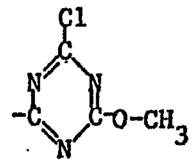 | scharlach |
| 65 | 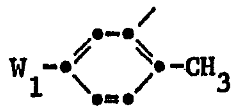 | 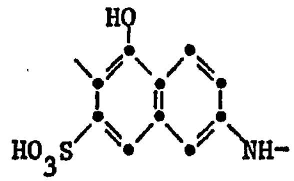 | 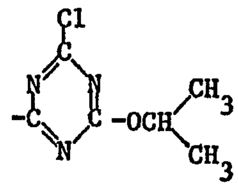 | orange |
| 66 | 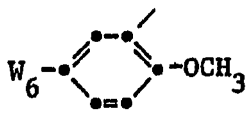 | 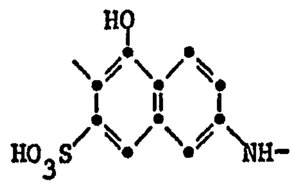 | 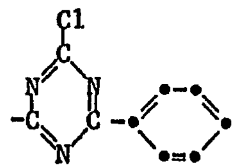 | scharlach |
| 67 | 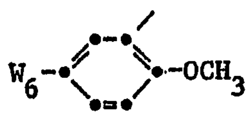 | 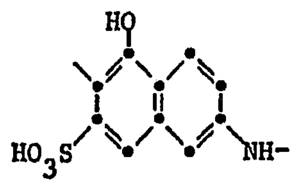 | 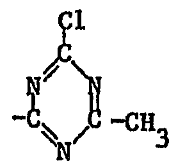 | scharlach |

| Beispiel | $D_1$ | K | Z | Farbton |
|---|---|---|---|---|
| 68 | 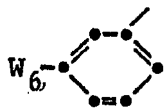 | 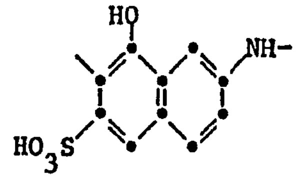 | 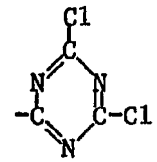 | scharlach |
| 69 | 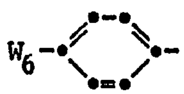 | 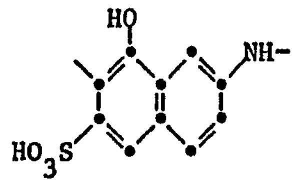 | 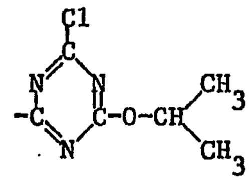 | scharlach |
| 70 | 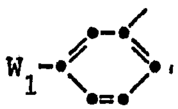 | 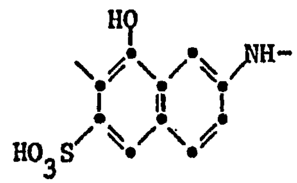 | 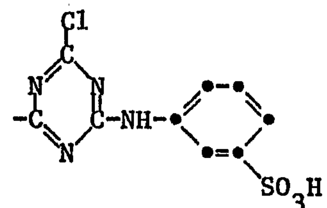 | scharlach |
| 71 | 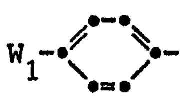 | 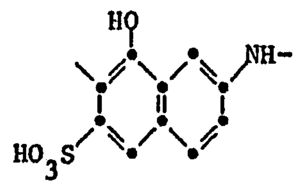 | 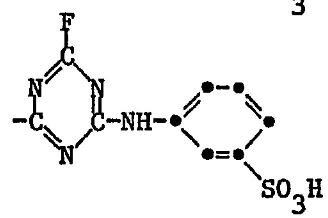 | scharlach |

| Beispiel | $D_1$ | K | Z | Farbton |
|---|---|---|---|---|
| 72 | 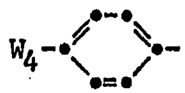 | 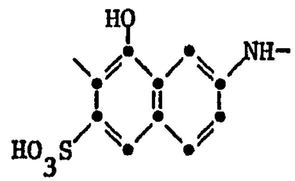 | 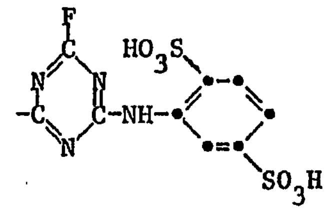 | scharlach |
| 73 | 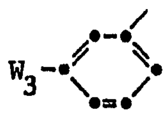 | 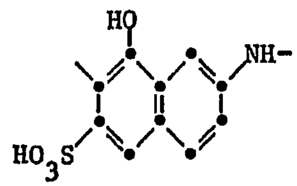 | 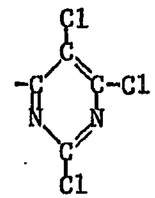 | scharlach |
| 74 | 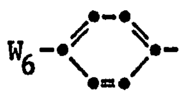 | 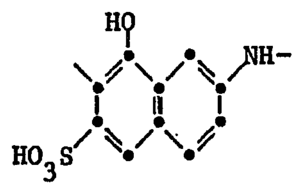 | 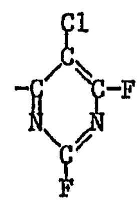 | scharlach |
| 75 | 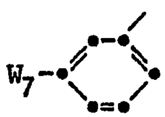 | 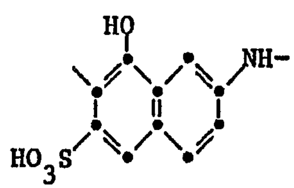 | 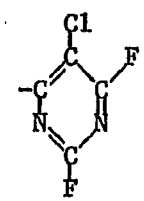 | scharlach |

| Beispiel | $D_1$ | K | Z | Farbton |
|---|---|---|---|---|
| 76 | 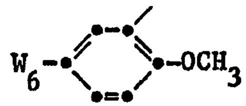 | 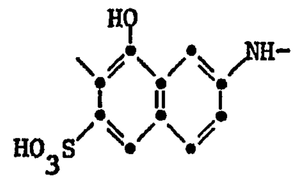 | 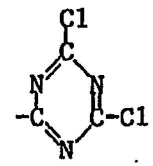 | rot |
| 77 | 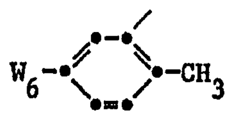 | 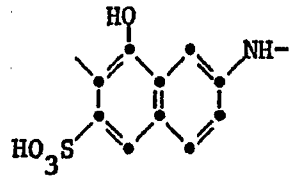 | 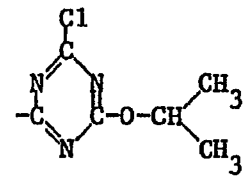 | scharlach |
| 78 | 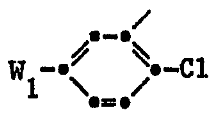 | 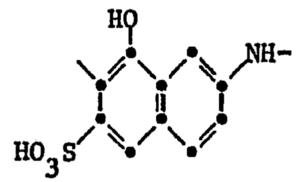 | 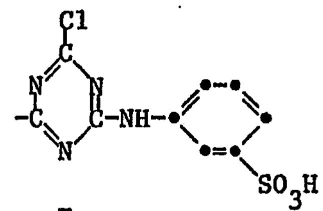 | scharlach |
| 79 | 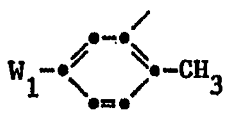 | 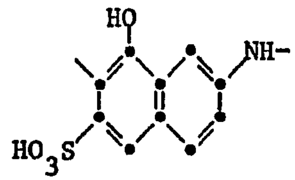 | 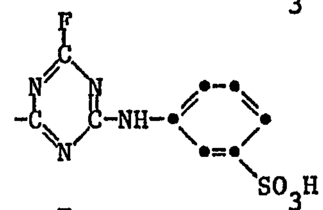 | scharlach |
| 80 | 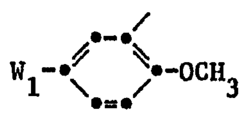 | dito | 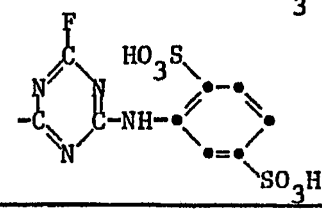 | rot |

Beispiel 81

31,9 Teile 1-Amino-8-hydroxynaphthalin-3,6-disulfonsäure werden in 800 ml Wasser neutral gelöst und die Lösung auf 0° bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 33 Teilen 4-Aminobenzoesäure-N'-β(β'-chlorethylsulfonyl)ethylamid-hydrochlorid in 100 ml Wasser wird der pH der Reaktionsmischung durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 33 Teilen 3-Aminobenzoesäure-N'-β(β'-chlorethylsulfonyl)ethylamid hydrochlorid gekuppelt. Nach vollständiger Kupplungsreaktion bei pH 8 wird die Reaktionsmischung geklärt und der gebildete Reaktivfarbstoff der Formel

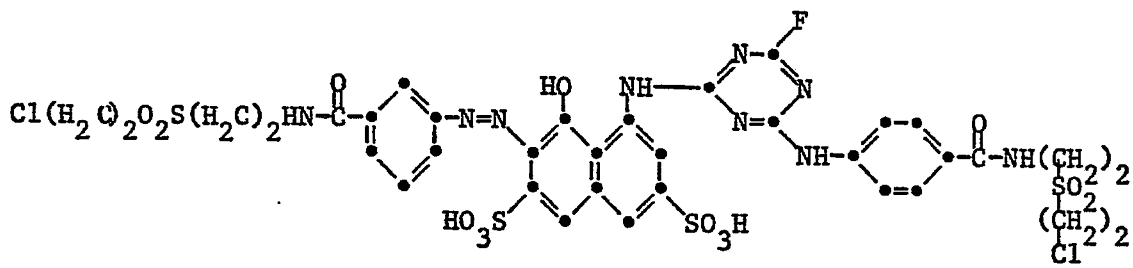

durch Eindampfen oder Gefriertrocknen der Reaktionslösung bei pH 7 isoliert. Er färbt Baumwolle in roten Tönen.

Beispiel 82

31,9 Teile 1-Amino-8-hydroxynaphthalin-3,6-disulfonsäure werden in 800 ml Wasser neutral gelöst und die Lösung auf 0° bis 5° abgekühlt. Bei dieser Temperatur werden 14, 2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 33 Teilen 4-Aminobenzoesäure-N'-β(β'-chlorethylsulfonyl)ethylamid hydro chlorid in 100 ml Wasser wird der pH der Reaktionsmischung durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 33 Teilen 4-Aminobenzoesäure-N'-β(β'-chlorethylsulfonyl)ethylamid-hydrochlorid gekuppelt. Nach vollständiger Kupplungsreaktion bei pH 8 wird die Reaktionsmischung geklärt und der gebildete Reaktivfarbstoff der Formel

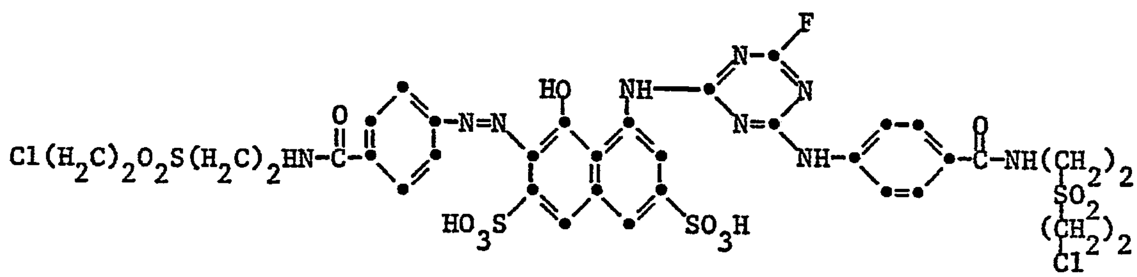

durch Eindampfen oder Gefriertrocknen der Reaktionslösung bei pH 7 isoliert. Er färbt Baumwolle in roten Tönen.

Beispiel 83

64 Teile 1-Amino-8-naphthol-3,6-disulfonsäure werden in 800 Teilen Wasser unter Zusatz von 30 %iger Natriumhydroxidlösung bei pH 5,0 gelöst. Man erwärmt dann auf 30°C und lässt 42 Teile 2,4-Dichlor-6-isopropoxy-triazin zutropfen, wobei der pH-Wert durch Eintropfen von 5n-Natriumhydroxidlösung bei pH 4,0 bis 4,5 gehalten wird. Es wird 15 Stunden bei pH 4,0 bis 4,5 und 65°C kondensiert.

Die Lösung wird als Kupplungskomponente zur Farbstoffherstellung eingesetzt.

Zur Herstellung der Diazoniumverbindung werden 56 Teile 3-Aminobenzoesäure-N'-β(β'-chlorethylsulfonyl)-ethylamid-hydrochlorid in 500 Teilen Eiswasser suspendiert, mit 45 Teilen conc. wässriger

Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel

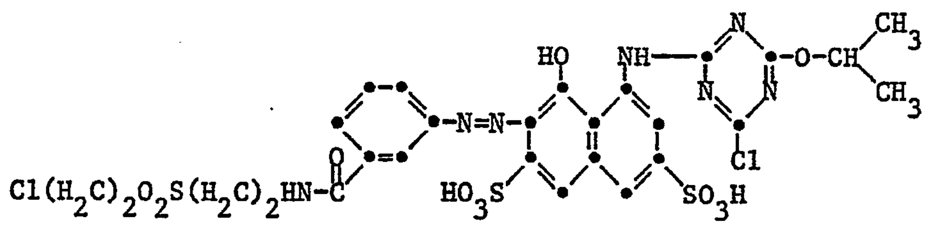

enthält.

Diese Verbindung besitzt sehr gute Farbstoffeigenschaften und färbt Cellulosematerialen nach den üblichen Färbe- und Druckverfahren für Reaktivfarbstoffe in blaustichig roten Tönen mit sehr guten Nassechtheitseigenschaften.

Beispiel 84

64 Teile 1-Amino-8-naphthol-3,6-disulfonsäure werden in 800 Teilen Wasser unter Zusatz von 30 %iger Natriumhydroxidlösung bei pH 5,0 gelöst. Man erwärmt dann auf 30°C und lässt 42 Teile 2,4-Dichlor-6-isopropoxy-triazin zutropfen, wobei der pH-Wert durch Eintropfen von 2n-Natriumhydroxidlösung bei pH 4,0 bis 4,5 gehalten wird. Es wird 15 Stunden bei pH 4,0 bis 4,5 und 65°C kondensiert.

Die Lösung wird als Kupplungskomponente zur Farbstoffherstellung eingesetzt.

Zur Herstellung der Diazoniumverbindung werden 56 Teile 4-Aminobenzoesäure-N'-β(β'-chlorethylsulfonyl)-ethylamid-hydrochlorid in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel

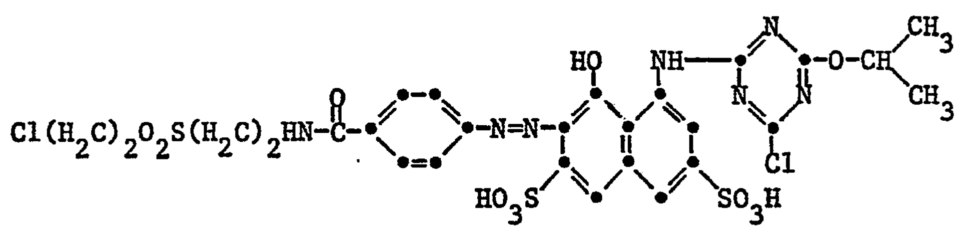

enthält.

Diese Verbindung besitzt sehr gute Farbstoffeigenschaften und färbt Cellulosematerialen nach den üblichen Färbe- und Druckverfahren für Reaktivfarbstoffe in blaustichig roten Tönen mit sehr guten Nassechtheitseigenschaften.

Beispiel 85

64 Teile 1-Amino-8-naphthol-3,6-disulfonsäure werden in 800 Teilen Wasser unter Zusatz von 30 %iger Natriumhydroxidlösung bei pH 9,0 bis 9,5 gelöst. Man kühlt dann auf 10°C ab und lässt 34 Teile 2,4,6-Trifluor-5-chlor-pyrimidin zutropfen, wobei der pH-Wert durch Eintropfen von 5n-Natriumhydroxidlösung bei pH 9,25 bis 9,5 gehalten wird. Es wird 15 Minuten bei pH 8,5 bis 9 und 15°C nachgerüht und dann mit 4n-Salzsäurelösung versetzt, bis der pH-Wert von 6,5 erreicht wird.

Die Lösung wird als Kupplungskomponente zur Farbstoffherstellung eingesetzt.

Zur Herstellung der Diazoniumverbindung werden 66 Teile 3-Aminobenzoesäure-N'-β(β'-chlorethylsulfonyl)-ethylamid-hydrochlorid in 500 Teilen Eiswasser suspendiert, mit 45 Teilen conc. wässriger

Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel

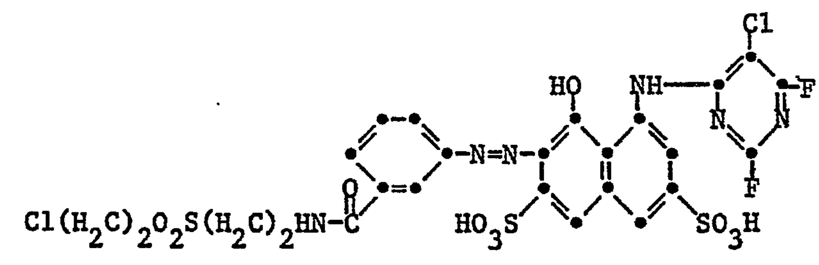

enthält.

Diese Verbindung besitzt sehr gute Farbstoffeigenschaften und färbt Cellulosematerialien nach den üblichen Färbe- und Druckverfahren für Reaktivfarbstoffe in blaustichig roten Tönen mit sehr guten Nassechtheitseigenschaften.

Beispiel 86

64 Teile 1-Amino-8-naphthol-3,6-disulfonsäure werden in 800 Teilen Wasser unter Zusatz von 30 %iger Natriumhydroxidlösung bei pH 9,0 bis 9,5 gelöst. Man kühlt. dann auf 10°C ab und lässt 34 Teile 2,4,6-Trifluor-5-chlor-pyrimidin zutropfen, wobei der pH-Wert durch Eintropfen von 5n-Natriumhydroxidlösung bei pH 9,25 bis 9,5 gehalten wird. Es wird 15 Minuten bei pH 8,5 bis 9 und 15°C nachgerührt und dann mit 4n-Salzsäurelösung versetzt, bis der pH-Wert von 6,5 erreicht wird.

Die Lösung wird als Kupplungskomponente zur Farbstoffherstellung eingesetzt.

Zur Herstellung der Diazoniumverbindung werden 66 Teile 4-Aminobenzoesäure-N'-β(β'-chlorethylsulfonyl)-ethylamid-hydrochlorid in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel

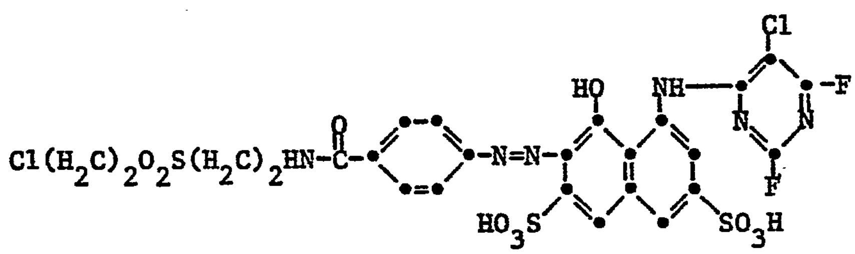

enthält.

Diese Verbindung besitzt sehr gute Farbstoffeigenschaften und färbt Cellulosematerialien nach den üblichen Färbe- und Druckverfahren für Reaktivfarbstoffe in blaustichig roten Tönen mit sehr guten Nassechtheitseigenschaften.

Beispiel 87

64 Teile 1-Amino-8-naphthol-3,6-disulfonsäure werden in 800 Teilen Wasser unter Zusatz von 30 %iger Natriumhydroxidlösung bei pH 5,0 gelöst. Man erwärmt dann auf 30°C ab und lässt 45 Teile 2,4,5,6-Tetrachlor-pyrimidin zutropfen, wobei der pH-Wert durch Eintropfen von 5n-Natriumhydroxidlösung bei pH 4,0 bis 4,5 gehalten wird. Es wird 15 Stunden bei pH 4,0 bis 4,5 und 65°C kondensiert.

Die Lösung wird als Kupplungskomponente zur Farbstoffherstellung eingesetzt.

Zur Herstellung der Diazoniumverbindung werden 66 Teile 3-Aminobenzoesäure-N'-β(β'-chlorethylsulfonyl)-ethylamid-hydrochlorid in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel

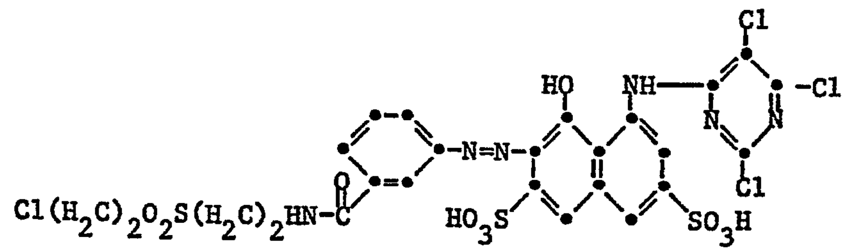

enthält.

Diese Verbindung besitzt sehr gute Farbstoffeigenschaften und färbt Cellulosematerialien nach den üblichen Färbe- und Druckverfahren für Reaktivfarbstoffe in blaustichig roten Tönen mit sehr guten Nassechtheitseigenschaften.

Beispiel 88

64 Teile 1-Amino-8-naphthol-3,6-disulfonsäure werden in 800 Teilen Wasser unter Zusatz von 30 %iger Natriumhydroxidlösung bei pH 5,0 gelöst. Man erwärmt dann auf 60°C und lässt 45 Teile 2,4,5,6-Tetrachlor-pyrimidin zutropfen, wobei der pH-Wert durch Eintropfen von 5n-Natriumhydroxidlösung bei pH 4,0 bis 4,5 gehalten wird. Es wird 15 Stunden bei pH 4,0 bis 4,5 und 65°C kondensiert.

Die Lösung wird als Kupplungskomponente zur Farbstoffherstellung eingesetzt.

Zur Herstellung der Diazoniumverbindung werden 66 Teile 4-Aminobenzoesäure-N'-β(β'-chlorethylsulfonyl)-ethylamid-hydrochlorid in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel

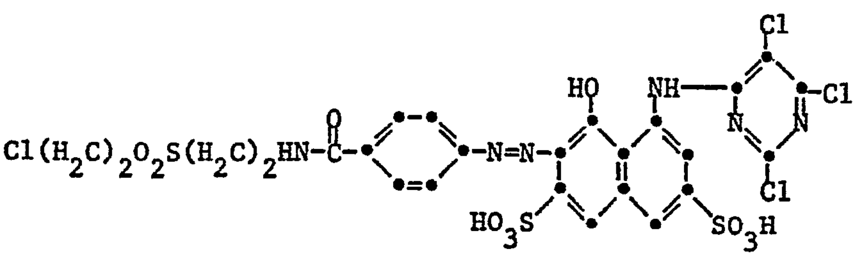

enthält.

Diese Verbindung besitzt sehr gute Farbstoffeigenschaften und färbt Cellulosematerialien nach den üblichen Färbe- und Druckverfahren für Reaktivfarbstoffe in blaustichig roten Tönen mit sehr guten Nassechtheitseigenschaften.

Beispiel 89

64 Teile 1-Amino-8-naphthol-3,6-disulfonsäure werden in 800 Teilen Wasser unter Zusatz von 30 %iger Natriumhydroxidlösung bei pH 5,0 gelöst. Man erwärmt dann auf 60°C und lässt 45 Teile 2,4,5,6-Tetrachlor-pyrimidin zutropfen, wobei der pH-Wert durch Eintropfen von 2n-Natriumhydroxidlösung bei pH 4,0 bis 4,5 gehalten wird. Es wird 15 Stunden bei pH 4,0 bis 4,5 und 65°C kondensiert.

Die Lösung wird als Kupplungskomponente zur Farbstoffherstellung eingesetzt.

Zur Herstellung der Diazoniumverbindung werden 67 Teile 4-Aminobenzoesäure-N'-γ(β'-chlorethylsulfonyl)-propylamid-hydrochlorid in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel

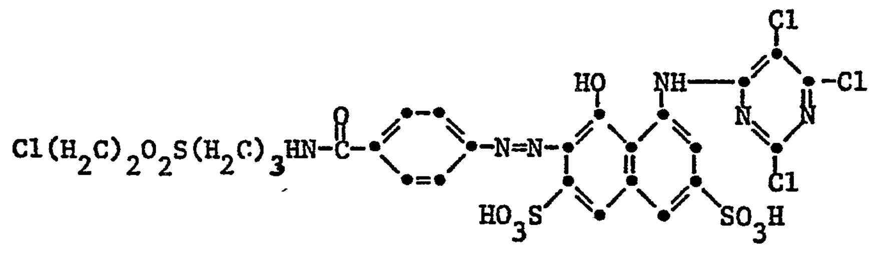

enthält.

Diese Verbindung besitzt sehr gute Farbstoffeigenschaften und färbt Cellulosematerialien nach den üblichen Färbe- und Druckverfahren für Reaktivfarbstoffe in blaustichig roten Tönen mit sehr guten Nassechtheitseigenschaften.

Beispiel 90

31,9 Teile 1-Amino-8-hydroxynaphthalin-3,6-disulfonsäure werden in 800 ml Wasser neutral gelöst und die Lösung auf 0° bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 33 Teilen 3-Aminobenzoesäure-N'-β(β'-chlorethylsulfonyl)ethylamid-hydrochlorid in 100 ml Wasser wird der pH der Reaktionsmischung durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 33 Teilen 3-Aminobenzoesäure-N'-β(β'-chlorethylsulfonyl)ethylamid-hydrochlorid gekuppelt. Nach vollständiger Kupplungsreaktion bei pH 8 wird die Reaktionsmischung geklärt und der gebildete Reaktivfarbstoff der Formel

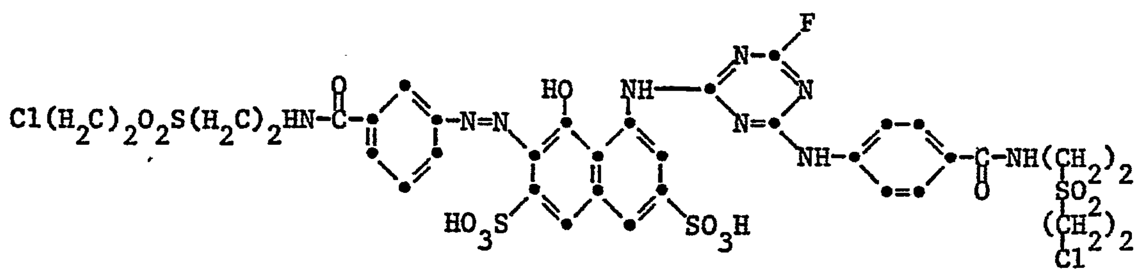

durch Eindampfen oder Gefriertrocknen der Reaktionslösung bei pH 7 isoliert. Er färbt Baumwolle in roten Tönen.

Beispiel 91

31,9 Teile 1-Amino-8-hydroxynaphthalin-3,6-disulfonsäure werden in 800 ml Wasser neutral gelöst und die Lösung auf 0° bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 33 Teilen 3-Aminobenzoesäure-N'-β(β'-chlorethylsulfonyl)ethylamid-hydrochlorid in 100 ml Wasser wird der pH der Reaktionsmischung durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10°

und pH 6,5 mit 33 Teilen 3-Aminobenzoesäure-N'-β(β'-chlorethylsulfonyl)ethylamid-hydrochlorid gekuppelt. Nach vollständiger Kupplungsreaktion bei pH 8 wird die Reaktionsmischung geklärt und der gebildete Reaktivfarbstoff der Formel

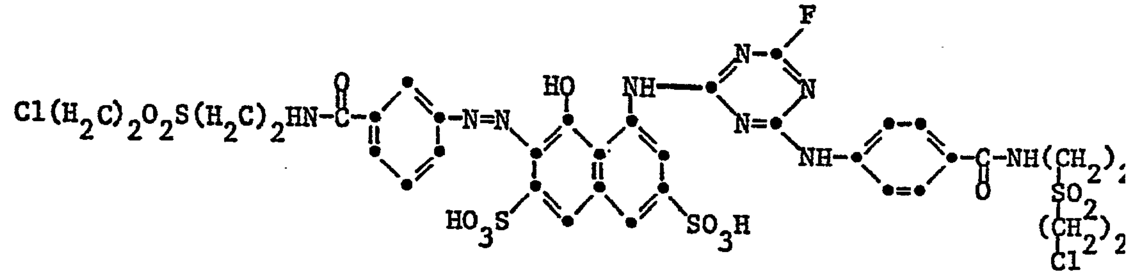

durch Eindampfen oder Gefriertrocknen der Reaktionslösung bei pH 7 isoliert. Er färbt Baumwolle in roten Tönen.

Beispiel 92

31,9 Teile 1-Amino-8-hydroxynaphthalin-3,6-disulfonsäure werden in 800 ml Wasser neutral gelöst und die Lösung auf 0° bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n-Natriumhydroxydlösung schwach kongosauer gehalten wird. Nach Zusatz einer auf pH 5 gestellten Mischung von 11 Teilen N-Methylanilin in 100 ml Wasser wird der pH der Reaktionsmischung durch ständige Zugabe von 2n·Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Raktion wird dieses Zwischenprodukt bei 0° bis 10° und pH 6,5 mit 33 Teilen diazotiertem 4-Aminobenzoesäure-N'-β(β'-chlorethylsulfonyl)ethylamid-hydrochlorid gekuppelt. Nach vollständiger Kupplungsreaktion bei pH 8 wird die Reaktionsmischung geklärt und der gebildete Reaktivfarbstoff der Formel

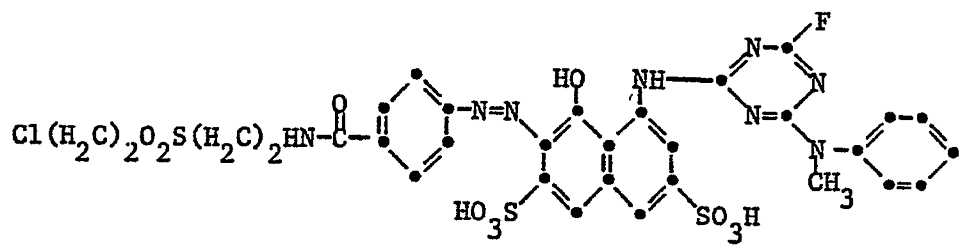

durch Eindampfen oder Gefriertrocknen der Reaktionslösung bei pH 7 isoliert. Er färbt Baumwolle in roten Tönen.

Beispiel 93

31,9 Teile 1-Amino-8-hydroxynaphthalin-3,6-disulfonsäure werden in 800 ml Wasser neutral gelöst und die Lösung auf 0° bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n-Natriumhydroxydlösung schwach kongosauer gehalten wird. Nach Zusatz einer auf pH 5 gestellten Mischung von 11 Teilen o-Toluidin in 100 ml Wasser wird der pH der Reaktionsmischung durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Raktion wird dieses Zwischenprodukt bei 0° bis 10° und pH 6,5 mit 33 Teilen diazotiertem 3-Aminobenzoesäure-N'-β(β'-chlorethylsulfonyl)ethylamid-hydrochlorid gekuppelt. Nach vollständiger Kupplungsreaktion bei pH 8 wird die Reaktionsmischung geklärt und der gebildete Reaktivfarbstoff der Formel

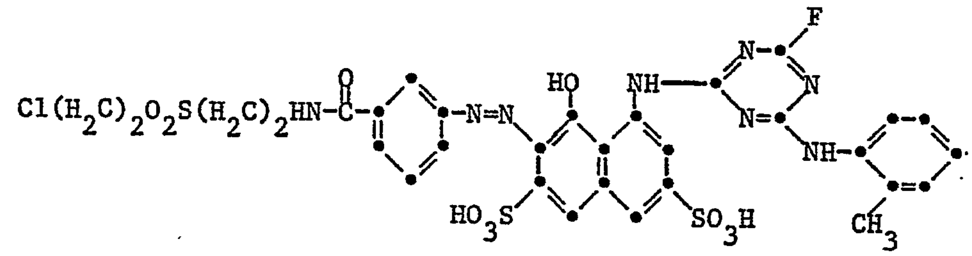

durch Eindampfen oder Gefriertrocknen der Reaktionslösung bei pH 7 isoliert. Er färbt Baumwolle in roten Tönen.

Beispiel 94

31,9 Teile 1-Amino-8-hydroxynaphthalin-3,6-disulfonsäure werden in 800 ml Wasser neutral gelöst und die Lösung auf 0° bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 11 Teilen N-Methylanilin in 100 ml Wasser wird der pH der Reaktionsmischung durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Raktion wird dieses Zwischenprodukt bei 0° bis 10° und pH 6,5 mit 49 Teilen diazotiertem 4-Aminobenzoesäure-N-bisβ-(bisβ'-chlorethylsulfonyl)ethylamid-hydrochlorid gekuppelt. Nach vollständiger Kupplungsreaktion bei pH 8 wird die Reaktionsmischung geklärt und der gebildete Reaktivfarbstoff der Formel

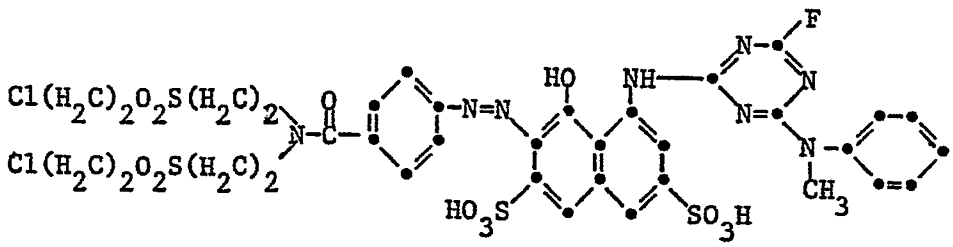

durch Eindampfen oder Gefriertrocknen der Reaktionslösung bei pH 7 isoliert. Er färbt Baumwolle in roten Tönen.

Beispiel 95

31,9 Teile 1-Amino-8-hydroxynaphthalin-3,6-disulfonsäure werden in 800 ml Wasser neutral gelöst und die Lösung auf 0° bis 5° abgekühlt. Bei dieser Temperatur werden 18,4 Teile 2,4,6-Trichlor-1,3,5-triazin eingetragen; der Reaktionsansatz wird noch 4 Stunden bei einer Temperatur zwischen 3 und 5°C und bei einem pH-Wert zwischen 1,7 und 2,2, der mittels Natriumbicarbonat gehalten wird, weitergerührt. Nach Zusatz einer auf pH 5 gestellten Mischung von 33 Teilen 4-Aminobenzoesäure-N'-β(β'-chlorethylsulfonyl)-ethylamid-hydrochlorid in 100 ml Wasser wird der pH der Reaktionsmischung durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 33 Teilen diazotiertem 4-Aminobenzoesäure-N'-β(β'-chlorethylsulfonyl)-ethylamid-hydrochlorid gekuppelt. Nach vollständiger Kupplungsreaktion bei pH 8 wird die Reaktionsmischung geklärt und der gebildete Reaktivfarbstoff der Formel

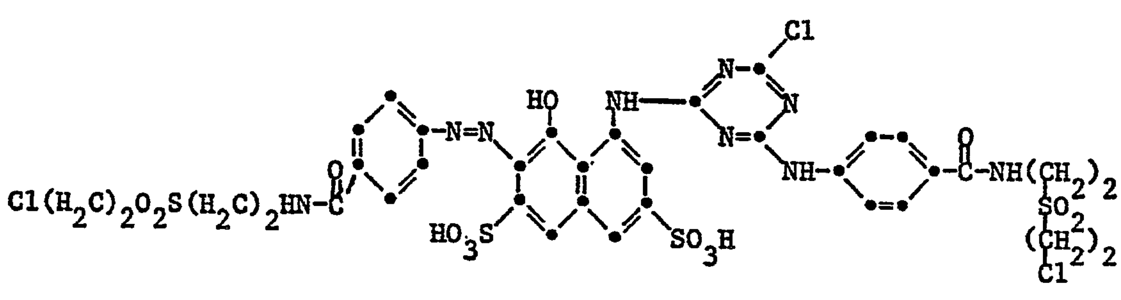

durch Eindampfen oder Gefriertrocknen der Reaktionslösung bei pH 7 isoliert. Er färbt Baumwolle in roten Tönen.

Beispiel 96

31,9 Teile 1-Amino-8-hydroxynaphthalin-3,6-disulfonsäure werden in 800 ml Wasser neutral gelöst und die Lösung auf 0° bis 5° abgekühlt. Bei dieser Temperatur werden 18,4 Teile 2,4,6-Trichlor-1,3,5-triazin eingetragen; der Reaktionsansatz wird noch 4 Stunden bei einer Temperatur zwischen 3 und 5°C und bei einem pH-Wert zwischen 1,7 und 2,2, der mittels Natriumbicarbonat gehalten wird, weitergerüht. Nach Zusatz einer auf pH 5 gestellten Mischung von 33 Teilen 4-Aminobenzoesäure-N'-β(β'-chlorethylsulfonyl)-ethylamid-hydrochlorid in 100 ml Wasser wird der pH der Reaktionsmischung durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 33 Teilen diazotiertem 3-Aminobenzoesäure-N'-β(β'-chlorethylsulfonyl)-ethylamid-hydrochlorid gekuppelt. Nach vollständiger Kupplungsreaktion bei pH 8 wird die Reaktionsmischung geklärt und der gebildete Reaktivfarbstoff der Formel

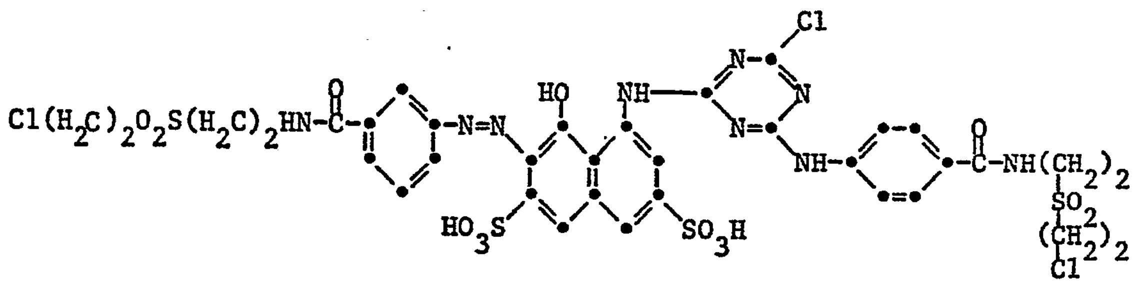

durch Eindampfen oder Gefriertrocknen der Reaktionslösung bei pH 7 isoliert. Er färbt Baumwolle in roten Tönen.

Beispiel 97

31,9 Teile 1-Amino-8-hydroxynaphthalin-3,6-disulfonsäure werden in 800 ml Wasser neutral gelöst und die Lösung auf 0° bis 5° abgekühlt. Bei dieser Temperatur werden 18,4 Teile 2,4,6-Trichlor-1,3,5-triazin eingetragen; der Reaktionsansatz wird noch 4 Stunden bei einer Temperatur zwischen 3 und 5°C und bei einem pH-Wert zwischen 1,7 und 2,2, der mittels Natriumbicarbonat gehalten wird, weitergerüht. Nach Zusatz einer auf pH 5 gestellten Mischung von 33 Teilen 4-Aminobenzoesäure- N'-β(β'-chlorethylsulfonyl)-ethylamid-hydrochlorid in 100 ml Wasser wird der pH der Reaktionsmischung durch stänge Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 33 Teilen diazotiertem 4-Aminobenzoesäure-N'-γ-(β'-chlorethylsulfonyl)-propylamid-hydrochlorid gekuppelt. Nach vollständiger Kupplungsreaktion bei pH 8 wird die Reaktionsmischung geklärt und der gebildete Reaktivfarbstoff der Formel

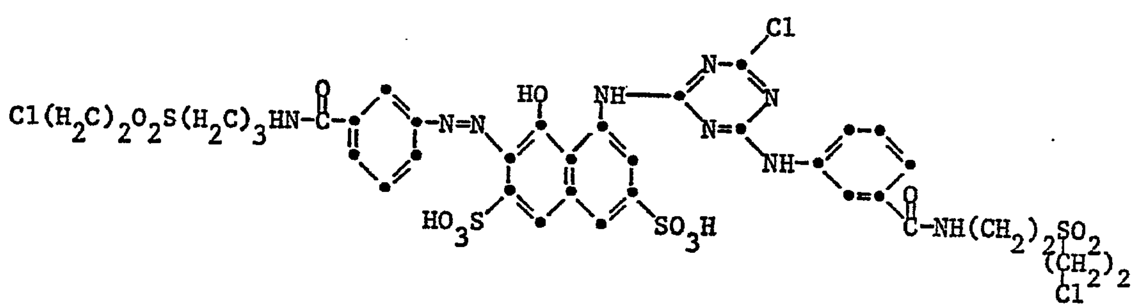

durch Eindampfen oder Gefriertrocknen der Reaktionslösung bei pH 7 isoliert. Er färbt Baumwolle in roten Tönen.

Beispiel 98

31,9 Teile 1-Amino-8-hydroxynaphthalin-3,6-disulfonsäure werden in 800 ml Wasser neutral gelöst und die Lösung auf 0° bis 5° abgekühlt. Bei dieser Temperatur werden 18,4 Teile 2,4,6-Trichlor-1,3,5-triazin eingetragen; der Reaktionsansatz wird noch 4 Stunden bei einer Temperatur zwischen 3 und 5°C und bei einem pH-Wert zwischen 1,7 und 2,2, der mittels Natriumbicarbonat gehalten wird, weitergerüht. Nach Zusatz einer auf pH 5 gestellten Mischung von 35 Teilen 4-Aminobenzoesäure-N'-γ(β'-chlorethylsulfonyl)-propylamid-hydrochlorid in 100 ml Wasser wird der pH der Reaktionsmischung durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 33 Teilen diazotiertem 4-Aminobenzoesäure-N'-β(β'-chlorethylsulfonyl)-ethylamid-hydrochlorid gekuppelt. Nach vollständiger Kupplungsreaktion bei pH 8 wird die Reaktionsmischung geklärt und der gebildete Reaktivfarbstoff der Formel

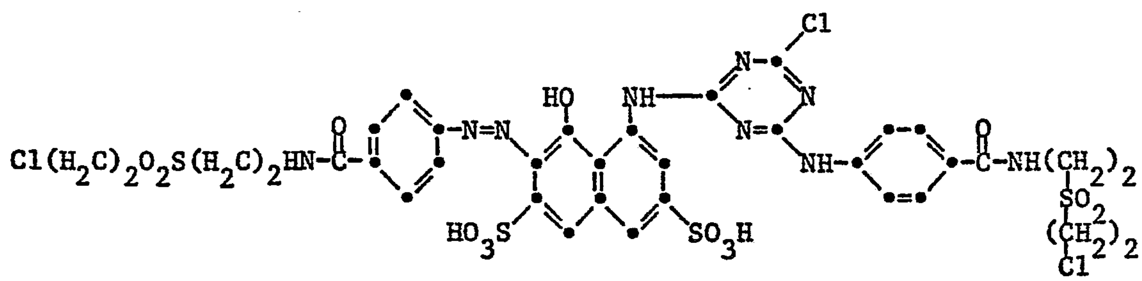

durch Eindampfen oder Gefriertrocknen der Reaktionslösung bei pH 7 isoliert. Er färbt Baumwolle in roten Tönen.

Beispiel 99

31,9 Teile 1-Amino-8-hydroxynaphthalin-3,6-disulfonsäure werden in 800 ml Wasser neutral gelöst und die Lösung auf 0° bis 5° abgekühlt. Bei dieser Temperatur werden 18,4 Teile 2,4,6-Trichlor-1,3,5-triazin eingetragen; der Reaktionsansatz wird noch 4 Stunden bei einer Temperatur zwischen 3 und 5°C und bei einem pH-Wert zwischen 1,7 und 2,2, der mittels Natriumbicarbonat gehalten wird, weitergerüht. Nach Zusatz einer auf pH 5 gestellten Mischung von 33 Teilen 4-Aminobenzoesäure-N'-β(β'-chlorethylsulfonyl)-ethylamid-hydrochlorid in 100 ml Wasser wird der pH der Reaktionsmischung durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 49 Teilen diazotiertem 4-Aminobenzoesäure-N'-bis-β(bis-β'-chlorethylsulfonyl)-ethylamid-hydrochlorid gekuppelt. Nach vollständiger Kupplungsreaktion bei pH 8 wird die Reaktionsmischung geklärt und der gebildete Reaktivfarbstoff der Formel

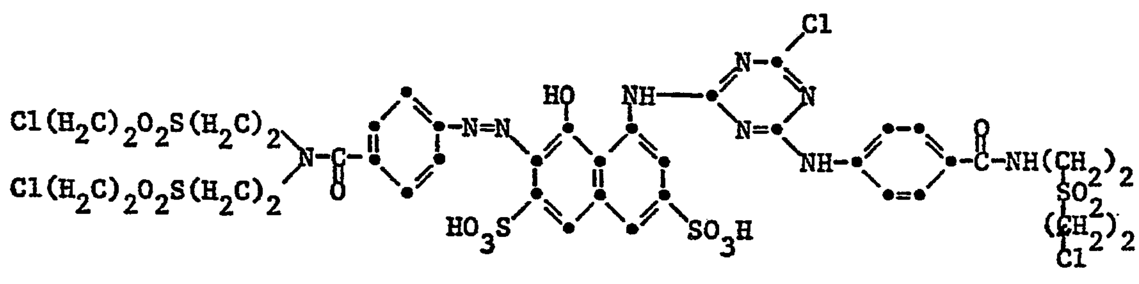

durch Eindampfen oder Gefriertrocknen der Reaktionslösung bei pH 7 isoliert. Er färbt Baumwolle in roten Tönen.

Beispiel 100

a) In eine Suspension von 255,2 Teilen 1-Amino-8-naphthol-3,6-disulfonsäure in 1440 Teilen Wasser und 720 Teilen Eis werden unter gutem Rühren 155,2 Teile Cyanurchlorid eingetragen; der Reaktionsansatz wird noch 4 Stunden bei einer Temperatur zwischen 3 und 5°C und bei einem pH-Wert zwischen 1,7 und 2,2, der mittels Natriumbicarbonat gehalten wird, weitergerührt.

b) Getrennt hiervon wird das Diazoniumsalz der Diazokomponente hergestellt: Eine Lösung mit einem pH-Wert von 6,7-6,8 von 285 Teilen 4-Aminobenzoesäure-N'-β(β'chlorethylsulfonyl)-ethylamid-hydrochlorid in 640 Teilen Wasser werden mit 105 Volumenteilen einer 40 %igen wässrigen Natriumnitritlösung versetzt. Dieses Gemisch lässt man unter gutem Rühren in eine Mischung aus 800 Teilen zerkleinertem Eis und 70 Volumenteilen einer 95 %igen wässrigen Schwefelsäure einfliessen. Man rührt noch eine Stunde bei einer Temperatur zwischen 0°C und 5°C nach und versetzt sodann, wie üblich, überschüssige salpetrige Säure mit wenig Amidosulfonsäure.

c) Das hier unter a) hergestellte primäre Kondensationsprodukt aus Cyanurchlorid und der Aminonaphtholdisulfonsäure wird mit der hier unter b) beschriebenen Diazoniumsalzlösung vereinigt. Zur Durchführung der Kupplungsreaktion wird das stark saure Reaktionsgemisch bei einer Temperatur von etwa 5°C mittels Natriumbicarbonat auf einen pH-Wert von 4,0 bis 4,5 eingestellt und die Temperatur auf 15 bis 20°C erhöht. Es wird noch einige Stunden bei diesem pH-Wert und dieser Temperatur weitergerührt, bis die Kupplung beendet ist.

d) Die Lösung der Monoazoverbindung von c) wird mit einer Lösung mit einem pH-Wert von 5,5 bis 6,0 von 177 Teilen $HClH_2NCH_2CH_2SO_2CH_2CH_2Cl$ in 640 Teilen Wasser vereinigt. Der pH-Wert wird auf etwa 6 gehalten und das Reaktionsgemisch im Verlaufe von zwei Stunden auf eine Temperatur von 60 bis 65°C erwärmt. Sodann wird der pH mittels Natriumbicarbonat auf einen Wert zwischen 6,5 und 7,0 erhöht, und das Filtrat sprühgetrocknet.

Es werden etwa 1100 Teile natriumchloridhaltiges Pulver der Formel

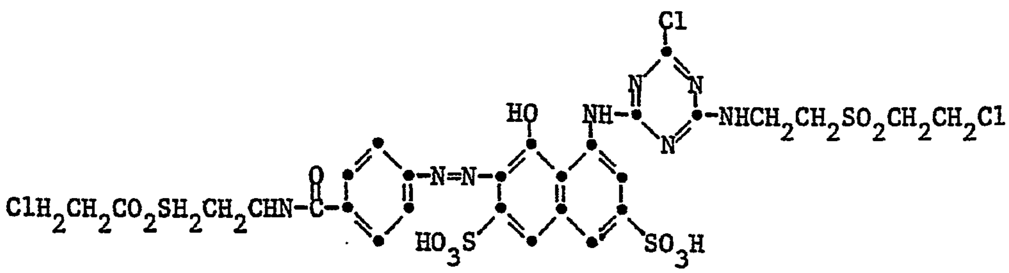

erhalten. Es färbt Baumwolle in roten Tönen.

Beispiel 101

a) In eine Suspension von 255,2 Teilen 1-Amino-8-naphthol-3,6-disulfonsäure in 1440 Teilen Wasser und 720 Teilen Eis werden unter gutem Rühren 155,2 Teile Cyanurchlorid eingetragen; der Reaktionsansatz wird noch 4 Stunden bei einer Temperatur zwischen 3 und 5°C und bei einem pH-Wert zwischen 1,7 und 2,2, der mittels Natriumbicarbonat gehalten wird, weitergerührt.

b) Getrennt hiervon wird das Diazoniumsalz der Diazokomponente hergestellt: Eine Lösung mit einem pH-Wert von 6,7-6,8 von 285 Teilen 3-Aminobenzoesäure-N'-β(β'chlorethylsulfonyl)-ethylamid-hydrochlorid in 640 Teilen Wasser werden mit 105 Volumenteilen einer 40 %igen wässrigen Natriumnitritlösung versetzt. Dieses Gemisch lässt man unter gutem Rühren in eine Mischung aus 800 Teilen zerkleinertem Eis und 70 Volumenteilen einer 95 %igen wässrigen Schwefelsäure einfliessen. Man rührt noch eine Stunde bei einer Temperatur zwischen 0°C und 5°C nach und versetzt sodann, wie üblich, überschüssige salpetrige Säure mit wenig Amidosulfonsäure.

c) Das hier unter a) hergestellte primäre Kondensationsprodukt aus Cyanurchlorid und der Aminonaphtholdisulfonsäure wird mit der hier unter b) beschriebenen Diazoniumsalzlösung vereinigt. Zur Durchführung der Kupplungsreaktion wird das stark saure Reaktionsgemisch bei einer Temperatur von etwa 5°C mittels Natriumbicarbonat auf einen pH-Wert von 4,0 bis 4,5 eingestellt und die Temperatur auf 15 bis 20°C erhöht. Es wird noch einige Stunden bei diesem pH-Wert und dieser Temperatur weitergerührt, bis die Kupplung beendet ist.

d) Die Lösung der Monoazoverbindung von c) wird mit einer Lösung mit einem pH-Wert von 5,5 bis 6,0 von 177 Teilen $HClH_2NCH_2CH_2SO_2CH_2CH_2Cl$ in 640 Teilen Wasser vereinigt. Der pH-Wert wird auf etwa 6 gehalten und das Reaktionsgemisch im Verlaufe von zwei Stunden auf eine Temperatur von 60 bis 65°C erwärmt. Sodann wird der pH mittels Natriumbicarbonat auf einen Wert zwischen 6,5 und 7,0 erhöht, und das Filtrat sprühgetrocknet.

Es werden etwa 1100 Teile natriumchloridhaltiges Pulver der Formel

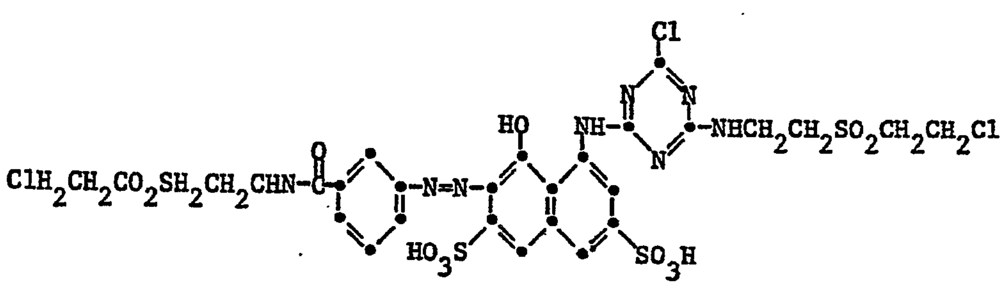

erhalten. Es färbt Baumwolle in roten Tönen.

Beispiel 102

a) In eine Suspension von 255,2 Teilen 1-Amino-8-naphthol-3,6-disulfonsäure in 1440 Teilen Wasser und 720 Teilen Eis werden unter gutem Rühren 155,2 Teile Cyanurchlorid eingetragen; der Reaktionsansatz wird noch 4 Stunden bei einer Temperatur zwischen 3 und 5°C und bei einem pH-Wert zwischen 1,7 und 2,2, der mittels Natriumbicarbonat gehalten wird, weitergerührt.

b) Getrennt hiervon wird das Diazoniumsalz der Diazokomponente hergestellt: Eine Lösung mit einem pH-Wert von 6,7-6,8 von 285 Teilen 4-Aminobenzoesäure-N'-β(β'chlorethylsulfonyl)-ethylamid-hydrochlorid in 640 Teilen Wasser werden mit 105 Volumenteilen einer 40 %igen wässrigen Natriumnitritlösung versetzt. Dieses Gemisch lässt man unter gutem Rühren in eine Mischung aus 800 Teilen zerkleinertem Eis und 70 Volumenteilen einer 95 %igen wässrigen Schwefelsäure einfliessen. Man rührt noch eine Stunde bei einer Temperatur zwischen 0°C und 5°C nach und versetzt sodann, wie üblich, überschüssige salpetrige Säure mit wenig Amidosulfonsäure.

c) Das hier unter a) hergestellte primäre Kondensationsprodukt aus Cyanurchlorid und der Aminonaphtholdisulfonsäure wird mit der hier unter b) beschriebenen Diazoniumsalzlösung vereinigt. Zur Durchführung der Kupplungsreaktion wird das stark saure Reaktionsgemisch bei einer Temperatur von etwa 5°C mittels Natriumbicarbonat auf einen pH-Wert von 4,0 bis 4,5 eingestellt und die Temperatur auf 15 bis 20°C erhöht. Es wird noch einige Stunden bei diesem pH-Wert und dieser Temperatur weitergerührt, bis die Kupplung beendet ist.

d) Die Lösung der Monoazoverbindung von c) wird mit einer Lösung mit einem pH-Wert von 5,5 bis 6,0 von 312 Teilen

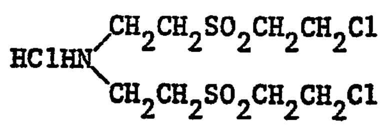

in 640 Teilen Wasser vereinigt. Der pH-Wert wird auf etwa 6 gehalten und das Reaktionsgemisch im Verlaufe von zwei Stunden auf eine Temperatur von 60 bis 65°C erwärmt. Sodann wird der pH mittels Natriumbicarbonat auf einen Wert zwischen 6,5 und 7,0 erhöht, und das Filtrat sprühgetrocknet.

Es werden etwa 1100 Teile natriumchloridhaltiges Pulver der Formel

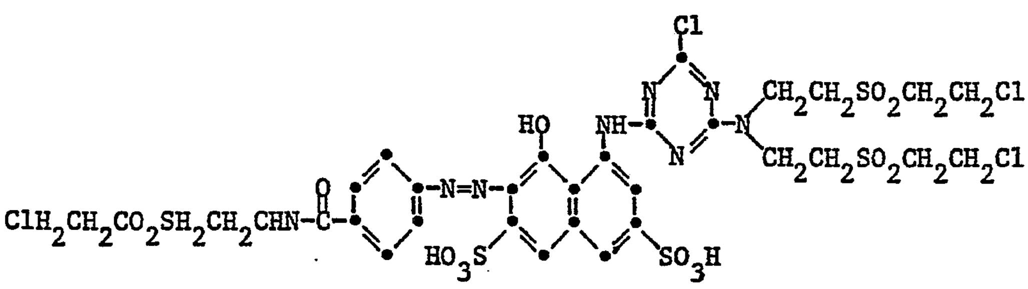

erhalten. Es färbt Baumwolle in roten Tönen.

Beispiel 103

a) In eine Suspension von 255,2 Teilen 1-Amino-8-naphthol-3,6-disulfonsäure in 1440 Teilen Wasser und 720 Teilen Eis werden unter gutem Rühren 155,2 Teile Cyanurchlorid eingetragen; der Reaktionsansatz wird noch 4 Stunden bei einer Temperatur zwischen 3 und 5°C und bei einem pH-Wert zwischen 1,7 und 2,2, der mittels Natriumbicarbonat gehalten wird, weitergerührt.

b) Getrennt hiervon wird das Diazoniumsalz der Diazokomponente hergestellt: Eine Lösung mit einem pH-Wert von 6,7-6,8 von 285 Teilen 4-Aminobenzoesäure-N'-β(β'chlorethylsulfonyl)-ethylamid-hydrochlorid in 640 Teilen Wasser werden mit 105 Volumenteilen einer 40 %igen wässrigen Natriumnitritlösung versetzt. Dieses Gemisch lässt man unter gutem Rühren in eine Mischung aus 800 Teilen zerkleinertem Eis und 70 Volumenteilen einer 95 %igen wässrigen Schwefelsäure einfliessen. Man rührt noch eine Stunde bei einer Temperatur zwischen 0°C und 5°C nach und versetzt sodann, wie üblich, überschüssige salpetrige Säure mit wenig Amidosulfonsäure.

c) Das hier unter a) hergestellte primäre Kondensationsprodukt aus Cyanurchlorid und der Aminonaphtholdisulfonsäure wird mit der hier unter b) beschriebenen Diazoniumsalzlösung vereinigt. Zur Durchführung der Kupplungsreaktion wird das stark saure Reaktionsgemisch bei einer Temperatur von etwa 5°C mittels Natriumbicarbonat auf einen pH-Wert von 4,0 bis 4,5 eingestellt und die Temperatur auf 15 bis 20°C erhöht. Es wird noch einige Stunden bei diesem pH-Wert und dieser Temperatur weitergerührt, bis die Kupplung beendet ist.

d) Die Lösung der Monoazoverbindung von c) wird mit einer Lösung mit einem pH-Wert von 5,5 bis 6,0 von 240 Teilen HCl $H_2NCH_2CH_2OCH_2CH_2SO_2CH_2CH_2Cl$ in 640 Teilen Wasser vereinigt. Der pH-Wert wird auf etwa 6 gehalten und das Reaktionsgemisch im Verlaufe von zwei Stunden auf eine Temperatur von 60 bis 65°C erwärmt. Sodann wird der pH mittels Natriumcarbonat auf einen Wert zwischen 6,5 und 7,0 erhöht, und das Filtrat sprühgetrocknet.

Es werden etwa 1100 Teile natriumchloridhaltiges Pulver der Formel

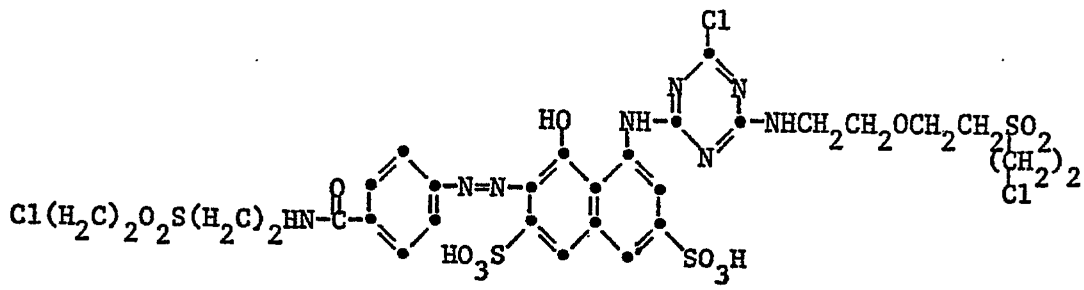

erhalten. Es färbt Baumwolle in roten Tönen.

Beispiel 104

64 Teile 1-Amino-8-naphthol-4,6-disulfonsäure werden in 800 Teilen Wasser unter Zusatz von 30 %iger Natriumhydroxidlösung bei pH 5,0 gelöst. Man erwärmt dann auf 30°C und lässt 42 Teile 2,4-Dichlor-6-isopropoxy-triazin zutropfen, wobei der pH-Wert durch Eintropfen von 2n-Natriumhydroxidlösung bei pH 4,0 bis 4,5 gehalten wird. Es wird 15 Stunden bei pH 4,0 bis 4,5 und 65°C kondensiert.

Die Lösung wird als Kupplungskomponente zur Farbstoffherstellung eingesetzt.

Zur Herstellung der Diazoniumverbindung werden 56 Teile 4-Aminobenzoesäure-N'-β(β'-chlorethylsulfonyl)-ethylamid-hydrochlorid in 500 Teilen Eiswasser suspendiert, mit 45 Teilen conc. wässriger Salzsäure angesäurt und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel

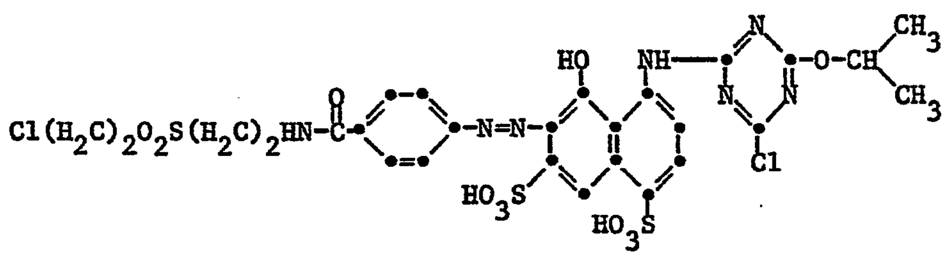

enthält.

Diese Verbindung besitzt sehr gute Farbstoffeigenschaften und färbt Cellulosematerialien nach den üblichen Färbe- und Druckverfahren für Reaktivfarbstoffe in blaustichig roten Tönen mit sehr guten Nassechtheitseigenschaften.

Beispiel 105

482 Teile 4-Aminobenzoesäure-N'-bis-β(bis-β'-chlorethylsulfonyl)ethylamid hydrochlorid werden in 1000 Teile Wasser eingetragen und durch vorsichtige Zugabe von 65 Teilen Natriumcarbonat in Lösung gebracht, wobei sich der pH-Wert auf 6,5 bis 7,0 einstellt. Man lässt 2 Stunden bei diesem pH weiterrühren, gibt sodann 750 Teile Eis und 255 Teile einer 31 %igen wässrigen Salzsäure hinzu; anschliessend lässt man 173 Teile der 40 %igen wässrigen Natriumnitritlösung einlaufen, rührt bei 0 bis 5°C weitere 2 Stunden nach und zerstört sodann überschüssige salpetrige Säure mittels Amidosulfonsäure. In die so hergestellte Diazoniumsalzsuspension lässt man bei einem pH-Wert von 6,0 bis 6,5 unter gleichzeitigem Eintragen von etwa 70 Teilen Natriumcarbonat die Lösung des sekundären Kondensationsproduktes

von je einem Mol Cyanurchlorid und 1-Amino-8-naphthol-4,6-disulfonsäure und N-Methyl-anilin einlaufen. Diese Lösung des sekundären Kondensationsproduktes wird wie folgt hergestellt: 319 Teile 1-Amino-8-naphthol-4,6-disulfonsäure werden unter Rühren in ein Gemisch aus 500 Teilen Wasser und 121 Teilen einer 33 %igen Natronlauge eingetragen; der pH-Wert der Lösung soll anschliessend 6,5 bis 7,0 betragen. Diese Lösung lässt man innerhalb von einer Stunde in eine Suspension von 194 Teilen Cyanurchlorid, 800 Teilen Wasser und 800 Teilen Eis bei einem pH-Wert von 3,0 bis 3,8 einlaufen. Es wird noch eine Stunde lang bei 0 bis 5°C und bei dem angegebenen pH-Wert, der durch Einstreuen von 92 Teilen Natriumbicarbonat gehalten wird, weitergerührt. In die so erhaltene klare Lösung trägt man 107 Teile N-Methylanilin ein und danach innerhalb einer Stunde 115 Teile Natriumcarbonat, wobei sich der pH-Wert auf 6,5 bis 7,0 erhöht. Bei diesem pH-Wert lässt man noch 2 Stunden nachrühren, wobei die Temperatur auf 15 bis 20°C gehalten wird.

Nachdem die Diazoniumsuspension und die Lösung der Kupplungskomponente vereinigt sind, wird das Kupplungsgemisch noch 2 Stunden lang bei Raumtemperatur nachgerührt, wobei durch portionsweises Einstreuen von 70 Teilen Natriumcarbonat ein pH-Wert von 6,0 bis 6,5 gehalten wird. Nach beendeter Kupplung wird auf 50°C erwärmt, 40 Teile Kieselgur werden zugegeben, die Lösung geklärt (filtriert), das Filtrat gegebenenfalls mit 50 Teilen Dinatriumphosphat versetzt und sprühgetrocknet.

Es wird ein rotes, elektrolythaltiges und gegebenenfalls die erwähnte Puffersubstanz enthaltendes Pulver erhalten, das das Alkalimetallsalz, insbesondere Natriumsalz der Verbindung der Formel

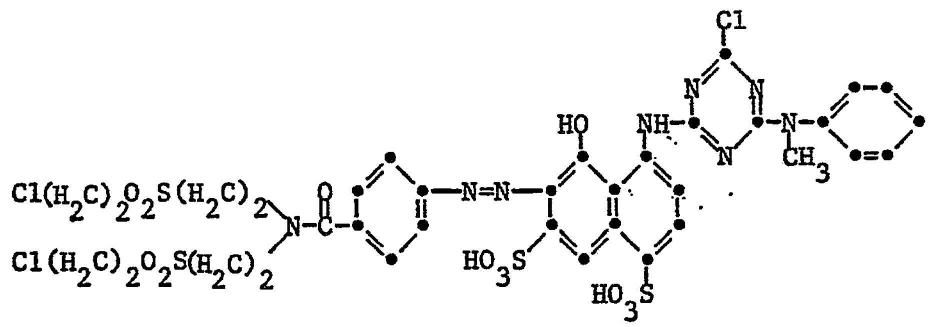

enthält. Diese Verbindung besitzt sehr gute Farbstoffeigenschaften; sie färbt die in der Beschreibung genannten Materialien, insbesondere Wolle aus saurem Bad oder Cellulosefasermaterialien in Gegenwart von säurebindenden Mitteln nach den in der Technik üblichen Applikations- und Fixiermethoden für faserreaktive Farbstoffe, in klaren roten Tönen mit sehr gutem Farbaufbau und hohem Fixiergrad. Die Färbungen besitzen sehr gute Nassechtheiten, wie beispielsweise eine ausgezeichnete Waschechtheit.

Beispiel 106

Es wird eine neutrale wässrige Lösung mit einem pH-Wert von 6,5 aus 327 Teilen 3-Aminobenzoesäure-N'-β(β'-chlorethylsulfonyl)ethylamid hydrochlorid in 1000 Teilen Wasser hergestellt. Anschliessend gibt man etwa 600 Teile Eis hinzu, desweiteren langsam unter Rühren etwa 200 Teile einer konzentrierten wässrigen Salzsäure, bis ein pH-Wert von 2 erreicht ist. Sodann lässt man 173 Teile einer wässrigen 40 %igen Natriumnitritlösung bei einer Temperatur von 0 bis 5°C einlaufen, rührt eine Stunde nach und zerstört überschüssige salpetrige Säure mittels Amidosulfonsäure. Diese erhaltene Diazoniumsalzsuspension wird mit der wässrigen Lösung des sekundären Kondensationsproduktes von je einem Mol Cyanurchlorid und 1-Amino-8-naphthol-4,6-disulfonsäure und Aminobenzol-3-sulfonsäure gekuppelt, wobei man gemäss der in Beispiel 1 beschriebenen Verfahrensweise vorgeht. Nach Beendigung der Kupplungsreaktion, Klärung und Isolierung des Farbstoffes, beispielsweise durch Sprühtrocknung oder Aussalzen mit Natriumchlorid, erhält man ein rotes elektrolythaltiges Pulver mit dem entsprechenden Alkalimetallsalz der Verbindung der Formel

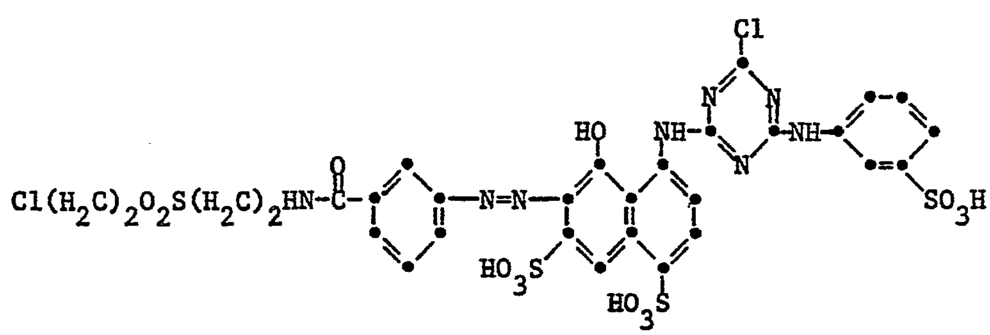

Diese Verbindung besitzt ebenso sehr gute Farbstoffeigenschaften und färbt Polyamidfasermaterialien, wie insbesondere Wolle,und Cellulosefasermaterialien nach den üblichen Färbe- und Fixiermethoden für Farbstoffe, die eine faserreaktive Gruppe, insbesondere die β-Thiosulfatoäthylsulfonyl-Gruppe, besitzen, in klaren roten Tönen mit sehr guten Nassechtheiten, wie sie biespielsweise für den Farbstoff des Beispiels 1 genannt sind.

Beispiel 107

327 Teile 4-Aminobenzoesäure-N'-β(β'-chlorethylsulfonyl)-ethylamid hydrochlorid werden in 1000 Teile Wasser eingetragen und durch vorsichtige Zugabe von 65 Teilen Natriumcarbonat in Lösung gebracht, wobei sich der pH-Wert auf 6,5 bis 7,0 einstellt. Man lässt 2 Stunden bei diesem pH weiterrühren, gibt sodann 750 Teile Eis und 255 Teile einer 31 %igen wässrigen Salzsäure hinzu; anschliessend lässt man 173 Teile der 40 %igen wässrigen Natriumnitritlösung einlaufen, rührt bei 0 bis 5°C weitere 2 Stunden nach und zerstört sodann überschüssige salpetrige Säure mittels Amidosulfonsäure. In die so hergestellte Diazoniumsalzsuspension lässt man bei einem pH-Wert von 6,0 bis 6,5 unter gleichzeitigem Eintragen von etwa 70 Teilen Natriumcarbonat die Lösung des sekundären Kondensationsproduktes von je einem Mol Cyanurchlorid und 1-Amino-8-naphthol-4,6-disulfonsäure und Dicyanäthylamin einlaufen. Diese Lösung des sekundären Kondensationsproduktes wird wie folgt hergestellt: 319 Teile 1-Amino-8-naphthol-4,6-disulfonsäure werden unter Rühren in ein Gemisch aus 500 Teilen Wasser und 121 Teilen einer 33 %igen Natronlauge eingetragen; der pH-Wert der Lösung soll anschliessend 6,5 bis 7,0 betragen. Diese Lösung lässt man innerhalb von einer Stunde in eine Suspension von 194 Teilen Cyanurchlorid, 800 Teilen Wasser und 800 Teilen Eis bei einem pH-Wert von 3,0 bis 3,8 einlaufen. Es wird noch eine Stunde lang bei 0 bis 5°C und bei dem angegebenen pH-Wert, der durch Einstreuen von 92 Teilen Natriumbicarbonat gehalten wird, weitergerührt. In die so erhaltene klare Lösung trägt man 107 Teile N-Methylanilin ein und danach innerhalb einer Stunde 115 Teile Natriumcarbonat, wobei sich der pH-Wert auf 6,5 bis 7,0 erhöht. Bei diesem pH-Wert lässt man noch 2 Stunden nachrühren, wobei die Temperatur auf 15 bis 20°C gehalten wird.

Nachdem die Diazoniumsuspension und die Lösung der Kupplungskomponente vereinigt sind, wird das Kupplungsgemisch noch 2 Stunden lang bei Raumtemperatur nachgerührt, wobei durch portionsweises Einstreuen von 70 Teilen Natriumcarbonat ein pH-Wert von 6,0 bis 6,5 gehalten wird. Nach beendeter Kupplung wird auf 50°C erwärmt, 40 Teile Kieselgur werden zugegeben, die Lösung geklärt (filtriert), das Filtrat gegebenenfalls mit 50 Teilen Dinatriumphosphat versetzt und sprühgetrocknet.

Es wird ein rotes, elektrolythaltiges und gegebenenfalls die erwähnte Puffersubstanz enthaltendes Pulver erhalten, das das Alkalimetallsalz, insbesondere Natriumsalz der Verbindung der Formel

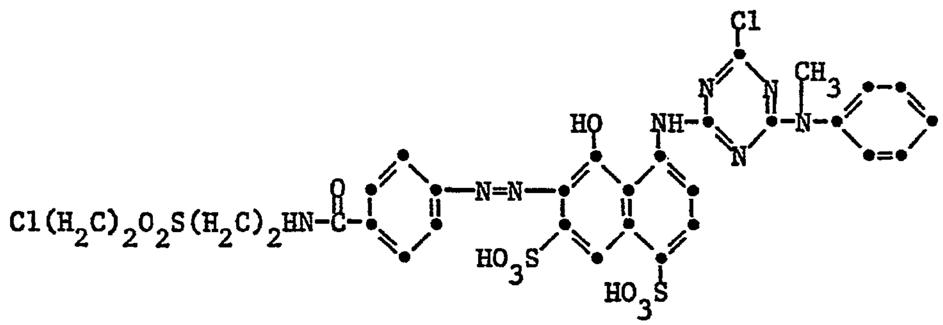

enthält. Diese Verbindung besitzt sehr gute Farbstoffeigenschaften; sie färbt die in der Beschreibung genannten Materialien, insbesondere Wolle aus saurem Bad oder Cellulosefasermaterialien in Gegenwart von säurebindenden Mitteln nach den in der Technik üblichen Applikations- und Fixiermethoden für faserreaktive Farbstoffe, in klaren roten Tönen mit sehr gutem Farbaufbau und hohem Fixiergrad. Die Färbungen besitzen sehr gute Nassechtheiten, wie beispielsweise eine ausgezeichnete Waschechtheit.

Beispiel 108

31,9 Teile 1-Amino-8-hydroxynaphthalin-4,6-disulfonsäure werden in 800 ml Wasser neutral gelöst und die Lösung auf 0° bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 33 Teilen 4-Aminobenzoesäure-N'-β(β'-chlorethylsulfonyl)ethylamid hydrochlorid in 100 ml Wasser wird der pH der Reaktionsmischung durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 33 Teilen 3-Aminobenzoesäure-N'-β(β'-chlorethylsulfonyl)ethylamid hydrochlorid gekup-

pelt. Nach vollständiger Kupplungsreaktion bei pH 8 wird die Reaktionsmischung geklärt und der gebildete Reaktivfarbstoff der Formel

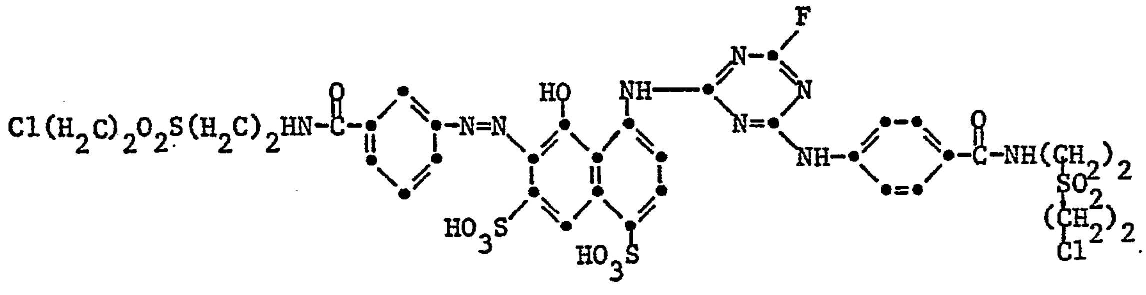

durch Eindampfen oder Gefriertrocknen der Reaktionslösung bei pH 7 isoliert. Er färbt Baumwolle in roten Tönen.

Beispiel 109

482 Teile 4-Aminobenzoesäure-N'-bis-β(bis-β'-chlorethylsulfonyl)ethylamid hydrochlorid werden in 1000 Teile Wasser eingetragen und durch vorsichtige Zugabe von 65 Teilen Natriumcarbonat in Lösung gebracht, wobei sich der pH-Wert auf 6,5 bis 7,0 einstellt. Man lässt 2 Stunden bei diesem pH weiterrühren, gibt sodann 750 Teile Eis und 255 Teile einer 31 %igen wässrigen Salzsäure hinzu; anschliessend lässt man 173 Teile der 40 %igen wässrigen Natriumnitritlösung einlaufen, rührt bei 0 bis 5°C weitere 2 Stunden nach und zerstört sodann überschüssige salpetrige Säure mittels Amidosulfonsäure. In die so hergestellte Diazoniumsalzsuspension lässt man bei einem pH-Wert von 6,0 bis 6,5 unter gleichzeitigem Eintragen von etwa 70 Teilen Natriumcarbonat die Lösung des sekundären Kondensationsproduktes von je einem Mol Cyanurchlorid und 1-Amino-8-naphthol-4,6-disulfonsäure und N-Methyl-anilin einlaufen. Diese Lösung des sekundären Kondensationsproduktes wird wie folgt hergestellt: 319 Teile 1-Amino-8-naphthol-3,6-disulfonsäure werden unter Rühren in ein Gemisch aus 500 Teilen Wasser und 121 Teilen einer 33 %igen Natronlauge eingetragen; der pH-Wert der Lösung soll anschliessend 6,5 bis 7,0 betragen. Diese Lösung lässt man innerhalb von einer Stunde in eine Suspension von 194 Teilen Cyanurchlorid, 800 Teilen Wasser und 800 Teilen Eis bei einem pH-Wert von 3,0 bis 3,8 einlaufen. Es wird noch eine Stunde lang bei 0 bis 5°C und bei dem angegebenen pH-Wert, der durch Einstreuen von 92 Teilen Natriumbicarbonat gehalten wird, weitergerührt. In die so erhaltene klare Lösung trägt man 107 Teile N-Methylanilin ein und danach innerhalb einer Stunde 115 Teile Natriumcarbonat, wobei sich der pH-Wert auf 6,5 bis 7,0 erhöht. Bei diesem pH-Wert lässt man noch 2 Stunden nachrühren, wobei die Temperatur auf 15 bis 20°C gehalten wird.

Nachdem die Diazoniumsuspension und die Lösung der Kupplungskomponente vereinigt sind, wird das Kupplungsgemisch noch 2 Stunden lang bei Raumtemperatur nachgerührt, wobei durch portionsweises Einstreuen von 70 Teilen Natriumcarbonat ein pH-Wert von 6,0 bis 6,5 gehalten wird. Nach beendeter Kupplung wird auf 50°C erwärmt, 40 Teile Kieselgur werden zugegeben, die Lösung geklärt (filtriert), das Filtrat gegebenenfalls mit 50 Teilen Dinatriumphosphat versetzt und sprühgetrocknet.

Es wird ein rotes, elektrolythaltiges und gegebenenfalls die erwähnte Puffersubstanz enthaltendes Pulver erhalten, das das Alkalimetallsalz, insbesondere Natriumsalz der Verbindung der Formel

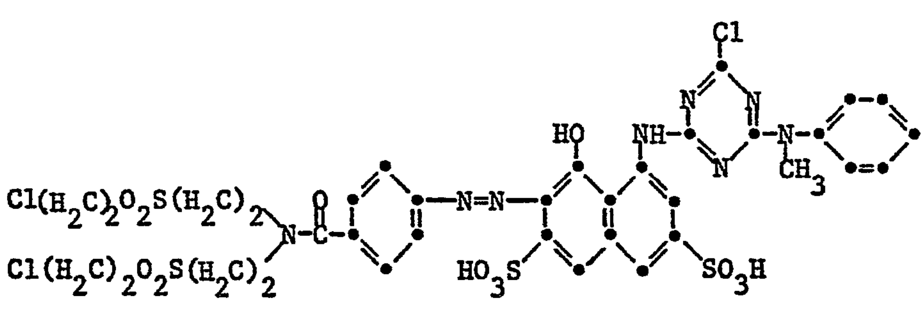

enthält. Diese Verbindung besitzt sehr gute Farbstoffeigenschaften; sie färbt die in der Beschreibung genannten Materialien, insbesondere Wolle aus saurem Bad oder Cellulosefasermaterialien in Gegenwart von säurebindenden Mitteln nach den in der Technik üblichen Applikations- und Fixiermethoden für faserreaktive Farbstoffe, in klaren roten Tönen mit sehr gutem Farbaufbau und hohem Fixiergrad. Die Färbungen besitzen sehr gute Nassechtheiten, wie beispielsweise eine ausgezeichnete Waschechtheit.

Beispiel 110

Es wird eine neutrale wässrige Lösung mit einem pH-Wert von 6,5 aus 327 Teilen 3-Aminobenzoesäure-N'-β(β'-chlorethylsulfonyl)ethylamid-hydrochlorid in 1000 Teilen Wasser hergestellt. Anschliessend gibt man etwa 600 Teile Eis hinzu, desweiteren langsam unter Rühren etwa 200 Teile einer konzentrierten wässrigen Salzsäure, bis ein pH-Wert von 2 erreicht ist. Sodann lässt man 173 Teile einer wässrigen 40 %igen Natriumnitritlösung bei einer Temperatur von 0 bis 5°C einlaufen, rührt eine Stunde nach und zerstört überschüssige salpetrige Säure mittels Amidosulfonsäure. Diese erhaltene Diazoniumsalzsuspension wird mit der wässrigen Lösung des sekundären Kondensationsproduktes von je einem Mol Cyanurchlorid und 1-Amino-8-naphthol-3,6-disulfonsäure und Aminobenzol-3-sulfonsäure gekuppelt, wobei man gemäss der in Beispiel 1 beschriebenen Verfahrensweise vorgeht. Nach Beendigung der Kupplungsreaktion, Klärung und Isolierung des Farbstoffes, beispielsweise durch Sprühtrocknung oder Aussalzen mit Natriumchlorid, erhält man ein rotes elektrolythaltiges Pulver mit dem entsprechenden Alkalimetallsalz der Verbindung der Formel

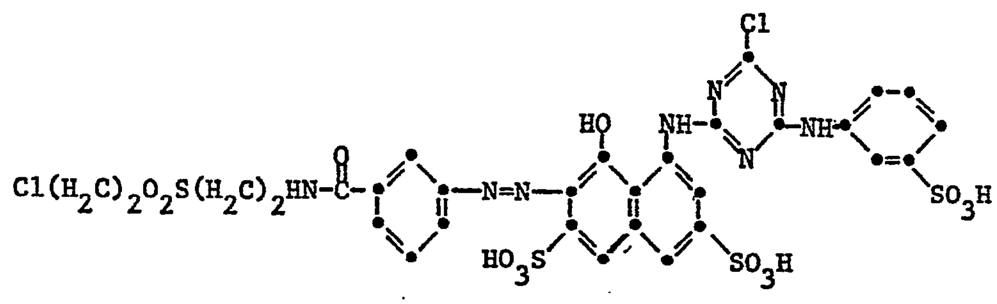

Diese Verbindung besitzt ebenso sehr gute Farbstoffeigenschaften und färbt Polyamidfasermaterialien, wie insbesondere Wolle, und Cellulosefasermaterialien nach den üblichen Färbe- und Fixiermethoden für Farbstoffe, die eine faserreaktive Gruppe, insbesondere die β-Thiosulfatoäthylsulfonyl-Gruppe, besitzen, in klaren roten Tönen mit sehr guten Nassechtheiten, wie sie beispielsweise für den Farbstoff des Beispiels 1 genannt sind

Beispiel III

327 Teile 4-Aminobenzoesäure-N'-β(β'-chlorethylsulfonyl)ethylamid hydrochlorid werden in 1000 Teile Wasser eingetragen und durch vorsichtige Zugabe von 65 Teilen Natriumcarbonat in Lösung gebracht, wobei sich der pH-Wert auf 6,5 bis 7,0 einstellt. Man lässt 2 Stunden bei diesem pH weiterrühren, gibt sodann 750 Teile Eis und 255 Teile einer 31 %igen wässrigen Salzsäure hinzu; anschliessend lässt man 173 Teile der 40 %igen wässrigen Natriumnitritlösung einlaufen, rührt bei 0 bis 5°C weitere 2 Stunden nach und zerstört sodann überschüssige salpetrige Säure mittels Amidosulfonsäure. In die so hergestellte Diazoniumsalzsuspension lässt man bei einem pH-Wert von 6,0 bis 6,5 unter gleichzeitigem Eintragen von etwa 70 Teilen Natriumcarbonat die Lösung des sekundären Kondensationsproduktes von je einem Mol Cyanurchlorid und 1-Amino-8-naphthol-3,6-disulfonsäure und Dicyanäthylamin einlaufen. Diese Lösung des sekundären Kondensationsproduktes wird wie folgt hergestellt: 319 Teile 1-Amino-8-naphthol-3,6-disulfonsäure werden unter Rühren in ein Gemisch aus 500 Teilen Wasser und 121 Teilen einer 33 %igen Natronlauge eingetragen; der pH-Wert der Lösung soll anschliessend 6,5 bis 7,0 betragen. Diese Lösung lässt man innerhalb von einer Stunde in eine Suspension von 194 Teilen Cyanurchlorid, 800 Teilen Wasser und 800 Teilen Eis bei einem pH-Wert von 3,0 bis 3,8 einlaufen. Es wird noch eine Stunde lang bei 0 bis 5°C und bei dem angegebenen pH-Wert, der durch Einstreuen von 92 Teilen Natriumbicarbonat gehalten wird, weitergerührt. In die so erhaltene klare Lösung trägt man 107 Teile N-Methylanilin ein und danach innerhalb einer Stunde 115 Teile Natriumcarbonat, wobei sich der pH-Wert auf 6,5 bis 7,0 erhöht. Bei diesem pH-Wert lässt man noch 2 Stunden nachrühren, wobei die Temperatur auf 15 bis 20°C gehalten wird.

Nachdem die Diazoniumsuspension und die Lösung der Kupplungskomponente vereinigt sind, wird das Kupplungsgemisch noch 2 Stunden lang bei Raumtemperatur nachgerührt, wobei durch portionsweises Einstreuen von 70 Teilen Natriumcarbonat ein pH-Wert von 6,0 bis 6,5 gehalten wird. Nach beendeter Kupplung wird auf 50°C erwärmt, 40 Teile Kieselgur werden zugegeben, die Lösung geklärt (filtriert), das Filtrat gegebenenfalls mit 50 Teilen Dinatriumphosphat versetzt und sprühgetrocknet.

Es wird ein rotes, elektrolythaltiges und gegebenenfalls die erwähnte Puffersubstanz enthaltendes Pulver erhalten, das das Alkalimetallsalz, insbesondere Natriumsalz der Verbindung der Formel

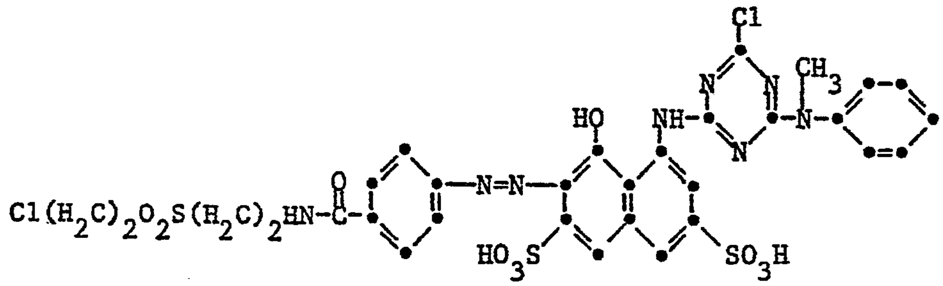

enthält. Diese Verbindung besitzt sehr gute Farbstoffeigenschaften; sie färbt die in der Beschreibung genannten Materialien, insbesondere Wolle aus saurem Bad oder Cellulosefasermaterialien in Gegenwart von säurebindenden Mitteln nach den in der Technik üblichen Applikations- und Fixiermethoden für faserreaktive Farbstoffe, in klaren roten Tönen mit sehr gutem Farbaufbau und hohem Fixiergrad. Die Färbungen besitzen sehr gute Nassechtheiten, wie beispielsweise eine ausgezeichnete Waschechtheit.

Nach den in den Beispielen 105 bis 111 beschriebenen Verfahren können weitere wertvolle Reaktivfarbstoffe der allgemeinen Formel (2) hergestellt werden, wobei die in der folgenden Tabelle aufgeführten Symbole $D_1$, K und Z die unter Formel (2) angegebenen Bedeutungen haben, und $W_1$ bis $W_7$ die auf Seite 35 angegebenen Bedeutungen haben. In der letzten Spalte der Tabelle ist der mit dem betreffenden Farbstoff auf Baumwolle erzielte Farbton angegeben.

| Beispiel | $D_1$ | K | Z | Farbton |
|---|---|---|---|---|
| 112 | 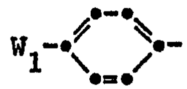 | 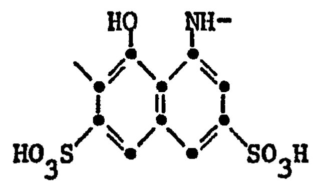 | 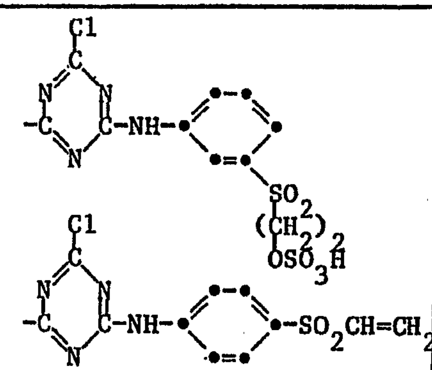 | rot |
| 113 | 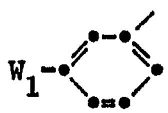 | 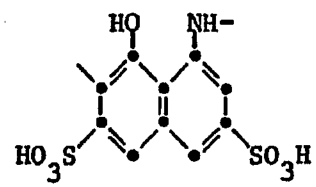 | | rot |
| 114 | 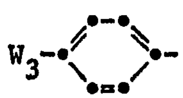 | 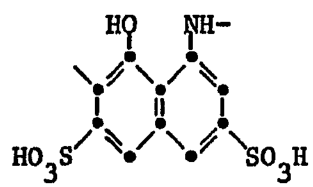 | 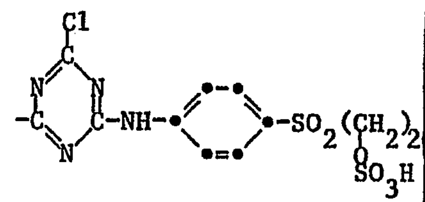 | rot |
| 115 | 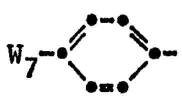 | 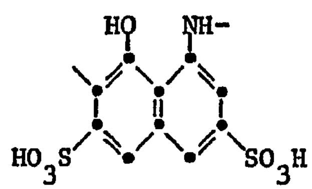 | 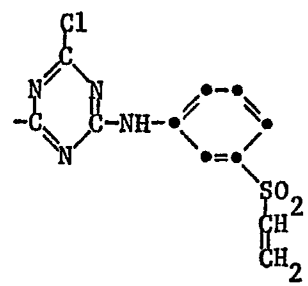 | rot |

| Beispiel | $D_1$ | K | Z | Farbton |
|---|---|---|---|---|
| 116 | 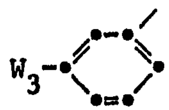 | 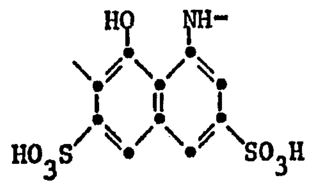 | 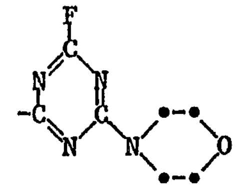 | rot |
| 117 | 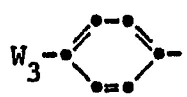 | 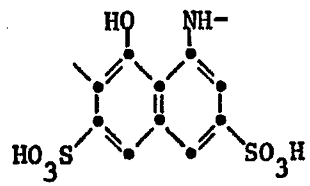 | 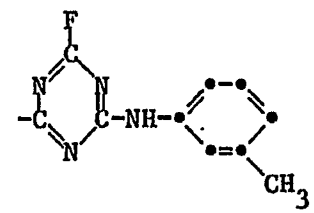 | rot |
| 118 | 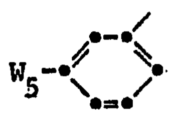 | 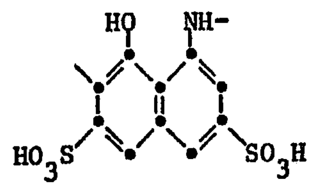 | 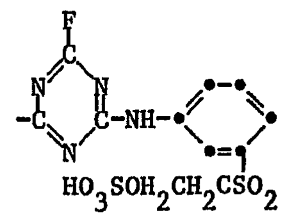 | rot |
| 119 | 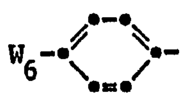 | 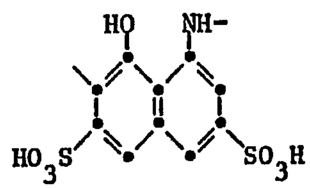 | 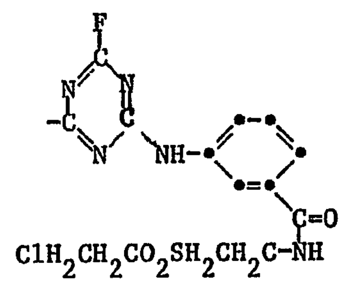 | rot |

| Beispiel | $D_1$ | K | Z | Farbton |
|---|---|---|---|---|
| 120 | 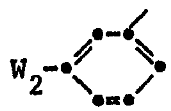 | 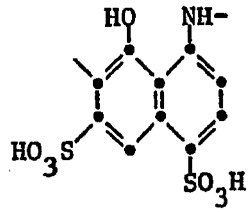 | 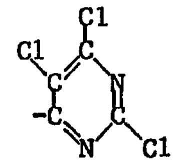 | gelbstichiges rot |
| 121 | 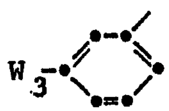 | 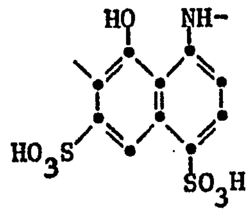 | 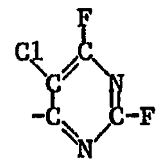 | gelbstichiges rot |
| 122 | 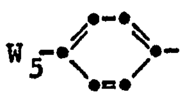 | 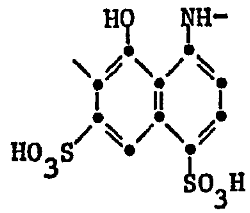 | 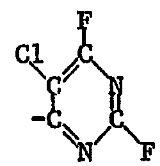 | rot |
| 123 | 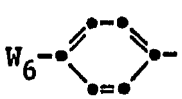 | 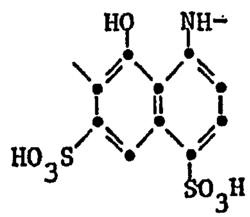 | 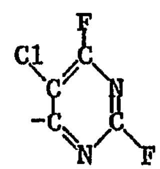 | rot |

| Beispiel | $D_1$ | K | Z | Farbton |
|---|---|---|---|---|
| 124 | 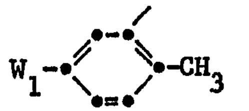 | 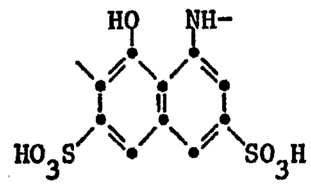 | 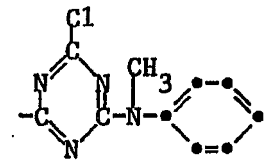 | blaustichiges rot |
| 125 | 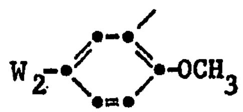 | 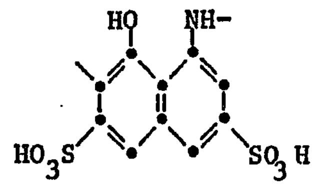 | 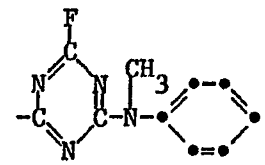 | blaustichiges rot |
| 126 | 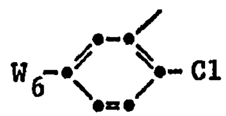 | 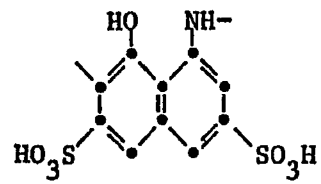 | 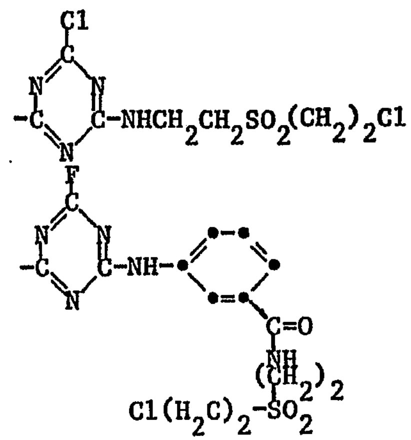 | rot |
| 127 | 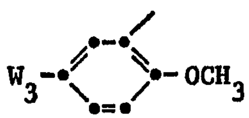 | 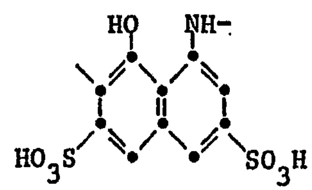 |  | blaustichiges rot |

| Beispiel | $D_1$ | K | Z | Farbton |
|---|---|---|---|---|
| 128 | 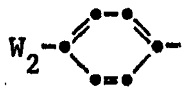 | 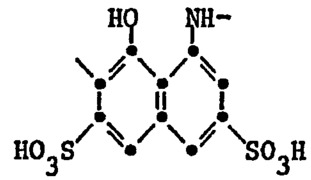 | 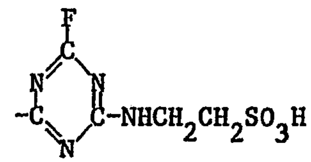 | rot |
| 129 | 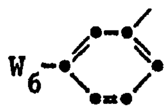 | 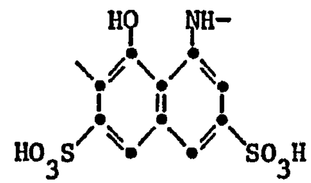 | 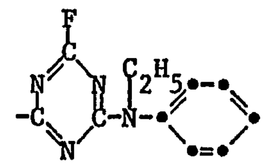 | rot |
| 130 | 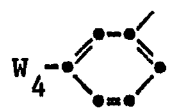 | 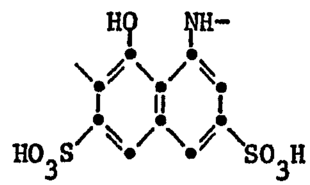 | 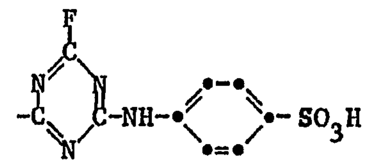 | rot |
| 131 | 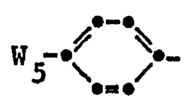 | 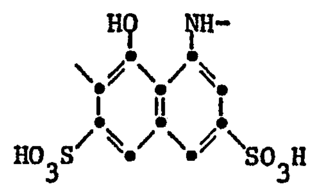 | 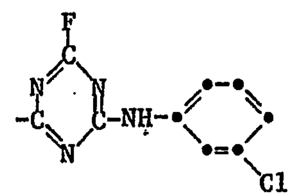 | rot |

| Beispiel | $D_1$ | K | Z | Farbton |
|---|---|---|---|---|
| 132 | 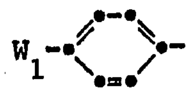 | 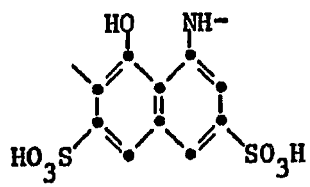 | 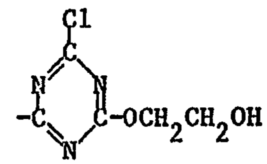 | rot |
| 133 | 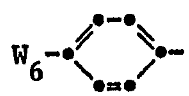 | 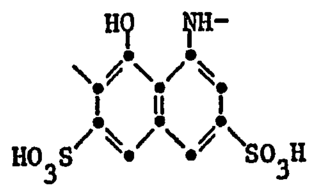 | 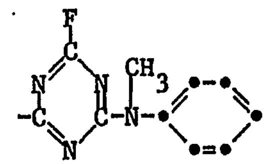 | rot |
| 134 | 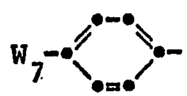 | 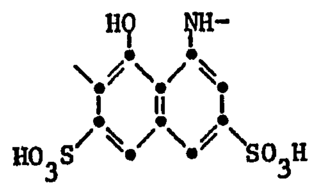 | 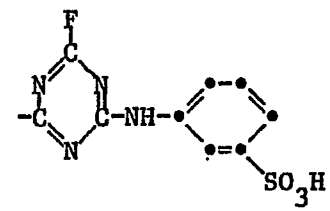 | rot |
| 135 | 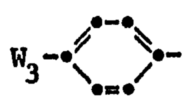 | 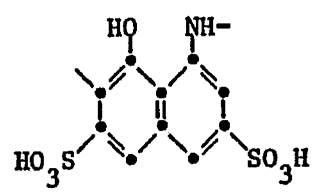 | 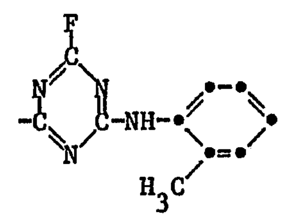 | rot |

| Beispiel | $D_1$ | K | Z | Farbton |
|---|---|---|---|---|
| 136 | 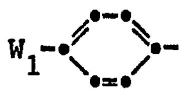 | 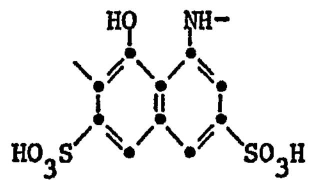 | 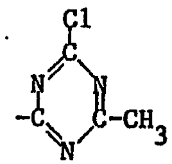 | rot |
| 137 | 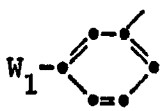 | 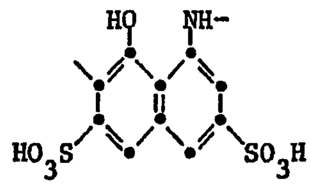 | 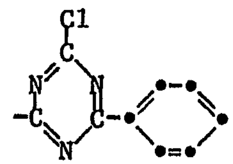 | rot |
| 138 | 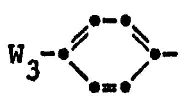 | 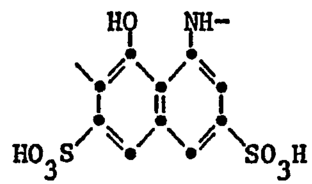 | 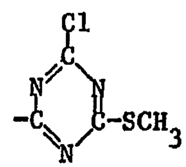 | rot |
| 139 | 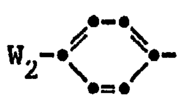 | 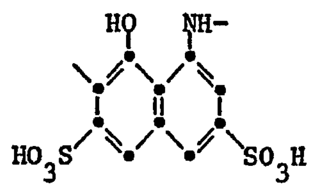 | 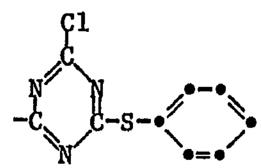 | rot |

| Beispiel | $D_1$ | K | Z | Farbton |
|---|---|---|---|---|
| 140 | 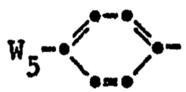 | 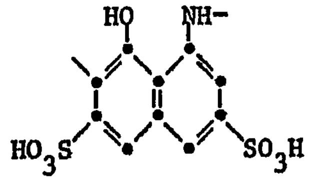 | 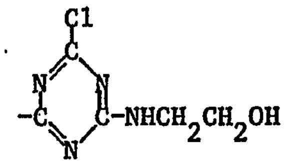 | rot |
| 141 | 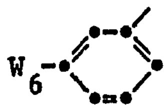 | 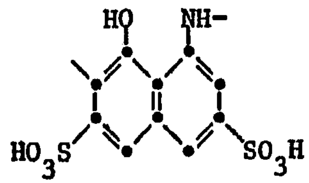 | 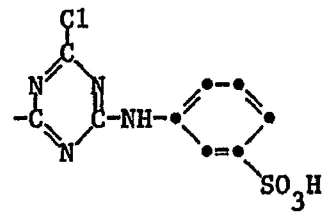 | rot |
| 142 | 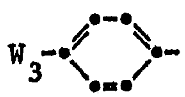 | 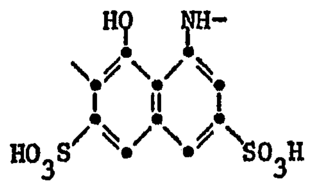 | 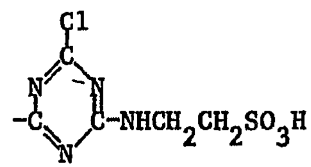 | rot |
| 143 | 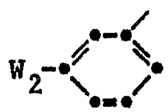 | 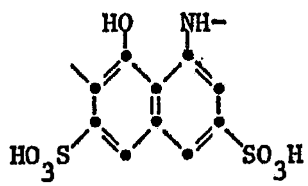 | 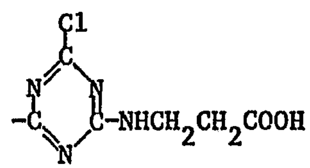 | rot |

| Beispiel | $D_1$ | K | Z | Farbton |
|---|---|---|---|---|
| 144 | 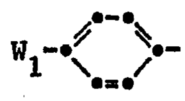 | 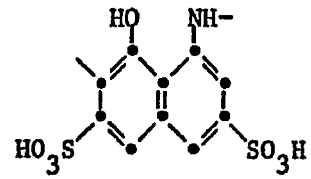 | 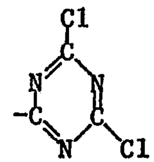 | rot |
| 145 | 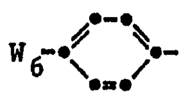 | 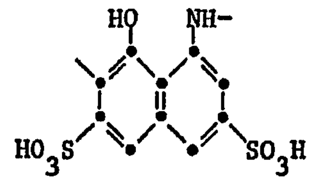 | 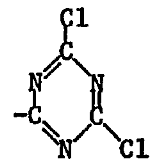 | rot |
| 146 | 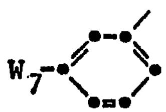 | 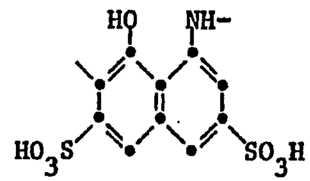 | 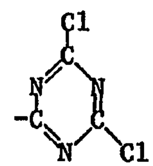 | rot |
| 147 | 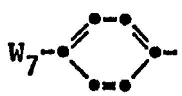 | 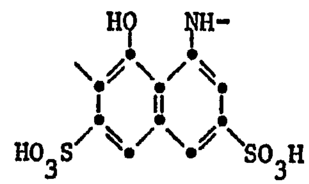 | 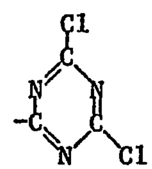 | rot |

| Beispiel | $D_1$ | K | Z | Farbton |
|---|---|---|---|---|
| 148 | 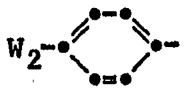 | 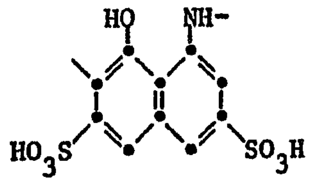 | 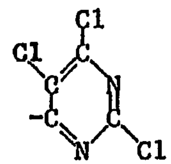 | rot |
| 149 | 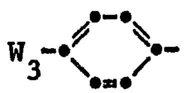 | 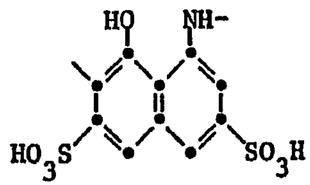 | 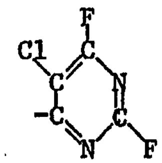 | rot |
| 150 | 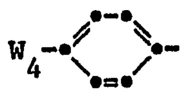 | 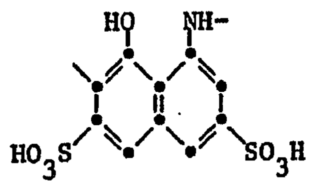 | 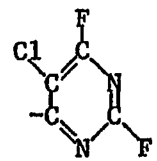 | rot |
| 151 | 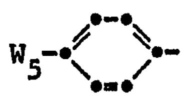 | 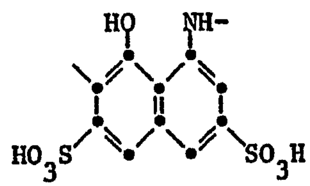 | 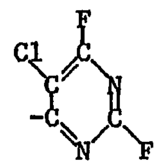 | rot |

| Beispiel | $D_1$ | K | Z | Farbton |
|---|---|---|---|---|
| 152 | 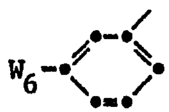 | 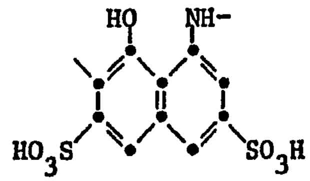 | 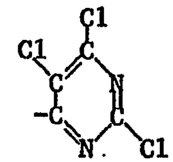 | rot |
| 153 | 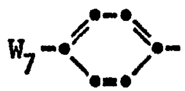 | 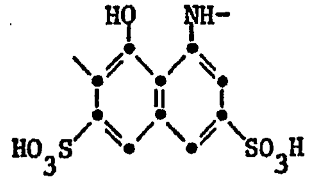 | 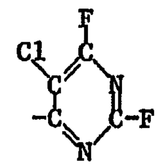 | rot |
| 154 | 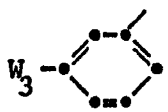 | 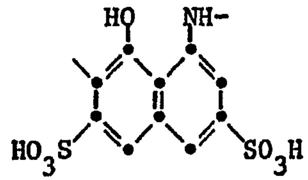 | 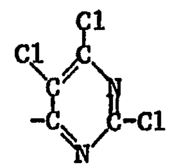 | rot |
| 155 | 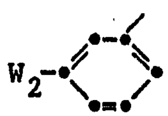 | 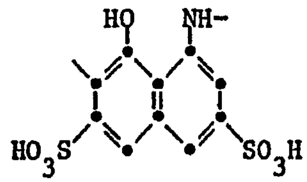 | 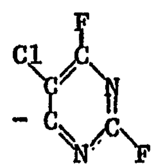 | rot |

| Beispiel | $D_1$ | K | Z | Farbton |
|---|---|---|---|---|
| 156 | 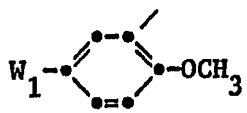 | 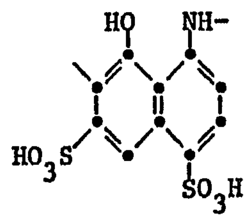 | 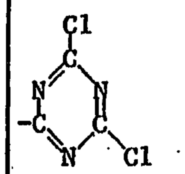 | blaustichiges rot |
| 157 | 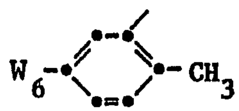 | 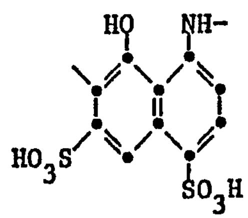 | 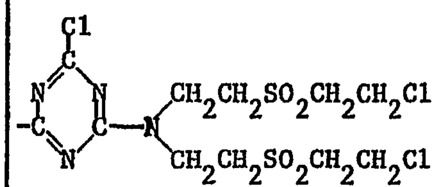 | blaustichiges rot |
| 158 | 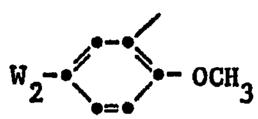 | 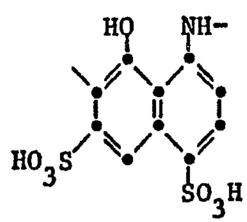 | 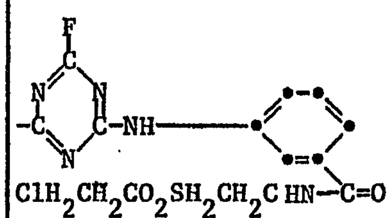 | blaustichiges rot |
| 159 | 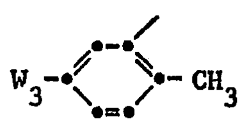 | 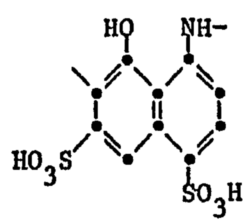 | 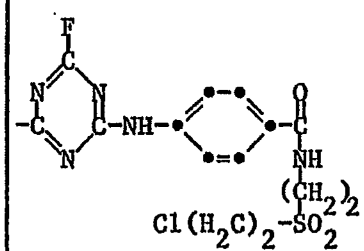 | blaustichiges rot |

| Beispiel | $D_1$ | K | Z | Farbton |
|---|---|---|---|---|
| 160 | 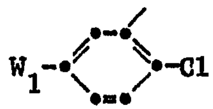 | 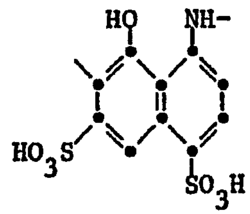 | 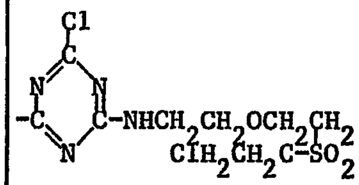 | gelbstichiges rot |
| 161 | 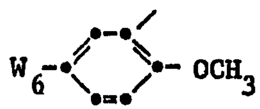 | 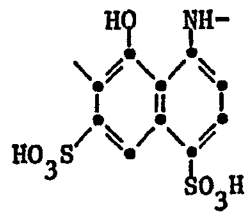 | 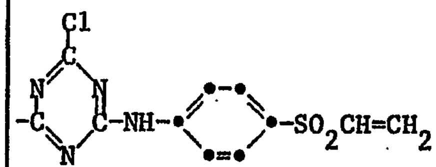 | blaustichiges rot |
| 162 | 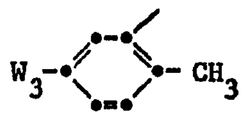 | 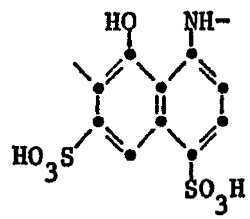 | 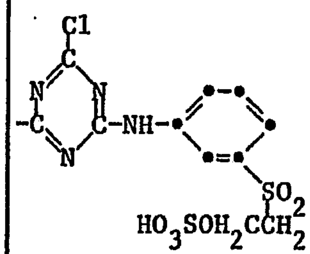 | rot |
| 163 | 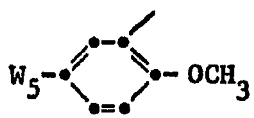 | 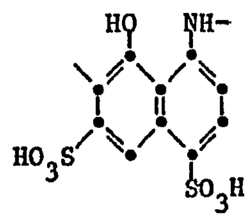 | 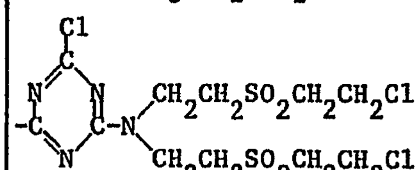 | blaustichiges rot |

| Beispiel | $D_1$ | K | Z | Farbton |
|---|---|---|---|---|
| 164 | 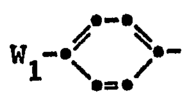 | 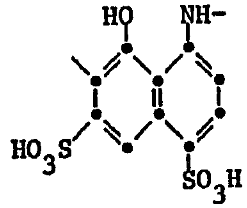 | 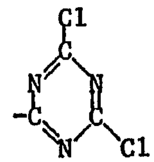 | gelbstichiges rot |
| 165 | 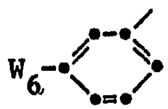 | 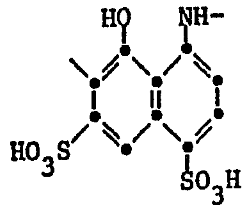 | 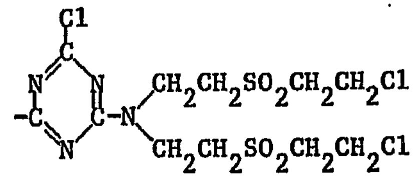 | gelbstichiges rot |
| 166 | 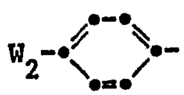 | 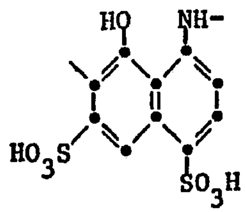 | 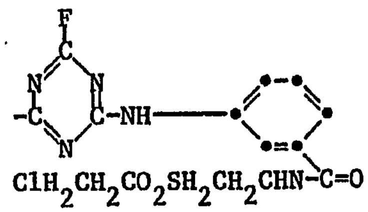 | rot |
| 167 | 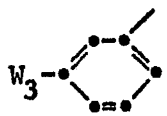 | 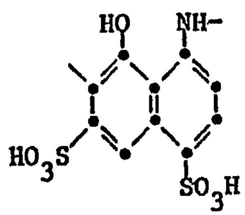 | 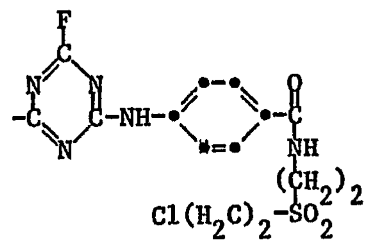 | rot |

| Beispiel | $D_1$ | K | Z | Farbton |
|---|---|---|---|---|
| 168 | 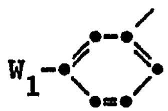 | 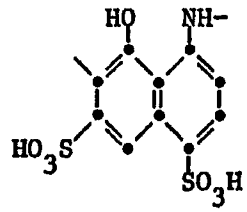 | 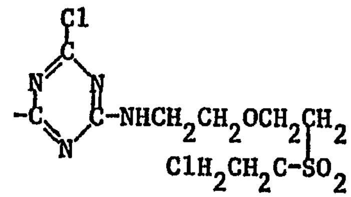 | gelbstichiges rot |
| 169 | 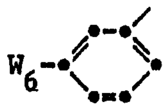 | 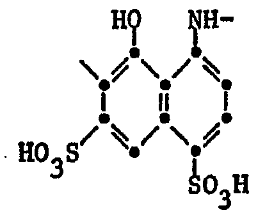 | 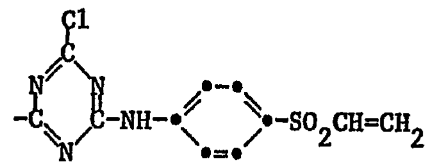 | gelbstichiges rot |
| 170 | 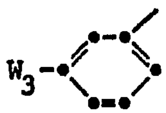 | 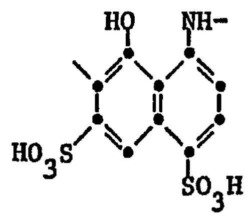 | 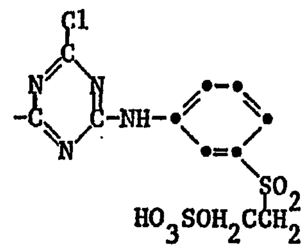 | rot |
| 171 | 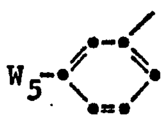 | 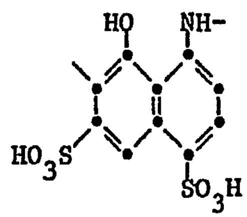 | 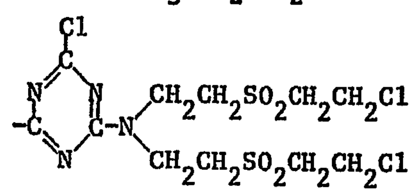 | rot |

| Beispiel | $D_1$ | K | Z | Farbton |
|---|---|---|---|---|
| 172 | 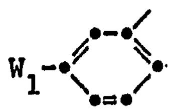 | 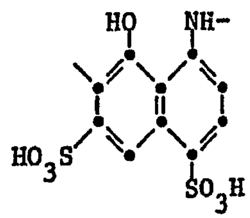 | 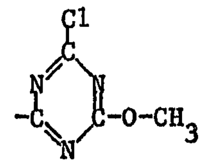 | gelbstichiges rot |
| 173 | 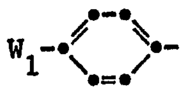 | 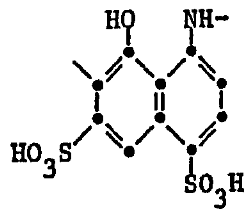 | 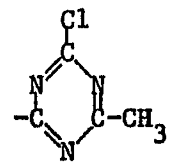 | gelbstichiges rot |
| 174 | 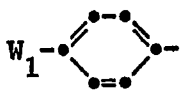 | 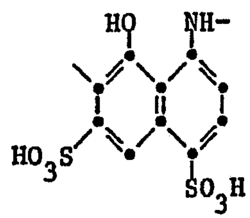 | 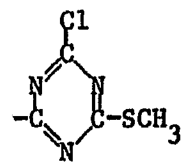 | rot |
| 175 | 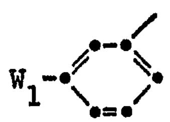 | 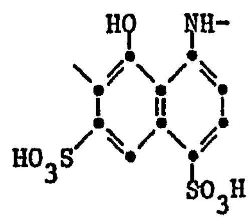 | 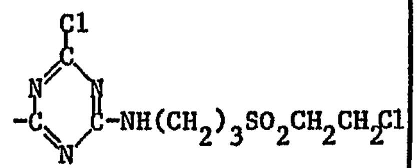 | rot |

Beispiel 176

70,25 Teile 4-β-Sulfatoäthylsulfonyl-anilin werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31 %igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40 %igen wässrigen Natriumnitritlösung durchgeführt. Anschliessend wird ein geringer Ueberschuss an salpetriger Säure mit 0,5 Teilen Amidosulfonsäure zerstört. Sodann werden 77,8 Teile 1-Amino-8-hydroxynaphthalin-3,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 82 Teile 4-Aminobenzoesäure-N'-β(β'-chlorethylsulfonyl)ethylamid-hydrochlorid analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

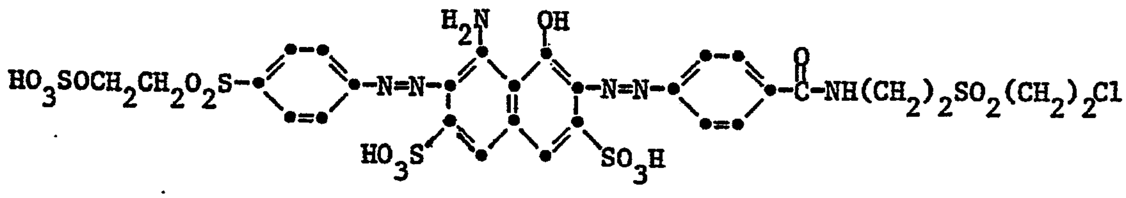

enthält. Diese eignet sich sehr gut als Farbstoff zum Färben von Cellulosefasermaterialien nach den in der Technik üblichen bekannten Färbe- und Druckmethoden und gängigen Fixiermethoden für faserreaktive Farbstoffe; sie liefert auf diesen Materialien marineblaue Farbtöne mit guten Echtheitseigenschaften.

Beispiel 177

82 Teile 4-Aminobenzoesäure-N'-β(β'-chlorethylsulfonyl)-ethylamid-hydrochlorid werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31 %igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40 %igen wässrigen Natriumnitritlösung durchgeführt; anschliessend wird ein geringer Ueberschuss an salpetriger Säure mit 0,5 Teilen Amidosulfonsäure zerstört. Sodann werden 77,8 Teile 1-Amino-8-hydroxynaphthalin-3,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 70,25 Teile 4-β-Sulfatoäthylsulfonyl-anilin analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

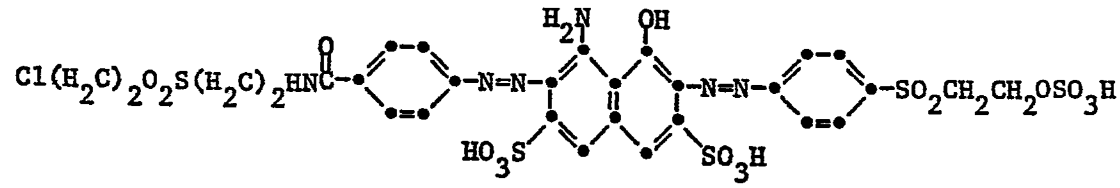

enthält, diese eignet sich sehr gut als Farbstoff zum Färben von Cellulosefasermaterialien nach den in der Technik üblichen, bekannten Färbe- und Druckmethoden und gängigen Fixiermethoden für faserreaktive Farbstoffe; sie liefert auf diesen Materialien marineblaue Farbtöne mit guten Echtheitseigenschaften.

Beispiel 178

82 Teile 4-Aminobenzoesäure-N'-β(β'-chlorethylsulfonyl)-ethylamid-hydrochlorid werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31 %igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40 %igen wässrigen Natriumnitritlösung durchgeführt; anschliessend wird ein geringer Ueberschuss an salpetriger Säure mit 0,5 Teilen Amidosulfonsäure zerstört. Sodann werden 77,8 Teile 1-Amino-8-hydroxynaphthalin-4,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 70,25 Teile 4-β-Sulfatoäthylsulfonyl-anilin analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

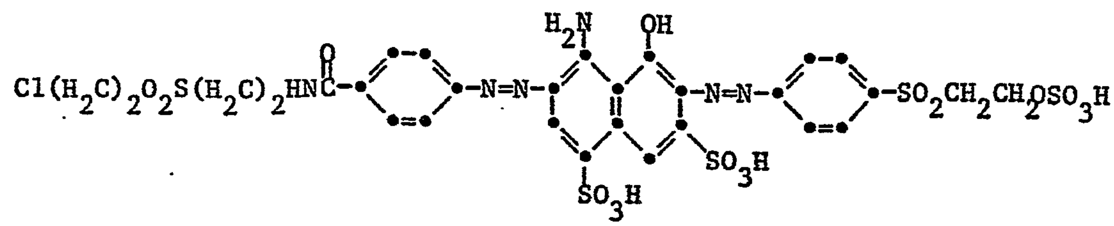

enthält, diese eignet sich sehr gut als Farbstoff zum Färben von Cellulosefasermaterialien nach den in der Technik üblichen, bekannten Färbe- und Druckmethoden und gängigen Fixiermethoden für faserreaktive Farbstoffe; sie liefert auf diesen Materialien marineblaue Farbtöne mit guten Echtheitseigenschaften.

Beispiel 179

70,25 Teile 4-β-Sulfatoäthylsulfonyl-anilin werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31 %igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40 %igen wässrigen Natriumnitritlösung durchgeführt. Anschliessend wird ein geringer Ueberschuss an salpetriger Säure mit 0,5 Teilen Amidosulfonsäure zerstört. Sodann werden 77,8 Teile 1-Amino-8-hydroxynaphthalin-4,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 82 Teile 4-Aminobenzoesäure-N'-β(β'-chlorethylsulfonyl)ethyl amid- hydrochlorid analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

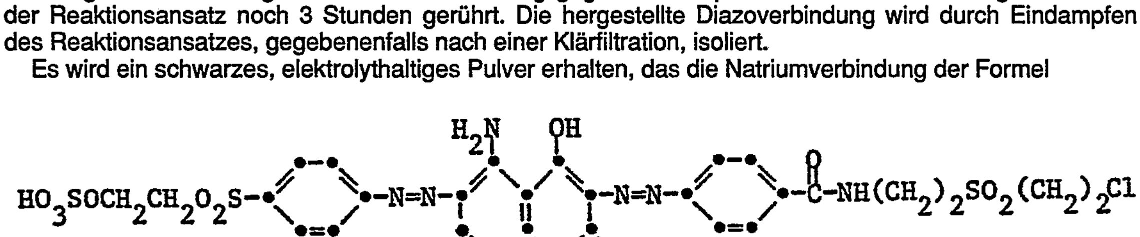

enthält, diese eignet sich sehr gut als Farbstoff zum Färben von Cellulosefasermaterialien nach den in der Technik üblichen, bekannten Färbe- und Druckmethoden und gängigen Fixiermethoden für faserreaktive Farbstoffe; sie liefert auf diesen Materialien marineblaue Farbtöne mit guten Echtheitseigenschaften.

Beispiel 180

82 Teile 3-Aminobenzoesäure-N'-β(β'-chlorethylsulfonyl)ethylamid-hydrochlorid werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31 %igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40 %igen wässrigen Natriumnitritlösung durchgeführt; anschliessend wird ein geringer Ueberschuss an salpetriger Säure mit 0,5 Teilen Amidosulfonsäure zerstört. Sodann werden 77,8 Teile 1-Amino-8-hydroxynaphthalin-3,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 82 Teile 4-Aminobenzoesäure-N'-β(β'-chlorethylsulfonyl)ethylamid-hydrochlorid analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden ge rührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

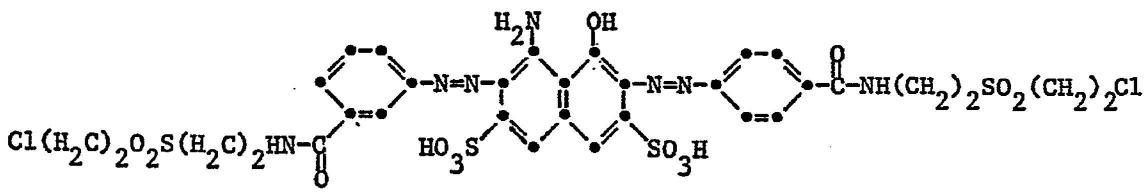

enthält, diese eignet sich sehr gut als Farbstoff zum Färben von Cellulosefasermaterialien nach den in der Technik üblichen, bekannten Färbe- und Druckmethoden und gängigen Fixiermethoden für faserreaktive Farbstoffe; sie liefert auf diesen Materialien marineblaue Farbtöne mit guten Echtheitseigenschaften.

Beispiel 181

82 Teile 3-Aminobenzoesäure-N'-β(β'-chlorethylsulfonyl)ethylamid-hydrochlorid werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31 %igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40 %igen wässrigen Natriumnitritlösung durchgeführt; anschliessend wird ein geringer Ueberschuss an salpetriger Säure mit 0,5 Teilen Amidosulfonsäure zerstört. Sodann werden 77,8 Teile 1-Amino-8-hydroxynaphthalin-3,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 82 Teile 3-Aminobenzoesäure-N'-β(β'-chlorethylsulfonyl)ethylamid-hydrochlorid analog den obigen An gaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

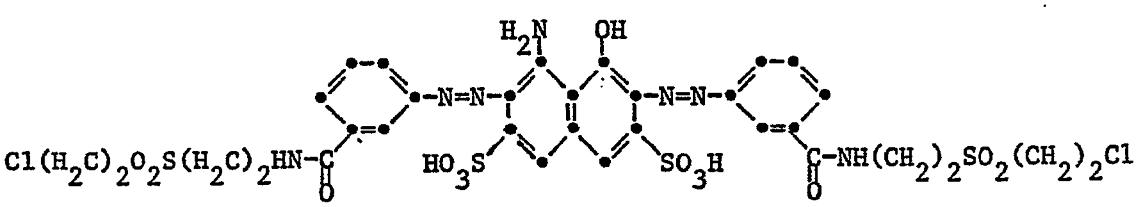

enthält, diese eignet sich sehr gut als Farbstoff zum Färben von Cellulosefasermaterialien nach den in der Technik üblichen, bekannten Färbe- und Druckmethoden und gängigen Fixiermethoden für faserreaktive Farbstoffe; sie liefert auf diesen Materialien marineblaue Farbtöne mit guten Echtheitseigenschaften.

Beispiel 182

82 Teile 4-Aminobenzoesäure-N'-β(β'-chlorethylsulfonyl)ethylamid-hydrochlorid werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31 %igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40 %igen wässrigen Natriumnitritlösung durchgeführt; anschliessend wird ein geringer Ueberschuss an salpetriger Säure mit 0,5 Teilen Amidosulfonsäure zerstört. Sodann werden 77,8 Teile 1-Amino-8-hydroxynaphthalin-4,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 82 Teile 4-Aminobenzoesäure-N'-β(β'-chlorethylsulfonyl)ethylamid-hydrochlorid analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

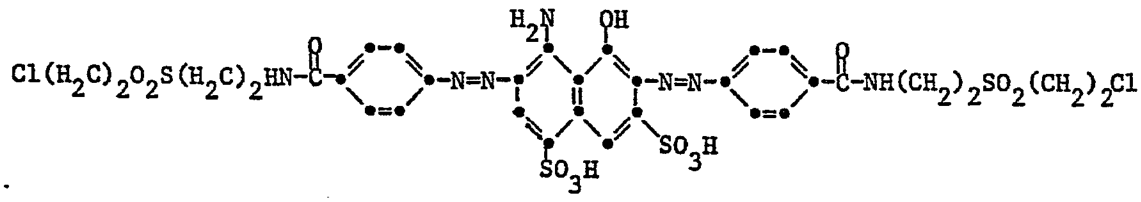

enthält, diese eignet sich sehr gut als Farbstoff zum Färben von Cellulosefasermaterialien nach den in der Technik üblichen, bekannten Färbe- und Druckmethoden und gängigen Fixiermethoden für faserreaktive Farbstoffe; sie liefert auf diesen Materialien marineblaue Farbtöne mit guten Echtheitseigenschaften.

Beispiel 183

70,25 Teile 4-β-Sulfatoäthylsulfonyl-anilin werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31 %igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40 %igen wässrigen Natriumnitritlösung durchgeführt. Anschliessend wird ein geringer Ueberschuss an salpetriger Säure mit 0,5 Teilen Amidosulfonsäure zerstört. Sodann werden 77,8 Teile 1-Amino-8-hydroxynaphthalin-3,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 82 Teile 3-Aminobenzoesäure-N'-β(β'-chlorethylsulfonyl)ethylamid- hydrochlorid analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

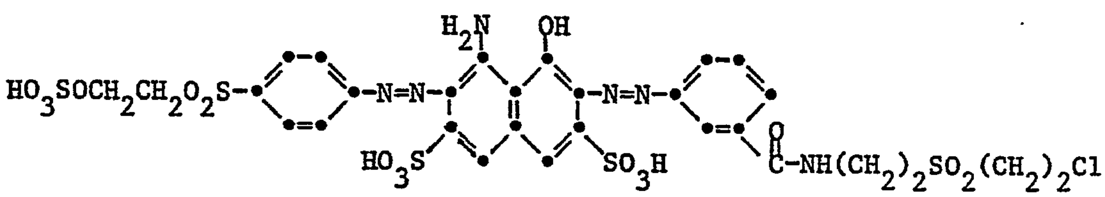

enthält. Diese eignet sich sehr gut als Farbstoff zum Färben von Cellulosefasermaterialien nach den in der Technik üblichen bekannten Färbe- und Druckmethoden und gängigen Fixiermethoden für faserreaktive Farbstoffe; sie liefert auf diesen Materialien marineblaue Farbtöne mit guten Echtheitseigenschaften.

Beispiel 184

82 Teile 3-Aminobenzoesäure-N'-β(β'-chlorethylsulfonyl)ethylamid-hydrochlorid werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31 %igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40 %igen wässrigen Natriumnitritlösung durchgeführt; anschliessend wird ein geringer Ueberschuss an salpetriger Säure mit 0,5 Teilen Amidosulfonsäure zerstört. Sodann werden 77,8 Teile 1-Amino-8-hydroxynaphthalin-3,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 70,25 Teile 4-β-Sulfatoäthylsulfonyl-anilin analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

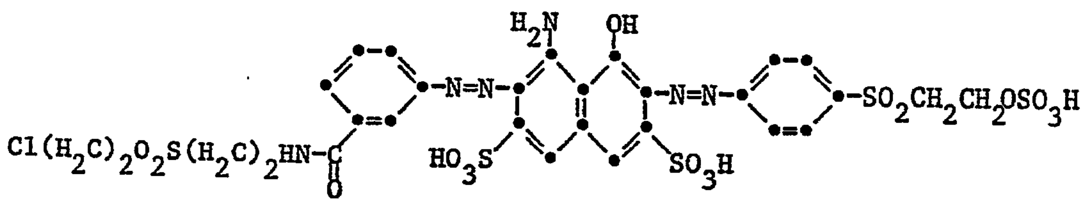

enthält, diese eignet sich sehr gut als Farbstoff zum Färben von Cellulosefasermaterialien nach den in der Technik üblichen, bekannten Färbe- und Druckmethoden und gängigen Fixiermethoden für faserreaktive Farbstoffe; sie liefert auf diesen Materialien marineblaue Farbtöne mit guten Echtheitseigenschaften.

Beispiel 185

82 Teile 3-Aminobenzoesäure-N'-β(β'-chlorethylsulfonyl)ethylamid-hydrochlorid werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31 %igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40 %igen wässrigen Natriumnitritlösung durchgeführt; anschliessend wird ein geringer Ueberschuss an salpetriger Säure mit 0,5 Teilen Amidosulfonsäure zerstört. Sodann werden 77,8 Teile 1-Amino-8-hydroxynaphthalin-4,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 70,25 Teile 4-β-Sulfatoäthylsulfonyl-anilin analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

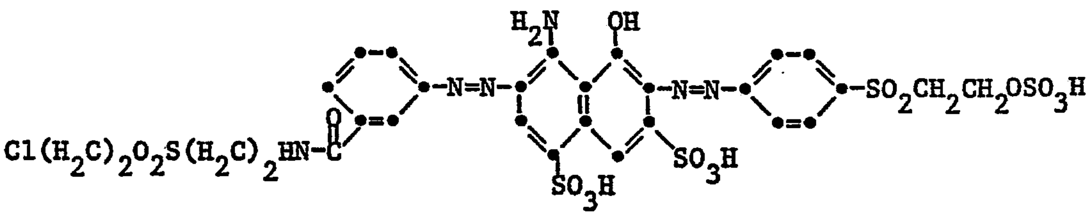

enthält, diese eignet sich sehr gut als Farbstoff zum Färben von Cellulosefasermaterialien nach den in der Technik üblichen, bekannten Färbe- und Druckmethoden und gängigen Fixiermethoden für faserreaktive Farbstoffe; sie liefert auf diesen Materialien marineblaue Farbtöne mit guten Echtheitseigenschaften.

Beispiel 186

70,25 Teile 4-β-Sulfatoäthylsulfonyl-anilin werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31 %igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40 %igen wässrigen Natriumnitritlösung durchgeführt. Anschliessend wird ein geringer Ueberschuss an salpetriger Säure mit 0,5 Teilen Amidosulfonsäure zerstört. Sodann werden 77,8 Teile 1-Amino-8-hydroxynaphthalin-4,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 82 Teile 3-Aminobenzoesäure-N'- β(β'-chlorethylsulfonyl)ethylamid-hydrochlorid analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

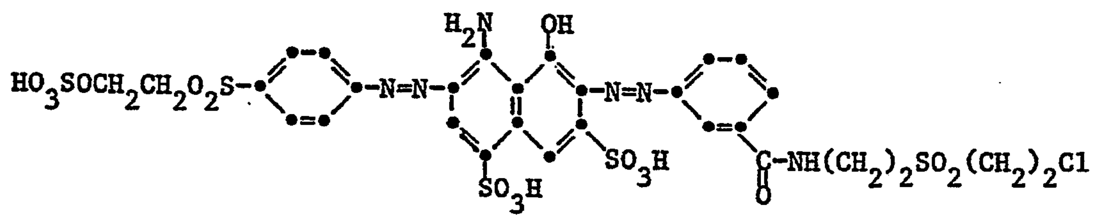

enthält. Diese eignet sich sehr gut als Farbstoff zum Färben von Cellulosefasermaterialien nach den in der Technik üblichen bekannten Färbe- und Druckmethoden und gängigen Fixiermethoden für faserreaktive Farbstoffe; sie liefert auf diesen Materialien marineblaue Farbtöne mit guten Echtheitseigenschaften.

Beispiel 187

82,0 Teile des Disazofarbstoffes 1-Amino-2-[4'-Benzoesäure-N'-β(β'-chlorethylsulfonyl ethylamid-phenylazo)]-7-(2"-sulfo-5"-aminophenylazo)-8-naphthol-3,6-disulfonsäure werden in Form einer neutralen Lösung bei 0 bis 5° mit einer Anschlämmung von 18,5 Teilen Cyanurchlorid umgesetzt, welche in 110 Teilen Aceton gelöst und mit 250 Teilen Eis wieder gefällt wurden. Die Umsetzung erfolgt bei pH 6,0 bis 6,5, wobei die Einhaltung des pH-Wertes durch Zutropfen von 50 Teilen 2-normaler Sodalösung erfolgt. Anschliessend werden 32 Teile 3-Aminobenzoesäure-N'-β(β'-chlorethylsulfonyl)ethylamid-hydrochlorid als Pulver zugegeben, auf 20 bis 30° erwärmt und dabei der pH-Wert durch Zutropfen von 100 Teilen 2-normaler Sodalösung auf 6,0 bis 6,5 gehalten. Der erhaltene Farbstoff der Konstitution

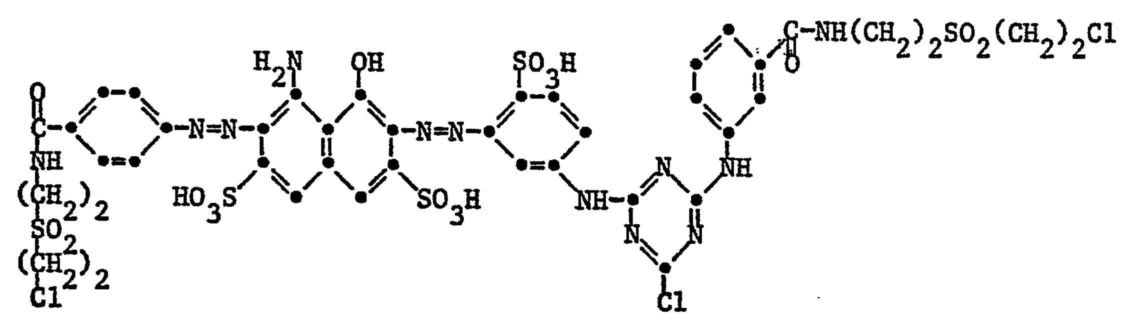

wird durch Aussalzen oder durch Sprühtrocknung isoliert.

Beispiel 188

82,0 Teile des Disazofarbstoffes 1-Amino-2-[3'-Benzoesäure-N'-β(β'-chlorethylsulfonyl)ethylamid-phenylazo)]-7-(2"-sulfo-5"-aminophenylazo)-8-naphthol-3,6-disulfonsäure werden in Form einer neutralen Lösung bei 0° mit 14,2 Teilen 2,4,6-Trifluor-1,3,5-triazin innert 20 Minuten versetzt. Die Umsetzung erfolgt bei pH 6,0 bis 6,5, wobei die Einhaltung des pH-Wertes durch Zutropfen von 50 Teilen 2-normaler Sodalösung erfolgt. Anschliessend werden 32 Teile 4-Aminobenzoesäure-N'-β(β'chlorethylsulfonyl)ethylamid-hydrochlorid als Pulver zugegeben, auf 0 bis 10° erwärmt und dabei der

pH-Wert durch Zutropfen von 100 Teilen 2-normaler Sodalösung auf 5,0 bis 6,5 gehalten. Der erhaltene Farbstoff der Konstitution

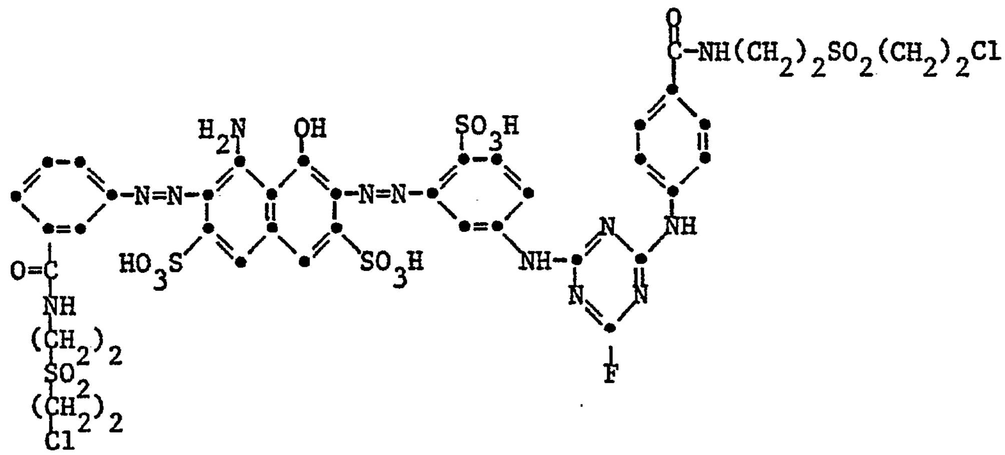

wird durch Aussalzen oder durch Sprühtrocknung isoliert.

Beispiel 189

82,0 Teile des Disazofarbstoffes 1-Amino-2-[4'-Benzoesäure-N'-β(β'-chlorethylsulfonyl)-ethylamid-phenylazo]-7-(2"-sulfo-5"-aminophenylazo)-8-naphthol-3,6-disulfonsäure werden in Form einer neutralen Lösung bei 0 bis 5° mit einer Anschlämmung von 18,5 Teilen Cyanurchlorid umgesetzt, welche in 110 Teilen Aceton gelöst und mit 250 Teilen Eis wieder gefällt wurden. Die Umsetzung erfolgt bei pH 6,0 bis 6,5, wobei die Einhaltung des pH-Wertes durch Zutropfen von 50 Teilen 2-normaler Sodalösung erfolgt. Anschliessend werden 17,3 Teile 3-Aminobenzoesäure als Pulver zugegeben, auf 20 bis 30° erwärmt und dabei der pH-Wert durch Zutropfen von 100 Teilen 2-normaler Sodalösung auf 6,0 bis 6,5 gehalten. Der erhaltene Farbstoff der Konstitution

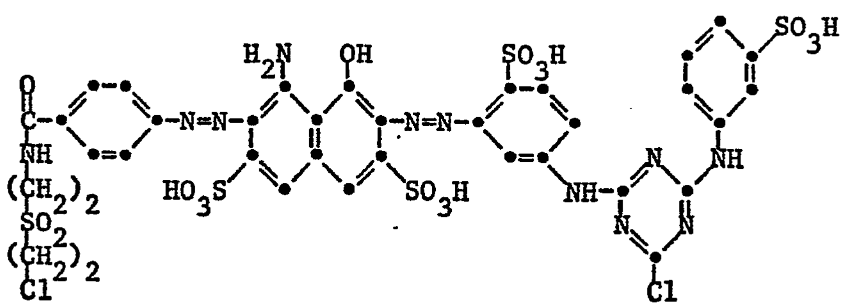

wird durch Aussalzen oder durch Sprühtrocknung isoliert.

Beispiel 190

82,0 Teile des Disazofarbstoffes 1-Amino-2-[3'-Benzoesäure-N'-β(β'-chlorethylsulfonyl)ethylamid-phenylazo]-7-(2"-sulfo-5"-aminophenylazo)-8-naphthol-3,6-disulfonsäure werden in Form einer neutralen Lösung bei 0 bis 5° mit einer Anschlämmung von 18,5 Teilen Cyanurchlorid umgesetzt, welche in 110 Teilen Aceton gelöst und mit 250 Teilen Eis wieder gefällt wurden. Die Umsetzung erfolgt bei pH 6,0 bis 6,5, wobei die Einhaltung des pH-Wertes durch Zutropfen von 50 Teilen 2-normaler Sodalösung erfolgt. Anschliessend werden 20,8 Teile HCl $H_2NCH_2CH_2SO_2CH_2CH_2Cl$ als Pulver zugegeben, auf 20 bis 30° erwärmt und dabei der pH-Wert durch Zutropfen von 100 Teilen 2-normaler Sodalösung auf 6,0 bis 6,5 gehalten. Der erhaltene Farbstoff der Konstitution

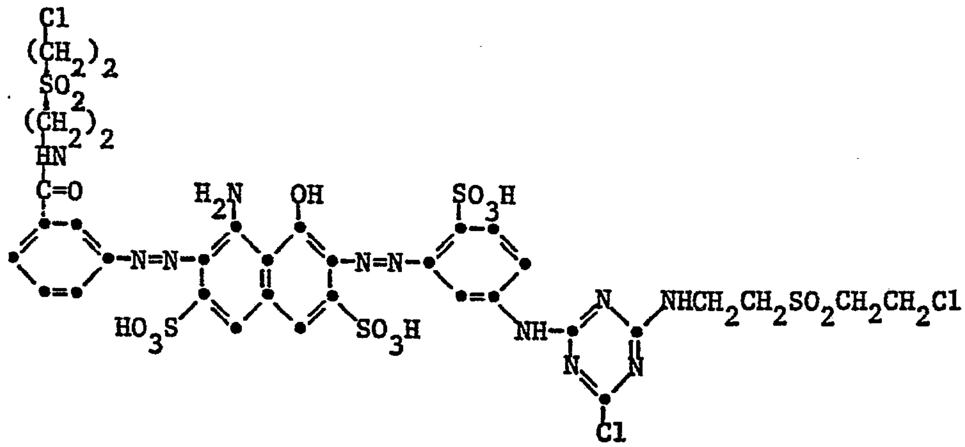

wird durch Ausalzen oder durch Sprühtrocknung isoliert.

Beispiel 191

83 Teile des Disazofarbstoffes 1-Amino-2-[4'-Benzoesäure-N'-γ-(β'-chlorethylsulfonyl)propylamid-phenylazo]-7-(2"-sulfo-5"-aminophenylazo)-8-naphthol-3,6-disulfonsäure werden in Form einer neutralen Lösung bei 0 bis 5° mit einer Anschlämmung von 18,5 Teilen Cyanurchlorid umgesetzt, welche in 110 Teilen Aceton gelöst und mit 250 Teilen Eis wieder gefällt wurden, Die Umsetzung erfolgt bei pH 6,0 bis 6,5, wobei die Einhaltung des pH-Wertes durch Zutropfen von 50 Teilen 2-normaler Sodalösung erfolgt. Der erhaltene Farbstoff der Konstitution

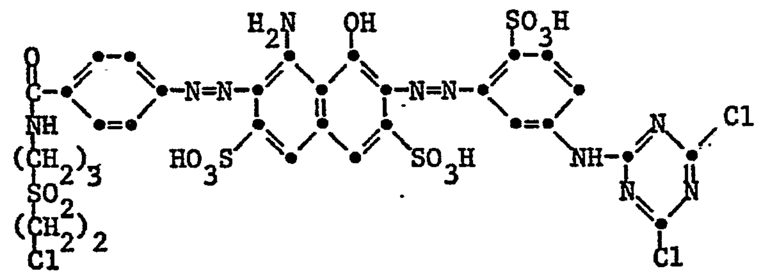

wird durch Aussalzen oder durch Sprühtrocknung isoliert.

Beispiel 192

82 Teile des Disazofarbstoffes 1-Amino-2-[4'-benzoesäure-N'-β(β'-chlorethylsulfonyl)ethylamid-phenylazo]-7-(2"-sulfo-5"-aminophenylazo)-8-naphthol-3,6-disulfonsäure werden in Form einer neutralen Lösung bei 20 bis 25° mit einer Anschlämmung von 21,0 Teilen 2,4-Dichlor-6-isopropoxy-triazin umgesetzt. Die Umsetzung erfolgt bei pH 6,0 bis 6,5, wobei die Einhaltung des pH-Wertes durch Zutropfen von 50 Teilen 2-normaler Sodalösung erfolgt. Der erhaltene erhaltene Farbstoff der Konstitution

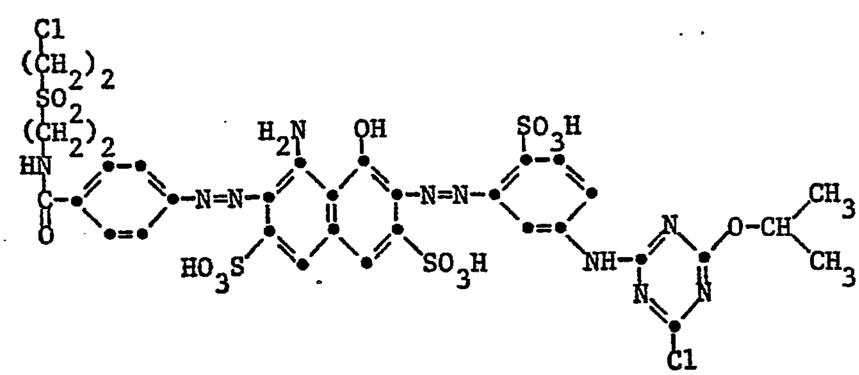

wird durch Aussalzen oder durch Sprühtrocknung isoliert.

Beispiel 193

82,0 Teile des Disazofarbstoffes 1-Amino-2-[4'-benzoesäure-N'-β(β'-chlorethylsulfonyl)ethylamid-phenylazo]-7-(2"-sulfo-5"-aminophenylazo)-8-naphthol-3,6-disulfonsäure werden in Form einer neutralen Lösung bei 0° mit 14,2 Teilen 2,4,6-Trifluor-1,3,5-triazin innert 20 Minuten versetzt. Die Umsetzung erfolgt bei pH 6,0 bis 6,5, wobei die Einhaltung des pH-Wertes durch Zutropfen von 50 Teilen 2-normaler Sodalösung erfolgt. Anschliessend werden 17,3 Teile 3-Aminobenzoesäure als Pulver zugegeben, auf 0 bis 30° erwärmt und dabei der pH-Wert durch Zutropfen von 100 Teilen 2-normaler Sodalösung auf 6,0 bis 6,5 gehalten. Der erhaltene Farbstoff der Konstitution

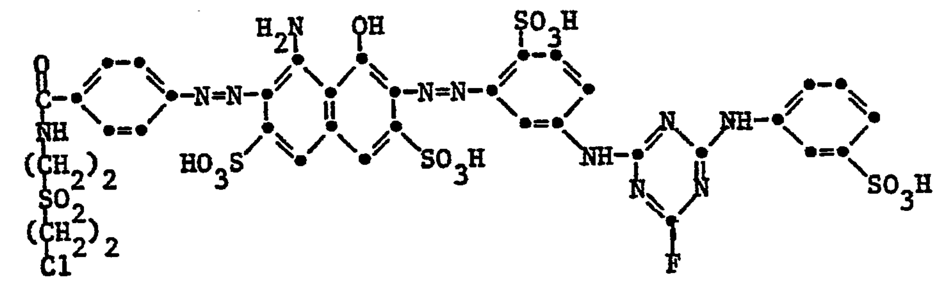

wird durch Aussalzen oder durch Sprühtrocknung isoliert.

Beispiel 194

82,0 Teile des Disazofarbstoffes 1-Amino-2-[3'-benzoesäure-N'-β(β'-chlorethylsulfonyl)ethylamid-phenylazo]-7-(2"-sulfo-5"-aminophenylazo)-8-naphthol-3,6-disulfonsäure werden in Form einer neutralen Lösung bei 0° mit 14,2 Teilen 2,4,6-Trifluor-1,3,5-triazin innert 20 Minuten versetzt. Die Umsetzung erfolgt bei pH 6,0 bis 6,5, wobei die Einhaltung des pH-Wertes durch Zutropfen von 50 Teilen 2-normaler Sodalösung erfolgt. Anschliessend werden 25,2 Teile $HClH_2N\ CH_2CH_2OCH_2CH_2SO_2CH_2CH_2Cl$ als Pulver zugegeben, auf 0 bis 10° erwärmt und dabei der pH-Wert durch Zutropfen von 100 Teilen 2-normaler Sodalösung auf 4,0 bis 4,5 gehalten. Der erhaltene Farbstoff der Konstitution

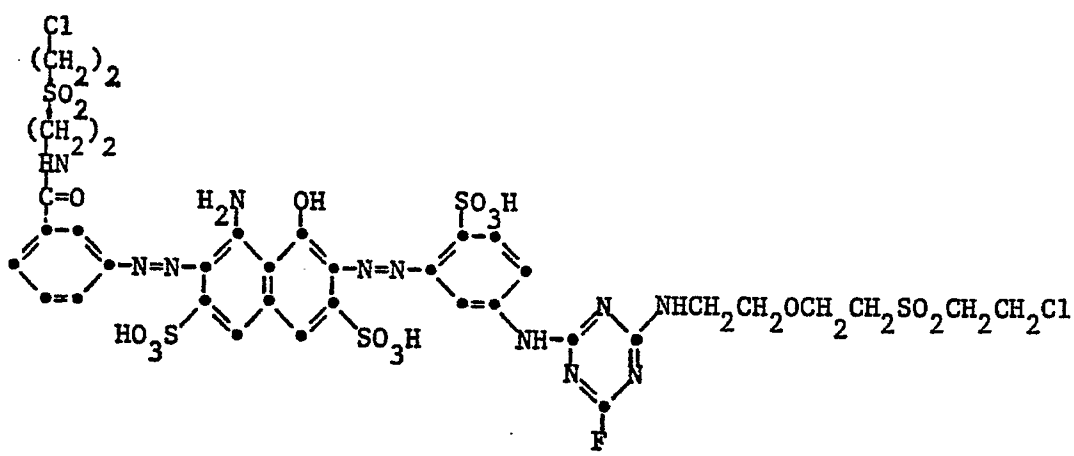

wird durch Aussalzen oder durch Sprühtrocknung isoliert.

Beispiel 195

Ein Gemisch aus einer neutralen Lösung von 33 Teilen 4-Aminobenzoesäure-N'-β(β'-chlorethylsulfonyl)ethylamid-hydrochlorid in 150 Teilen Wasser und 20,3 Volumenteilen einer wässrigen 5n-Natriumnitritlösung wird bei 0 bis 5° unter Rühren in ein Gemisch aus 26 Volumenteilen einer 31 %igen wässrigen Salzsäure und 150 Teilen Eis einlaufen gelassen. Die entstehende Suspension wird noch eine Stunde gerührt und überschüssige salpetrige Säure mit Amidosulfonsäure zerstört. Sodann wird zur Kupplungsreaktion eine Lösung von 31,9 Teilen 1-Amino-8-naphthol-3,6-disulfonsäure in 500 Teilen Wasser, die mit Salzsäure auf einen pH-Wert von 4 gestellt ist, versetzt. Der pH-Wert der Kupplung wird mit Natriumacetat bei 1,5 bis 2,5 gehalten. Nachdem die erste Kupplungsreaktion beendet ist, wird die gebildete Monoazoverbindung mit einer Diazoniumsalzlösung in der zweiten Kupplungsreaktion umgesetzt. Diese Diazoniumsalzlösung wird wie folgt hergestellt:

18,8 Teile 1,3-Diaminobenzol-4-sulfonsäure werden in 200 Teile Wasser eingetragen und mit Natriumcarbonat neutralisiert. Bei 50 bis 60°C werden innert 8 Stunden 23 Teile 2,4,5,6-Tetrachlorpyrimidin zugetropft. Das pH wird mit 2n NaOH bei 6,0 konstant gehalten und die Temperatur darf nicht über 65°C steigen. Nach beendeter Kondensation wird die feine Suspension filtriert und mit 5 % Natriumchloridlösung gewaschen. Das Pressgut wird mit 35 Volumenteilen einer 31 %igen wässrigen Salzsäure angesäuert, mit 500 Teilen Eis versetzt und durch langsame Zugabe von 20 Volumenteilen einer wässrigen 5n-Natriumnitritlösung diazotiert. Wie üblich, wird danach überschüssige salpetrige Säure mit etwas Amidosulfonsäure zerstört. Die Diazoniumsalzsuspension wird sodann mit 17,8 Teilen Natriumbicarbonat auf einen pH-Wert von 5,5 bis 6,5 eingestellt und, wie oben erwähnt, mit der Lösung der Monoazoverbindung bei einem pH-Wert von 5,5 bis 6,5 gekuppelt. Die gebildete Disazoverbindung wird mit Natriumchlorid ausgesalzen, abgesaugt und getrocknet.

Man erhält das Alkalimetallsalz der Verbindung der Formel

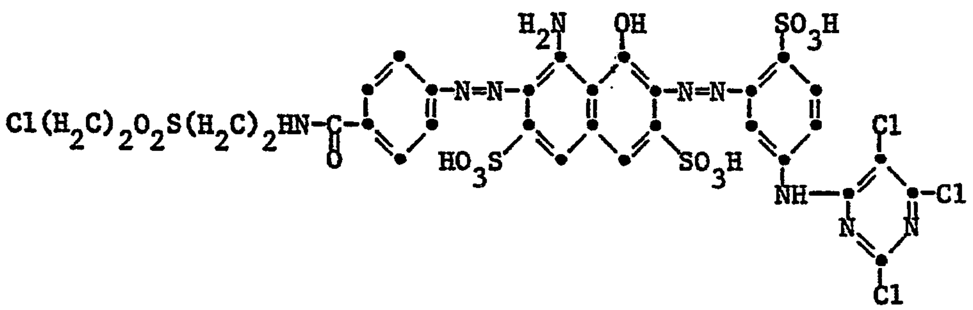

in Form eines schwarzen, elektrolyhaltigen Pulvers. Diese Verbindung zeigt sehr gute Farbstoffeigenschaften und liefert nach den in der Technik üblichen Applikations- und Fixierverfahren auf Cellulosefasermaterialien marineblaue Färbungen und Drucke mit sehr guten Gebrauchs- und Fabrikationsechtheiten. Auf Wolle werden aus schwach saurem Bade ebenfalls marineblaue Färbungen erhalten, deren Nassechtheiten nach ammoniakalischer Nachbehandlung ausgezeichnet sind.

Beispiel 196

Ein Gemisch aus einer neutralen Lösung von 33 Teilen 3-Aminobenzoesäure-N'-β(β'-chlorethylsulfonyl)ethylamid-hydrochlorid in 150 Teilen Wasser und 20,3 Volumenteilen einer wässrigen 5n-Natriumnitritlösung wird bei 0 bis 5° unter Rühren in ein Gemisch aus 26 Volumenteilen einer 31 %igen wässrigen Salzsäure und 150 Teilen Eis einlaufen gelassen. Die entstehende Suspension wird noch eine Stunde gerührt und überschüssige salpetrige Säure mit Amidosulfonsäure zerstört. Sodann wird zur Kupplungsreaktion eine Lösung von 31,9 Teilen 1-Amino-8-naphthol-3,6-disulfonsäure in 500 Teilen Wasser, die mit Salzsäure auf einen pH-Wert von 4 gestellt ist, versetzt. Der pH-Wert der Kupplung wird mit Natriumacetat bei 1,5 bis 2,5 gehalten. Nachdem die erste Kupplungsreaktion beendet ist, wird die gebildete Monoazoverbindung mit einer Diazoniumsalzlösung in der zweiten Kupplungsreaktion umgesetzt. Diese Diazoniumsalzlösung wird wie folgt hergestellt:

18,8 Teile 1,3-Diaminobenzol-4-sulfonsäure werden in 200 Teile Wasser eingetragen und mit Natriumcarbonat neutralisiert. Bei 50 bis 60°C werden innert 8 Stunden 23 Teile 2,4,5,6-Tetrachlorpyrimidin zugetropft. Das pH wird mit 2n NaOH bei 6,0 konstant gehalten und die Temperatur darf nicht über 65°C steigen. Nach beendeter Kondensation wird die feine Suspension filtriert und mit 5 % Natriumchloridlösung gewaschen. Das Pressgut wird mit 35 Volumenteilen einer 31 %igen wässrigen Salzsäure angesäuert, mit 500 Teilen Eis versetzt und durch langsame Zugabe von 20 Volumenteilen einer wässrigen 5n- Natriumnitritlösung diazotiert. Wie üblich, wird danach überschüssige salpetrige Säure mit etwas Amidosulfonsäure zerstört. Die Diazoniumsalzsuspension wird sodann mit 17,8 Teilen Natriumbicarbonat auf einen pH-Wert von 5,5 bis 6,5 eingestellt und, wie oben erwähnt, mit der Lösung der Monoazoverbindung bei einem pH-Wert von 5,5 bis 6,5 gekuppelt. Die gebildete Disazoverbindung wird mit Natriumchlorid ausgesalzen, abgesaugt und getrocknet.

Man erhält das Alkalimetallsalz der Verbindung der Formel

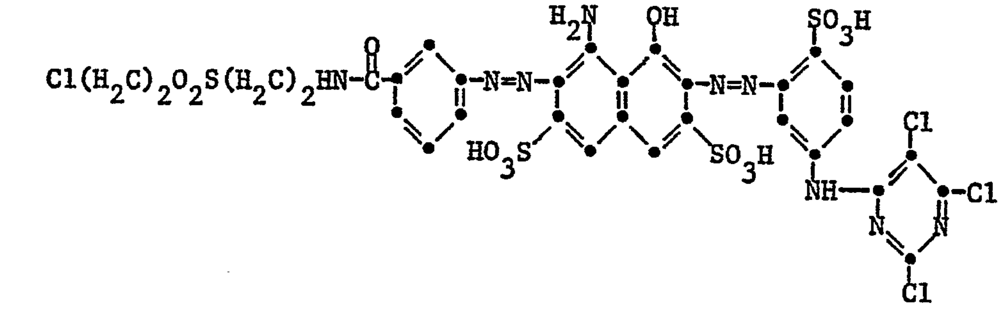

in Form eines schwarzen, elektrolyhaltigen Pulvers. Diese Verbindung zeigt sehr gute Farbstoffeigenschaften und liefert nach den in der Technik üblichen Applikations- und Fixierverfahren auf Cellulosefasermaterialien marineblaue Färbungen und Drucke mit sehr guten Gebrauchs- und Fabrikationsechtheiten. Auf Wolle werden aus schwach saurem Bade ebenfalls marineblaue Färbungen erhalten, deren Nassechtheiten nach ammoniakalischer Nachbehandlung ausgezeichnet sind.

Beispiel 197

Ein Gemisch aus einer neutralen Lösung von 34 Teilen 4-Aminobenzoesäure-N'-γ(β'chlorethylsulfonyl)propylamid-hydrochlorid in 150 Teilen Wasser und 20,3 Volumenteilen einer wässrigen 5n-Natriumnitritlösung wird bei 0 bis 5° unter Rühren in ein Gemisch aus 26 Volumenteilen einer 31 %igen wässrigen Salzsäure und 150 Teilen Eis einlaufen gelassen. Die entstehende Suspension wird noch eine Stunde gerührt und überschüssige salpetrige Säure mit Amidosulfonsäure zerstört. Sodann wird zur Kupplungsreaktion eine Lösung von 31,9 Teilen 1-Amino-8-naphthol-3,6-disulfonsäure in 500 Teilen Wasser, die mit Salzsäure auf einen pH-Wert von 4 gestellt ist, versetzt. Der pH-Wert der Kupplung wird mit Natriumacetat bei 1,5 bis 2,5 gehalten. Nachdem die erste Kupplungsreaktion beendet ist, wird die gebildete Monoazoverbindung mit einer Diazoniumsalzlösung in der zweiten Kupplungsreaktion umgesetzt. Diese Diazoniumsalzlösung wird wie folgt hergestellt:
18,8 Teile 1,3-Diaminobenzol-4-sulfonsäure werden in 200 Teile Wasser eingetragen und mit Natriumcarbonat neutralisiert. Bei 50 bis 60°C werden innert 8 Stunden 23 Teile 2,4,5,6-Tetrachlorpyrimidin zugetropft. Das pH wird mit 2n NaOH bei 6,0 konstant gehalten und die Temperatur darf nicht über 65°C steigen. Nach beendeter Kondensation wird die feine Suspension filtriert und mit 5 % Natriumchloridlösung gewaschen. Das Pressgut wird mit 35 Volumenteilen einer 31 %igen wässrigen Salzsäure angesäuert, mit 500 Teilen Eis versetzt und durch langsame Zugabe von 20 Volumenteilen einer wässrigen 5n-Natriumnitritlösung diazotiert. Wie üblich, wird danach überschüssige salpetrige Säure mit etwas Amidosulfonsäure zerstört. Die Diazoniumsalzsuspension wird sodann mit 17,8 Teilen Natriumbicarbonat auf einen pH-Wert von 5,5 bis 6,5 eingestellt und, wie oben erwähnt, mit der Lösung der Monoazoverbindung bei einem pH-Wert von 5,5 bis 6,5 gekuppelt. Die gebildete Disazoverbindung wird mit Natriumchlorid ausgesalzen, abgesaugt und getrocknet.

Man erhält das Alkalimetallsalz der Verbindung der Formel

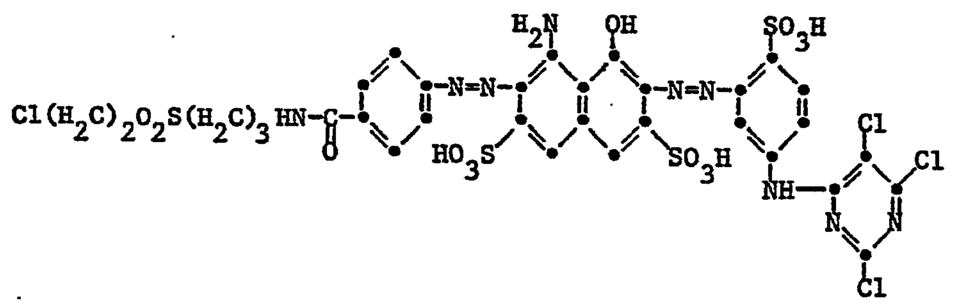

in Form eines schwarzen, elektrolyhaltigen Pulvers. Diese Verbindung zeigt sehr gute Farbstoffeigenschaften und liefert nach den in der Technik üblichen Applikations- und Fixierverfahren auf Cellulosefasermaterialien marineblaue Färbungen und Drucke mit sehr guten Gebrauchs- und Fabrikationsechtheiten. Auf Wolle werden aus schwach saurem Bade ebenfalls marineblaue Färbungen erhalten, deren Nassechtheiten nach ammoniakalischer Nachbehandlung ausgezeichnet sind.

Beispiel 198

Ein Gemisch aus einer neutralen Lösung von 33 Teilen 4-Aminobenzoesäure-N'-β(β'-chlorethylsulfonyl)ethylamid-hydrochlorid in 150 Teilen Wasser und 20,3 Volumenteilen einer wässrigen 5n-Natriumnitritlösung wird bei 0 bis 5° unter Rühren in ein Gemisch aus 26 Volumenteilen einer 31 %igen wässrigen Salzsäure und 150 Teilen Eis einlaufen gelassen. Die entstehende Suspension wird noch eine Stunde gerührt und überschüssige salpetrige Säure mit Amidosulfonsäure zerstört. Sodann wird zur Kupplungsreaktion eine Lösung von 31,9 Teilen 1-Amino-8-naphthol-3,6-disulfonsäure in 500 Teilen Wasser, die mit Salzsäure auf einen pH-Wert von 4 gestellt ist, versetzt. Der pH-Wert der Kupplung wird mit Natriumacetat bei 1,5 bis 2,5 gehalten. Nachdem die erste Kupplungsreaktion beendet ist, wird die gebildete Monoazoverbindung mit einer Diazoniumsalzlösung in der zweiten Kupplungsreaktion umgesetzt. Diese Diazoniumsalzlösung wird wie folgt hergestellt:
18,8 Teile 1,3-Diaminobenzol-4-sulfonsäure werden in 200 Teile Wasser eingetragen und mit Natriumcarbonat neutralisiert. Bei 20 bis 30°C werden innert 8 Stunden 18 Teile 5-Chlor-2,4,6-trifluorpyrimidin zugetropft. Das pH wird mit 2n NaOH bei 6,0 konstant gehalten und die Temperatur darf nicht über 65°C steigen. Nach beendeter Kondensation wird die feine Suspension filtriert und mit 5 % Natriumchloridlösung gewaschen. Das Pressgut wird mit 35 Volumenteilen einer 31 %igen wässrigen Salzsäure angesäuert, mit 500 Teilen Eis versetzt und durch langsame Zugabe von 20 Volumenteilen einer wässrigen 5n-Natriumnitritlösung diazotiert. Wie üblich, wird danach überschüssige salpetrige Säure mit etwas Amidosulfonsäure zerstört. Die Diazoniumsalzsuspension wird sodann mit 17,8 Teilen Natriumbicarbonat auf einen pH-Wert von 5,5 bis 6,5 eingestellt und, wie oben erwähnt, mit der Lösung der Monoazoverbindung bei einem pH-Wert von 5,5 bis 6,5 gekuppelt. Die gebildete Disazoverbindung wird mit Natriumchlorid ausgesalzen, abgesaugt und getrocknet.

Man erhält das Alkalimetallsalz der Verbindung der Formel

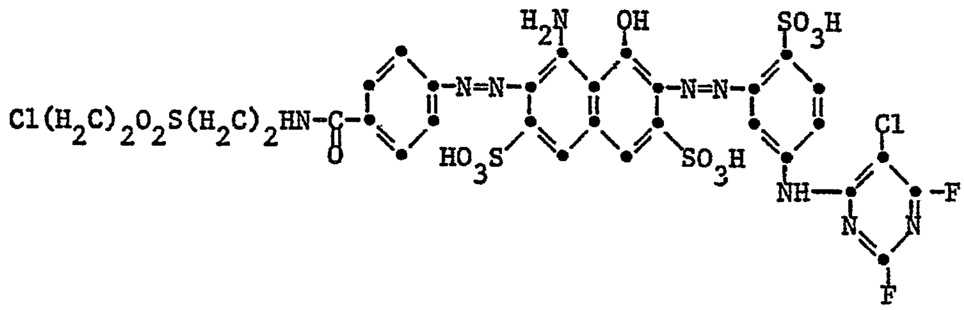

in Form eines schwarzen, elektrolyhaltigen Pulvers. Diese Verbindung zeigt sehr gute Farbstoffeigenschaften und liefert nach den in der Technik üblichen Applikations- und Fixierverfahren auf Cellulosefasermaterialien marineblaue Färbungen und Drucke mit sehr guten Gebrauchs- und Fabrikationsechtheiten. Auf Wolle werden aus schwach saurem Bade ebenfalls marineblaue Färbungen erhalten, deren Nassechtheiten nach ammoniakalischer Nachbehandlung ausgezeichnet sind.

Beispiel 199

Ein Gemisch aus einer neutralen Lösung von 33 Teilen 4-Aminobenzoesäure-N'-γ(β'-chlorethylsulfonyl)ethylamid-hydrochlorid in 150 Teilen Wasser und 20,3 Volumenteilen einer wässrigen 5n-Natriumnitritlösung wird bei 0 bis 5° unter Rühren in ein Gemisch aus 26 Volumenteilen einer 31 %igen wässrigen Salzsäure und 150 Teilen Eis einlaufen gelassen. Die entstehende Suspension wird noch eine Stunde gerührt und überschüssige salpetrige Säure mit Amidosulfonsäure zerstört. Sodann wird zur Kupplungsreaktion eine Lösung von 31,9 Teilen 1-Amino-8-naphthol-3,6-disulfonsäure in 500 Teilen Wasser, die mit Salzsäure auf einen pH-Wert von 4 gestellt ist, versetzt. Der pH-Wert der Kupplung wird mit Natriumacetat bei 1,5 bis 2,5 gehalten. Nachdem die erste Kupplungsreaktion beendet ist, wird die gebildete Monoazoverbindung mit einer Diazoniumsalzlösung in der zweiten Kupplungsreaktion umgesetzt. Diese Diazoniumsalzlösung wird wie folgt hergestellt:
18,8 Teile 1,3-Diaminobenzol-4-sulfonsäure werden in 200 Teile Wasser eingetragen und mit Natriumcarbonat neutralisiert. Bei 50 bis 60°C werden innert 8 Stunden 18 Teile 5-Chlor-2,4,6-trifluorpyrimidin zugetropft. Das pH wird mit 2n NaOH bei 6,0 konstant gehalten und die Temperatur darf nicht über 65°C steigen. Nach beendeter Kondensation wird die feine Suspension filtriert und mit 5 % Natriumchloridlösung gewaschen. Das Pressgut wird mit 35 Volumenteilen einer 31 %igen wässrigen Salzsäure angesäuert, mit 500 Teilen Eis versetzt und durch langsame Zugabe von 20 Volumenteilen einer wässrigen 5n-Natriumnitritlösung diazotiert. Wie üblich, wird danach überschüssige salpetrige Säure mit etwas Amidosulfonsäure zerstört. Die Diazoniumsalzsuspension wird sodann mit 17,8 Teilen Natriumbicarbonat auf einen pH-Wert von 5,5 bis 6,5 eingestellt und, wie oben erwähnt, mit der Lösung der Monoazoverbindung bei einem pH-Wert von 5,5 bis 6,5 gekuppelt. Die gebildete Disazoverbindung wird mit Natriumchlorid ausgesalzen, abgesaugt und getrocknet.

Man erhält das Alkalimetallsalz der Verbindung der Formel

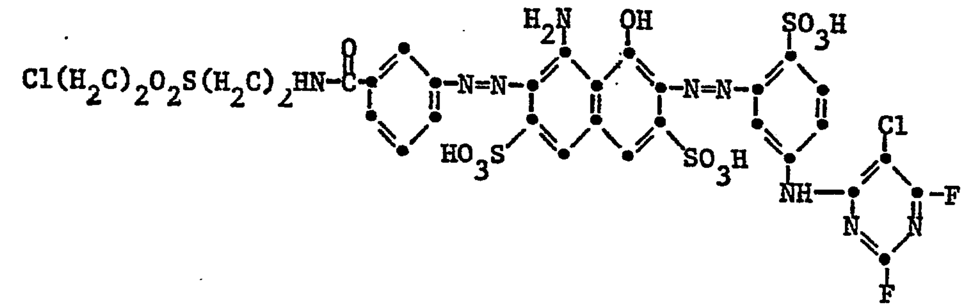

in Form eines schwarzen, elektrolyhaltigen Pulvers. Diese Verbindung zeigt sehr gute Farbstoffeigenschaften und liefert nach den in der Technik üblichen Applikations- und Fixierverfahren auf Cellulosefasermaterialien marineblaue Färbungen und Drucke mit sehr guten Gebrauchs- und Fabrikationsechtheiten. Auf Wolle werden aus schwach saurem Bade ebenfalls marineblaue Färbungen erhalten, deren Nassechtheiten nach ammoniakalischer Nachbehandlung ausgezeichnet sind.

Beispiel 200

18,8 Teile 1,3-Diaminobenzol-4-sulfonsäure werden in 200 Teile Wasser eingetragen und mit Natriumcarbonat neutralisiert. Bei 50 bis 60°C werden innert einer Stunde 23 Teile 2,4,5,6-Tetrachlorpyrimidin zugetropft. Das pH wird mit 2n NaOH bei 6,0 konstant gehalten und die Temperatur darf nicht über 65°C steigen. Nach beendeter Kondensation wird die feine Suspension filtriert und mit 5 % Natriumchloridlösung gewaschen. Das Pressgut wird mit 35 Volumenteilen einer 31 %igen wässrigen Salzsäure angesäuert, mit 500 Teilen Eis versetzt und durch langsame Zugabe von 20 Volumenteilen einer wässrigen 5n-Natriumnitritlösung diazotiert. Wie üblich, wird danach überschüssige salpetrige Säure mit etwas Amidosulfonsäure zerstört. Sodann wird zur Kupplungsreaktion eine Lösung von 31,9 Teilen 1-Amino-8-naphthol-3,6-disulfonsäure in 500 Teilen Wasser, die mit Salzsäure auf einen pH-Wert von 4 gestellt ist, versetzt. Der pH-Wert der Kupplung wird mit Soda bei 2 bis 3,0 gehalten. Nachdem die erste Kupplungsreaktion beendet ist, wird die gebildete Monoazoverbindung mit einer Diazoniumsalzlösung in der zweiten Kupplungsreaktion umgesetzt. Diese Diazoniumsalzlösung wird wie folgt hergestellt:
Ein Gemisch aus einer neutralen Lösung von 33 Teilen 4-Aminobenzoesäure-N'-β(β'chlorethylsulfonyl)ethylamid hydrochlorid in 150 Teilen Wasser und 20,3 Volumenteilen einer wässrigen 5n-Natriumnitritlösung wird bei 0 bis 5° unter Rühren in ein Gemisch aus 26 Volumenteilen einer 31 %igen wässrigen Salzsäure und 150 Teilen Eis einlaufen gelassen. Die entstehende Suspension wird noch eine Stunde gerührt und überschüssige salpetrige Säure mit Amidosulfonsäure zerstört. Die Diazoniumsalzuspension wird sodann mit 17,8 Teilen Natriumbicarbonat auf einen pH-Wert von 5,5 bis 6,5 eingestellt und, wie oben erwähnt, mit der Lösung der Monoazoverbindung bei einem pH-Wert von 5,5 bis 6,5 gekuppelt. Die gebildete Disazoverbindung wird mit Natriumchlorid ausgesalzen, abgesaugt und getrocknet.
Man erhält das Alkalimetallsalz der Verbindung der Formel

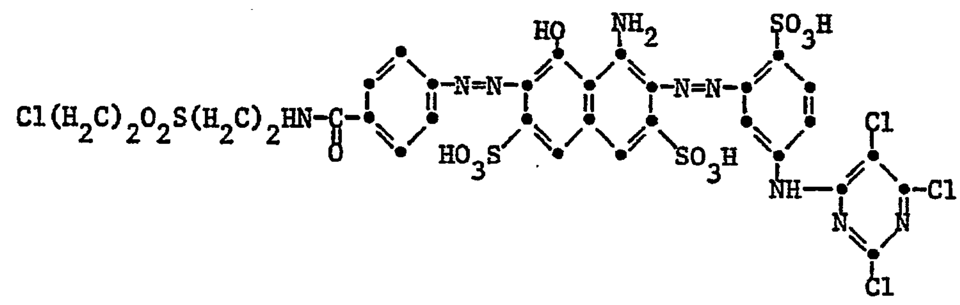

in Form eines schwarzen, elektrolyhaltigen Pulvers. Diese Verbindung zeigt sehr gute Farbstoffeigenschaften und liefert nach den in der Technik üblichen Applikations- und Fixierverfahren auf Cellulosefasermaterialien marineblaue Färbungen und Drucke mit sehr guten Gebrauchs- und Fabrikationsechtheiten. Auf Wolle werden aus schwach saurem Bade ebenfalls marineblaue Färbungen erhalten, deren Nassechtheiten nach ammoniakalischer Nachbehandlung ausgezeichnet sind.

Beispiel 201

18,8 Teile 1,3-Diaminobenzol-4-sulfonsäure werden in 200 Teile Wasser eingetragen und mit Natriumcarbonat neutralisiert. Bei 20 bis 30°C werden innert einer Stunde 18 Teile 5-Chlor-2,4,6-trichlorpyrimi-

din zugetropft. Das pH wird mit 2n NaOH bei 6,0 konstant gehalten und die Temperatur darf nicht über 65°C steigen. Nach beendeter Kondensation wird die feine Suspension filtriert und mit 5 % Natriumchloridlösung gewaschen. Das Pressgut wird mit 35 Volumenteilen einer 31 %igen wässrigen Salzsäure angesäuert, mit 500 Teilen Eis versetzt und durch langsame Zugabe von 20 Volumenteilen einer wässrigen 5n-Natriumnitritlösung diazotiert. Wie üblich, wird danach überschüssige salpetrige Säure mit etwas Amidosulfonsäure zerstört. Sodann wird zur Kupplungsreaktion eine Lösung von 31,9 Teilen 1-Amino-8-naphthol-3,6-disulfonsäure in 500 Teilen Wasser, die mit Salzsäure auf einen pH-Wert von 4 gestellt ist, versetzt. Der pH-Wert der Kupplung wird mit Soda bei 2 bis 3,0 gehalten. Nachdem die erste Kupplungsreaktion beendet ist, wird die gebildete Monoazoverbindung mit einer Diazoniumsalzlösung in der zweiten Kupplungsreaktion umgesetzt. Diese Diazoniumsalzlösung wird wie folgt hergestellt:
Ein Gemisch aus einer neutralen Lösung von 33 Teilen 4-Aminobenzoesäure-N'-β(β'chlorethylsulfonyl)ethylamid hydrochlorid in 150 Teilen Wasser und 20,3 Volumenteilen einer wässrigen 5n-Natriumnitritlösung wird bei 0 bis 5° unter Rühren in ein Gemisch aus 26 Volumenteilen einer 31 %igen wässrigen Salzsäure und 150 Teilen Eis einlaufen gelassen. Die entstehende Suspension wird noch eine Stunde gerührt und überschüssige salpetrige Säure mit Amidosulfonsäure zerstört. Die Diazoniumsalzuspension wird sodann mit 17,8 Teilen Natriumbicarbonat auf einen pH-Wert von 5,5 bis 6,5 eingestellt und, wie oben erwähnt, mit der Lösung der Monoazoverbindung bei einem pH-Wert von 5,5 bis 6,5 gekuppelt. Die gebildete Disazoverbindung wird mit Natriumchlorid ausgesalzen, abgesaugt und getrocknet.

Man erhält das Alkalimetallsalz der Verbindung der Formel

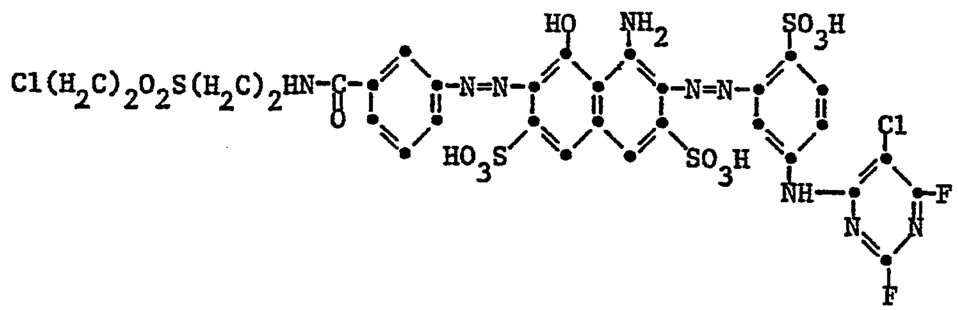

in Form eines schwarzen, elektrolyhaltigen Pulvers. Diese Verbindung zeigt sehr gute Farbstoffeigenschaften und liefert nach den in der Technik üblichen Applikations- und Fixierverfahren auf Cellulosefasermaterialien marineblaue Färbungen und Drucke mit sehr guten Gebrauchs- und Fabrikationsechtheiten. Auf Wolle werden aus schwach saurem Bade ebenfalls marineblaue Färbungen erhalten, deren Nassechtheiten nach ammoniakalischer Nachbehandlung ausgezeichnet sind.

Analog zu den beschriebenen Methoden (Beispiele 176-201) lassen sich auch die in der folgenden Tabelle aufgeführten Farbstoffe herstellen, die Baumwolle im angegebenen Farbton färben.

| Bsp. | | Farbton |
|---|---|---|
| 202 | 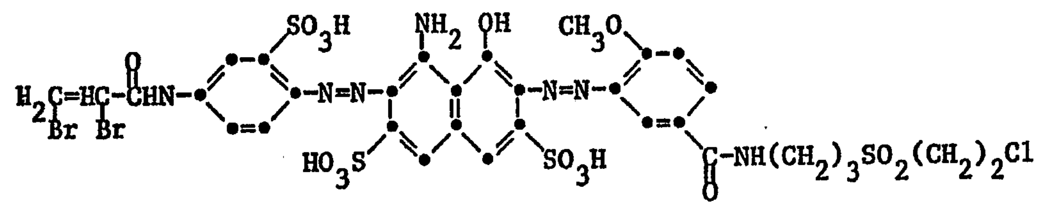 | marineblau |
| 203 | 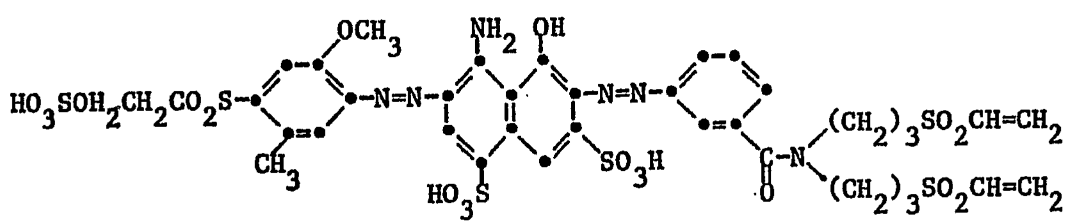 | grünstichiges marineblau |
| 204 | 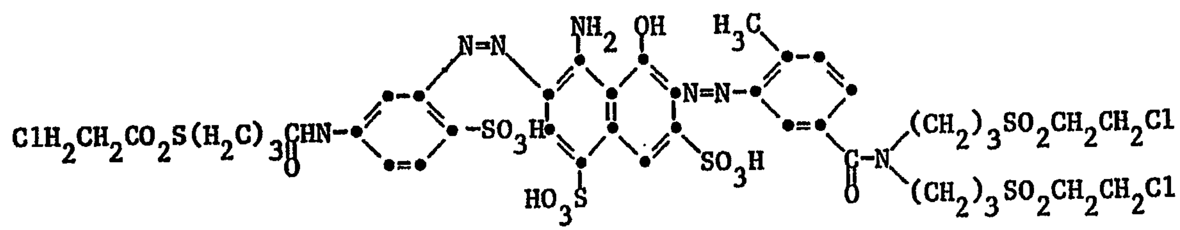 | marineblau |

| Bsp. | | Farbton |
|---|---|---|
| 205 | 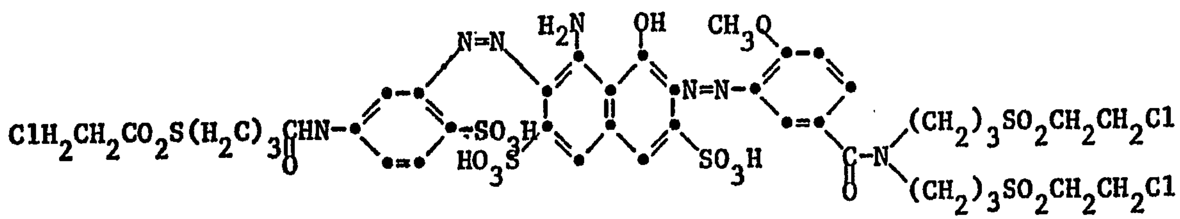 | grünstichiges marineblau |
| 206 | 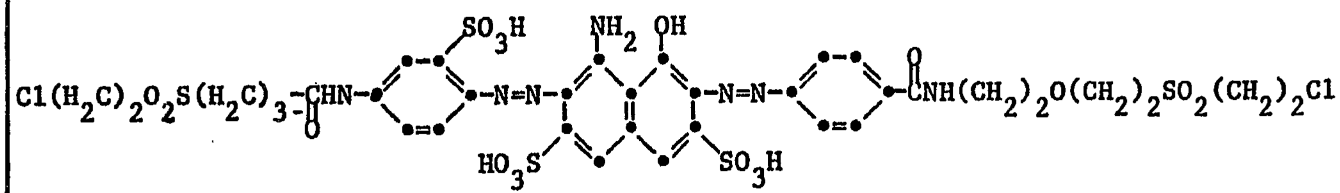 | marineblau |
| 207 | 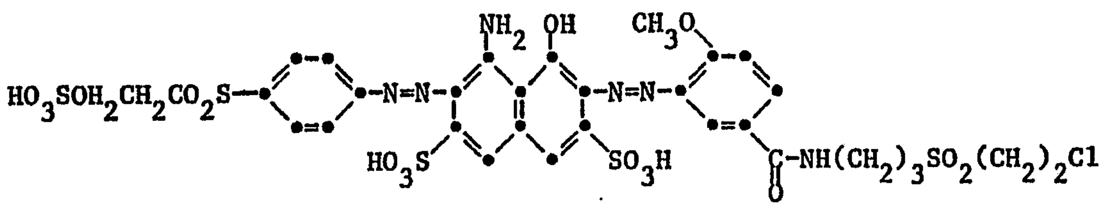 | grünstichiges marineblau |

| Bsp. | | Farbton |
|---|---|---|
| 208 | 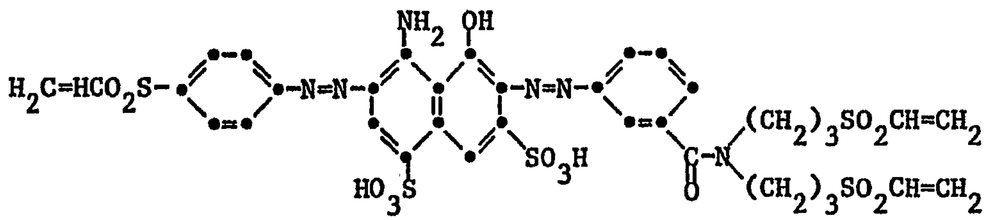 | grünstichiges marineblau |
| 209 | 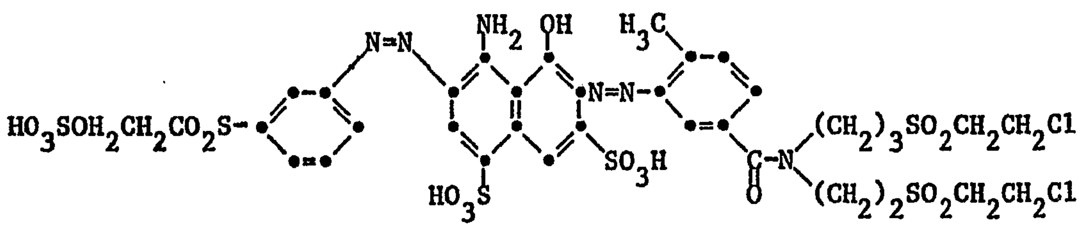 | marineblau |
| 210 | 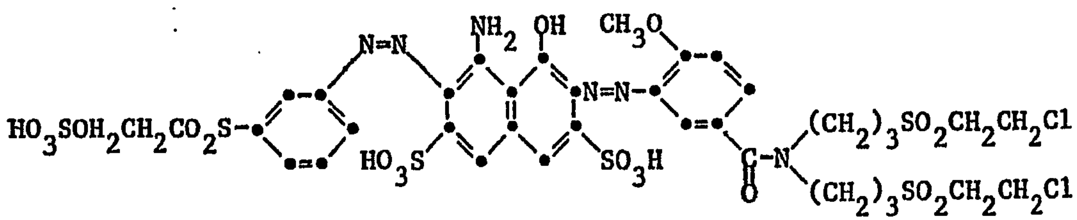 | grünstichiges marineblau |

| Bsp. | | Farbton |
|---|---|---|
| 211 | 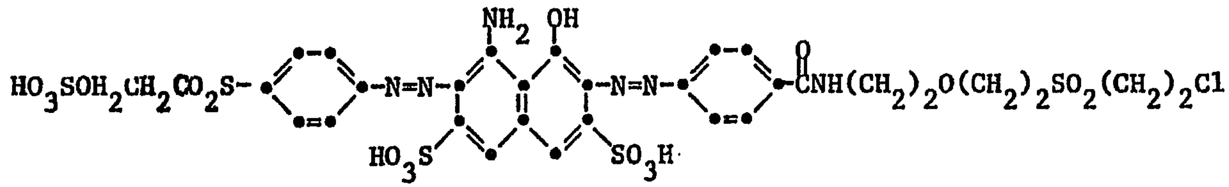 | marineblau |
| 212 | 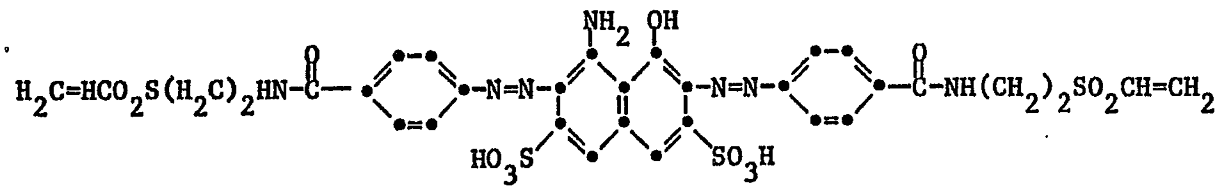 | marineblau |
| 213 | 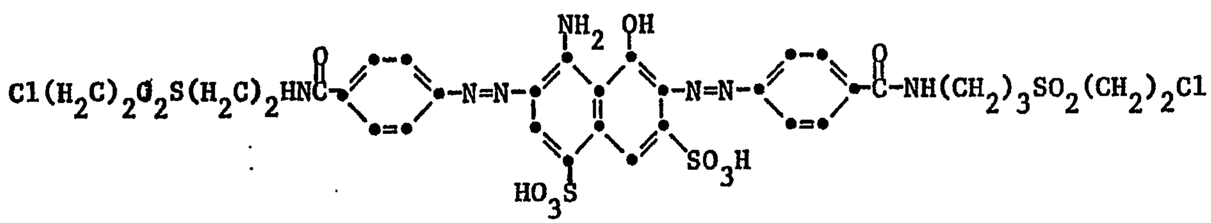 | marineblau |

| Bsp. | | Farbton |
|---|---|---|
| 214 | 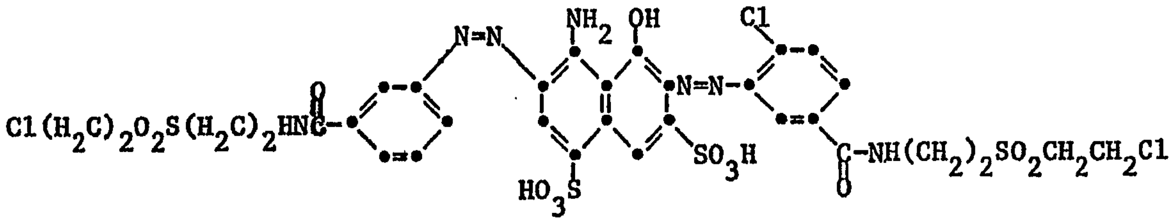 | marineblau |
| 215 | 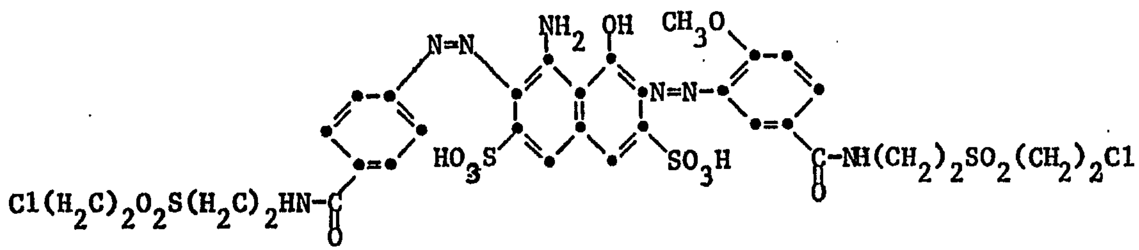 | grünstichiges marineblau |
| 216 | 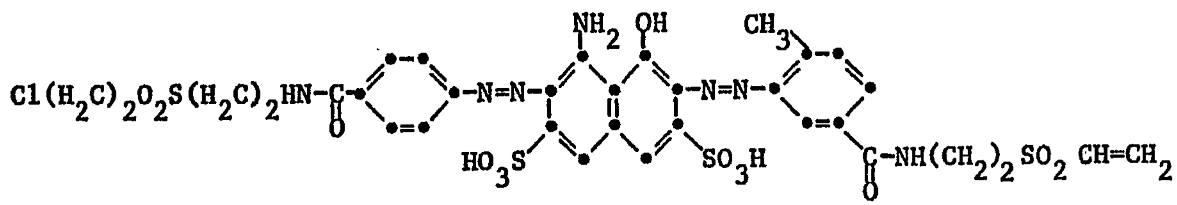 | marineblau |

| Bsp. | | Farbton |
|---|---|---|
| 217 | 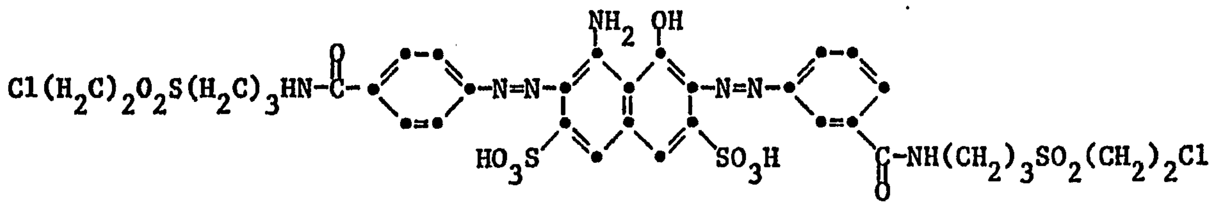 | marineblau |
| 218 | 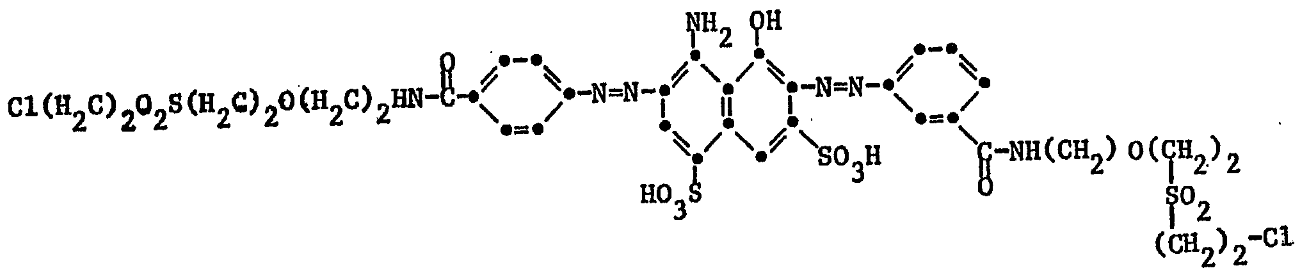 | marineblau |
| 219 | 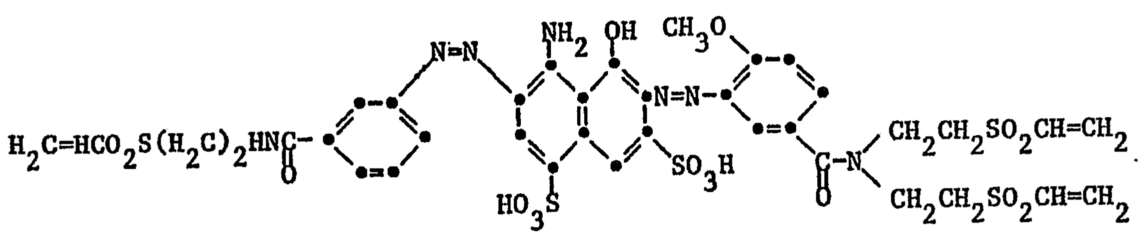 | grünstichiges marineblau |

| Bsp. | | Farbton |
|---|---|---|
| 220 | 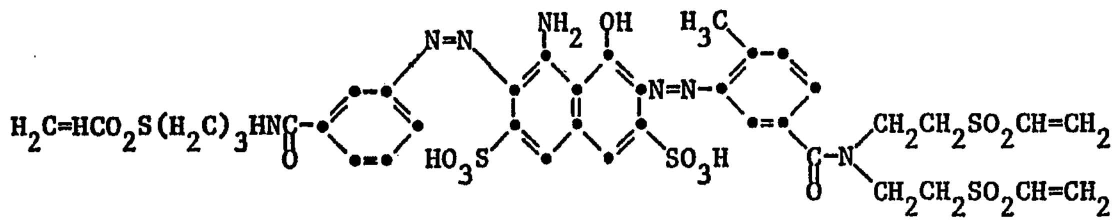 | marineblau |
| 221 | 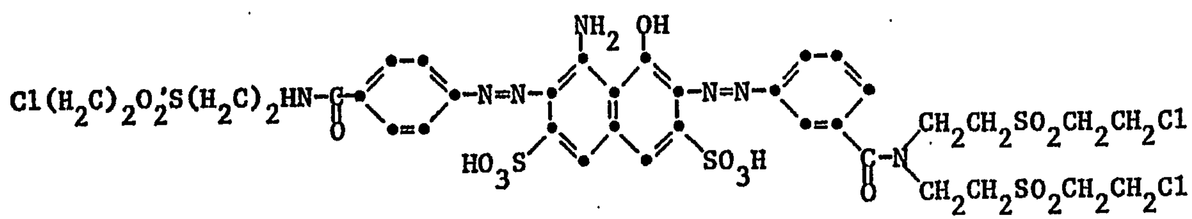 | marineblau |
| 222 | 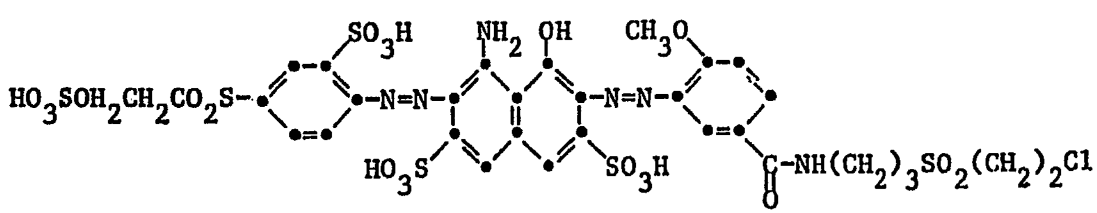 | grünstichiges marineblau |

| Bsp. | | Farbton |
|---|---|---|
| 223 | 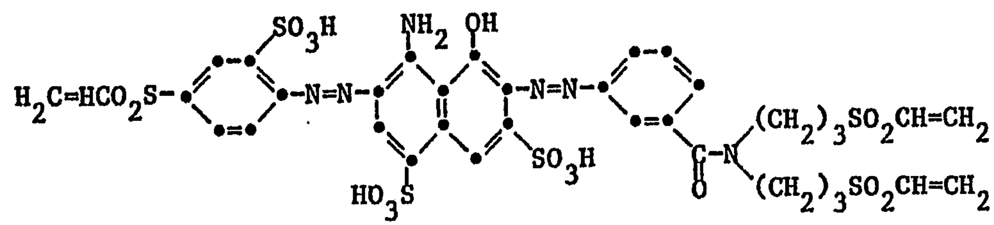 | marineblau |
| 224 | 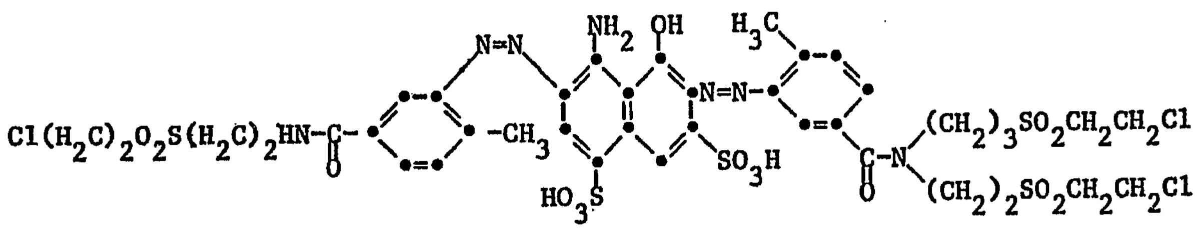 | grünstichiges marineblau |
| 225 | 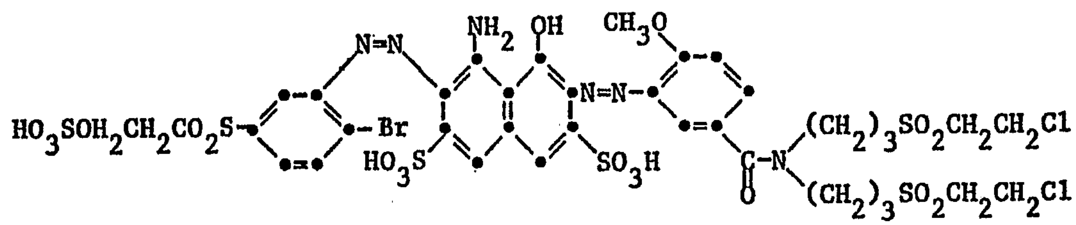 | grünstichiges marineblau |

| Bsp. | | Farbton |
|---|---|---|
| 226 | 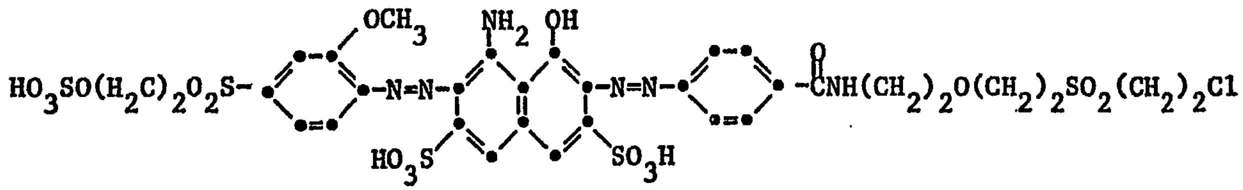 | grünstichiges marineblau |
| 227 | 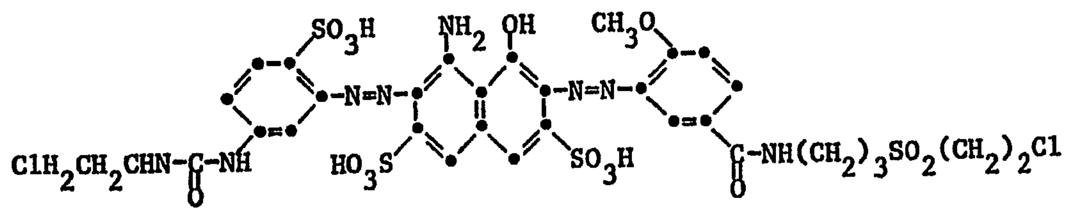 | marineblau |
| 228 | 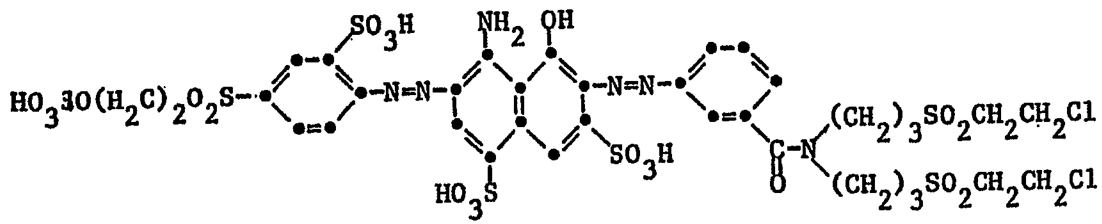 | marineblau |

| Bsp. | | Farbton |
|---|---|---|
| 229 | 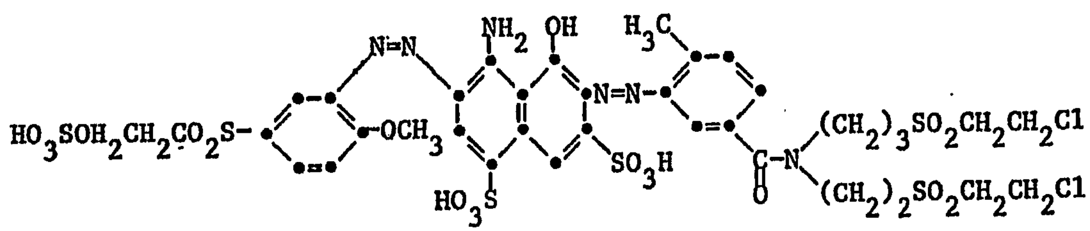 | grünstichiges marineblau |
| 230 | 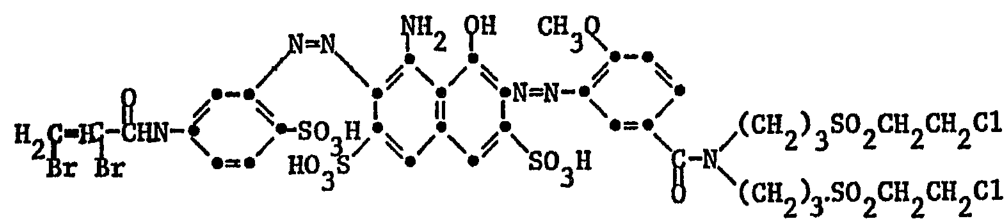 | marineblau |
| 231 | 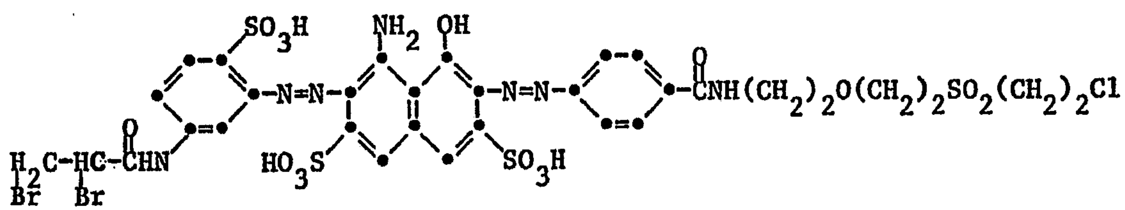 | marineblau |

| Bsp. | | Farbton |
|---|---|---|
| 232 | 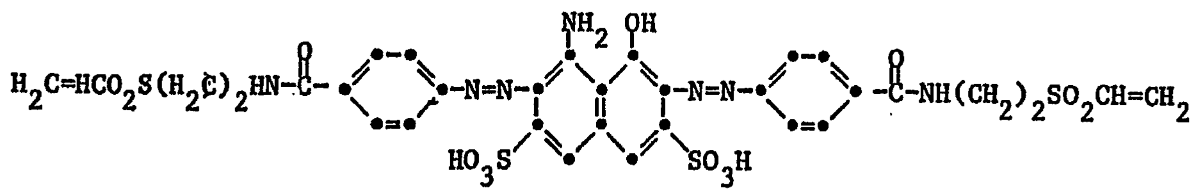 | marineblau |
| 233 | 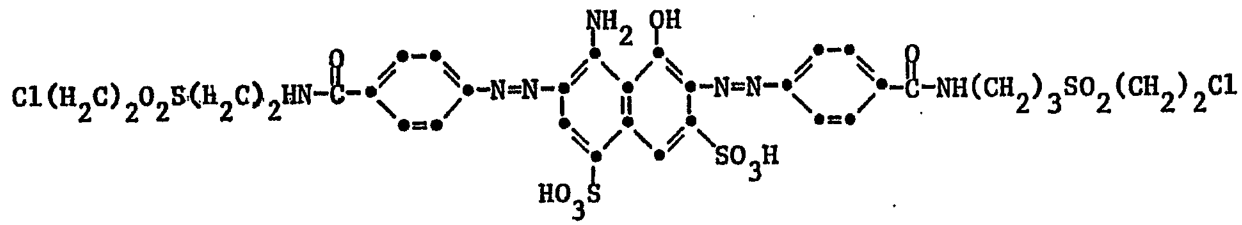 | marineblau |
| 234 | 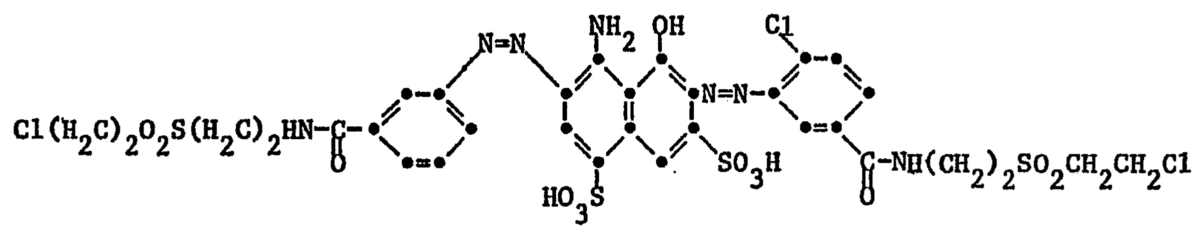 | marineblau |

| Bsp. | | Farbton |
|---|---|---|
| 235 | 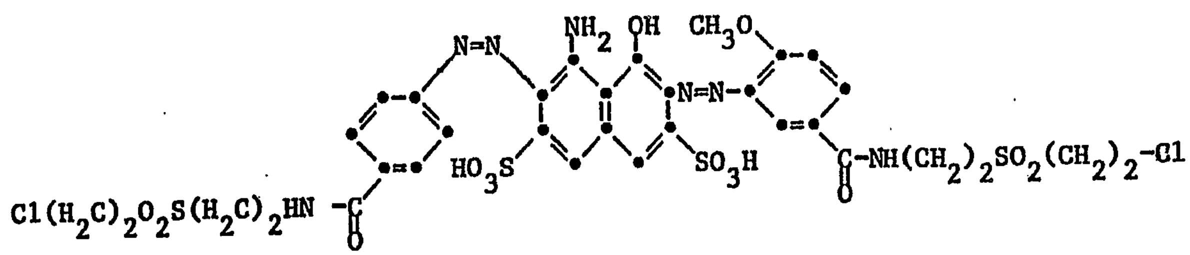 | grünstichiges marineblau |
| 236 | 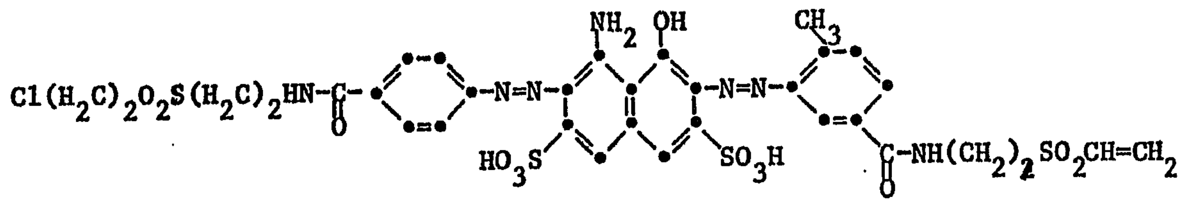 | marineblau |
| 237 | 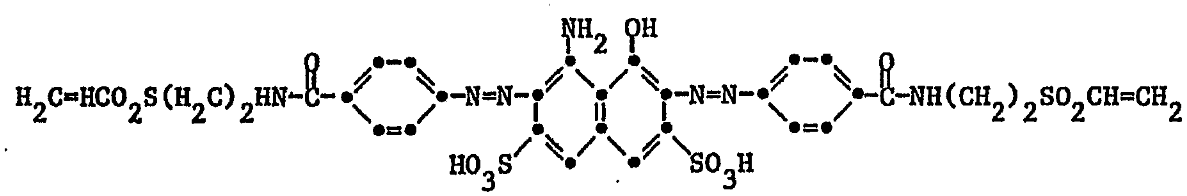 | marineblau |

| Bsp. | | Farbton |
|---|---|---|
| 238 | 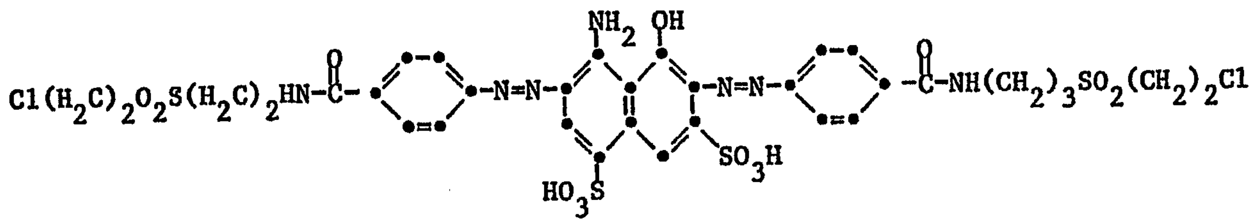 | marineblau |
| 239 | 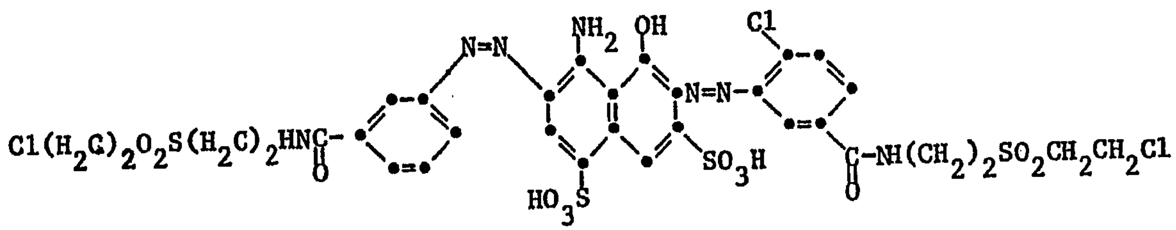 | marineblau |
| 240 | 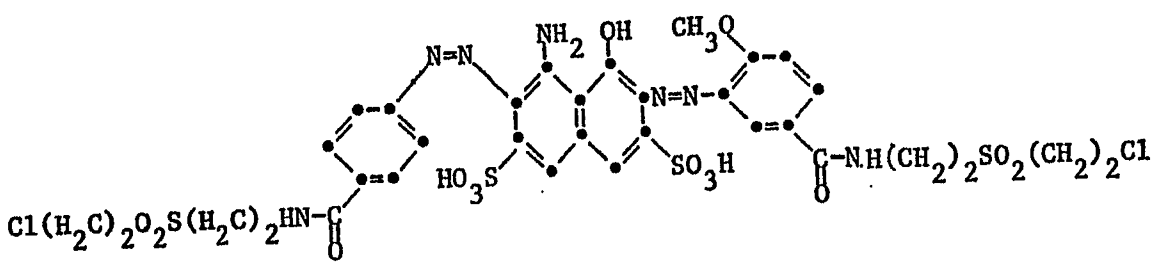 | grünstichig marineblau |

| Bsp. | | Farbton |
|---|---|---|
| 241 | 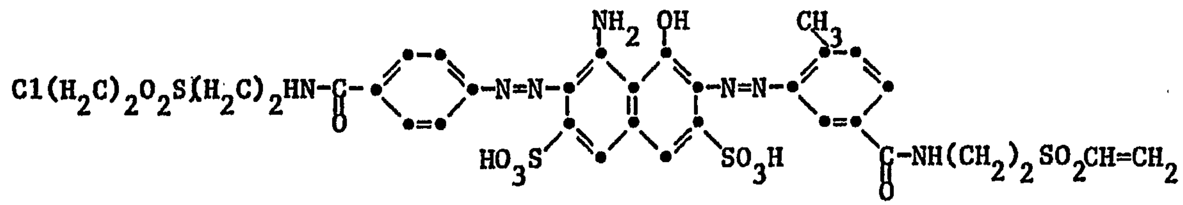 | marineblau |
| 242 | 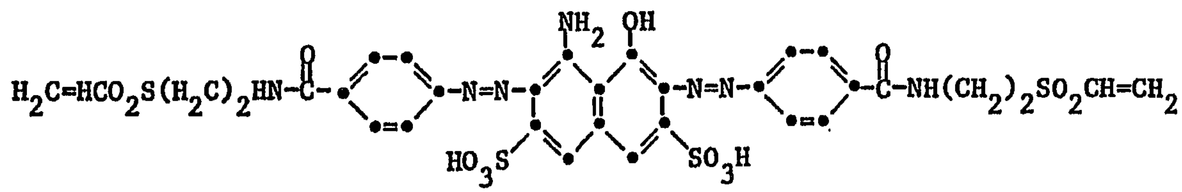 | marineblau |
| 243 | 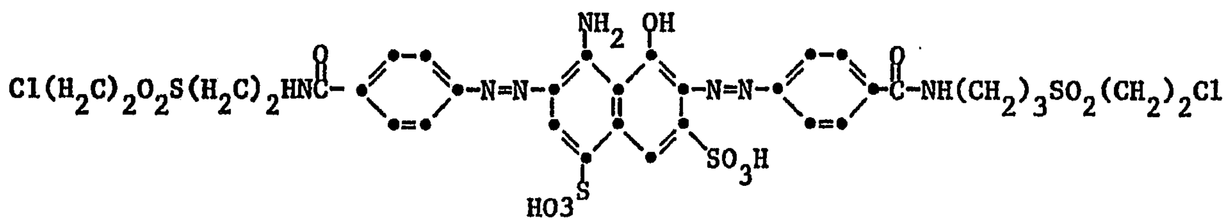 | marineblau |

| Bsp. | | Farbton |
|---|---|---|
| 244 | 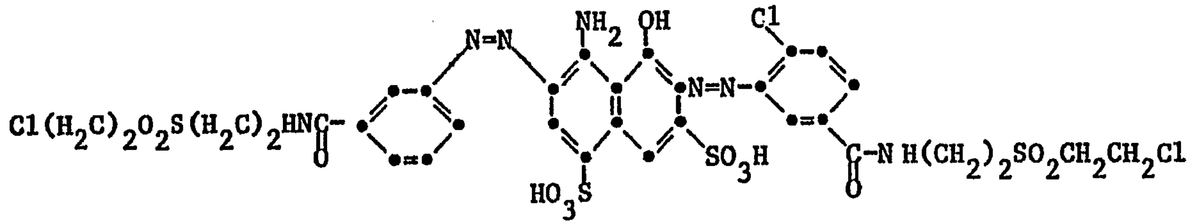 | marineblau |
| 245 | 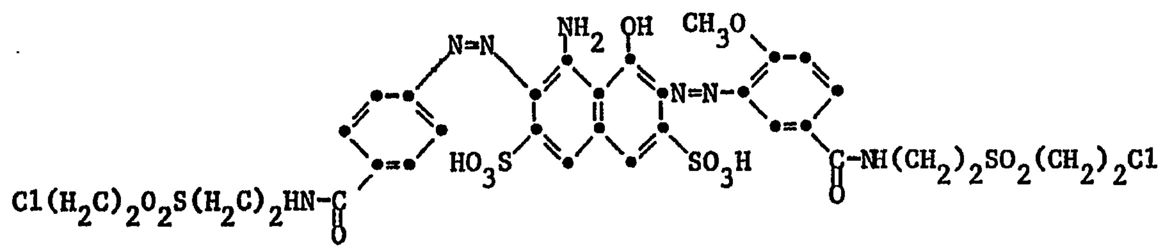 | grünstichiges marineblau |
| 246 | 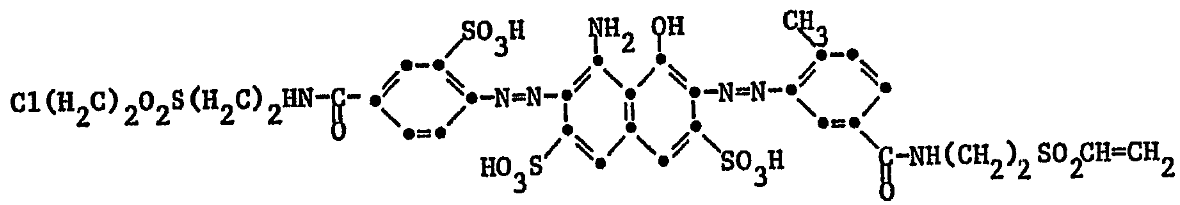 | marineblau |

| Bsp. | | Farbton |
|---|---|---|
| 247 | 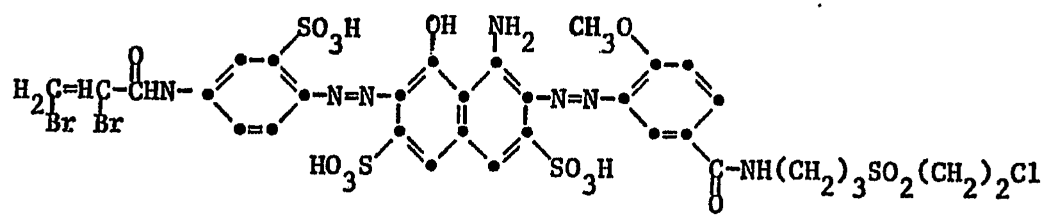 | grünstichiges marineblau |
| 248 | 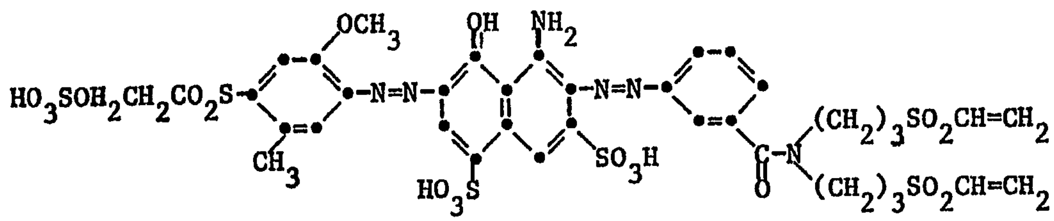 | grünstichiges marineblau |
| 249 | 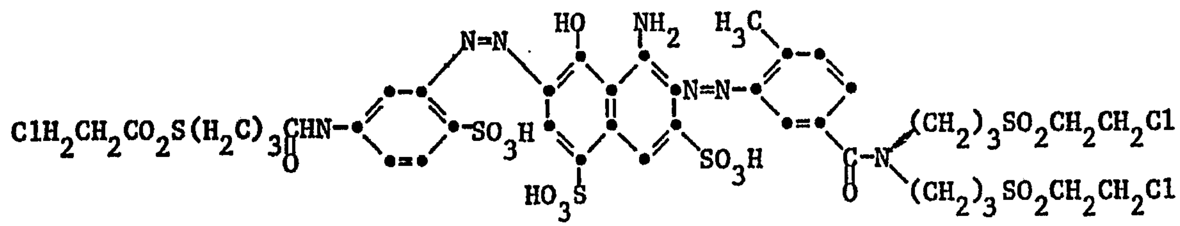 | marineblau |

| Bsp. | | Farbton |
|---|---|---|
| 250 | 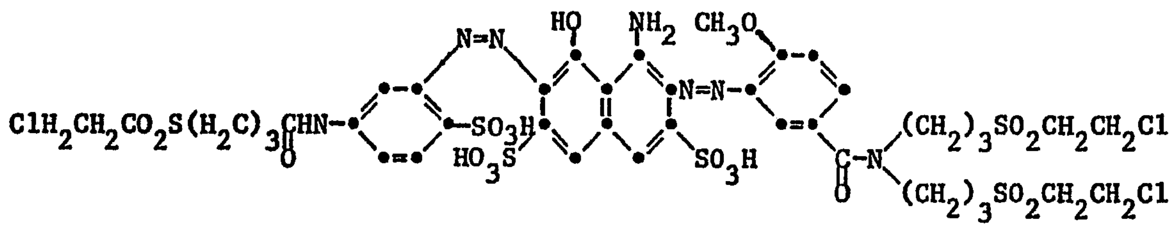 | marineblau |
| 251 | 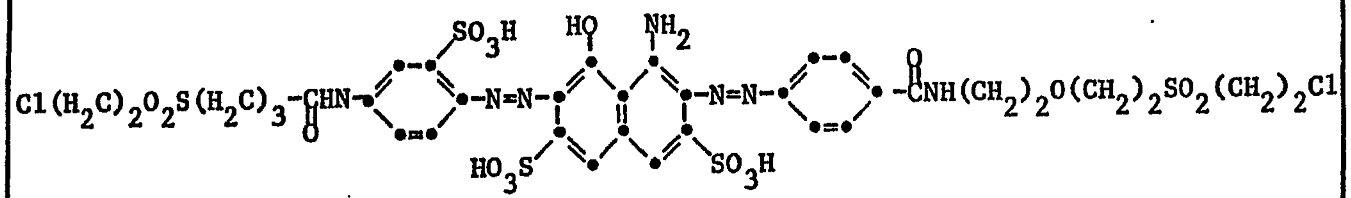 | marineblau |
| 252 | 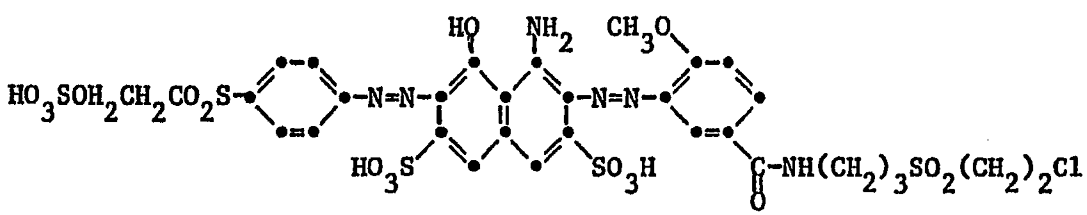 | grünstichiges marineblau |

| Bsp. | | Farbton |
|---|---|---|
| 253 | 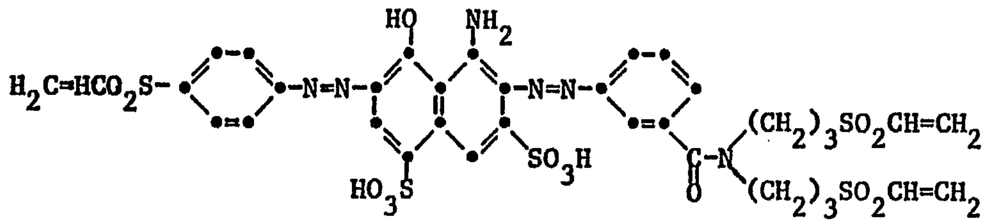 | marineblau |
| 254 | 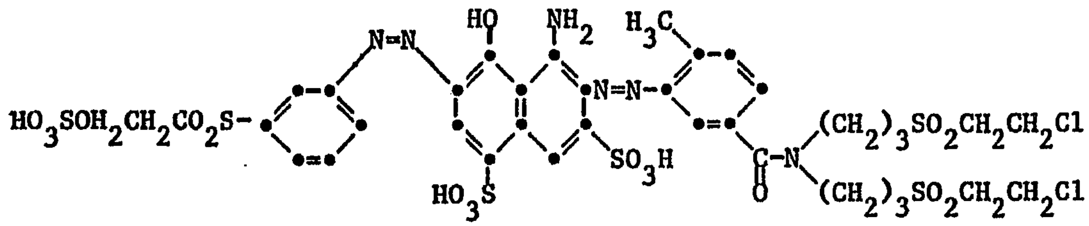 | marineblau |
| 255 | 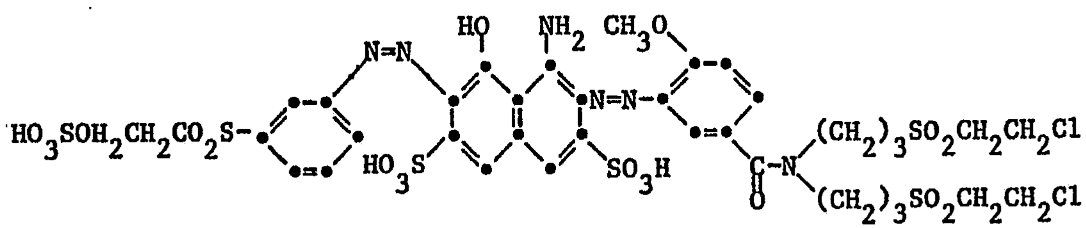 | marineblau |

| Bsp. | | Farbton |
|---|---|---|
| 256 | 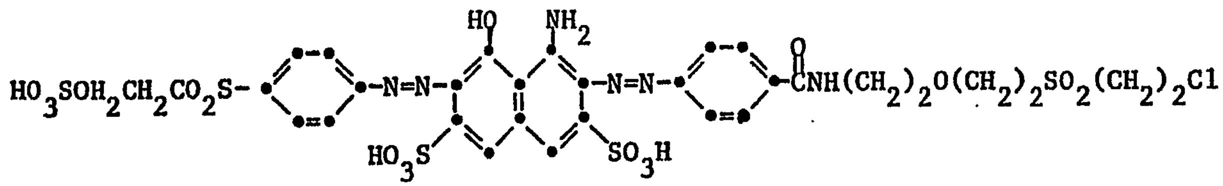 | marineblau |
| 257 | 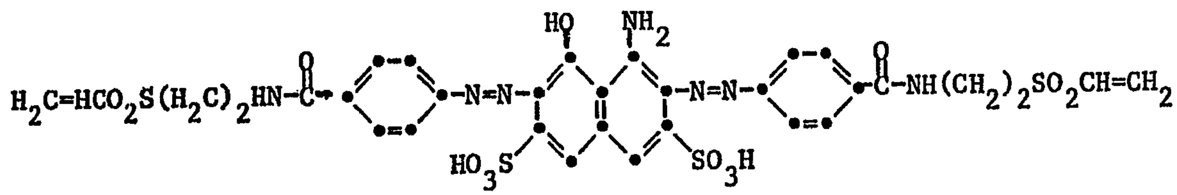 | marineblau |
| 258 | 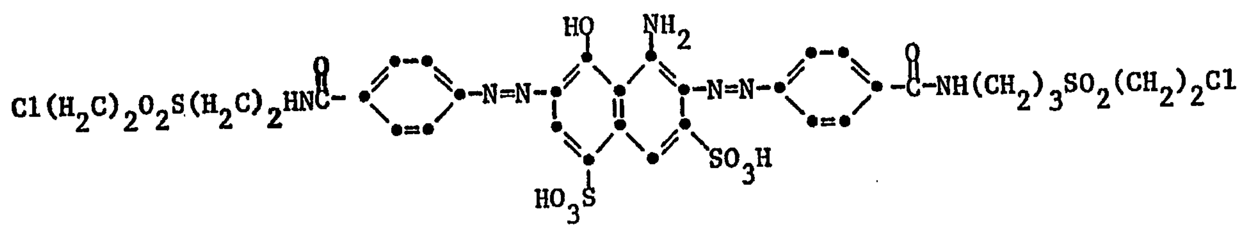 | marineblau |

| Bsp. | | Farbton |
|---|---|---|
| 259 | 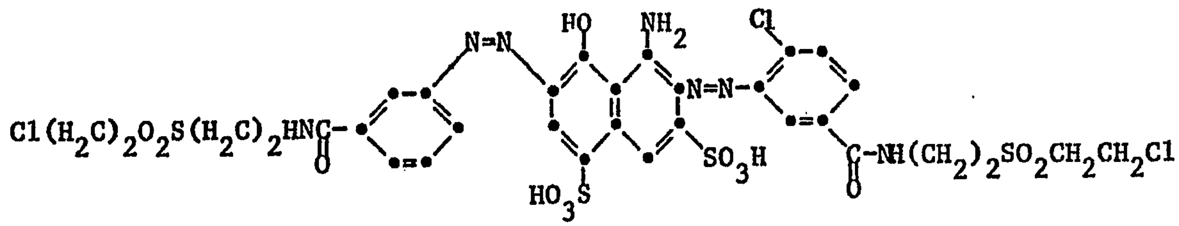 | marineblau |
| 260 | 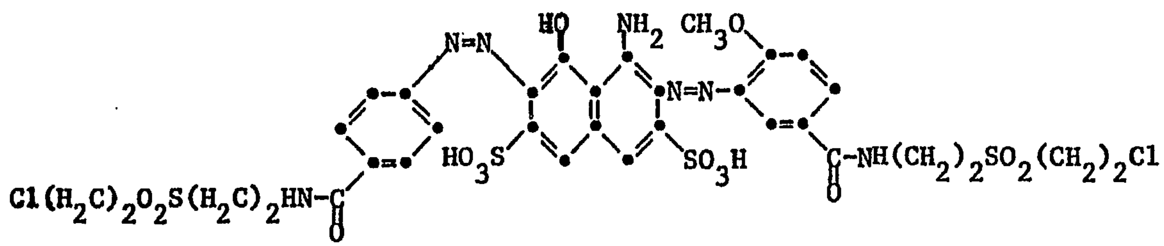 | marineblau |
| 261 | 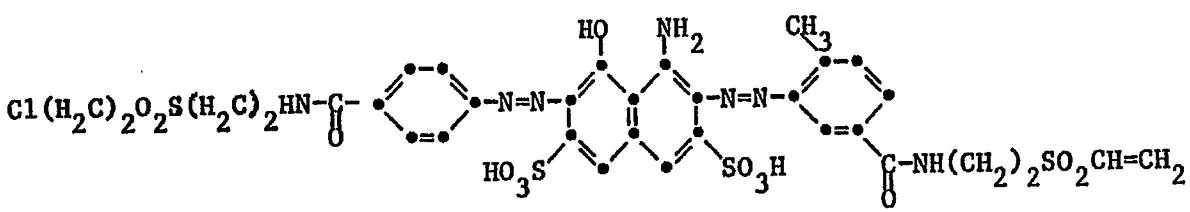 | marineblau |

| Bsp. | | Farbton |
|---|---|---|
| 262 | 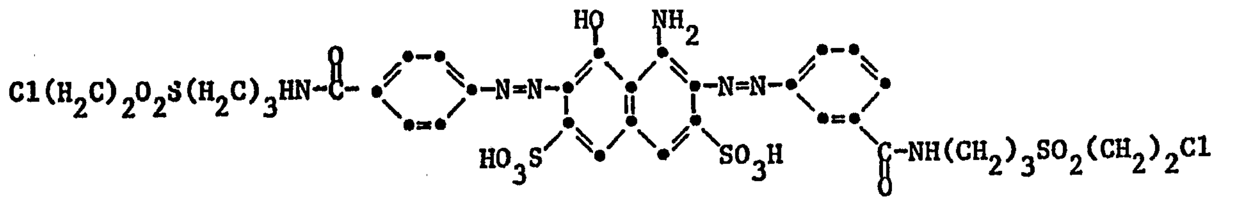 | marineblau |
| 263 | 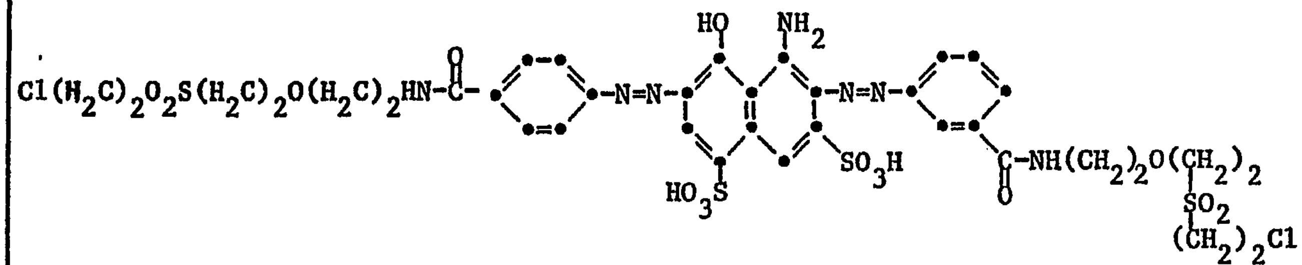 | marineblau |
| 264 | 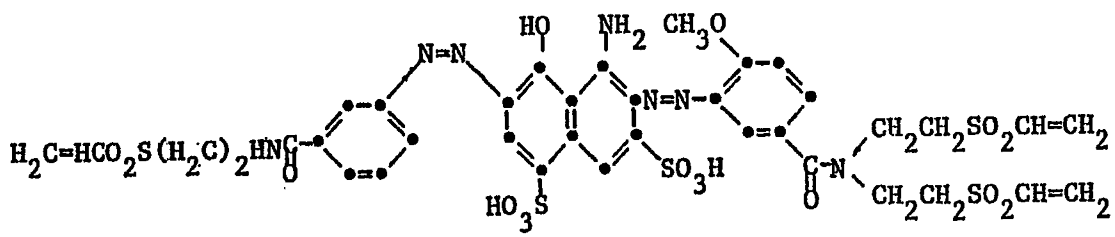 | marineblau |

| Bsp. | | Farbton |
| --- | --- | --- |
| 265 | 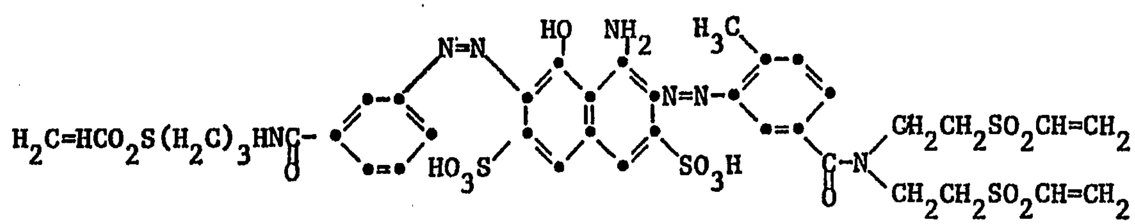 | marineblau |
| 266 | 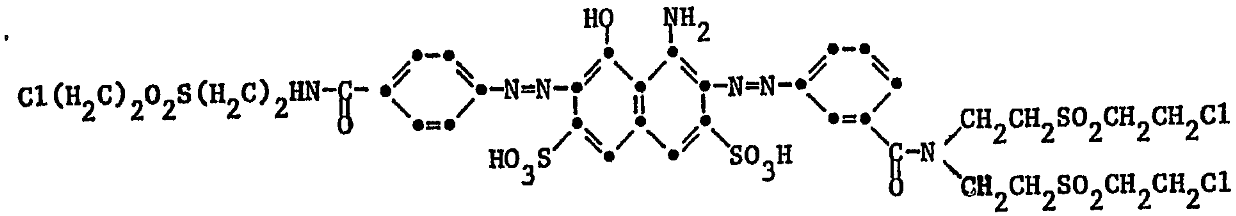 | marineblau |
| 267 | 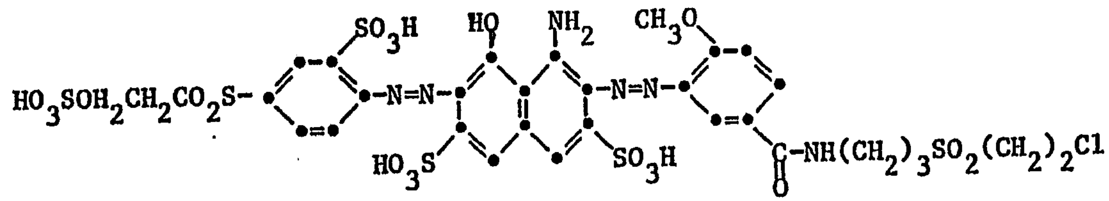 | marineblau |

| Bsp. | | Farbton |
|---|---|---|
| 268 | 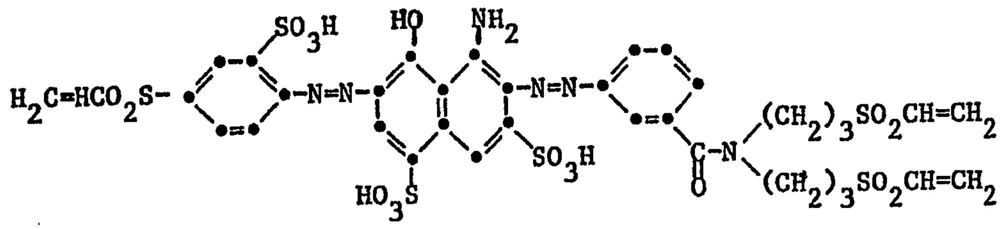 | marineblau |
| 269 | 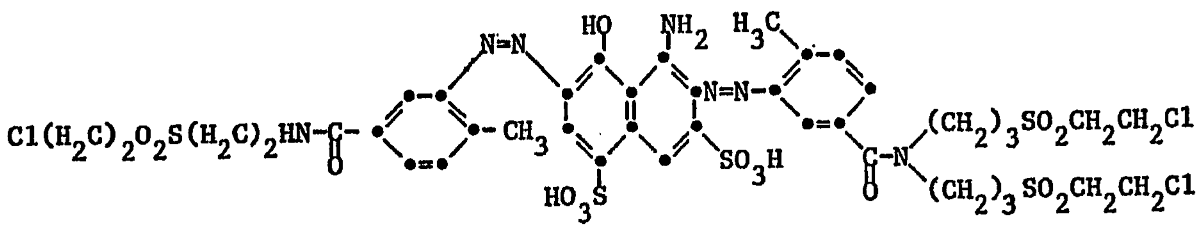 | grünstichiges marineblau |
| 270 | 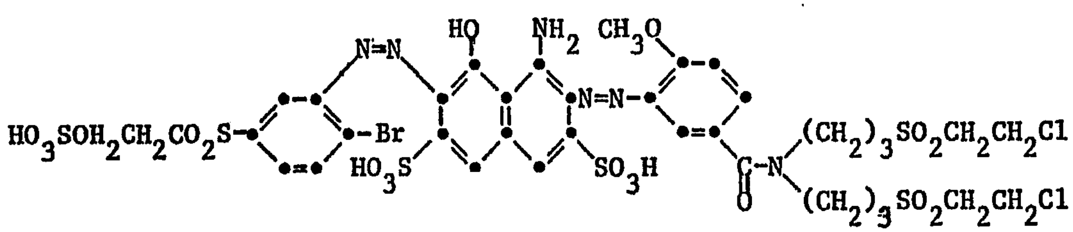 | marineblau |

| Bsp. | | Farbton |
|---|---|---|
| 271 | 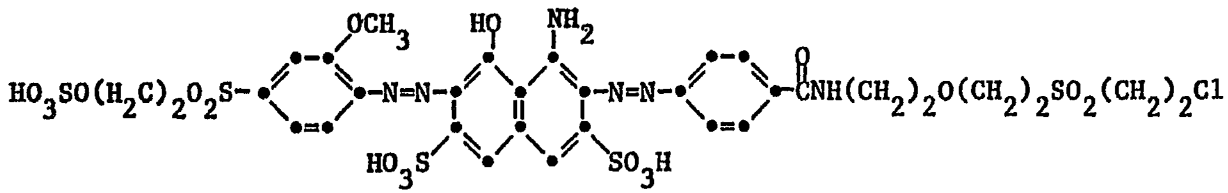 | grünstichiges marineblau |
| 272 | 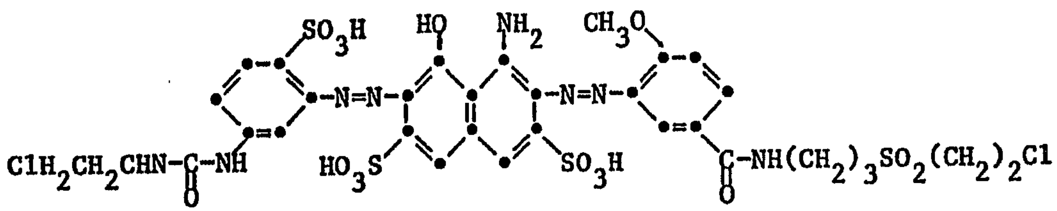 | grünstichiges marineblau |
| 273 | 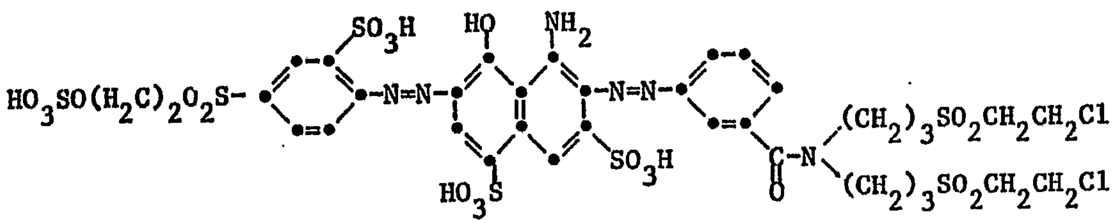 | marineblau |

| Bsp. | | Farbton |
|---|---|---|
| 274 | 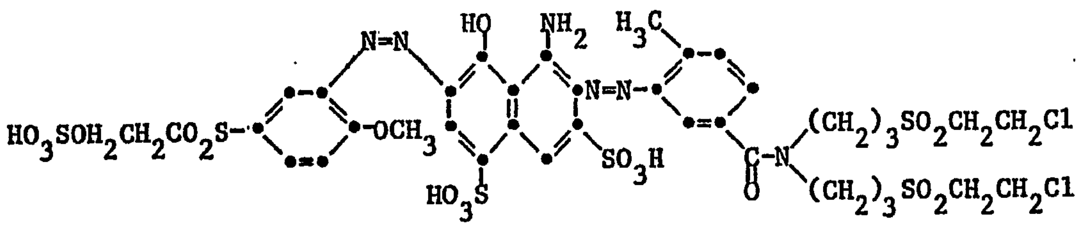 | grünstichiges marineblau |
| 275 | 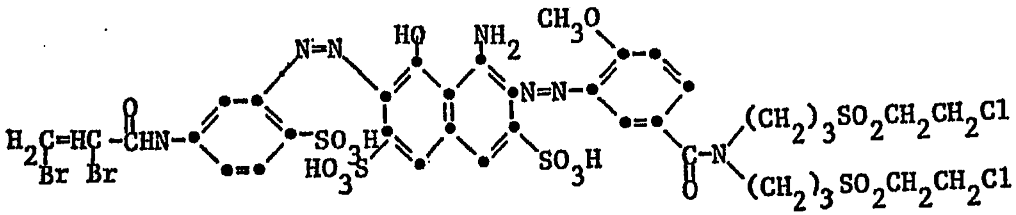 | grünstichiges marineblau |
| 276 | 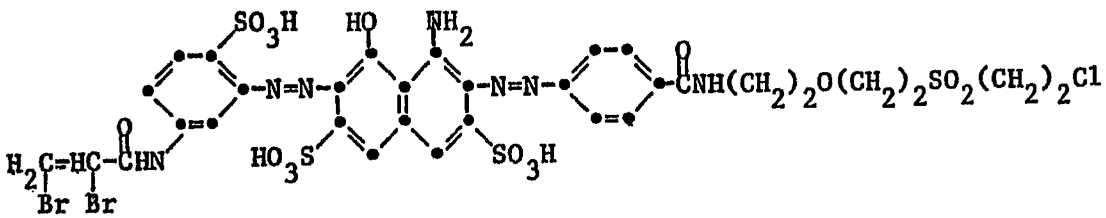 | marineblau |

| Bsp. | | Farbton |
|---|---|---|
| 277 | 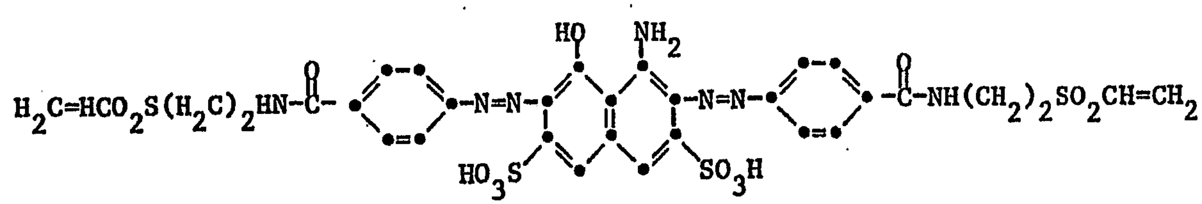 | marineblau |
| 278 | 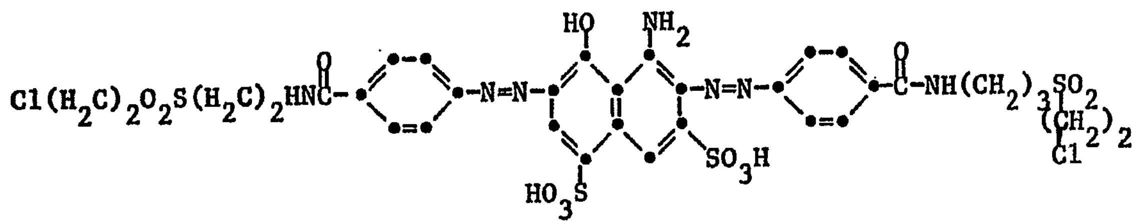 | marineblau |
| 279 | 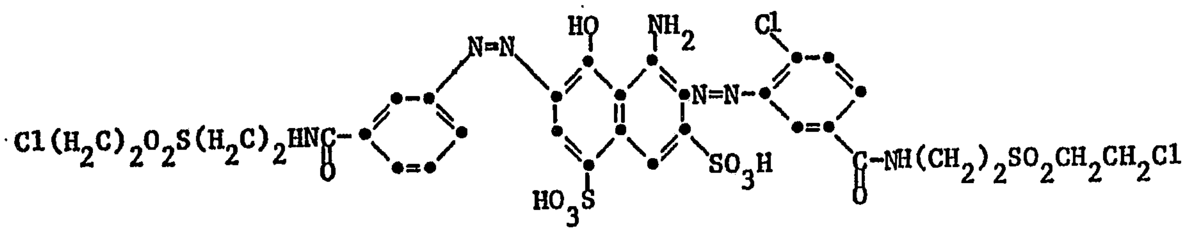 | marineblau |

| Bsp. | | Farbton |
|---|---|---|
| 280 | 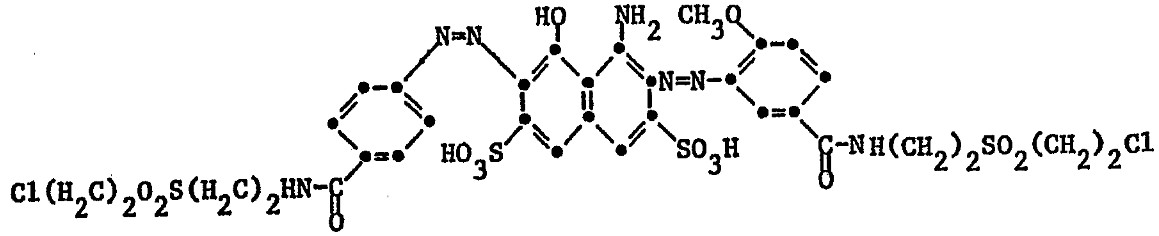 | grünstichiges marineblau |
| 281 | 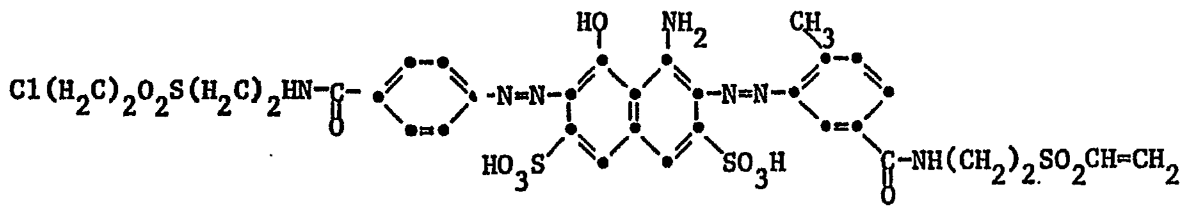 | marineblau |
| 282 | 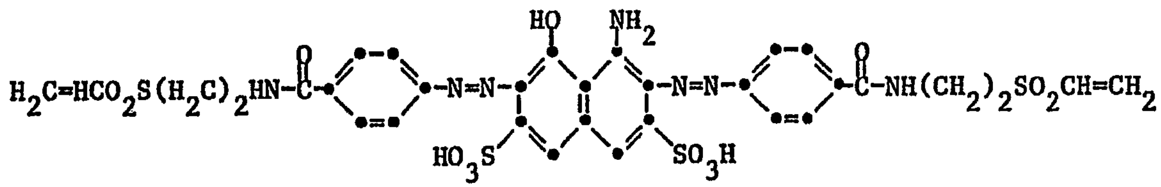 | marineblau |

| Bsp. | | Farbton |
|---|---|---|
| 283 | 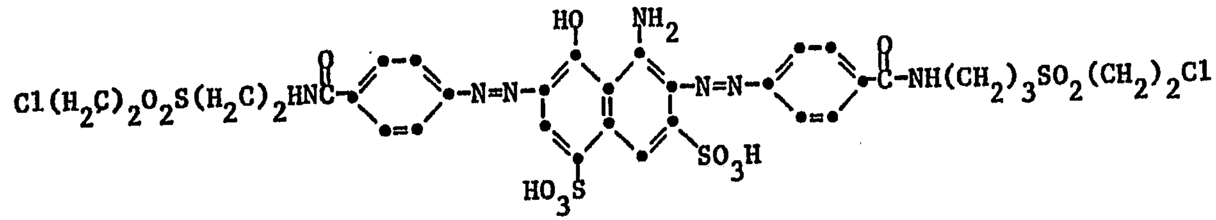 | marineblau |
| 284 | 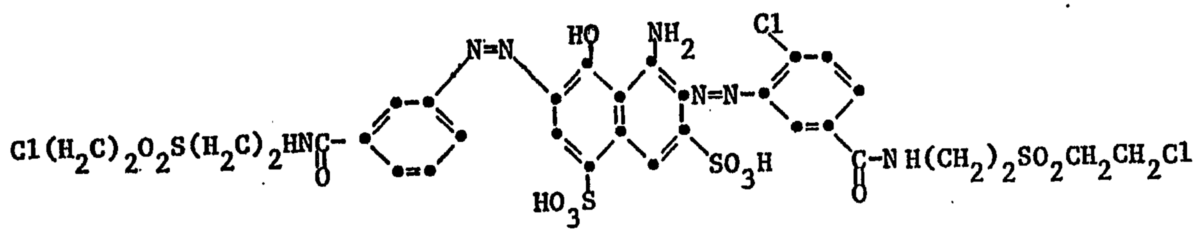 | marineblau |
| 285 | 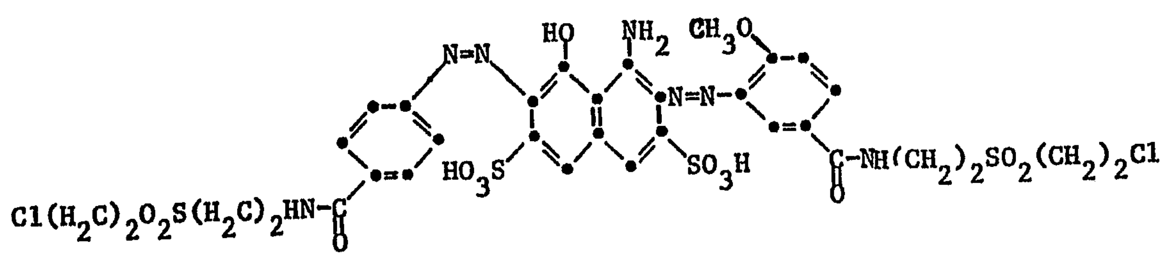 | grünstichiges marineblau |

| Bsp. | | Farbton |
|---|---|---|
| 286 | 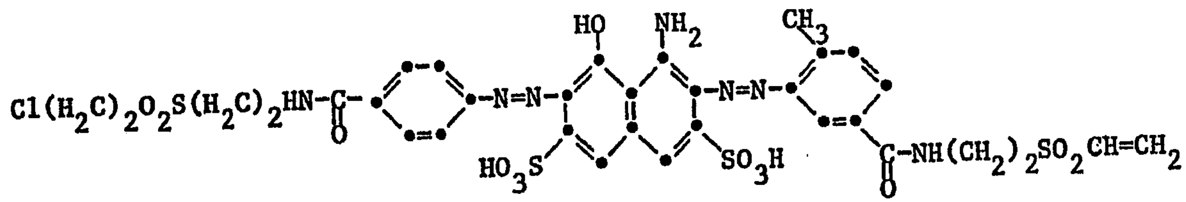 | marineblau |
| 287 | 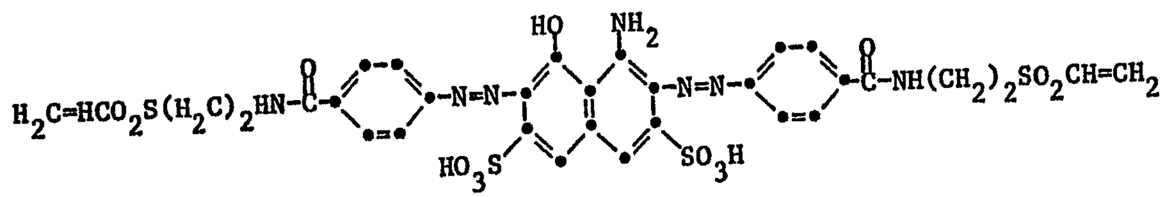 | marineblau |
| 288 | 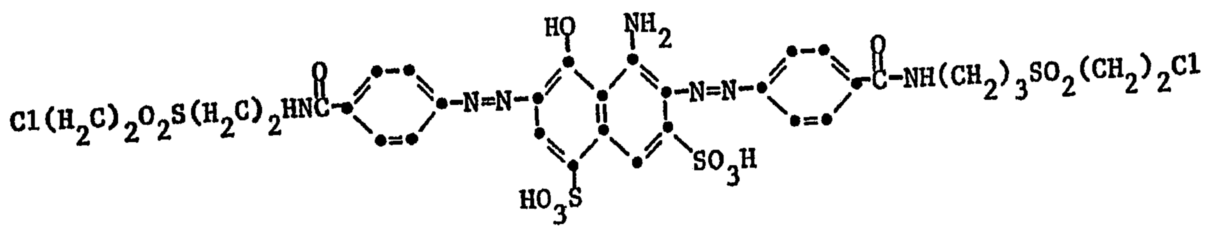 | marineblau |

| Bsp. | | Farbton |
|---|---|---|
| 289 | 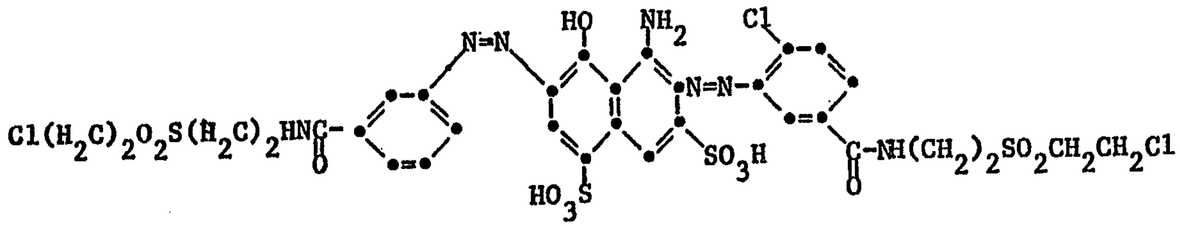 | marineblau |
| 290 | 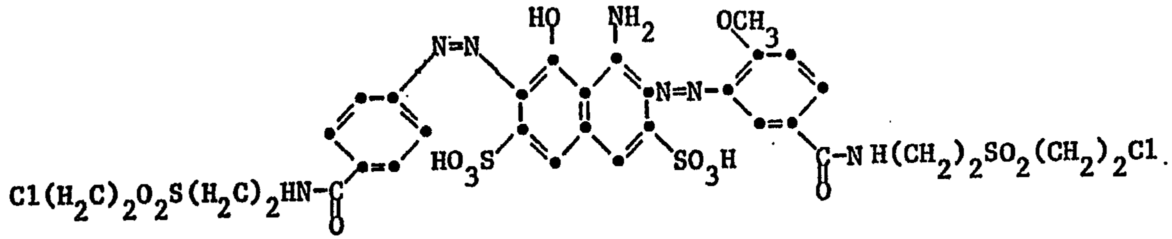 | grünstichiges marineblau |
| 291 | 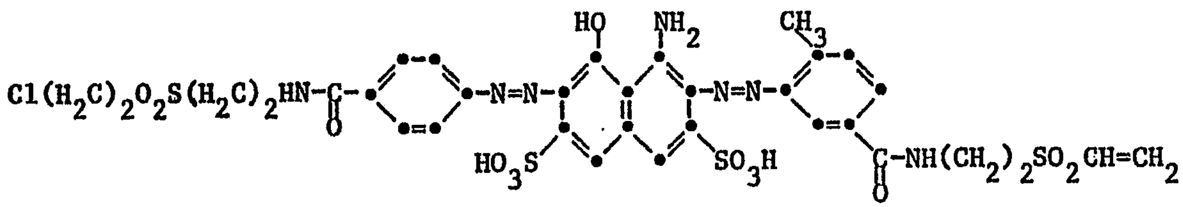 | marineblau |

| Bsp. | | Farbton |
|---|---|---|
| 292 | 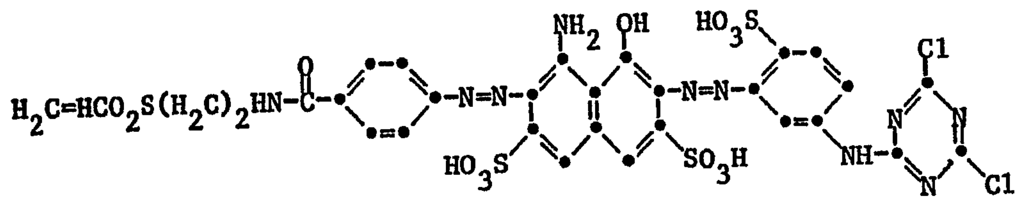 | marineblau |
| 293 | 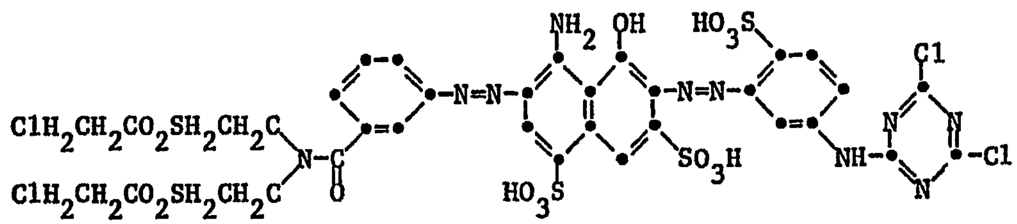 | marineblau |
| 294 | 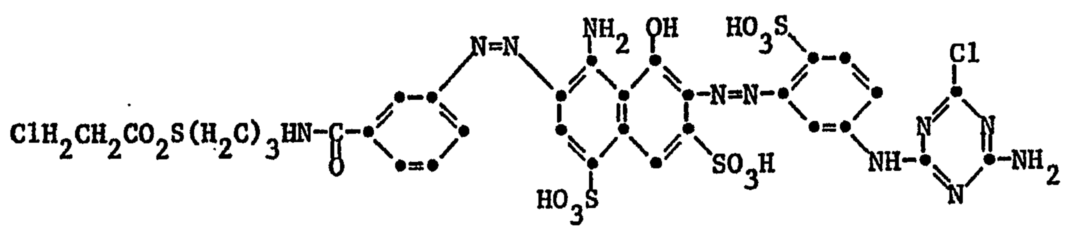 | marineblau |

| Bsp. | | Farbton |
|---|---|---|
| 295 | 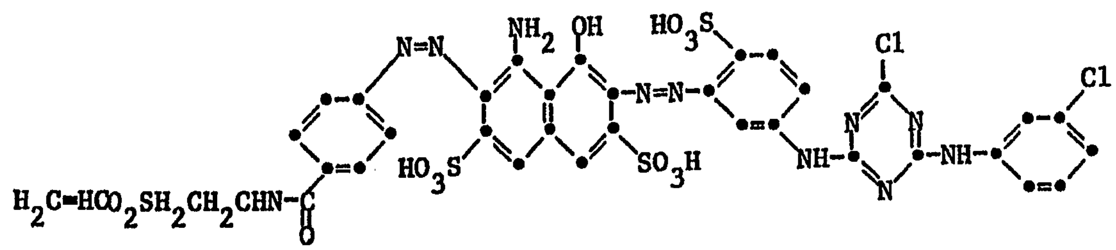 | marineblau |
| 296 | 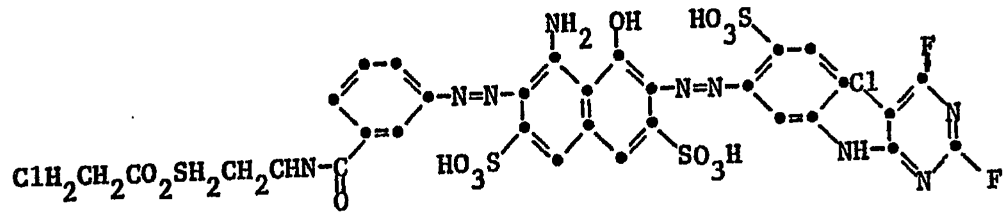 | marineblau |
| 297 | 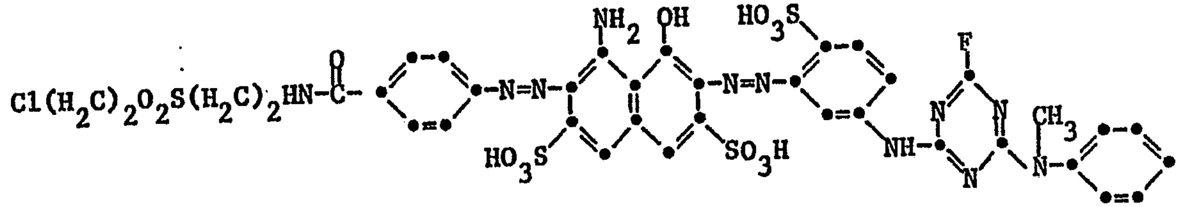 | marineblau |

| Bsp. | | Farbton |
|---|---|---|
| 298 | 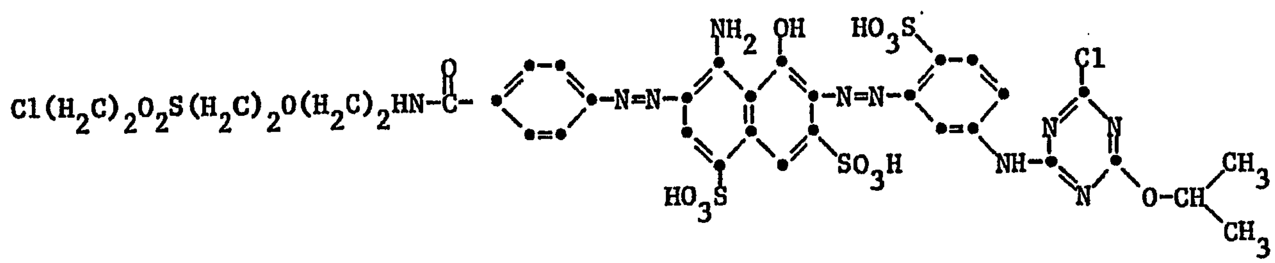 | marineblau |
| 299 | 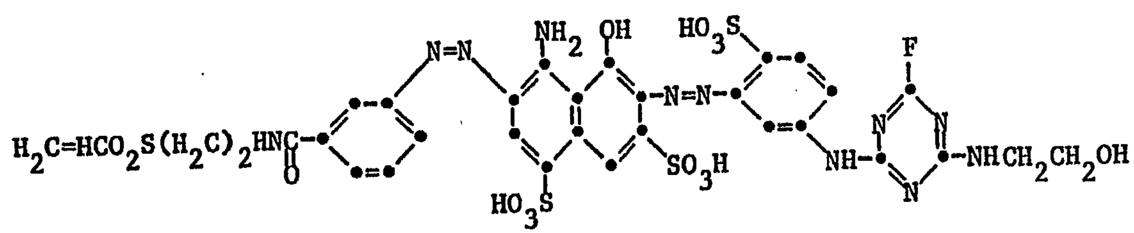 | marineblau |
| 300 | 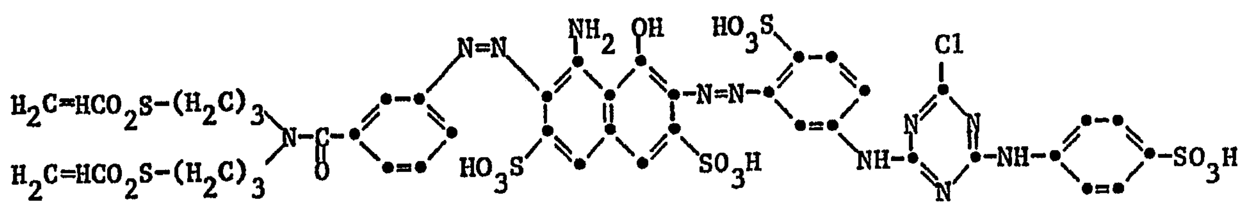 | marineblau |

| Bsp. | | Farbton |
|---|---|---|
| 301 | 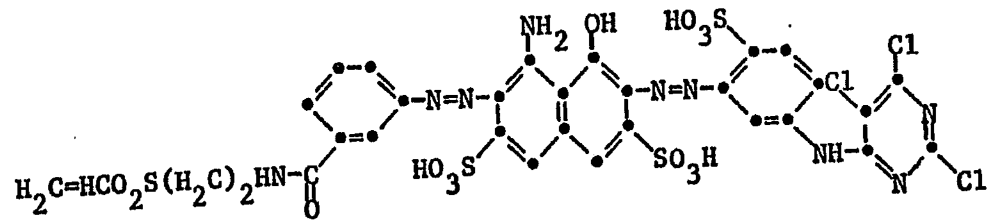 | marineblau |
| 302 | 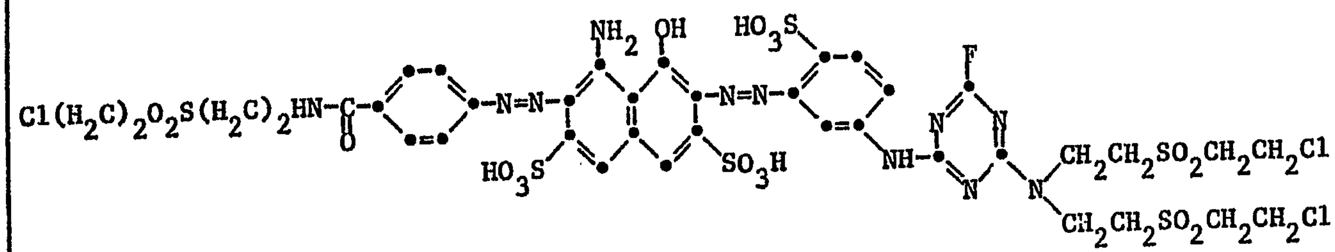 | marineblau |
| 303 | 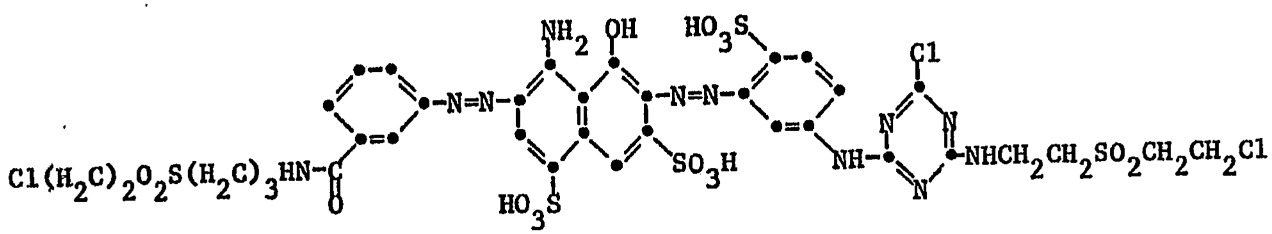 | marineblau |

| Bsp. | | Farbton |
|---|---|---|
| 304 | 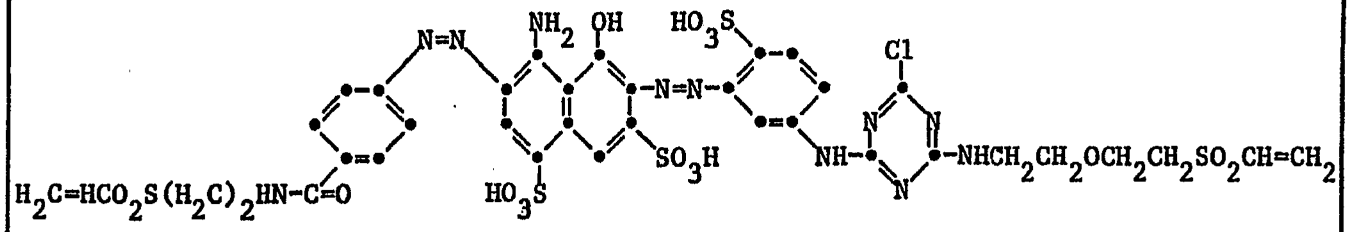 | marineblau |
| 305 | 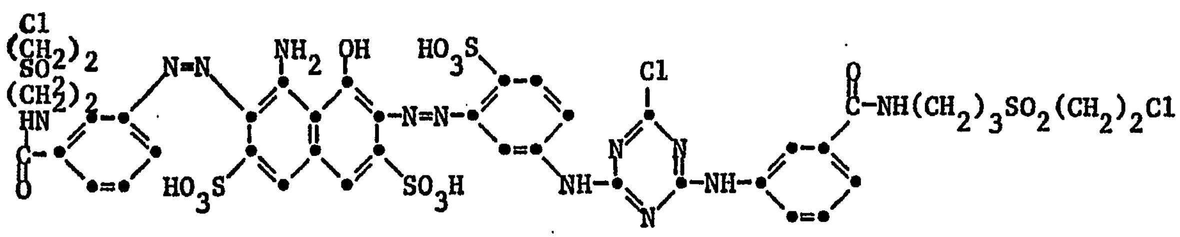 | marineblau |
| 306 | 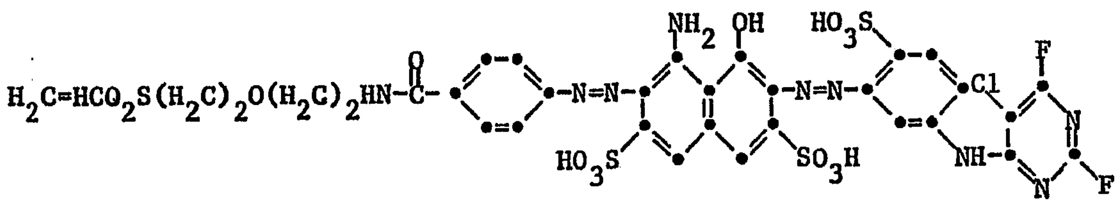 | marineblau |

| Bsp. | | Farbton |
|---|---|---|
| 307 | 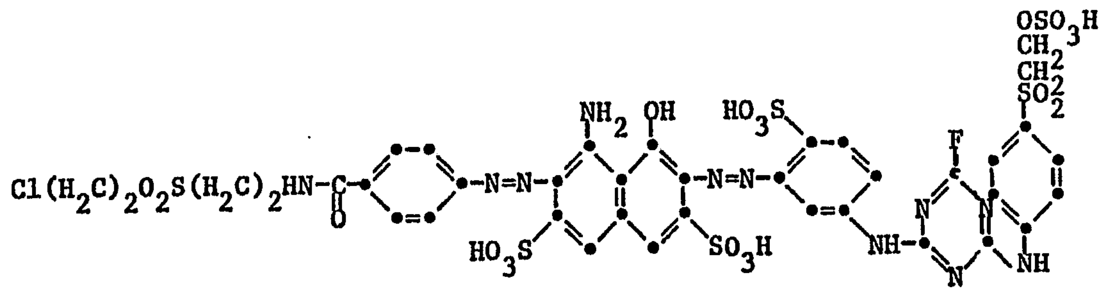 | marineblau |
| 308 | 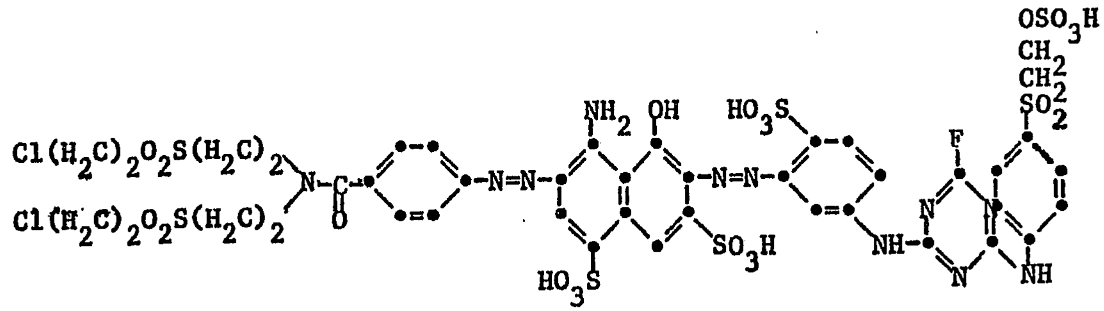 | marineblau |
| 309 | 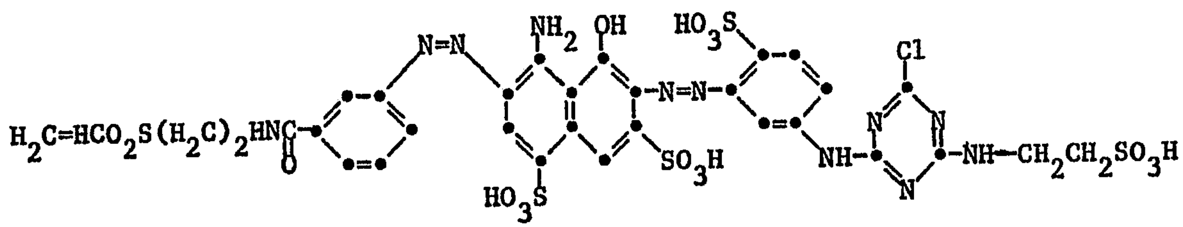 | marineblau |

| Bsp. | | Farbton |
|---|---|---|
| 310 | 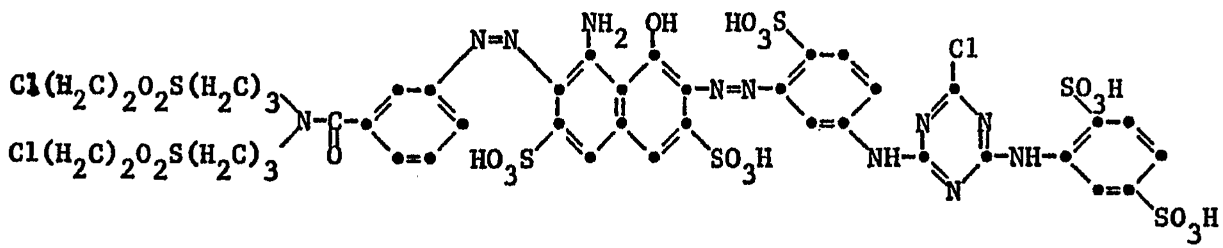 | marineblau |
| 311 | 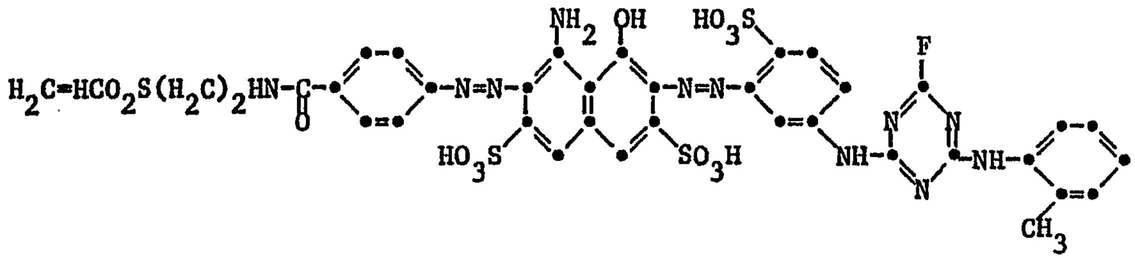 | marineblau |
| 312 | 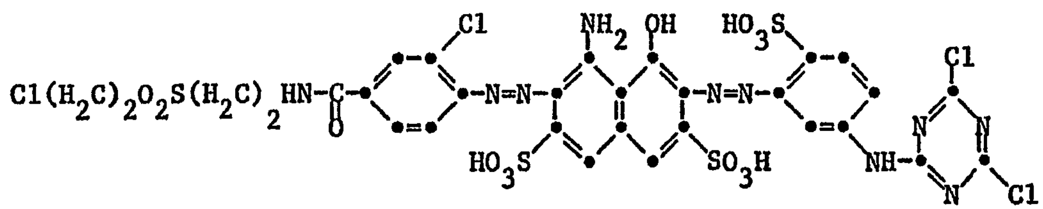 | marineblau |

| Bsp. | | Farbton |
|---|---|---|
| 313 | 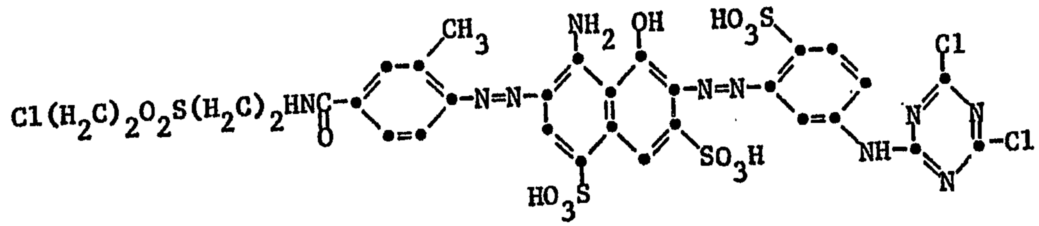 | marineblau |
| 314 | 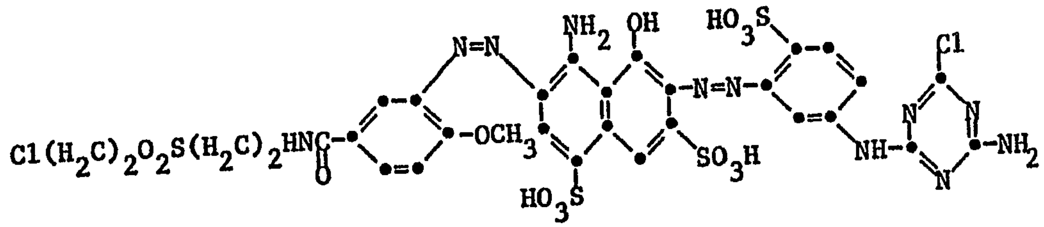 | grünstichiges marineblau |
| 315 | 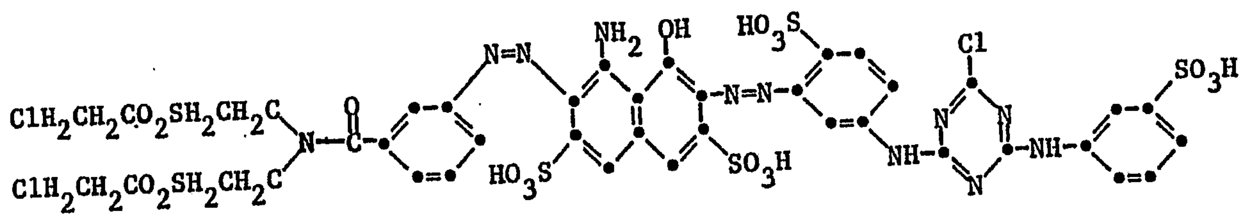 | marineblau |

| Bsp. | | Farbton |
|---|---|---|
| 316 | 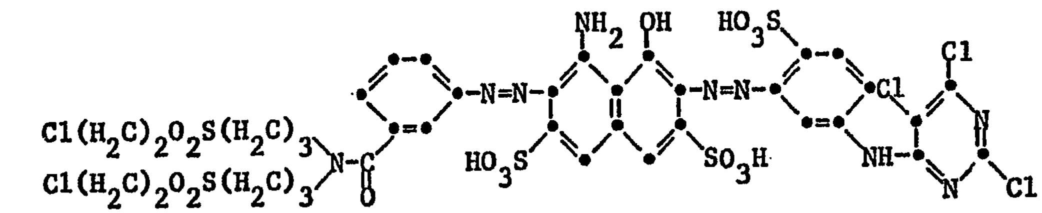 | marineblau |
| 317 | 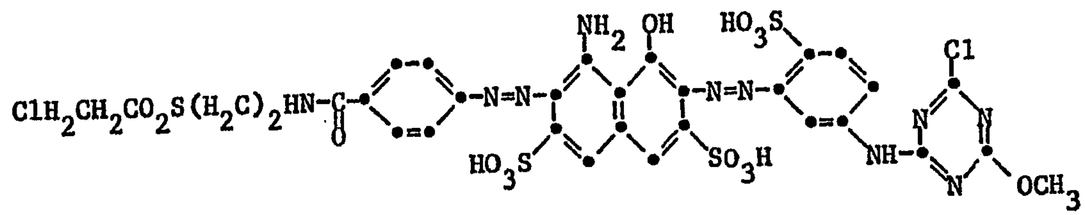 | marineblau |
| 318 | 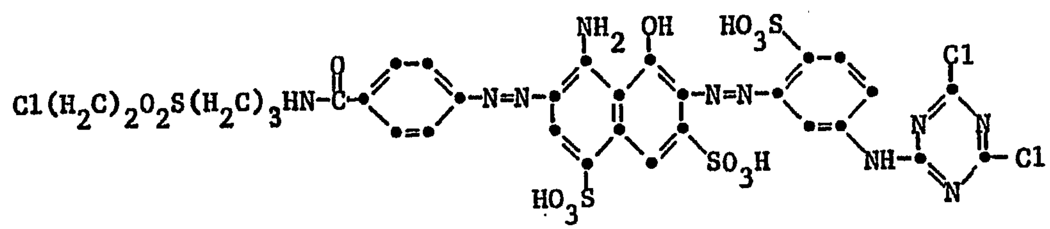 | marineblau |

| Bsp. | | Farbton |
|---|---|---|
| 319 | 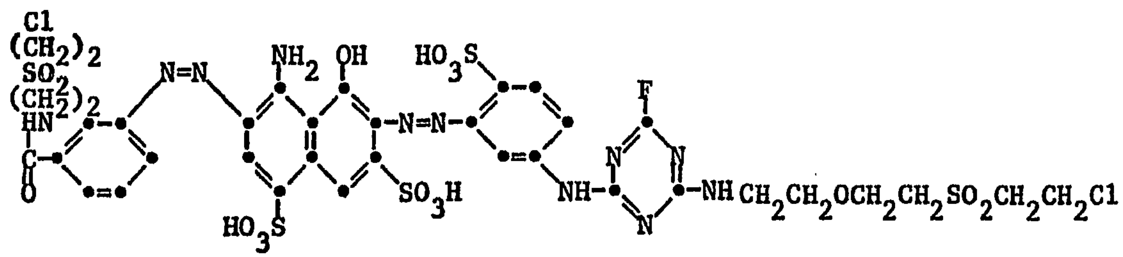 | marineblau |
| 320 | 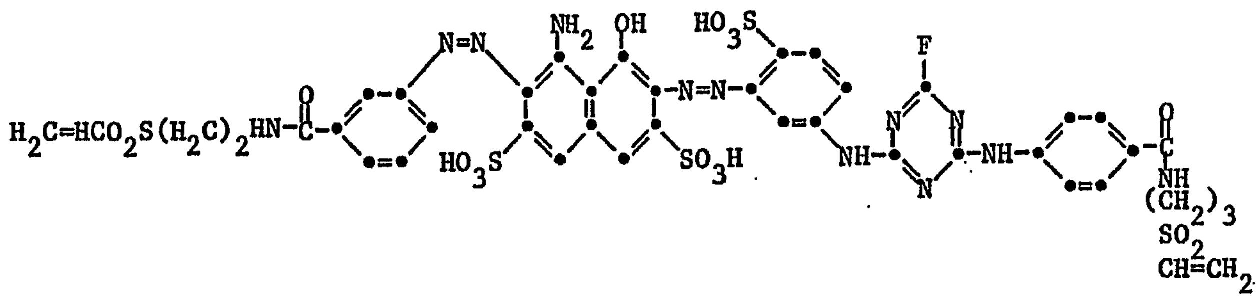 | marineblau |
| 321 | 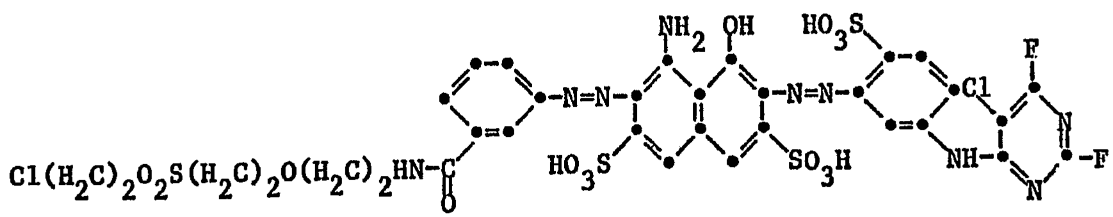 | marineblau |

| Bsp. | | Farbton |
|---|---|---|
| 322 | 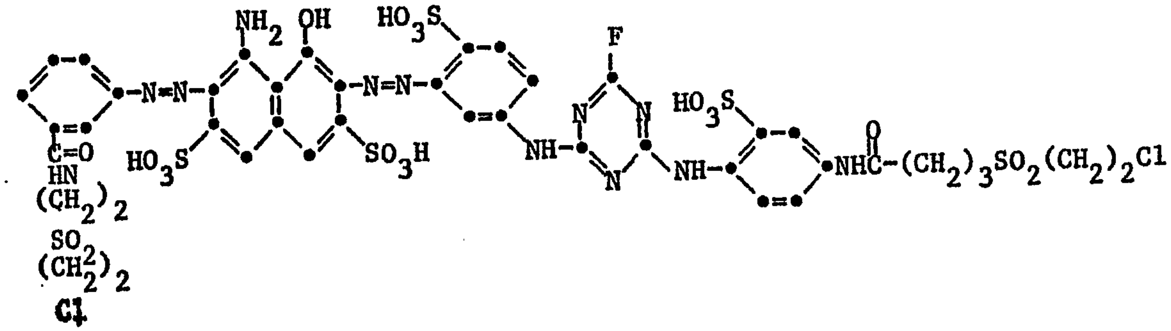 | marineblau |
| 323 | 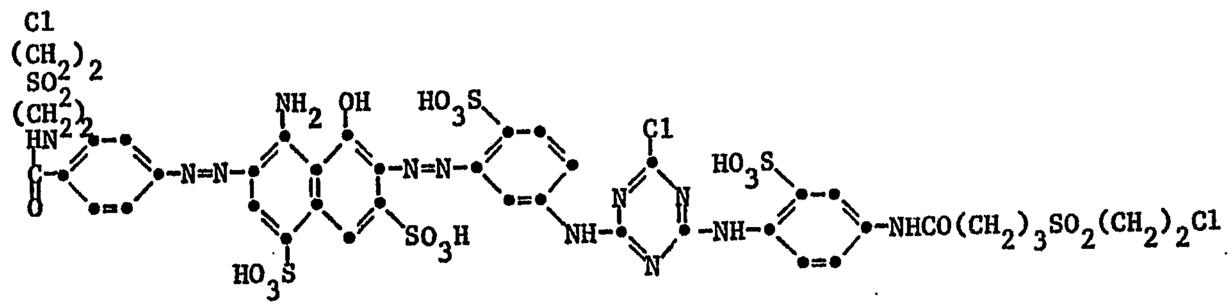 | marineblau |
| 324 | 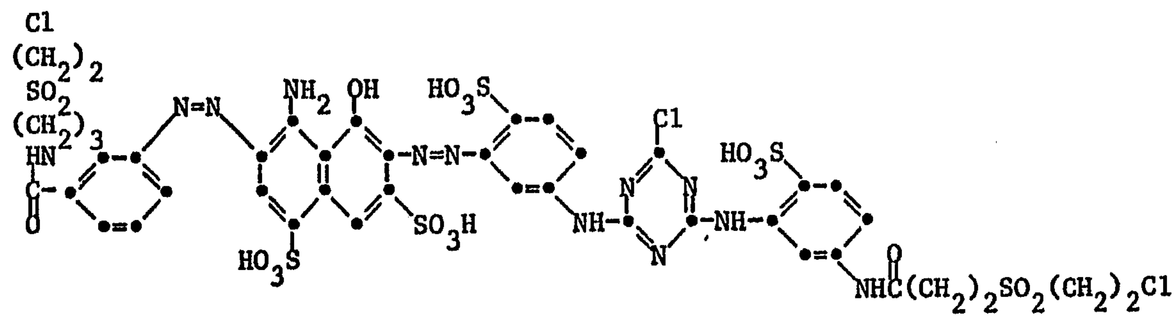 | marineblau |

| Bsp. | | Farbton |
|---|---|---|
| 325 | 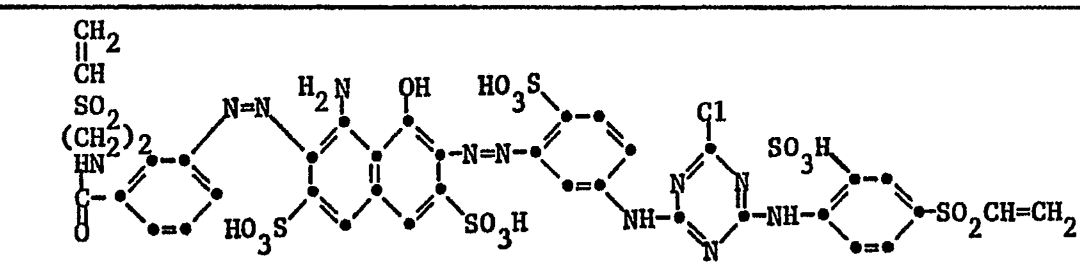 | marineblau |
| 326 | 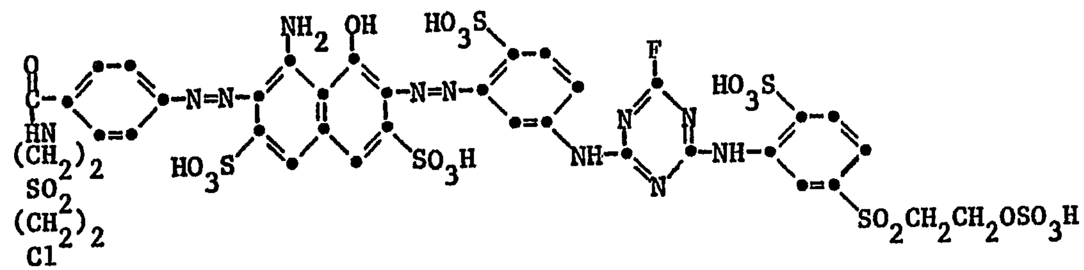 | marineblau |
| 327 | 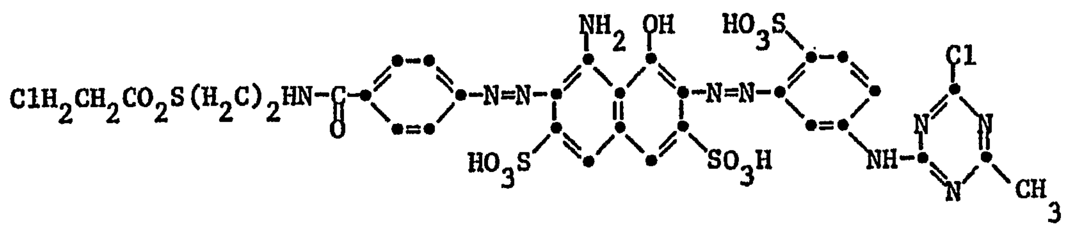 | marineblau |

| Bsp. | | Farbton |
|---|---|---|
| 328 | 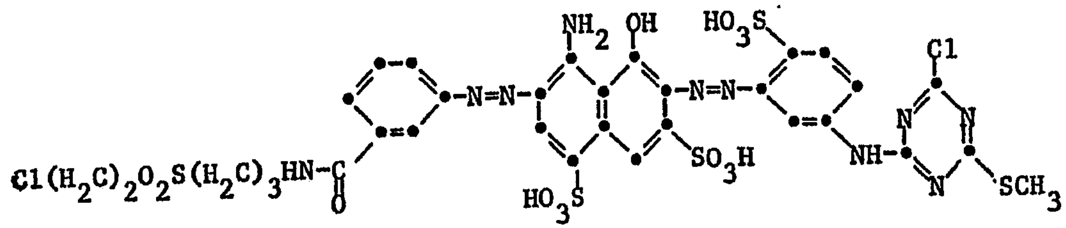 | marineblau |
| 329 | 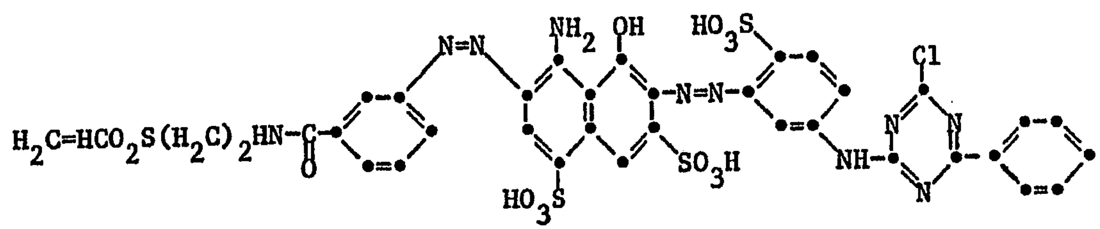 | marineblau |
| 330 | 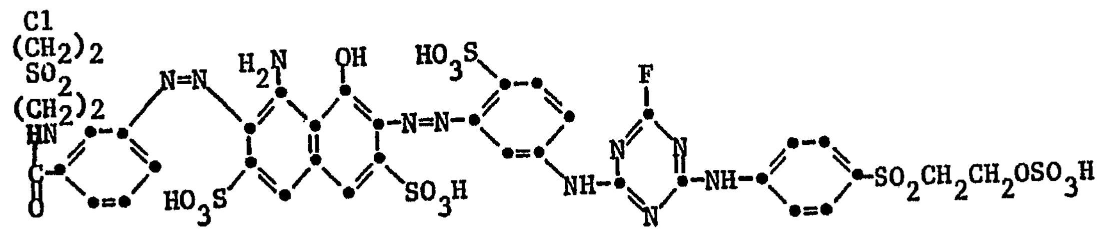 | marineblau |

| Bsp. | | Farbton |
| --- | --- | --- |
| 331 | 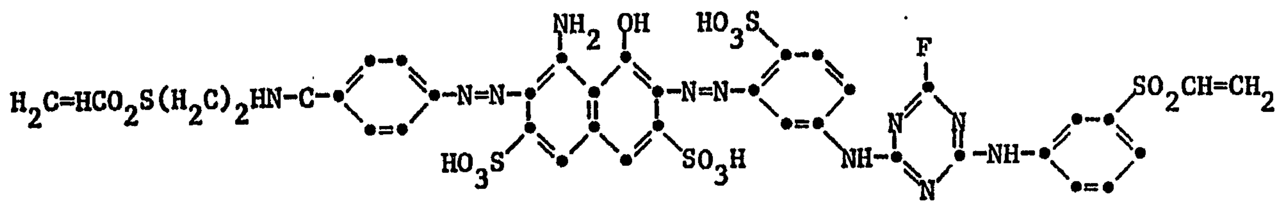 | marineblau |
| 332 | 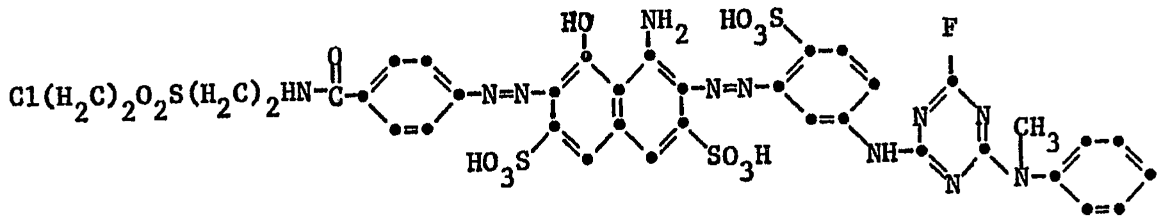 | marineblau |
| 333 | 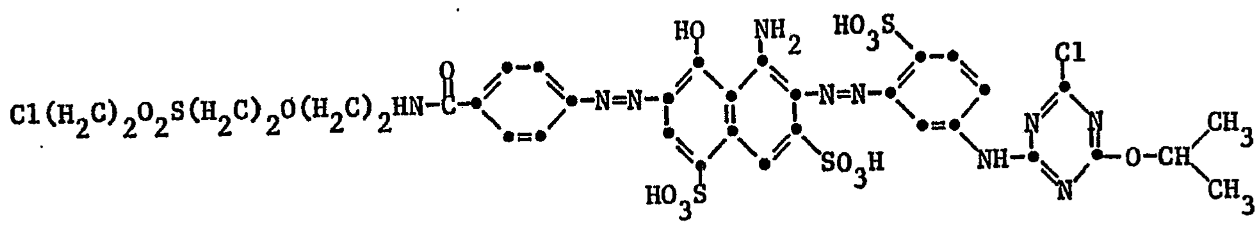 | marineblau |

| Bsp. | | Farbton |
|---|---|---|
| 334 | 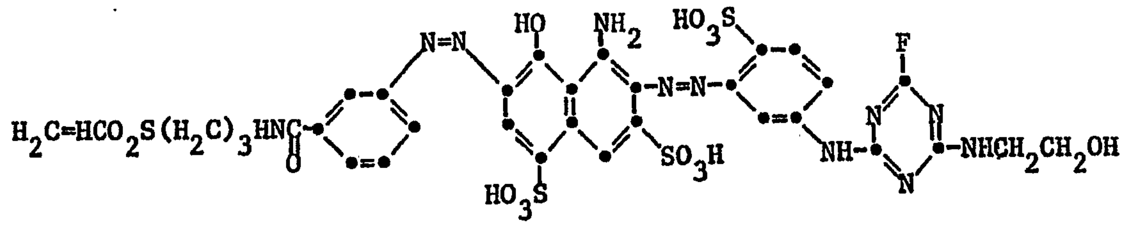 | marineblau |
| 335 | 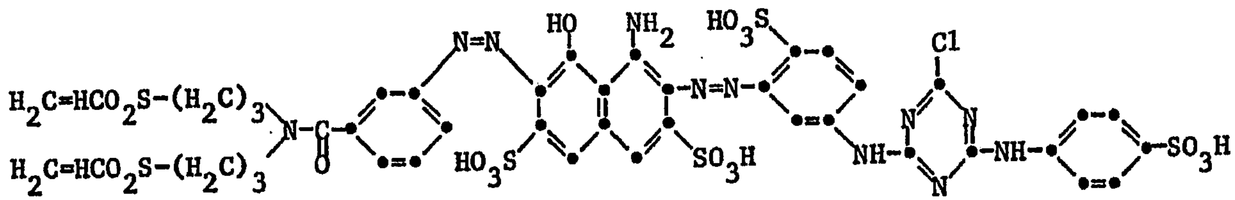 | marineblau |
| 336 | 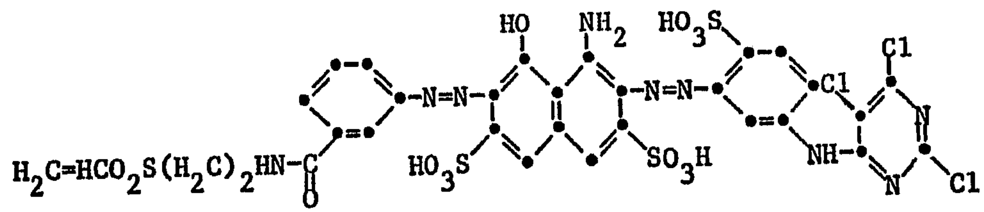 | marineblau |

| Bsp. | | Farbton |
|---|---|---|
| 337 | 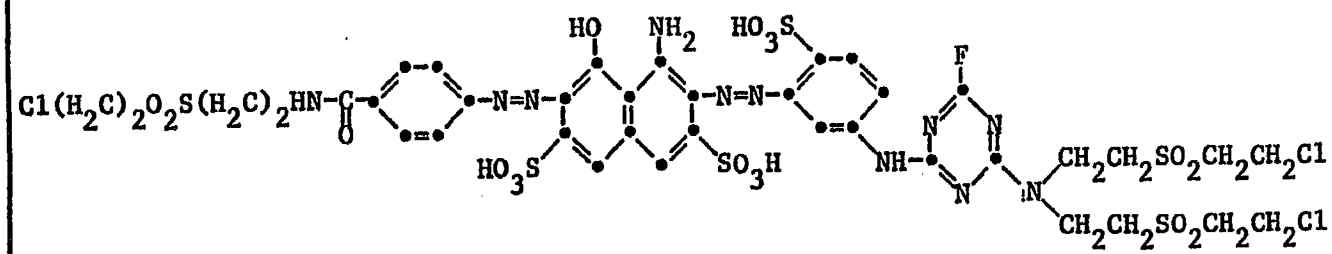 | marineblau |
| 338 | 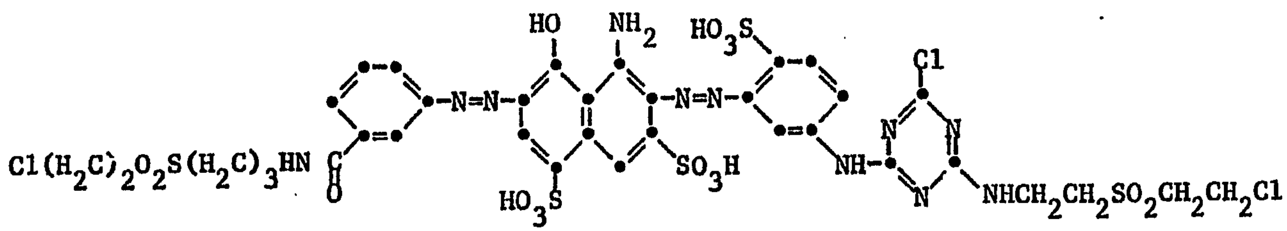 | marineblau |
| 339 | 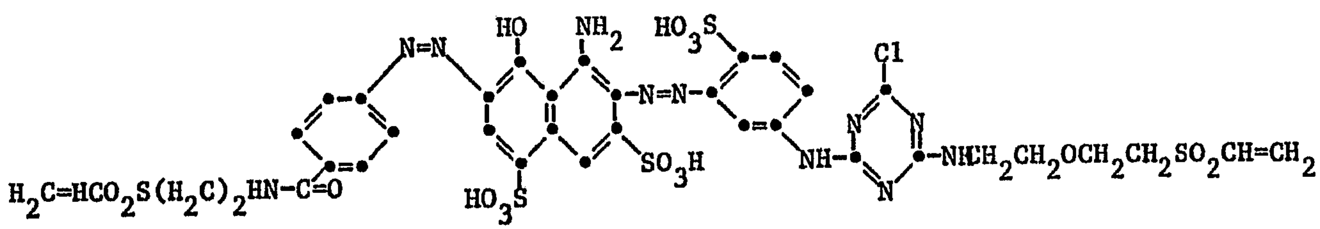 | marineblau |

| Bsp. | | Farbton |
|---|---|---|
| 340 | 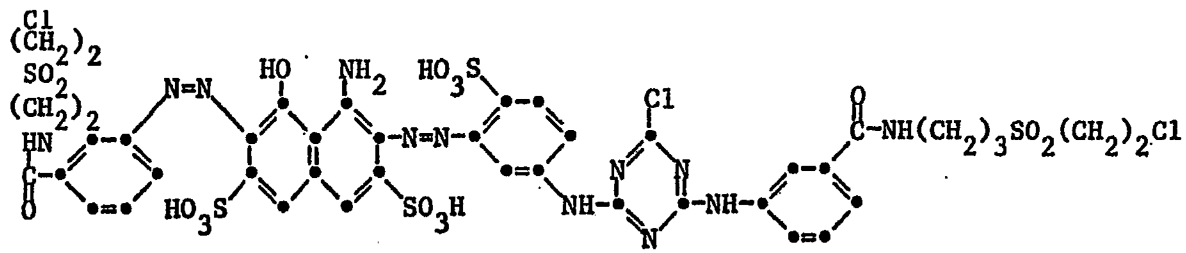 | marineblau |
| 341 | 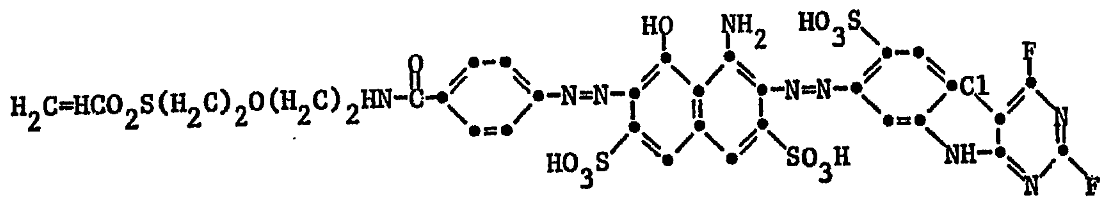 | marineblau |
| 342 | 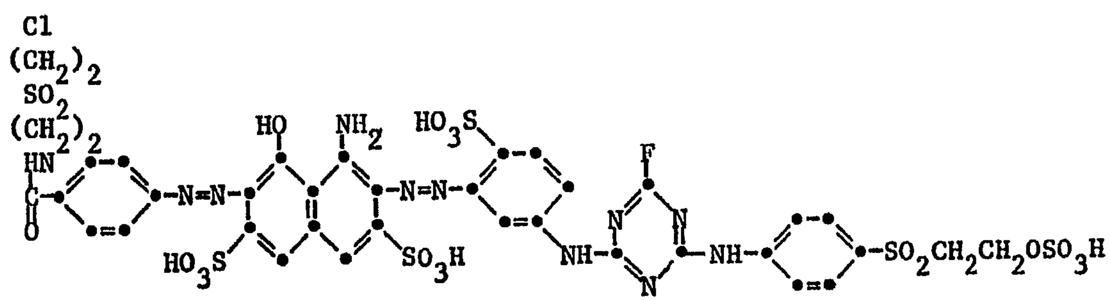 | marineblau |

| Bsp. | | Farbton |
|---|---|---|
| 343 | 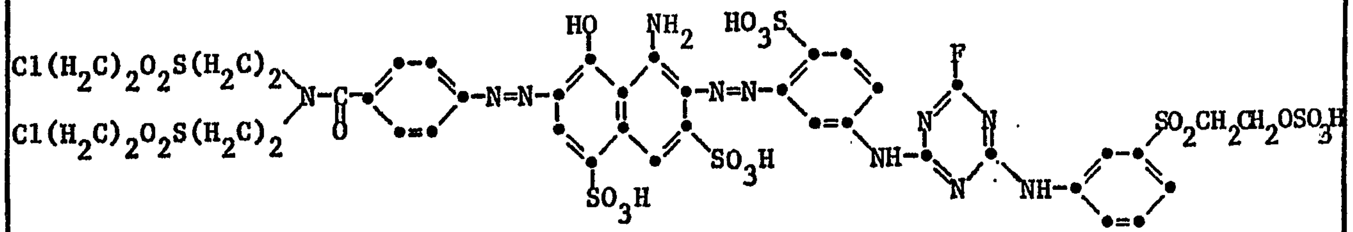 | marineblau |
| 344 | 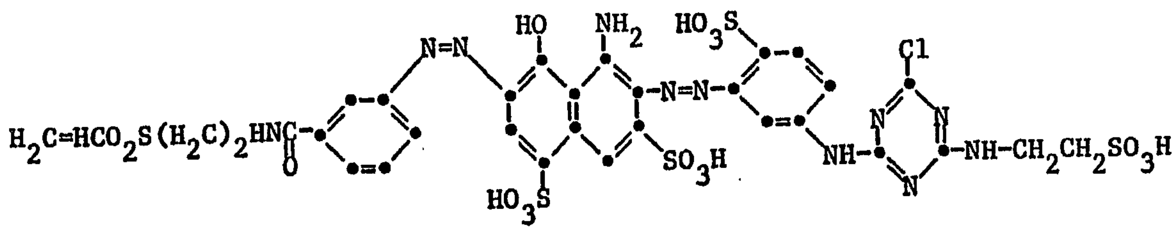 | marineblau |
| 345 | 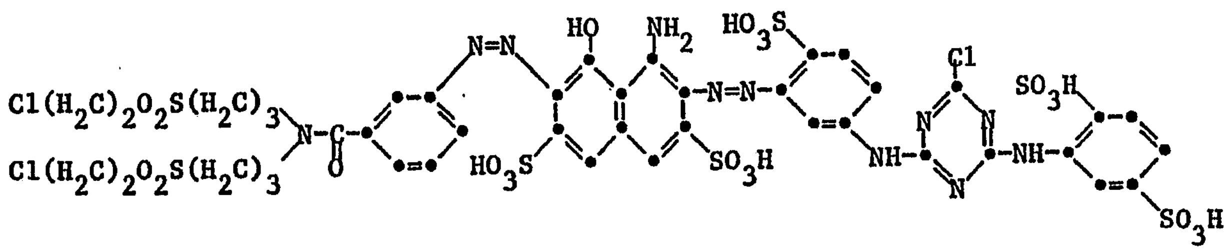 | marineblau |

| Bsp. | | Farbton |
|---|---|---|
| 346 | 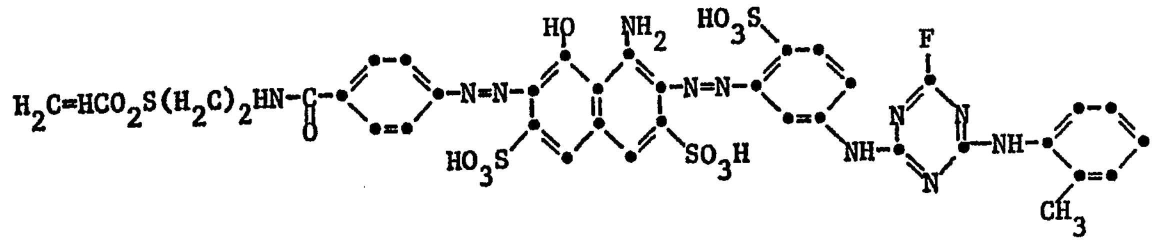 | marineblau |
| 347 | 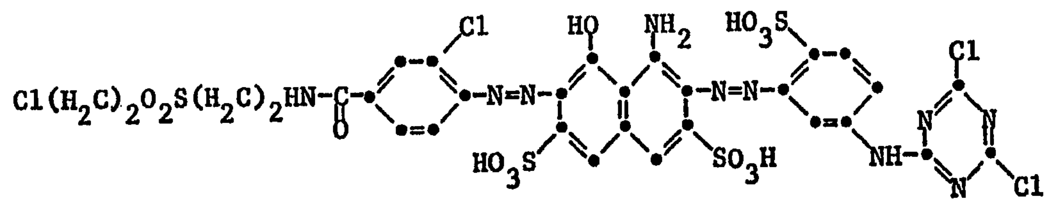 | marineblau |
| 348 | 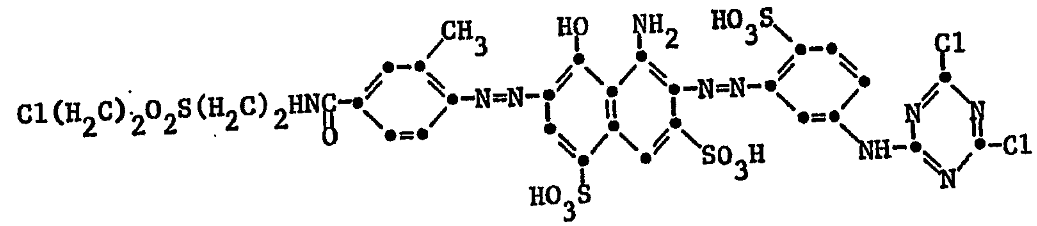 | marineblau |

| Bsp. | | Farbton |
|---|---|---|
| 349 | 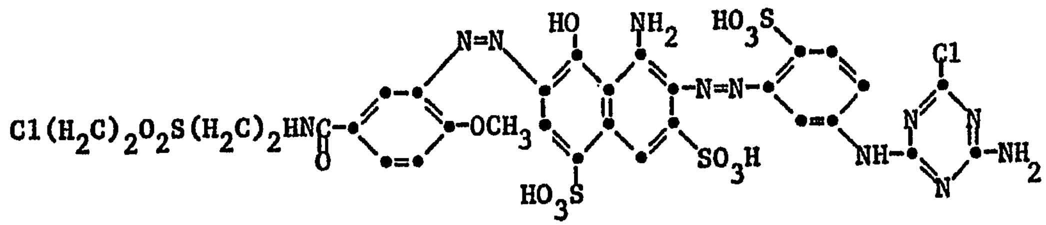 | marineblau |
| 350 | 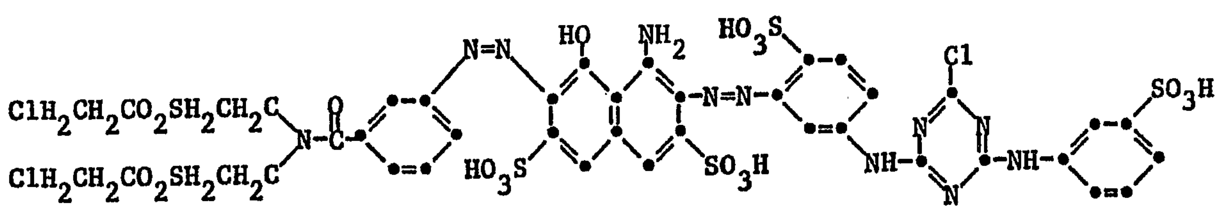 | marineblau |
| 351 | 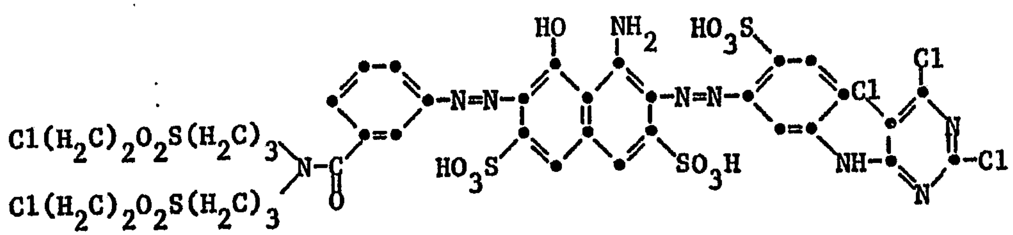 | marineblau |

| Bsp. | | Farbton |
|---|---|---|
| 352 | 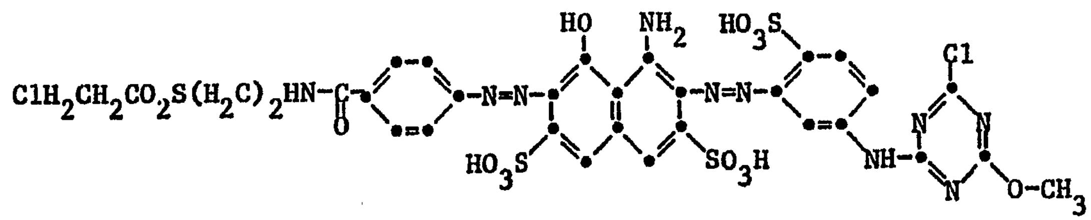 | marineblau |
| 353 | 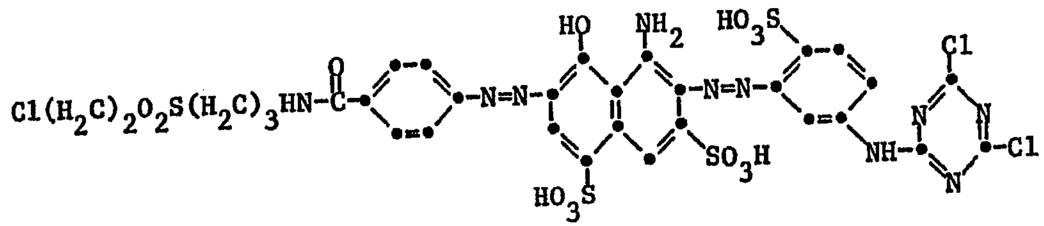 | marineblau |
| 354 | 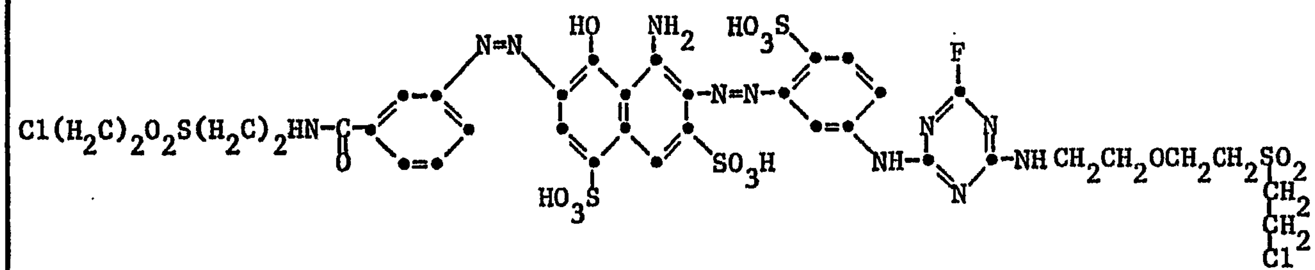 | marineblau |

| Bsp. | | Farbton |
|---|---|---|
| 355 | 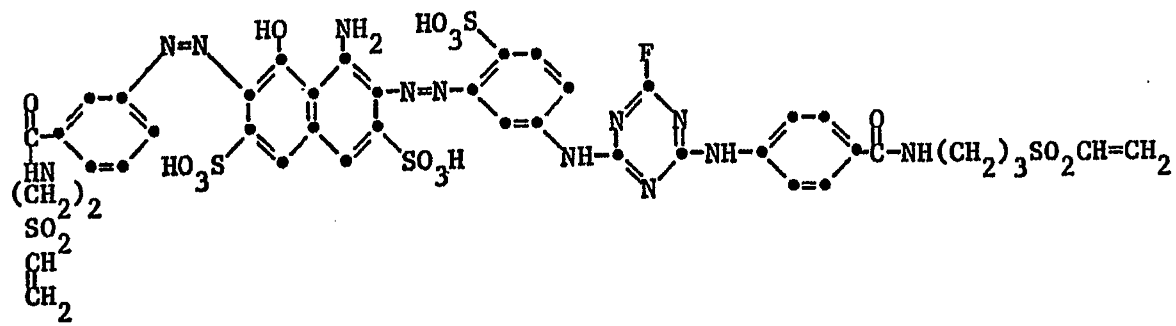 | marineblau |
| 356 | 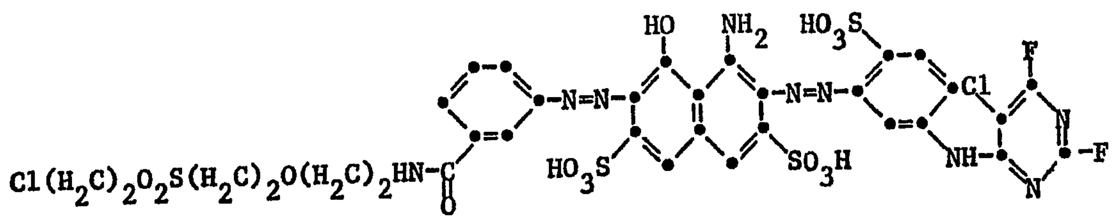 | marineblau |
| 357 | 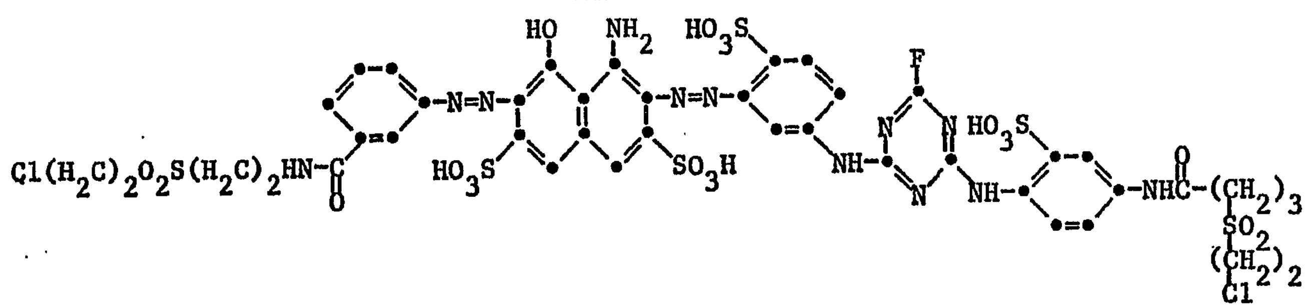 | marineblau |

| Bsp. | | Farbton |
|---|---|---|
| 358 | 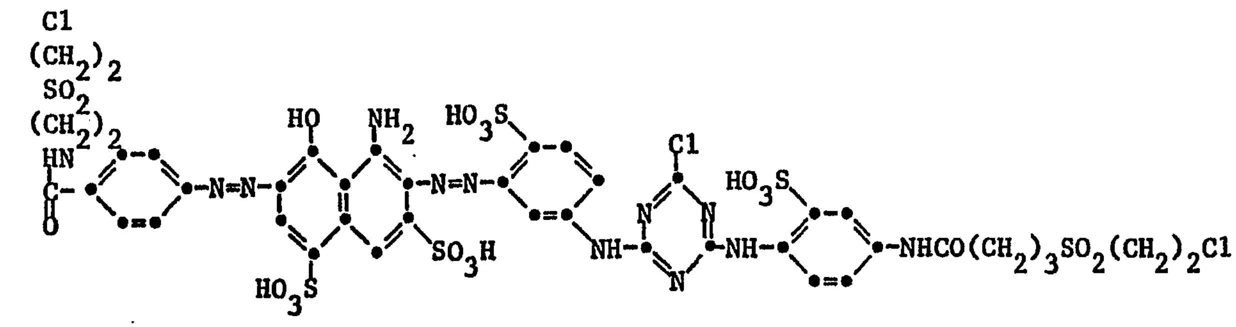 | marineblau |
| 359 | 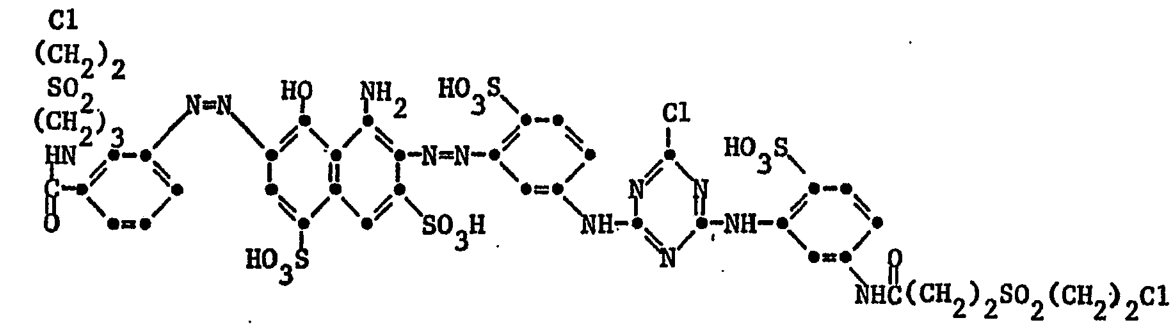 | marineblau |
| 360 | 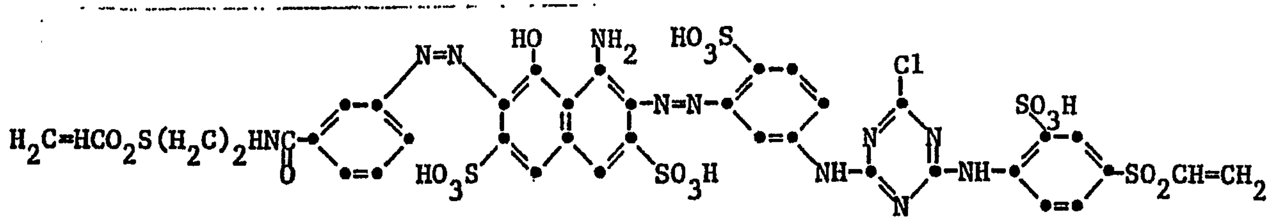 | marineblau |

| Bsp. | | Farbton |
|---|---|---|
| 361 | 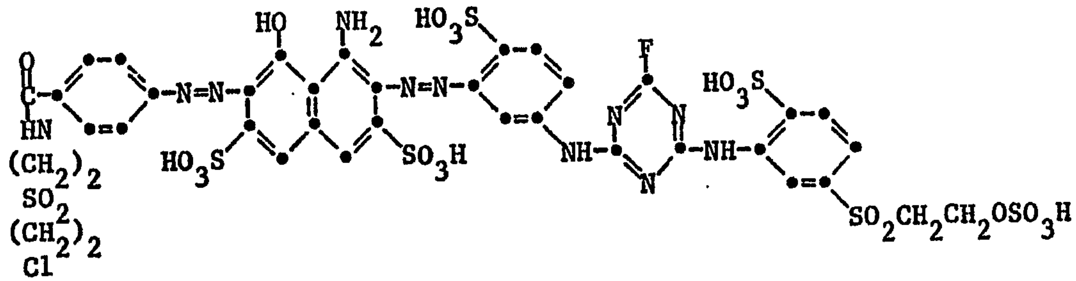 | marineblau |
| 362 | 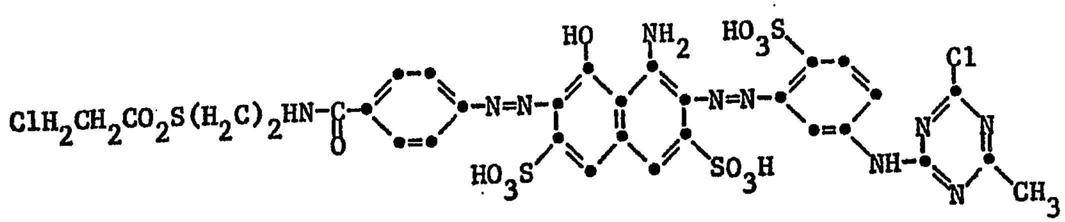 | marineblau |
| 363 | 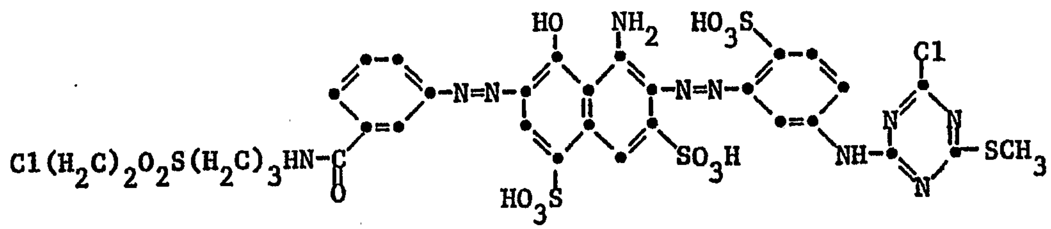 | marineblau |

| Bsp. | | Farbton |
| --- | --- | --- |
| 364 | 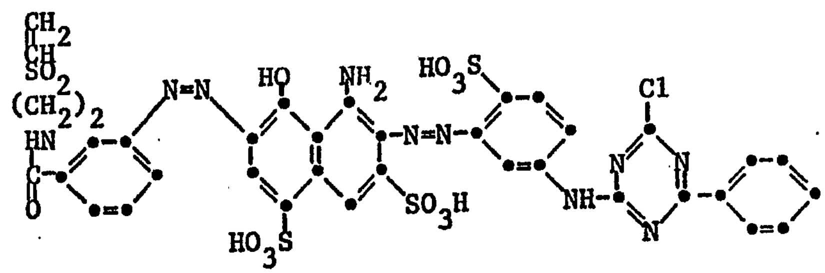 | marineblau |
| 365 | 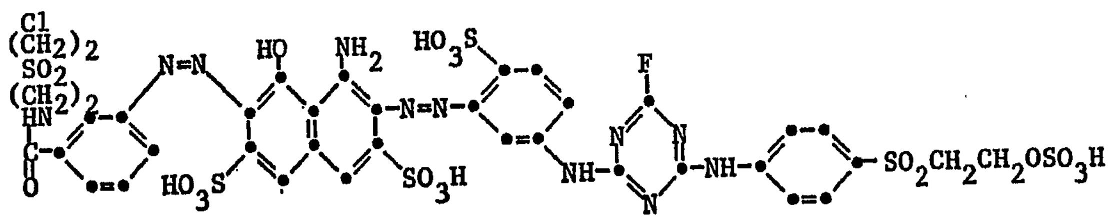 | marineblau |
| 366 | 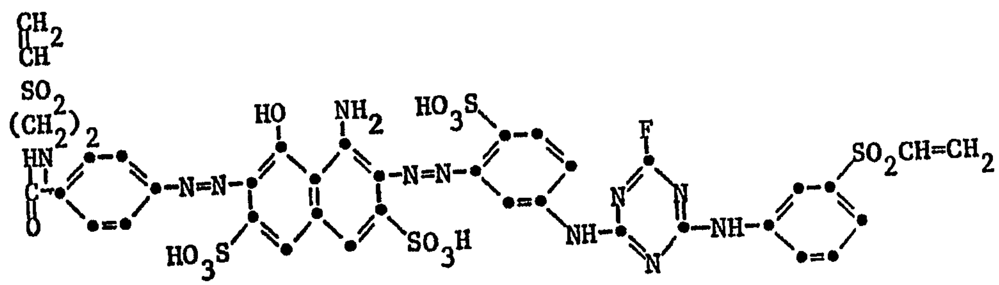 | marineblau |

| Bsp. | | Farbton |
|---|---|---|
| 367 | 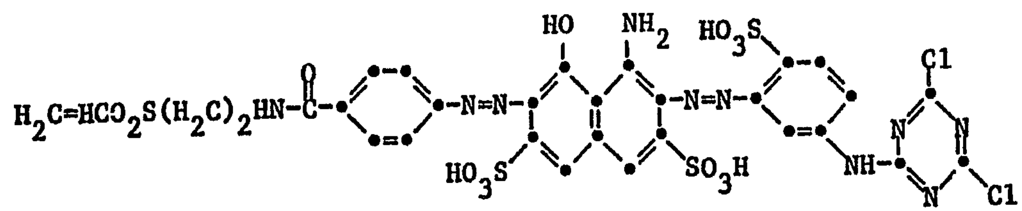 | marineblau |
| 368 | 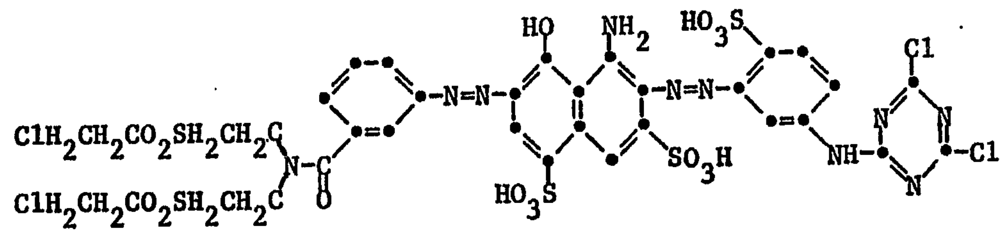 | marineblau |
| 369 | 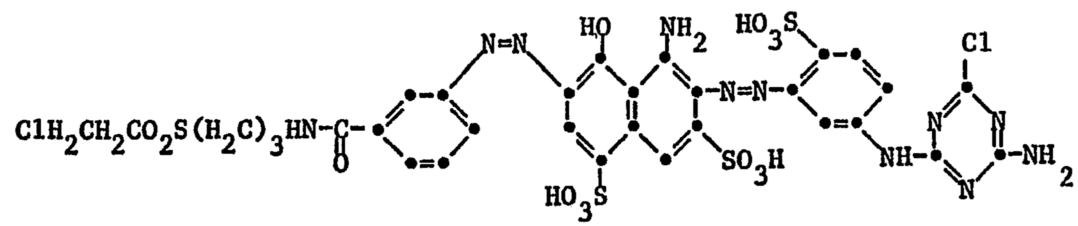 | marineblau |

| Bsp. | | Farbton |
|---|---|---|
| 370 | 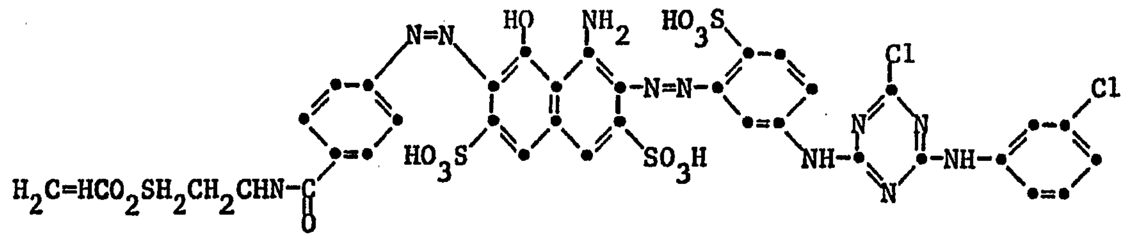 | marineblau |
| 371 | 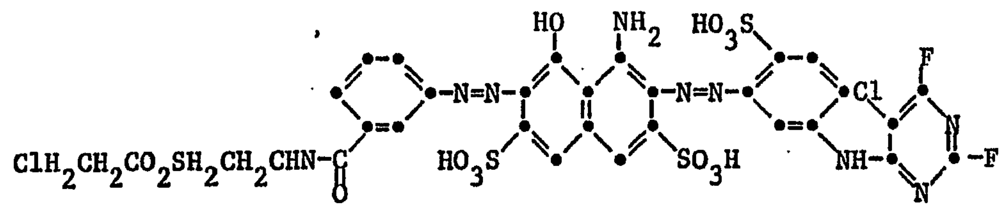 | marineblau |

Beispiel 372: Die salzsauer diazotierte Lösung von 37 Teilen 1-Amino-4-β-(β'-chloräthyl-sulfonyl)äthylaminocarbonyl-benzol-2-sulfosäure wird bei 0-5°C und pH = 5-6 zu einer Lösung von 29,9 Teilen 1-(2'-sulfo-5'-aminophenyl)-3-carboxy-5-pyrazolon gegeben und gekuppelt. Der gelbe Monoazofarbstoff wird anschliessend mit einer Suspension von 18,8 Teilen Cyanurchlorid versetzt und bei pH = 6 acyliert.

Der gebildete Chlortriazinfarbstoff wird isoliert; er entspricht der Formel

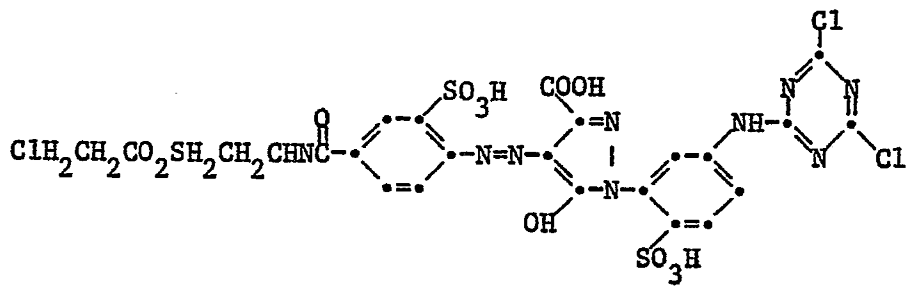

Beispiel 373:

195 Teile Cyanurchlorid werden in 800 Volumenteilen Aceton gelöst; unter gutem Rühren gibt man diese Lösung in eine Mischung von 1300 Teilen Wasser und 1300 Teilen zerstossenem Eis sowie 20 Volumenteilen einer 2n-Salzsäure. Zu dieser so erhaltenen Suspension lässt man innerhalb von 50 bis 60 Minuten unter Rühren eine Lösung mit einem pH-Wert von 6,9 bis 7,2 aus 239 Teilen 2-Amino-5-naphthol-7-sulfonsäure, 65 Teilen Natriumcarbonat und 2000 Teilen Wasser einlaufen. Die Umsetzung des Cyanchlorids mit dem Aminonaphthol wird bei einer Temperatur zwischen 0 und 5°C und einem pH-Wert von 3 bis 5 durchgeführt. Es wird so lange gerührt, bis kein freies Amin mehr durch eine Diazotierungsprobe nachweisbar ist.

Die so hergestellte Lösung der Kupplungskomponente wird mit 370 Teilen diazotiertem 1-Amino-4-β-(β'-chloräthyl-sulfonyl)äthylaminocarbonyl-benzol-2-sulfosäure versetzt. Man rührt 2 Stunden lang und erhöht in dieser Zeit durch portionsweise Einstreuen von Natriumcarbonat den pH-Wert auf 6,5 bis 7,0. Es wird noch eine Stunde bei diesem pH-Wert und bei Raumtemperatur weitergerührt. Anschliessend gibt man 173 Teile Anilin-m-sulfonsäure und portionsweise etwa 110 Teile Natriumcarbonat hinzu, um den pH-Wert auf 5,0 bis 6,0 zu halten. Diese Rektionslösung wird auf 50°C erwärmt und unter Rühren bei dieser Temperatur eine Stunde gehalten. Nach dem Abkühlen der Reaktionslösung wird die gebildete Azoverbindung mittels Natriumchlorid ausgefällt, abgesaugt und bei 60°C unter reduziertem Druck getrocknet. Es wird ein rotes, elektrolythaltiges Pulver erhalten, das das Natriumsalz der Verbindung der Formel

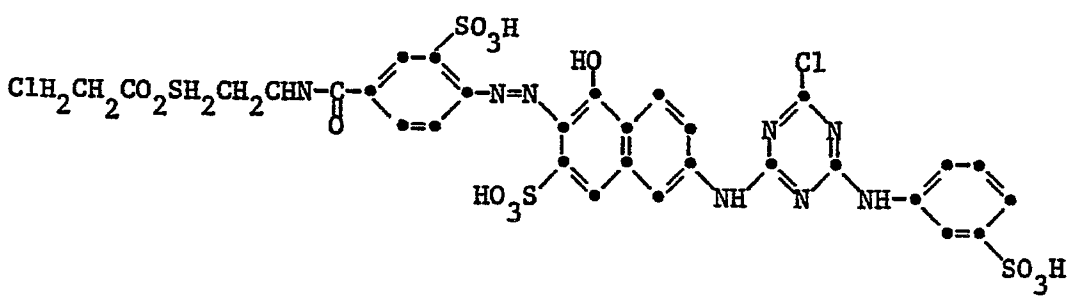

enthält.

Diese Azoverbindung eignet sich hervorragend als Farbstoff. In Folge seiner faserreaktiven Eigenschaften liefert er beispielsweise aus wässrig-alkalischer Flotte nach einem üblichen Auszieh- oder Klotzverfahren farbtiefe, orange Färbungen auf Baumwollfasern. Die Färbungen besitzen sehr gute Wasch- und Lichtechtheiten.

Beispiel 374:

64 Teile 1-Amino-8-naphthol-3,6-disulfonsäure werden in 800 Teilen Wasser unter Zusatz von 30 %iger Natriumhydroxidlösung bei pH 5,0 gelöst. Man erwärmt dann auf 30°C und lässt 42 Teile 2,4-Dichlor-6-isopropoxy-triazin zutropfen, wobei der pH-Wert durch Eintropfen von 2n-Natriumhydroxidlösung bei pH 4,0 bis 4,5 gehalten wird. Es wird 15 Stunden bei pH 4,0 bis 4,5 und 65°C kondensiert.

Die Lösung wird als Kupplungskomponente zur Farbstoffherstellung eingesetzt.

Zur Herstellung der Diazoniumverbindung werden 74 Teile 1-Amino-4-β(β'-chloräthyl-sulfonyl)äthylaminocarbonyl-benzol-2-sulfosäure in 500 Teilen Eiswasser suspendiert, mit 45 Teilen conc. wässriger Sälzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel

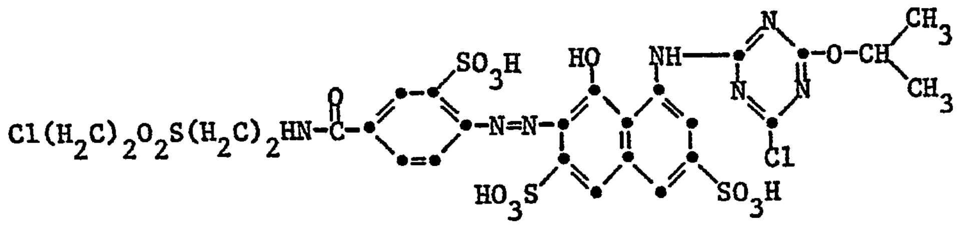

enthält.

Diese Verbindung besitzt sehr gute Farbstoffeigenschaften und färbt Cellulosematerialien nach den üblichen Färbe- und Druckverfahren für Reaktivfarbstoffe in blaustichig roten Tönen mit sehr guten Nassechtheitseigenschaften.

Beispiel 375:

64 Teile 1-Amino-8-naphthol-3,6-disulfonsäure werden in 800 Teilen Wasser unter Zusatz von 30 %iger Natriumhydroxidlösung bei pH 9,0 bis 9,5 gelöst. Man kühlt dann auf 10°C ab und lässt 34 Teile 2,4,6-Trifluor-5-chlor-pyrimidin zutropfen, wobei der pH-Wert durch Eintropfen von 5n-Natriumhydroxidlösung bei pH 9,25 bis 9,5 gehalten wird. Es wird 15 Minuten bei pH 8,5 bis 9 und 15°C nachgerührt und dann mit 4n-Salzsäurelösung versetzt, bis der pH-Wert von 6,5 erreicht wird.

Die Lösung wird als Kupplungskomponente zur Farbstoffherstellung eingesetzt.

Zur Herstellung der Diazoniumverbindung werden 74 Teile 1-Amino-4-β-(β'-chloräthyl-sulfonyl)äthylaminocarbonyl-benzol-2-sulfosäure in 500 Teilen Eiswasser suspendiert, mit 45 Teilen conc. wässriger Sälzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel

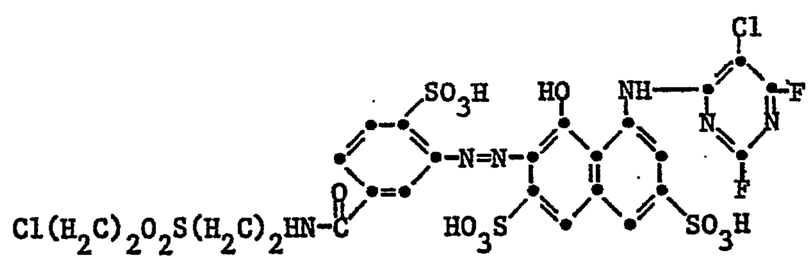

enthält.

Diese Verbindung besitzt sehr gute Farbstoffeigenschaften und färbt Cellulosematerialien nach den üblichen Färbe- und Druckverfahren für Reaktivfarbstoffe in blaustichig roten Tönen mit sehr guten Nassechtheitseigenschaften.

Beispiel 376:

64 Teile 1-Amino-8-naphthol-3,6-disulfonsäure werden in 800 Teilen Wasser unter Zusatz von 30 %iger Natriumhydroxidlösung bei pH 5,0 gelöst. Man erwärmt dann auf 60°C und lässt 45 Teile 2,4,5,6-Tetrachlor-pyrimidin zutropfen, wobei der pH-Wert durch Eintropfen von 5n-Natriumhydroxidlösung bei pH 4,0 bis 4,5 gehalten wird. Es wird 15 Stunden bei pH 4,0 bis 4,5 und 65°C kondensiert.

Die Lösung wird als Kupplungskomponente zur Farbstoffherstellung eingesetzt.

Zur Herstellung der Diazoniumverbindung werden 74 Teile 1-Amino-4-β-(β'-chloräthyl-sulfonyl)äthylaminocarbonyl-benzol-2-sulfosäure in 500 Teilen Eiswasser suspendiert, mit 45 Teilen conc. wässriger Sälzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel

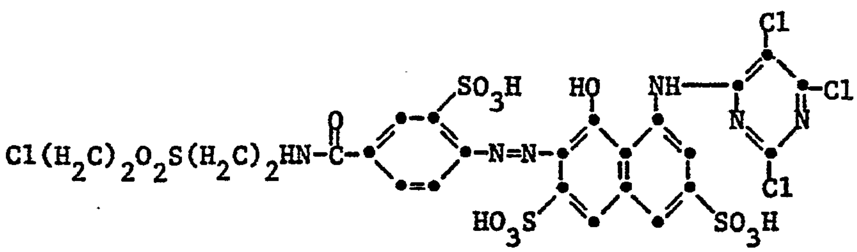

enthält.

Diese Verbindung besitzt sehr gute Farbstoffeigenschaften und färbt Cellulosematerialien nach den üblichen Färbe- und Druckverfahren für Reaktivfarbstoffe in blaustichig roten Tönen mit sehr guten Nassechtheitseigenschaften.

Beispiel 377:

31,9 Teile 1-Amino-8-hydroxynaphthalin-3,6-disulfonsäure werden in 800 ml Wasser neutral gelöst und die Lösung auf 0° bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n-Natriumhydroxydlösung schwach kongosauer gehalten wird. Nach Zusatz einer auf 5 gestellten Mischung von 11 Teilen N-Methylanilin in 100 ml Wasser wird der pH der Reaktionsmischung durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Raktion wird dieses Zwischenprodukt bei 0° bis 10° und pH 6,5 mit 37 Teilen diazotiertem 1-Amino-4-β-(β'-chloräthyl-sulfonyl)-äthylaminocarbonyl-benzol-2-sulfosäure gekuppelt. Nach vollständiger Kupplungsreaktion bei pH 8 wird die Reaktionsmischung geklärt und der gebildete Reaktivfarbstoff der Formel

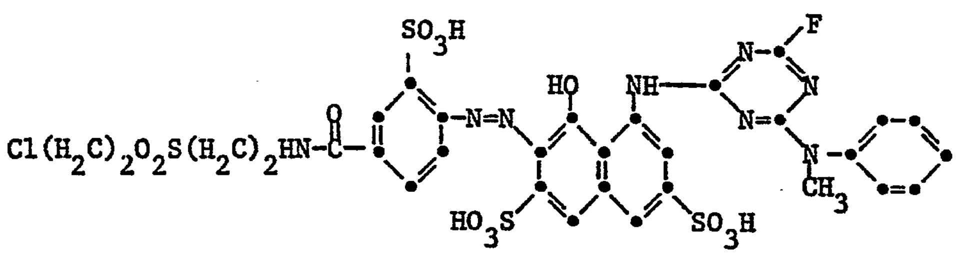

durch Eindampfen oder Gefriertrocknen der Reaktionslösung bei pH 7 isoliert. Er färbt Baumwolle in roten Tönen.

Beispiel 378:

Die wässrige Lösung des Farbstoffes von Beispiel 377 wird bei Raumtemperatur und pH-Wert 10 etwa 30 Minuten lang vinyliert. Der pH-Wert wird mit Salzsäure auf 6,5 zurückgestellt. Der Monoazofarbstoff wird isoliert, er entspricht der Formel

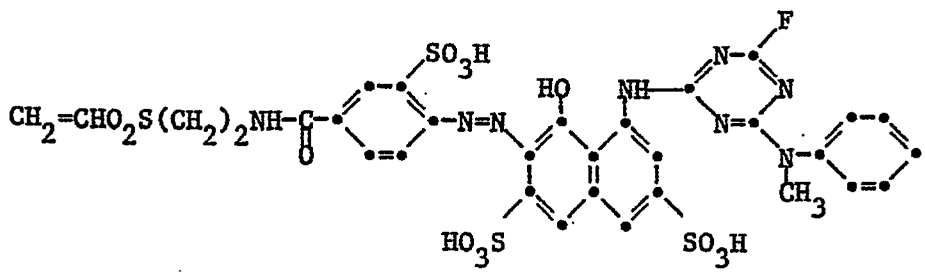

und färbt Baumwolle in roten Tönen.

Beispiel 379:

a) In eine Suspension von 255,2 Teilen 1-Amino-8-naphthol-3,6-disulfonsäure in 1440 Teilen Wasser und 720 Teilen Eis werden unter gutem Rühren 155,2 Teile Cyanurchlorid eingetragen; der Reaktionsansatz wird noch 4 Stunden bei einer Temperatur zwischen 3 und 5°C und bei einem pH-Wert zwischen 1,7 und 2,2, der mittels Natriumbicarbonat gehalten wird, weitergerührt.

b) Getrennt hiervon wird das Diazoniumsalz der Diazokomponente hergestellt: Eine Lösung mit einem pH-Wert von 6,7-6,8 von 296 Teilen 1-Amino-4-β-(β'-chloräthyl-sulfonyl)äthylaminocarbonyl-benzol-2-sulfosäure in 640 Teilen Wasser werden mit 105 Volumentailen einer 40 %igen wässrigen Natriumnitritlösung versetzt. Dieses Gemisch lässt man unter gutem Rühren in eine Mischung aus 800 Teilen zerkleinertem Eis und 70 Volumenteilen einer 95 %igen wässrigen Schwefelsäure einfliessen. Man rührt noch eine Stunde bei einer Temperatur zwischen 0°C und 5°C nach und versetzt sodann, wie üblich, überschüssige salpetrige Säure mit wenig Amidosulfonsäure.

c) Das hier unter a) hergestellte primäre Kondensationsprodukt aus Cyanurchlorid und der Aminonaphtholdisulfonsäure wird mit der hier unter b) beschriebenen Diazoniumsalzlösung vereinigt. Zur Durchführung der Kupplungsreaktion wird das stark saure Reaktionsgemisch bei einer Temperatur von etwa 5°C mittels Natriumbicarbonat auf einen pH-Wert von 4,0 bis 4,5 eingestellt und die Temperatur auf 15 bis 20°C erhöht. Es wird noch einige Stunden bei diesem pH-Wert und dieser Temperatur weitergerührt, bis die Kupplung beendet ist.

d) Die Lösung der Monoazoverbindung von c) wird mit einer Lösung mit einem pH-Wert von 5,5 bis 6,0 von 240 Teilen HCl $H_2NCH_2CH_2OCH_2CH_2SO_2CH_2CH_2Cl$ in 640 Teilen Wasser vereinigt. Der pH-Wert wird auf etwa 6 gehalten und das Reaktionsgemisch im Verlaufe von zwei Stunden auf eine Temperatur von 60 bis 65°C erwärmt. Sodann wird der pH mittels Natriumbicarbonat auf einen Wert zwischen 6,5 und 7,0 erhöht, und das Filtrat sprühgetrocknet.

Es werden etwa 1100 Teile natriumchloridhaltiges Pulver der Formel

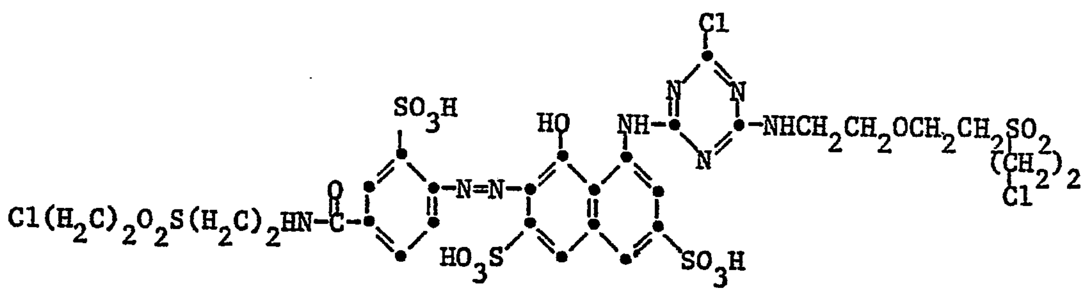

erhalten. Es färbt Baumwolle in roten Tönen.

Beispiel 380

Die wässrige Lösung des Farbstoffes von Beispiel 379 wird bei Raumtemperatur und pH-Wert 10 etwa 40 Minuten lang vinyliert. Anschliessend wird der pH-Wert mit Salzsäure auf 6,0 zurückgestellt und der Monoazofarbstoff sprühgetrocknet. Er entspricht der Formel

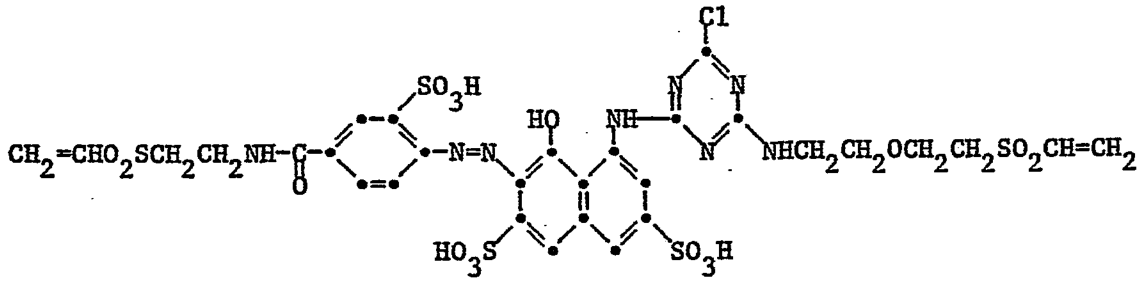

und färbt Baumwolle in roten Tönen, mit sehr gutem Echtheitseigenschaften.

Beispiel 381:

70,25 Teile 4-β-Sulfatoäthylsulfonyl-anilin werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31 %igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40 %igen wässrigen Natriumnitritlösung durchgeführt. Anschliessend wird ein geringer Ueberschuss an salpetriger Säure mit 0,5 Teilen Amidosulfonsäure zerstört. Sodann werden 77,8 Teile 1-Amino-8-hydroxynaphthalin-3,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 92 Teile 1-Amino-4-β-(β'-chloräthylsulfonyl)äthylaminocarbonyl-benzol-2-sulfosäure analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

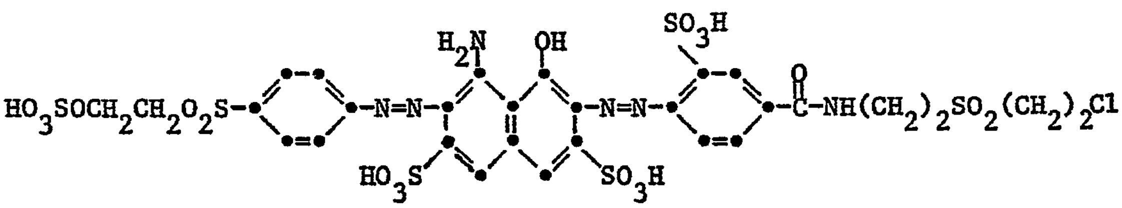

enthält. Diese eignet sich sehr gut als Farbstoff zum Färben von Cellulosefasermaterialien nach den in der Technik üblichen bekannten Färbe- und Druckmethoden und gängigen Fixiermethoden für faserreaktive Farbstoffe; sie liefert auf diesen Materialien marineblaue Farbtöne mit guten Echtheitseigenschaften.

Beispiel 382:

Die wässrige Lösung des Farbstoffes von Beispiel 381 wird bei Raumtemperatur und pH-Wert 10 etwa 30 Minuten lang vinyliert. Anschliessend wird der pH-Wert mit Salzsäure auf 5,0 zurückgestellt und der Monoazofarbstoff sprühgetrocknet. Er entspricht der Formel

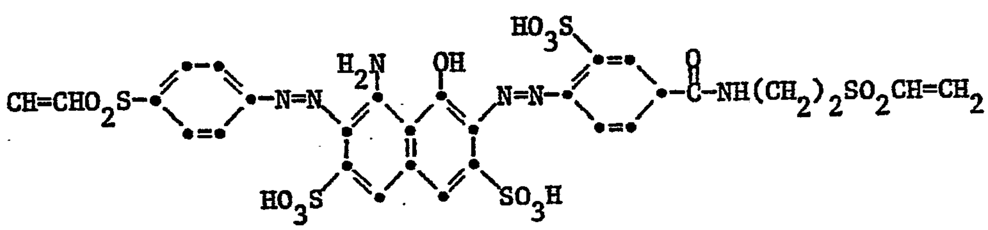

und färbt Baumwolle in marineblauen Farbtönen mit sehr guten Echtheitseigenschaften.

Beispiel 383:

82 Teile 4-Aminobenzoesäure-N'-β(β'-chlorethylsulfonyl)-ethylamid-hydrochlorid werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31 %igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40 %igen wässrigen Natriumnitritlösung durchgeführt; anschliessend wird ein geringer Ueberschuss an salpetriger Säure mit 0,5 Teilen Amidosulfonsäure zerstört. Sodann werden 77,8 Teile 1-Amino-8-hydroxynaphthalin-3,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 80 Teile 4-β-Sulfatoäthylsulfonyl-2-sulfo-anilin analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

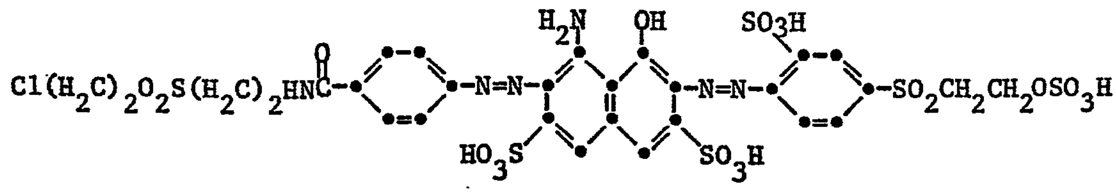

enthält, diese färbt Baumwolle in marineblauen Farbtönen mit sehr guten Echtheitseigenschaften.

Beispiel 384:

82 Teile 4-Aminobenzoesäure-N'-β(β'-(chlorethylsulfonyl)ethylamid-hydrochlorid werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31 %igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40 %igen wässrigen Natriumnitritlösung durchgeführt; anschliessend wird ein geringer Ueberschuss an salpetriger Säure mit 0,5 Teilen Amidosulfonsäure zerstört. Sodann werden 77,8 Teile 1-Amino-8-hydroxynaphthalin-4,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 92 Teile 1-amino-4-β-(β'-chloräthylsulfonyl)äthylaminocarbonyl-benzol-2-sulfosäure analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Disazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

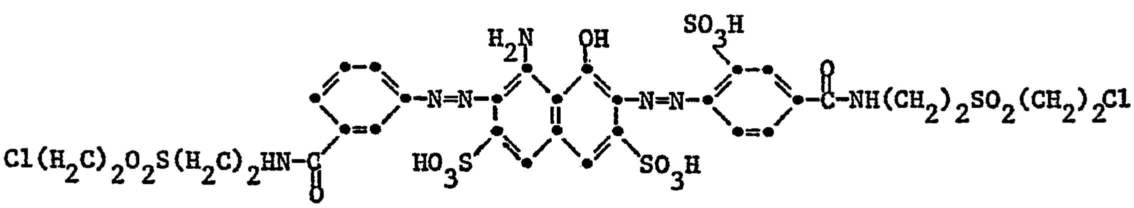

enthält, diese eignet sich sehr gut als Farbstoff zum Färben von Cellulosefasermaterialien nach den in der Technik üblichen, bekannten Färbe- und Druckmethoden und gängigen Fixiermethoden für faserreaktive Farbstoffe; sie liefert auf diesen Materialien marineblaue Farbtöne mit guten Echtheitseigenschaften.

Beispiel 385:

82 Teile 3-Aminobenzoesäure-N'-β(β'-(chlorethylsulfonyl)ethylamid-hydrochlorid werden in 325 Teile Wasser eingetragen und bei 20 bis 22°C innerhalb einer Stunde mittels Natriumbicarbonat bei einem pH-Wert von 5,3 bis 6,0 gelöst. Sodann werden 54 Volumenteile einer 31 %igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40 %igen wässrigen Natriumnitritlösung durchgeführt; anschliessend wird ein geringer Ueberschuss an salpetriger Säure mit 0,5 Teilen Amidosulfonsäure zerstört. Sodann werden 77,8 Teile 1-Amino-8-hydroxynaphthalin-3,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 92 Teile 1-Amino-4-β-(β'-chloräthylsulfonyl)äthylaminocarbonylbenzol-2-sulfosäure analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

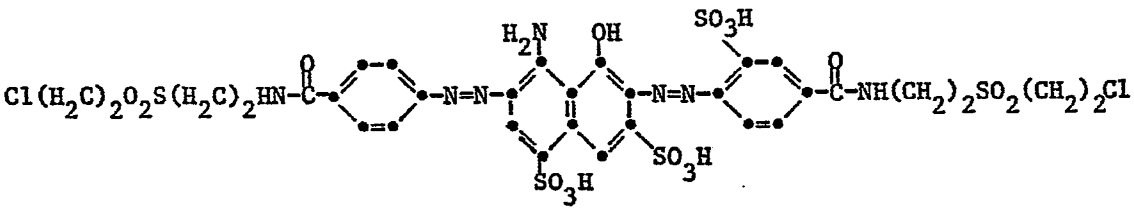

enthält, diese eignet sich sehr gut als Farbstoff zum Färben von Cellulosefasermaterialien nach den in der Technik üblichen, bekannten Färbe- und Druckmethoden und gängigen Fixiermethoden für faserreaktive Farbstoffe; sie liefert auf diesen Materialien marineblaue Farbtöne mit guten Echtheitseigenschaften.

Weitere Farbstoffe, die nach den in den Beispielen 372 bis 385 gegebenen Vorschriften hergestellt werden können, sind die Reaktivfarbstoffe der folgenden Formeln.

| | | |
|---|---|---|
| 386 | 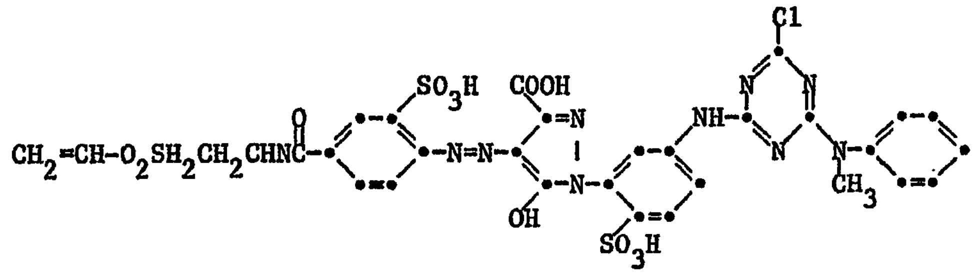 | Gelb |
| 387 | 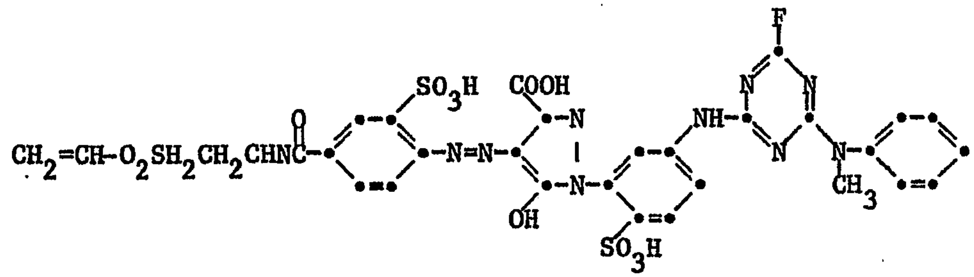 | Gelb |
| 388 | 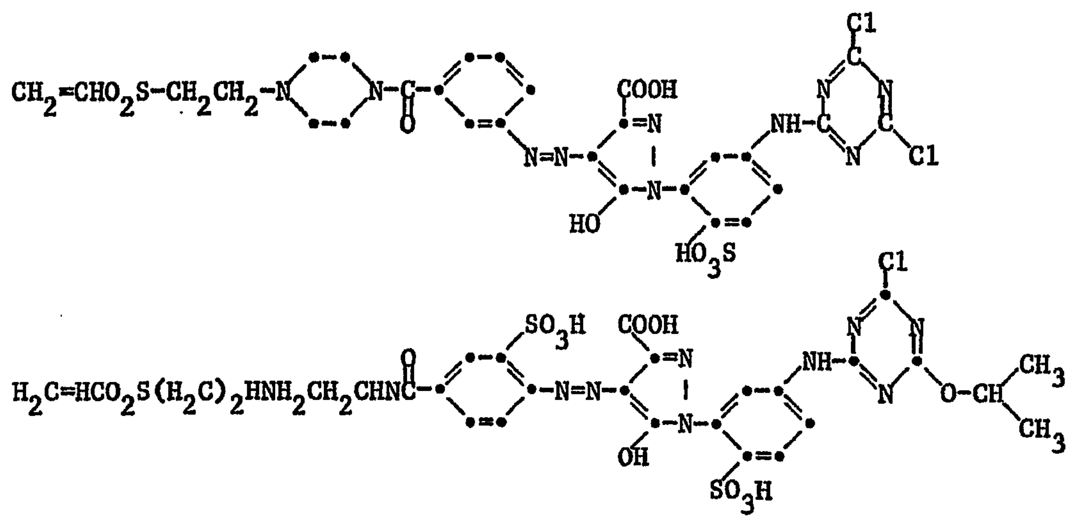 | Gelb |
| 389 | | Gelb |

| | | |
|---|---|---|
| 390 | 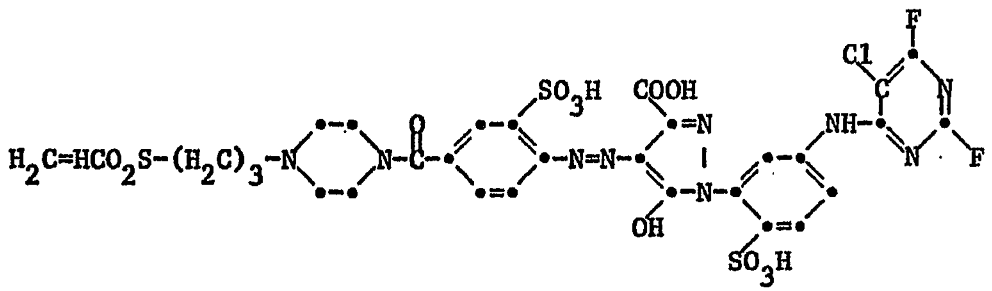 | Gelb |
| 391 | 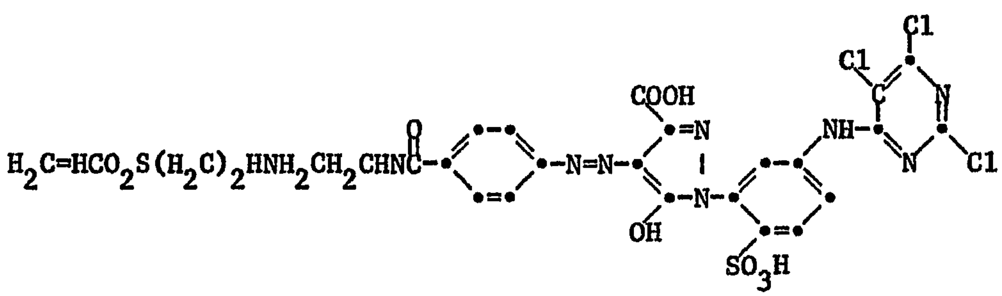 | Gelb |
| 392 | 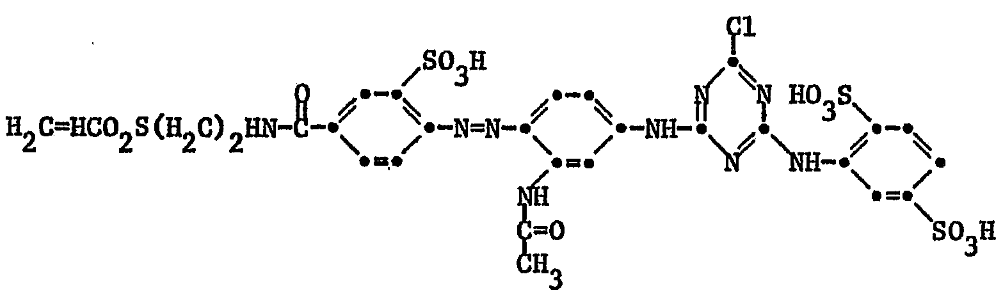 | Goldgelb |

| | | |
|---|---|---|
| 393 | 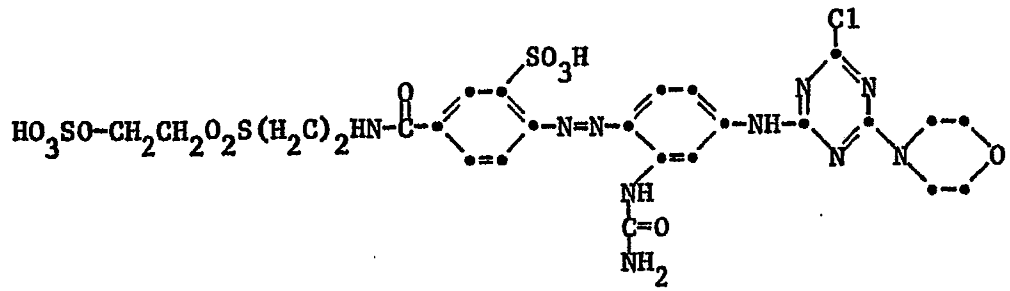 | Goldgelb |
| 394 | 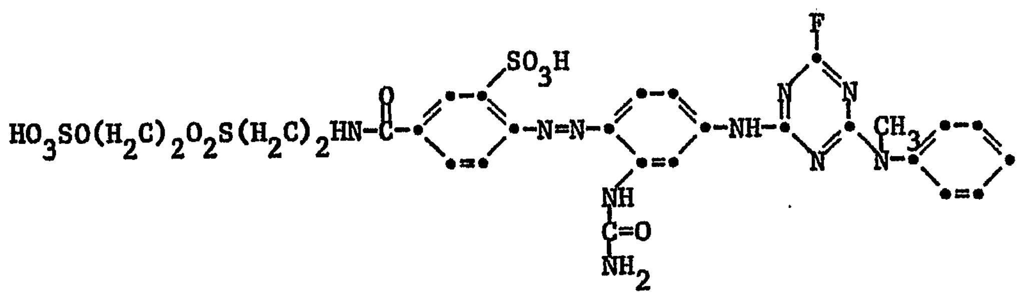 | Goldgelb |
| 395 | 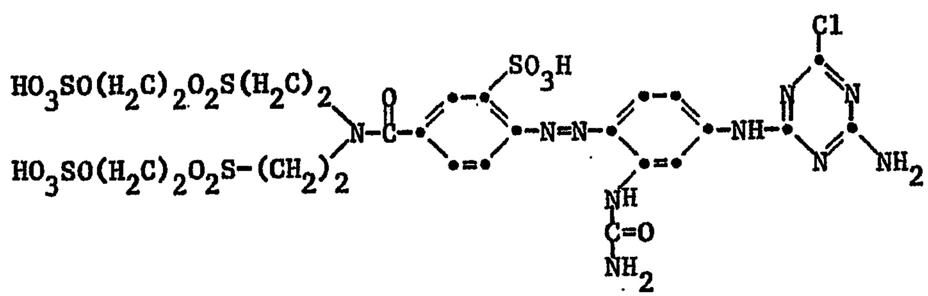 | Goldgelb |

| | | |
|---|---|---|
| 396 | 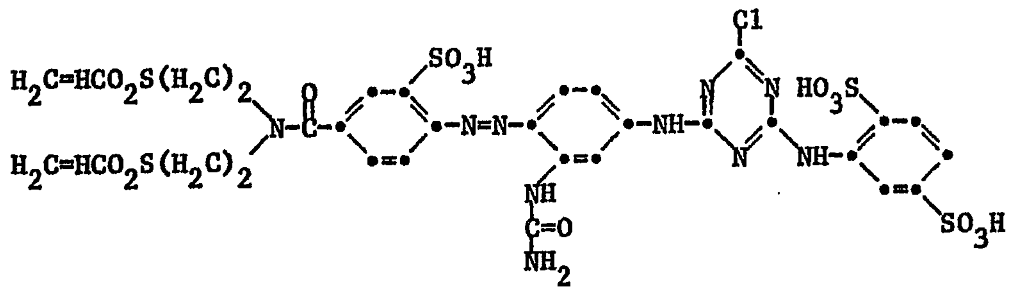 | Goldgelb |
| 397 | 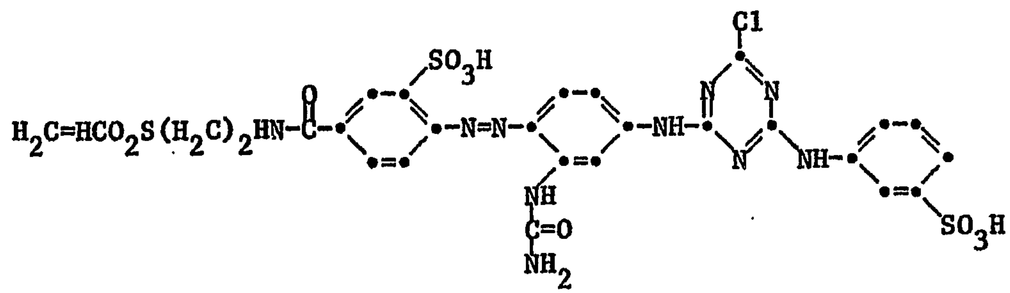 | Goldgelb |
| 398 | 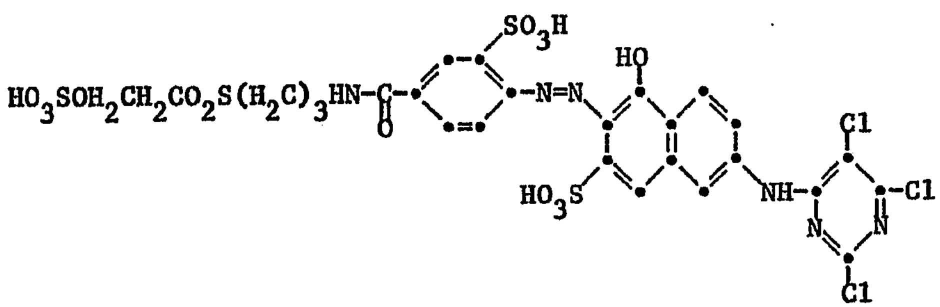 | Orange |

| | | |
|---|---|---|
| 399 | 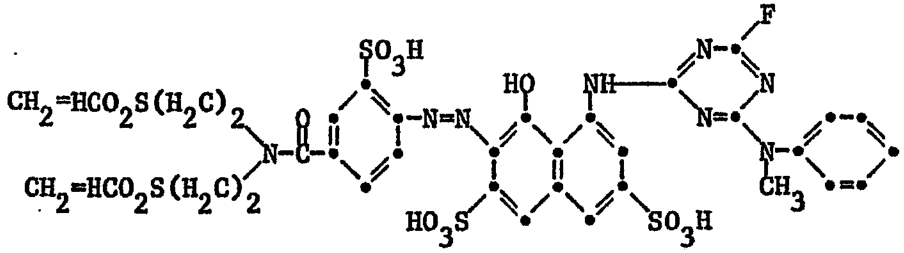 | Rot |
| 400 | 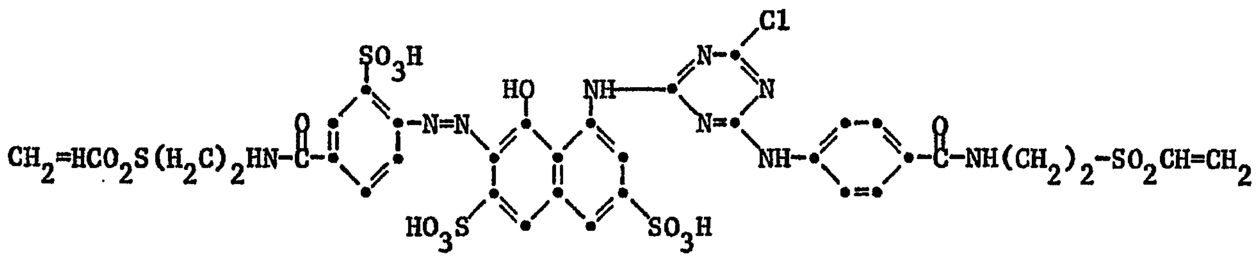 | Rot |
| 401 | 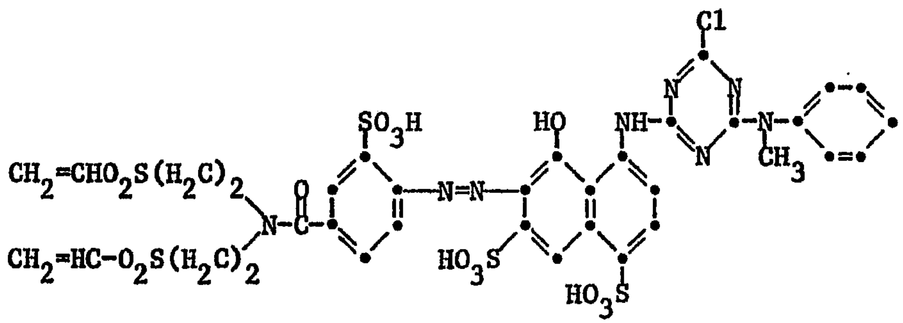 | Scharlach |

402 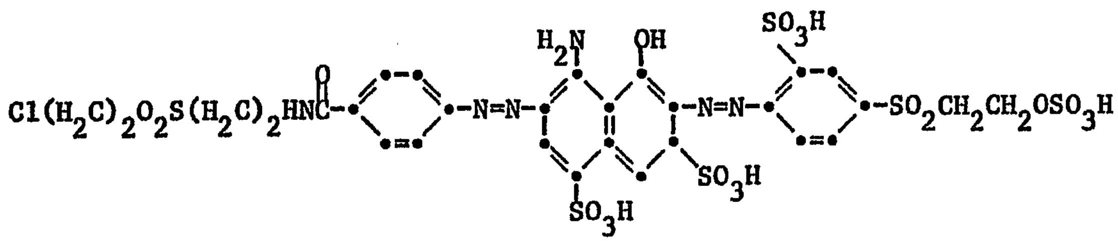 Marineblau

403 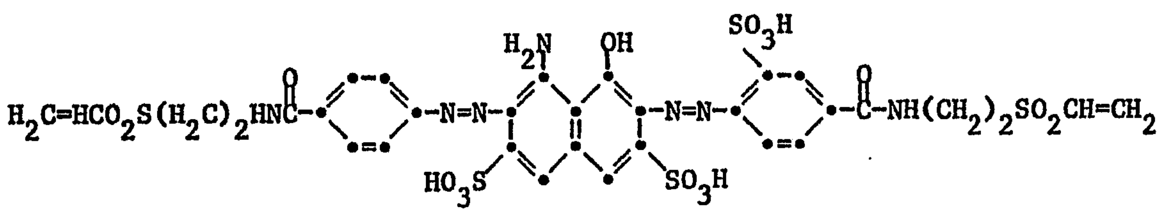 Marineblau

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollegewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70% seines Gewichtes zunimmt, und dann auf ein Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung , enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollegewebe, trocknet und dämpft

den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

$$(R\text{-}U)_n\text{—}D\text{—}(X)_r \qquad (1),$$

worin D der Rest eines Monoazo-, Polyazo- oder Metallkomplexazo-Farbstoffes, U –CO–; R ein Rest der Formel

$$Z - SO_2 - CH_2 - \underset{}{(alk)}(\text{-}Y) - N(V) - \qquad (1a)$$

$$Z - SO_2 - (CH_2)_m - O - (CH_2)_p - N(R_1) - \qquad (1b)$$

$$Z - SO_2 - (alk') - NH - (alk') - N(H) - \qquad (1c)$$

oder

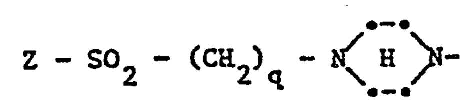
(1d) ;

Z Sulfatoäthyl, β-Thiosulfatoäthyl, β-Phosphatoäthyl, β-Acetoxyäthyl, β-Halogenäthyl oder Vinyl; alk ein Polymethylenrest mit 1 bis 6 C-atomen oder dessen verzweigte Isomere; Y Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z$, worin Z die oben angegebene Bedeutung hat; V Wasserstoff oder ein Alkylrest mit 1 bis 4 C-Atomen, der durch Carboxy, Sulfo, Carbamoyl, N-Methyl-, N-Aethyl- N,N-Dimethyl- oder N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl-, N,N-Dimethyl- oder N,N-Diäthylsulfamoyl, Methylsulfonyl, Aethylsulfonyl, Propylsulfonyl, Alkoxygruppen mit 1 oder 2 C-Atomen, Halogen oder Hydroxy substituiert sein kann; oder ein Rest

$$Z - SO_2 - CH_2 - (alk)(\text{-}Y) -$$

worin Z, alk und Y die angegebenen Bedeutungen haben; $R_1$ Wasserstoff oder $C_{1-6}$-Alkyl; alk' unabhängig voneinander Polymethylenreste mit 2 bis 6 C-Atomen oder deren verzweigte Isomere; n = 1 oder 2, r = 1 oder 2, m = 1 bis 6, p = 1 bis 6, q = 1 bis 6; und X ein faserreaktive Gruppe enthaltend einen Halogentriazin-, Halogenpyrimidin-, Halogenpropionyl-, Halogenacryloyl-, β-Halogenäthylsulfonyl-, β-Sulfatoäthylsulfonyl- oder Vinylsulfonylrest ist, mit der Massgabe, dass X einen Halogentriazin- oder Halogenpyrimidinrest aufweist, wenn D für den Rest eines Monoazofarbstoffes steht.

2. Reaktivfarbstoffe gemäss Anspruch 1, worin D der Rest eines Mono- oder Disazofarbstoffes oder eines Metallkomplexazofarbstoffes ist.

3. Reaktivfarbstoffe gemäss Anspruch 2, der Formel

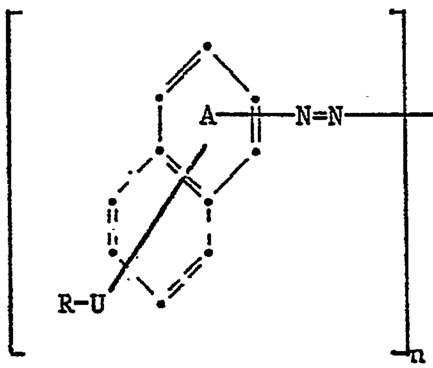

(2),

worin K der Rest einer Kupplungskomponente der Benzol- oder Naphthalinreihe oder der heterocyclischen Reihe ist; U, R, X, n und r die für Anspruch 2 geltenden Bedeutungen haben; und der Benzol- bzw. Naphthalinrest A weitere Substituenten enthalten kann.

4. Reaktivfarbstoffe gemäss Anspruch 3, der Formel

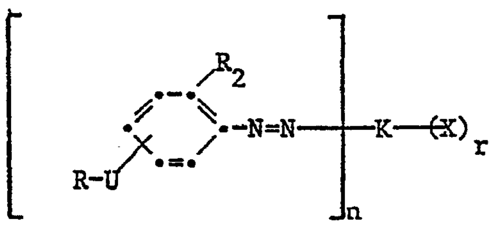

(3),

worin $R_2$ Wasserstoff, $C_{1-4}$-Alkyl, $C_{1-4}$-Alkoxy, Halogen, Hydroxy, Carboxy oder Sulfo ist; und K, U, R, X, n und r die in Anspruch 3 angegebenen Bedeutungen haben.

5. Reaktivfarbstoffe gemäss Anspruch 4, der Formel

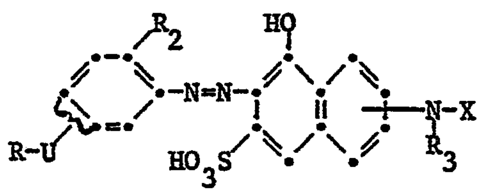

(4),

worin $R_3$ Wasserstoff oder ein gegebenenfalls substituierter $C_{1-4}$-Alkylrest ist; und $R_2$, U, R und X die in Anspruch 4 angegebenen Bedeutungen haben.

6. Reaktivfarbstoffe gemäss Anspruch 4, der Formel

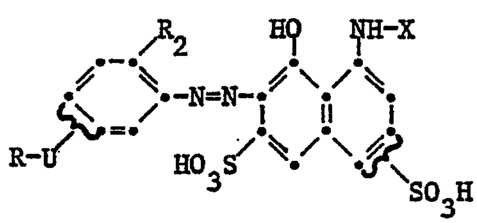

(5),

worin $R_2$, U, R und X die in Anspruch 4 angegebenen Bedeutungen haben.

7. Reaktivfarbstoffe gemäss Anspruch 4, der Formel

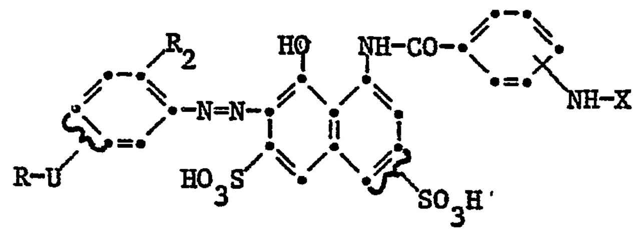

(6),

worin $R_2$, U, R und X die in Anspruch 4 angegebenen Bedeutungen haben.

8. Reaktivfarbstoffe gemäss Anspruch 4, der Formel

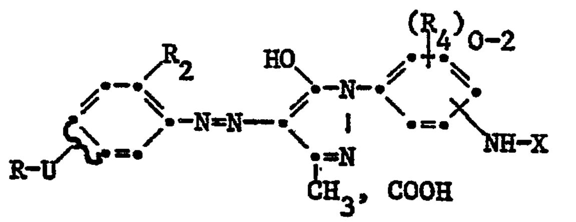

(7),

worin $R_4$ für 0 bis 2 Substituenten aus der Gruppe $C_{1-4}$-Alkyl, $C_{1-4}$-Alkoxy, Halogen, Carboxy oder Sulfo steht; und $R_2$, U, R und X die in Anspruch 4 angegebenen Bedeutungen haben.

9. Reaktivfarbstoffe gemäss Anspruch 4, der Formel

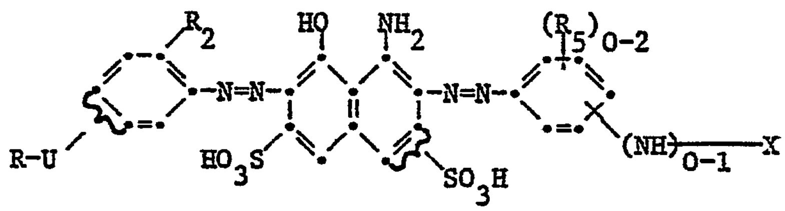

(8),

worin $R_5$ für 0 bis 2 Substituenten aus der Gruppe $C_{1-4}$-Alkyl, $C_{1-4}$-Alkoxy- Halogen, Carboxy oder Sulfo steht; und $R_2$, U, R und X die in Anspruch 4 angegebenen Bedeutungen haben.

10. Reaktivfarbstoffe gemäss Anspruch 4, der Formel

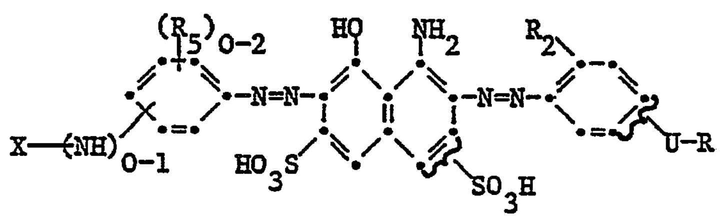

(9),

worin $R_5$ für 0 bis 2 Substituenten aus der Gruppe $C_{1-4}$-Alkyl, $C_{1-4}$-Alkoxy, Halogen, Carboxy oder Sulfo steht; und $R_2$, U, R und X die in Anspruch 4 angegebenen Bedeutungen haben.

11. Schwermetallkomplexe von Reaktivfarbstoffen gemäss Anspruch 4.

12. Reaktivfarbstoff gemäss Anspruch 4 der Formel

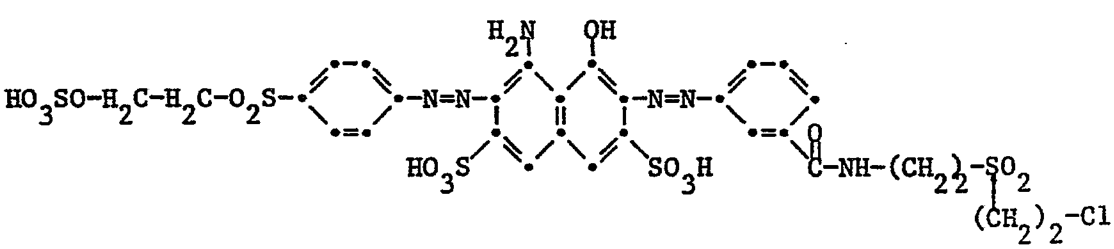

13. Verfahren zur Herstellung von Reaktivfarbstoffen gemäss Anspruch 1, dadurch gekennzeichnet, dass man von einer Diazokomponente ausgeht, welche den Rest –U–R bereits enthält, diese diazotiert und auf eine Kupplungskomponente kuppelt, welche den Rest X ebenfalls bereits enthält oder eine Aminogruppe enthält, die nachträglich mit einer Reaktivkomponente acyliert werden kann.

14. Verwendung der Reaktivfarbstoffe gemäss Anspruch 1, zum Färben oder Bedrucken von Textilfasern.

15. Verwendung gemäss Anspruch 14, zum Färben oder Bedrucken von Baumwolle.

## Claims

1. A reactive dye of the formula

$$(R{-}U)_{\overline{n}}D{-}(X)_r \qquad (1),$$

in which D is the radical of a monoazo, polyazo or metal complex azo dye; U is –CO–; R is a radical of the formula

$$Z - SO_2 - CH_2 - (alk)(Y) - N(V) - \qquad (1a)$$

$$Z - SO_2 - (CH_2)_m - O - (CH_2)_p - N(R_1) - \qquad (1b)$$

$$Z - SO_2 - (alk') - NH - (alk') - N(H) - \qquad (1c)$$

or

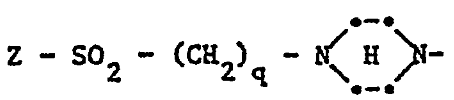 (1d) ;

Z is sulfatoethyl, β-thiosulfatoethyl, β-phosphatoethyl, β-acetoxyethyl, β-halogenoethyl or vinyl; alk is a polymethylene radical having 1 to 6 C atoms or its branched isomers; Y is hydrogen, chlorine, bromine, fluorine, hydroxyl, sulfato, acyloxy having 1 to 4 atoms, cyano, carboxyl, alkoxycarbonyl having 1 to 5 C-atoms, carbamoyl or a radical $-SO_2-Z$ in which Z is as defined above; V is hydrogen or an alkyl radical having 1 to 4 C atoms which can be substituted by carboxyl, sulfo, carbamoyl, N-methyl-, N-ethyl-, N,N-dimethyl- or N,N-diethylcarbamoyl, cyano, acetyl, propionyl, butyryl, methoxycarbonyl, ethoxycarbonyl, propyloxycarbonyl, sulfamoyl, N-methyl-, N-ethyl-, N,N-dimethyl or N,N-diethylsulfamoyl, methylsulfonyl, ethylsulfonyl, propylsulfonyl, alkoxy groups having 1 or 2 C atoms, halogen or hydroxyl; or a radical

$$Z - SO_2 - CH_2 - (alk)(Y) -$$

in which Z, alk and Y are as defined above; $R_1$ is hydrogen or $C_{1-6}$alkyl; alk' are independently of each other polymethylene radicals having 2 to 6 C atoms or branched isomers thereof; n is 1 or 2, r is 1 or 2, m is 1 to 6, p is 1 to 6, q is 1 to 6; and X is a fiber-reactive group containing a halogenotriazine, halogenopyrimidine, halogenopropionyl, halogenoacryloyl, β-halogenoethylsulfonyl, β-sulfatoethylsulphonyl or vinylsulfonyl radical, with the proviso that X has a halogenotriazine or halogenopyrimidine radical, when D is the radical of a monoazo dye.

2. A reactive dye according to claim 1, in which D is the radical of a monoazo or disazo dye or of a metal complex azo dye.

3. A reactive dye according to claim 2, of the formula

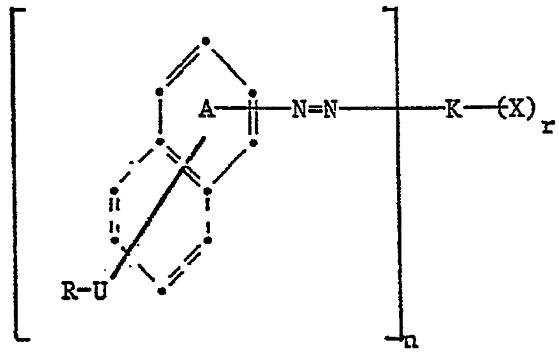

(2),

in which K is the radical of a coupling component of the benzene or naphthalene series or of the heterocyclic series; U, R, X, n and r are as defined for claim 2, and the benzene or naphthalene radical A can contain further substituents.

4. A reactive dye according to claim 3, of the formula

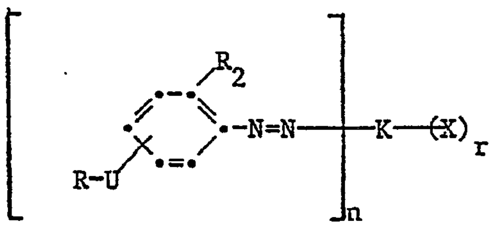

(3),

in which $R_2$ is hydrogen, $C_{1-4}$alkyl, $C_{1-4}$alkoxy, halogen, hydroxyl, carboxyl or sulfo; and K, U, R, X, n and r are as defined in claim 3.

5. A reactive dye according to claim 4, of the formula

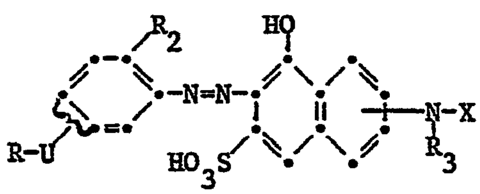

(4),

in which $R_3$ is hydrogen or a substituted or unsubstituted $C_{1-4}$alkyl radical; and $R_2$, U, R and X are as defined in claim 4.

6. A reactive dye according to claim 4, of the formula

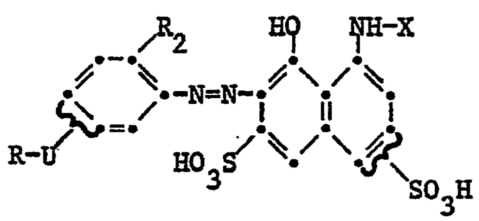

(5),

in which $R_2$, U, R and X are as defined in claim 4.

7. A reactive dye according to claim 4, of the formula

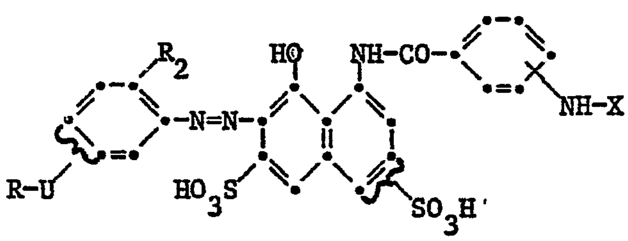

(6),

in which $R_2$, U, R and X are as defined in claim 4.

8. A reactive dye according to claim 4, of the formula

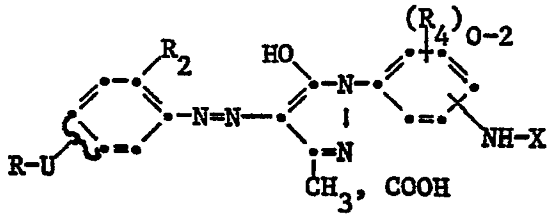

(7),

in which $R_4$ is 0 to 2 substituents from the group $C_{1-4}$alkyl, $C_{1-4}$alkoxy, halogen, carboxyl or sulfo; and $R_2$, U, R and X are as defined in claim 4.

9. A reactive dye according to claim 4, of the formula

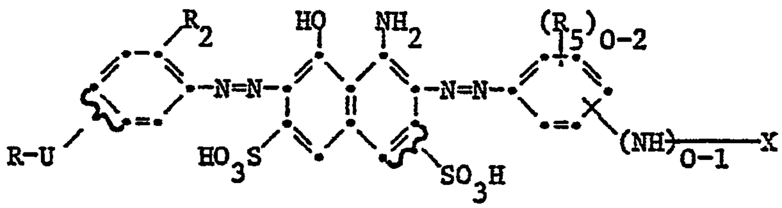

(8),

in which $R_5$ is 0 to 2 substituents from the group $C_{1-4}$alkyl, $C_{1-4}$alkoxy, halogen, carboxyl or sulfo; and $R_2$, U, R and X are as defined in claim 4.

10. A reactive dye according to claim 4, of the formula

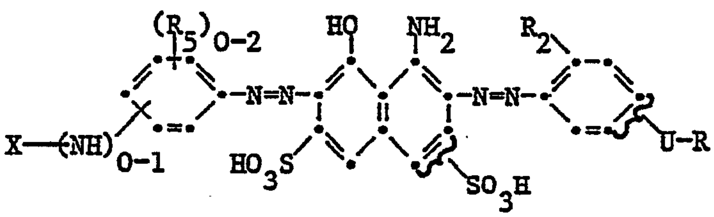

(9),

in which $R_5$ is 0 to 2 substituents from the group $C_{1-4}$alkyl, $C_{1-4}$alkoxy, halogen, carboxyl or sulfo; and $R_2$, U, R and X are as defined in claim 4.

11. A heavy metal complex of a reactive dye according to claim 4.

12. A reactive dye according to claim 4, of the formula

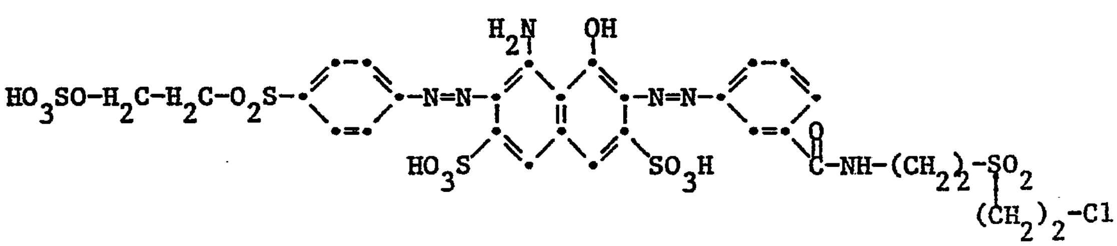

13. A process for preparing a reactive dye according to claim 1, which comprises starting from a diazo component which already contains the radical –U–R, diazotizing this component, and coupling the product onto a coupling component which likewise already contains the radical X or an amino group which can subsequently be acylated with a reactive component.

14. Use of the reactive dye according to claim 1, for dyeing or printing textile fibers.

15. Use according to claim 14, for dyeing or printing cotton.

## Revendications

1. Colorants réactifs de formule

$$(R-U)_{n}D-(X)_{r} \quad (1),$$

dans laquelle D est le résidu d'un colorant monazoïque, polyazoïque ou azoïque à complexe métallique, U est -CO-; R est un radical de formule

$$Z - SO_2 - CH_2 - \overset{Y}{\overset{|}{(alk)}} - \underset{V}{\underset{|}{N}} - \qquad (1a)$$

$$Z - SO_2 - (CH_2)_m - O - (CH_2)_p - \underset{R_1}{\underset{|}{N}} - \qquad (1b)$$

$$Z - SO_2 - (alk') - NH - (alk') - \underset{H}{\underset{|}{N}} - \qquad (1c)$$

ou

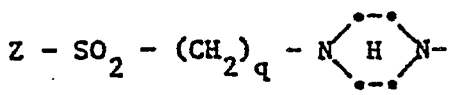 (1d) ;

Z est le radical sulfatoéthyle, β-thiosulfatoéthyle, β-phosphatoéthyle, β-acétoxyéthyle, β-halogénoéthyle ou vinyle; alk est un résidu polyméthylène ayant de 1 à 6 atomes de carbone, ou ses isomères ramifiés; Y est un hydrogène, un radical chloro, bromo, fluoro, hydroxy, sulfato, acyloxy ayant de 1 à 4 atomes de carbone, cyano, carboxy, alcoxycarbonyle ayant de 1 à 5 atomes de carbone, carbamoyle, ou un radical $-SO_2-Z$, où Z a les significations données ci-dessus; V est un hydrogène ou un radical alkyle ayant de 1 à 4 atomes de carbone, qui peut être substitué par carboxy, sulfo, carbamoyle, N-méthyl-, N-éthyl-, N,N-diméthyl- ou N,N-diéthylcarbamoyle, cyano, acétyle, propionyle, butyryle, méthoxycarbonyle, éthoxycarbonyle, propyloxycarbonyle, sulfamoyle, N-méthyl-, N-éthyl-, N,N-diméthyl ou N,N-diéthylsulfamoyle, méthylsulfonyle, éthylsulfonyle, propylsulfonyle, des groupes alcoxy ayant 1 ou 2 atomes de carbone, halogéno ou hydroxy; ou encore un radical

$$Z - SO_2 - CH_2 - \overset{Y}{\overset{|}{(alk)}} -$$

dans lequel Z, alk et Y ont les significations données ci-dessus; $R_1$ est un hydrogène ou un radical alkyle en $C_{1-6}$; les radicaux alk', indépendamment l'un de l'autre, sont des radicaux polyméthylène ayant de 2 à 6 atomes de carbone ou leurs isomères ramifiés; n = 1 ou 2, r = 1 ou 2, m = 1 à 6, p = 1 à 6, q = 1 à 6; et X est un groupe réactif sur les fibres, contenant un résidu halogénotriazine, halogénopyrimidine, halogénopropionyle, halogénacryloyle, β-halogénoéthylsulfonyle, β-sulfatoéthylsulfonyle ou vinylsulfonyle, à la condition que X comporte un radical halogénotriazine ou halogénopyrimidine quand D est le résidu d'un colorant monoazoïque.

2. Colorants réactifs selon la revendication 1, dans lesquels D est le résidu d'un colorant monoazoïque ou disazoïque à complexe métallique.

3. Colorants réactifs selon la revendication 2, ayant la formule suivante

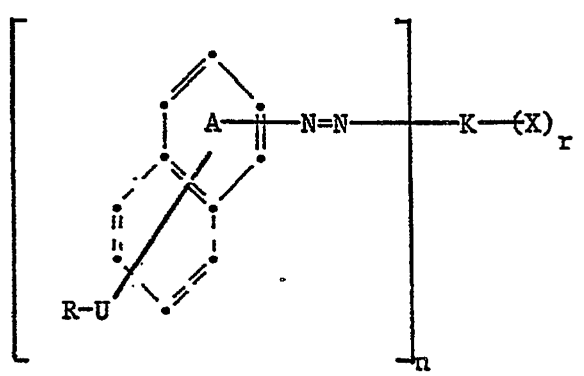 (2),

dans laquelle K est le résidu d'un composant de copulation de la série du benzène ou du naphtalène, ou

de la série hétérocyclique; U, R, X, n et r ont les significations qui s'appliquent à la revendication 2; et le radical benzène ou naphtalène A peut contenir des substituants supplémentaires.

4. Colorants réactifs selon la revendication 2, de formule

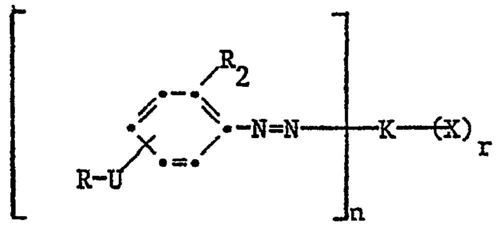

(3),

dans laquelle $R_2$ est un hydrogène ou un radical alkyle en $C_{1-4}$, alcoxy en $C_{1-4}$, halogéno, hydroxy, carboxy ou sulfo; et K, U, R, X, n et r ont les significations données dans la revendication 3.

5. Colorants réactifs selon la revendication 4, de formule

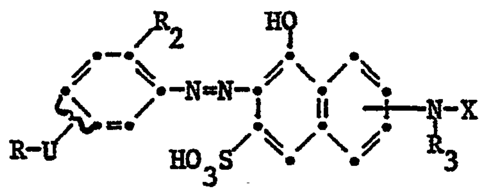

(4),

dans laquelle $R_3$ est un hydrogène ou un radical alkyle en $C_{1-4}$ éventuellement substitué; et $R_2$, U, R et X ont les significations données dans la revendication 4.

6. Colorants réactifs selon la revendication 4, de formule

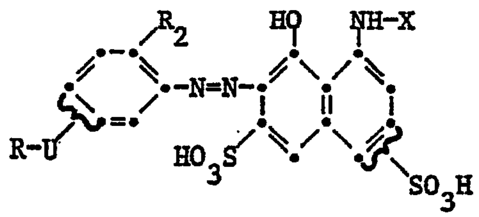

(5),

dans laquelle $R_2$, U, R et X ont les significations données dans la revendication 4.

7. Colorants réactifs selon la revendication 4, de formule

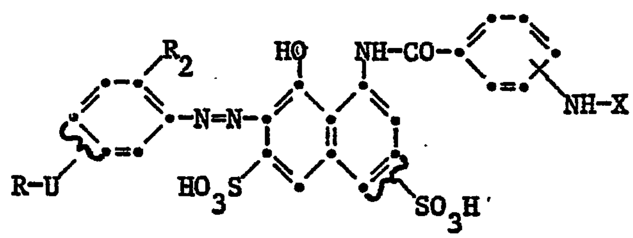

(6),

dans laquelle $R_2$, U, R et X ont les significations données dans la revendication 4.

8. Colorants réactifs selon la revendication 4, de formule

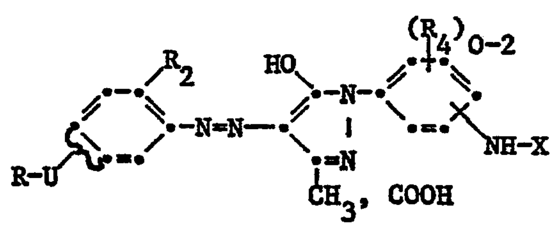

(7),

dans laquelle $R_4$ représente 0 à 2 substituants du groupe comprenant les radicaux alkyle en $C_{1-4}$, alcoxy en $C_{1-4}$, halogéno, carboxy et sulfo; et $R_2$, U, R et X ont les significations données dans la revendication 4.

9. Colorants réactifs selon la revendication 4, de formule

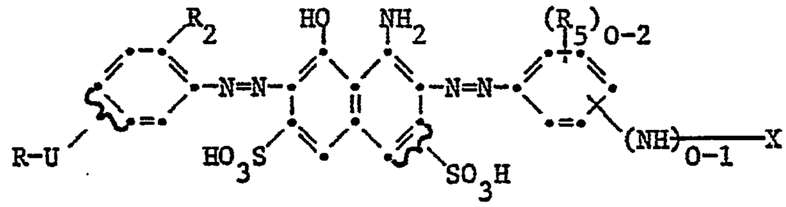

(8),

dans laquelle $R_5$ représente 0 à 2 substituants du groupe comprenant les radicaux alkyle en $C_{1-4}$, alcoxy en $C_{1-4}$, halogéno, carboxy et sulfo; et $R_2$, U, R et X ont les significations données dans la revendication 4.

10. Colorants réactifs selon la revendication 4, de formule

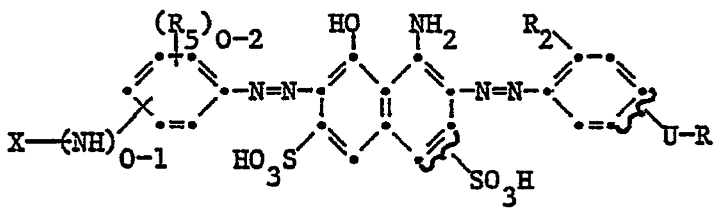

(9),

dans laquelle $R_5$ représente de 0 à 2 substituants du groupe comprenant les radicaux alkyle en $C_{1-4}$, alcoxy en $C_{1-4}$, halogéno, carboxy et sulfo; et $R_2$, U, R et X ont les significations données dans la revendicaiton 4.

11. Complexes de métaux lourds de colorants réactifs selon la revendication 4.

12. Colorant réactif selon la revendication 4, de formule

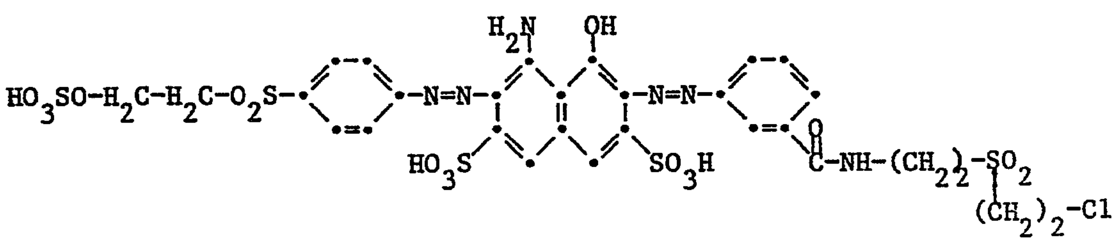

13. Procédé de préparation de colorants réactifs selon la revendication 1, caractérisé par le fait qu'on part d'un composant diazo contenant déjà le radical –U–R, qu'on le diazote et qu'on le copule sur un composant de copulation contenant lui aussi déjà le radical R ou contenant un groupe amino, qui peut être après coup acylé à l'aide d'un composant réactif.

14. Utilisation des colorants réactifs selon la revendication 1 pour la teinture ou l'impression de fibres textiles.

15. Utilisation selon la revendication 14, pour la teinture ou l'impression du coton.